# EUROPEAN PATENT APPLICATION

(11) **EP 4 790 956 A1**
(43) Date of publication of application: **12.08.2026**
(21) Application number: 24884439.1
(22) Date of filing: 16.10.2024
(51) Int. Cl.: H04L 27/26

(54) **SIGNAL PROCESSING METHOD, COMMUNICATION APPARATUS, COMMUNICATION SYSTEM, AND STORAGE MEDIUM**

(30) Priority: 03.11.2023 CN 202311455995
(71) Applicant: HUAWEI TECHNOLOGIES CO., LTD., Shenzhen 518129 (CN)
(72) Inventor: ZOU, Tong, Shenzhen, Guangdong 518129 (CN); GONG, Mingxin, Shenzhen, Guangdong 518129 (CN); QU, Bingyu, Shenzhen, Guangdong 518129 (CN)
(74) Representative: MERH-IP Matias Erny Reichl Hoffmann Patentanwälte PartG mbB
(86) International application number: PCT/CN2024/125351
(87) International publication number: WO 2025/092435

(57) **Abstract**

This application discloses a signal processing method, a communication apparatus, a communication system, and a storage medium, and relates to the communication field. The method includes: A terminal device generates a first sequence including a preamble sequence, then modulates the first sequence to obtain a first signal, and sends the first signal. Then, when receiving the first signal, a network device synchronizes the first signal based on the preamble sequence, to determine a location of the preamble sequence in the first signal, and demodulates the synchronized first signal to obtain the first sequence. The preamble sequence is a second sequence or an equivalent sequence of the second sequence. In addition, the second sequence is determined based on an m-sequence, and the m-sequence is a preset m-sequence with a small maximum sidelobe of a correlation value during sliding correlation. According to the method, when sending an uplink signal, the terminal device can generate the preamble sequence based on the preset m-sequence with the small maximum sidelobe of the correlation value, thereby improving uplink synchronization performance.

## Description

This application claims priority to Chinese Patent Application No. 202311455995.6, filed with the China National Intellectual Property Administration on November 3, 2023 and entitled "SIGNAL PROCESSING METHOD, COMMUNICATION APPARATUS, COMMUNICATION SYSTEM, AND STORAGE MEDIUM", which is incorporated herein by reference in its entirety.

### TECHNICAL FIELD

Embodiments of this application relate to the communication field, and in particular, to a signal processing method, a communication apparatus, a communication system, and a storage medium.

### BACKGROUND

An active or semi-passive internet of things (Internet of Things, IoT) is a low-cost and low-power-consumption IoT solution. Power consumption does not exceed 500 µW. The active or semi-passive IoT can implement wider coverage than a passive IoT. The active or semi-passive IoT supports coherent reception in an uplink. An optional modulation scheme is binary phase shift keying (binary phase shift keying, BPSK). When uplink data is transmitted, a device adds a preamble (preamble) before a data signal for uplink synchronization. A base station performs timing by detecting the preamble, to determine a location of the data. A detection method is as follows: The base station receives a signal in a time window in which the preamble may arrive, and generates a local preamble signal for sliding correlation with the received signal. A location with a largest correlation value is determined as a timing location of the preamble. Because the uplink data is scheduled by the base station side, the base station side has learned of a data length, and a start location and an end location of a data window of the received signal can be obtained based on the timing location of the preamble and the data length.

However, there is usually a specific carrier frequency offset (carrier frequency offset, CFO) in uplink reception, and the CFO causes a shift of a main peak of a correlation value in two dimensions: time and frequency, when sliding correlation is performed on the local preamble signal and the received signal, affecting uplink synchronization performance, and further affecting data demodulation performance of a physical uplink shared channel (physical uplink shared channel, PUSCH).

### SUMMARY

Embodiments of this application provide a signal processing method, a communication apparatus, a communication system, and a storage medium, so that when sending an uplink signal, a terminal device can generate a preamble sequence based on a preset m-sequence with a small maximum sidelobe of a correlation value, thereby improving uplink synchronization performance.

According to a first aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial x³ + x¹ + 1 and an initial value [0, 1, 0];
the primitive polynomial x³ + x¹ + 1 and an initial value [0, 1, 1];
the primitive polynomial x³ + x¹ + 1 and an initial value [1, 1, 0];
the primitive polynomial x³ + x¹ + 1 and an initial value [0, 0, 1];
the primitive polynomial x³ + x¹ + 1 and an initial value [1, 0, 0];
the primitive polynomial x³ + x¹ + 1 and an initial value [1, 1, 1]; and the primitive polynomial x³ + x¹ + 1 and an initial value [1, 0, 1].

The sequences in the second sequence set include at least one m-sequence obtained by combining the following primitive polynomial and initial value:
a primitive polynomial x⁴ + x¹ + 1 and an initial value [0, 1, 0, 1];
the primitive polynomial x⁴ + x¹ + 1 and an initial value [1, 0, 1, 1];
the primitive polynomial x⁴ + x¹ + 1 and an initial value [0, 1, 1, 1];
the primitive polynomial x⁴ + x¹ + 1 and an initial value [0, 1, 0, 0];
the primitive polynomial x⁴ + x¹ + 1 and an initial value [1, 0, 0, 0];
the primitive polynomial x⁴ + x¹ + 1 and an initial value [0, 1, 1, 0];
the primitive polynomial x⁴ + x¹ + 1 and an initial value [1, 1, 1, 1];
the primitive polynomial x⁴ + x¹ + 1 and an initial value [1, 0, 0, 1];
the primitive polynomial x⁴ + x¹ + 1 and an initial value [0, 0, 1, 0]; and
the primitive polynomial x⁴ + x¹ + 1 and an initial value [0, 0, 1, 1].

The sequences in the third sequence set include at least one m-sequence obtained by combining the following primitive polynomial and initial value:
a primitive polynomial x⁵ + x² + 1 and an initial value [1, 0, 0, 1, 1];
the primitive polynomial x⁵ + x² + 1 and an initial value [0, 0, 1, 0, 0];
the primitive polynomial x⁵ + x² + 1 and an initial value [1, 0, 1, 0, 0];
the primitive polynomial x⁵ + x² + 1 and an initial value [0, 1, 0, 1, 1];
the primitive polynomial x⁵ + x² + 1 and an initial value [0, 0, 0, 1, 1];
the primitive polynomial x⁵ + x² + 1 and an initial value [0, 0, 1, 1, 0];
the primitive polynomial x⁵ + x² + 1 and an initial value [0, 0, 1, 0, 1];
the primitive polynomial x⁵ + x² + 1 and an initial value [0, 1, 0, 0, 0];
the primitive polynomial x⁵ + x² + 1 and an initial value [0, 1, 1, 1, 0]; and
the primitive polynomial x⁵ + x² + 1 and an initial value [0, 1, 1, 1, 1].

The sequences in the fourth sequence set include at least one m-sequence obtained by combining the following primitive polynomial and initial value:
a primitive polynomial x⁶ + x¹ + 1 and an initial value [1, 0, 1, 0, 0, 1];
the primitive polynomial x⁶ + x¹ + 1 and an initial value [0, 1, 0, 0, 1, 0];
the primitive polynomial x⁶ + x¹ + 1 and an initial value [0, 0, 0, 0, 0, 1];
the primitive polynomial x⁶ + x¹ + 1 and an initial value [1, 1, 1, 1, 0, 1];
the primitive polynomial x⁶ + x¹ + 1 and an initial value [1, 1, 1, 1, 1, 0];
the primitive polynomial x⁶ + x¹ + 1 and an initial value [1, 1, 1, 1, 0, 0];
the primitive polynomial x⁶ + x¹ + 1 and an initial value [1, 1, 0, 0, 1, 0];
the primitive polynomial x⁶ + x¹ + 1 and an initial value [0, 1, 1, 1, 0, 1];
the primitive polynomial x⁶ + x¹ + 1 and an initial value [0, 0, 0, 1, 0, 1]; and
the primitive polynomial x⁶ + x¹ + 1 and an initial value [0, 1, 1, 1, 1, 1].

The sequences in the fifth sequence set include at least one m-sequence obtained by combining the following primitive polynomial and initial value:
a primitive polynomial x⁷ + x¹ + 1 and an initial value [0, 0, 1, 0, 1, 1, 0];
the primitive polynomial x⁷ + x¹ + 1 and an initial value [1, 0, 1, 0, 1, 1, 0];
the primitive polynomial x⁷ + x¹ + 1 and an initial value [1, 1, 1, 1, 0, 0, 0];
the primitive polynomial x⁷ + x¹ + 1 and an initial value [0, 1, 0, 1, 1, 1, 1];
the primitive polynomial x⁷ + x¹ + 1 and an initial value [0, 0, 1, 1, 1, 0, 1];
the primitive polynomial x⁷ + x¹ + 1 and an initial value [0, 1, 1, 0, 1, 1, 1];
the primitive polynomial x⁷ + x¹ + 1 and an initial value [0, 1, 0, 1, 1, 0, 0];
the primitive polynomial x⁷ + x¹ + 1 and an initial value [1, 0, 1, 0, 0, 0, 1];
the primitive polynomial x⁷ + x¹ + 1 and an initial value [1, 1, 1, 1, 0, 1, 0]; and
the primitive polynomial x⁷ + x¹ + 1 and an initial value [0, 0, 1, 1, 1, 1, 0].

The sequences in the sixth sequence set include at least one m-sequence obtained by combining the following primitive polynomial and initial value:
a primitive polynomial x⁸ + x⁴ + x³ + x² + 1 and an initial value [0, 1, 0, 1, 1, 0, 0, 1];
the primitive polynomial x⁸ + x⁴ + x³ + x² + 1 and an initial value [0, 0, 0, 1, 0, 0, 1, 0];
the primitive polynomial x⁸ + x⁴ + x³ + x² + 1 and an initial value [0, 0, 1, 1, 0, 1, 1, 1];
the primitive polynomial x⁸ + x⁴ + x³ + x² + 1 and an initial value [0, 0, 1, 0, 1, 0, 1, 0];
the primitive polynomial x⁸ + x⁴ + x³ + x² + 1 and an initial value [0, 1, 1, 0, 0, 0, 0, 1];
the primitive polynomial x⁸ + x⁴ + x³ + x² + 1 and an initial value [0, 1, 0, 0, 0, 1, 0, 0];
the primitive polynomial x⁸ + x⁴ + x³ + x² + 1 and an initial value [1, 0, 1, 0, 0, 0, 1, 1];
the primitive polynomial x⁸ + x⁴ + x³ + x² + 1 and an initial value [1, 0, 0, 0, 1, 1, 0, 0];
the primitive polynomial x⁸ + x⁴ + x³ + x² + 1 and an initial value [0, 0, 1, 0, 0, 1, 0, 1]; and
the primitive polynomial x⁸ + x⁴ + x³ + x² + 1 and an initial value [1, 1, 0, 1, 0, 0, 1, 0].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, the sequences in the first sequence set further include at least one m-sequence obtained by combining the following primitive polynomial and initial value:
a primitive polynomial *x*³ *+ x*² *+* 1 and the initial value [1, 1, 1];
the primitive polynomial *x*³ *+ x*² *+* 1 and the initial value [0, 1, 0];
the primitive polynomial *x*³ *+ x*² *+* 1 and the initial value [1, 0, 0]; and
the primitive polynomial *x*³ *+ x*² *+* 1 and the initial value [0, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ + *x*³ + *x*² + *x*¹ *+* 1 and the initial value [1, 0, 0, 1, 1];
a primitive polynomial *x*⁵ *+ x*⁴ *+ x*³ *+ x*² + 1 and the initial value [0, 0, 1, 1, 0];
the primitive polynomial *x*⁵ + *x*⁴ + *x*³ *+ x*² + 1 and an initial value [0, 1, 1, 0, 1];
the primitive polynomial *x*⁵ + *x*³ + *x*² *+ x*¹ *+* 1 and an initial value [1, 0, 0, 0, 0];
a primitive polynomial *x*⁵ *+ x*³ + 1 and an initial value [1, 1, 1, 1, 0];
the primitive polynomial *x*⁵ *+ x*³ + 1 and an initial value [1, 0, 1, 1, 0];
the primitive polynomial *x*⁵ + *x*³ + *x*² *+ x*¹ *+* 1 and an initial value [0, 0, 0, 1, 0]; and
the primitive polynomial *x*⁵ + *x*⁴ + *x*³ *+ x*² + 1 and an initial value [1, 1, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 0, 1, 1, 1, 0];
a primitive polynomial *x*⁶ + *x*⁵ + *x*³ *+ x*² *+* 1 and an initial value [0, 0, 0, 0, 1, 1];
a primitive polynomial *x*⁶ + *x*⁴ *+ x*³ *+ x*¹ *+* 1 and an initial value [1, 0, 0, 1, 0, 0];
a primitive polynomial *x*⁶ *+ x*⁵ + *x*² + *x*¹ + 1 and an initial value [1, 0, 1, 0, 1, 1];
a primitive polynomial *x*⁶ + *x*⁵ *+ x*⁴ *+ x*¹ + 1 and an initial value [1, 1, 0, 0, 0, 1];
the primitive polynomial *x*⁶ *+ x*⁵ + 1 and an initial value [1, 1, 0, 1, 1, 1]; and
the primitive polynomial *x*⁶ + *x*⁵ + 1 and an initial value [1, 0, 0, 0, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ *+ x*⁶ + 1 and an initial value [1, 0, 1, 1, 1, 0, 1];
a primitive polynomial *x*⁷ *+ x*⁵ *+ x*⁴ *+ x*³ *+ x*² *+ x*¹ *+* 1 and an initial value [1, 1, 0, 0, 0, 1, 1];
a primitive polynomial *x*⁷ *+ x*⁶ *+ x*⁵ *+ x*⁴ *+ x*³ *+ x*² + 1 and an initial value [1, 1, 1, 0, 1, 1, 1];
the primitive polynomial *x*⁷ + *x*⁶ + 1 and an initial value [1, 0, 1, 1, 1, 1, 0];
a primitive polynomial *x*⁷ + *x*³ + *x*² + *x*¹ *+* 1 and an initial value [1, 0, 1, 0, 1, 0, 0];
a primitive polynomial *x*⁷ + *x*⁶ + *x*⁵ *+ x*⁴ + 1 and an initial value [1, 0, 0, 0, 1, 0, 0];
the primitive polynomial *x*⁷ + *x*³ + *x*² + *x*¹ + 1 and an initial value [1, 0, 0, 0, 1, 0, 1]; and
a primitive polynomial *x*⁷ + *x*⁶ + *x*⁵ *+ x*⁴ + 1 and an initial value [0, 1, 1, 1, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ + *x*⁶ + *x*⁵ + *x*³ + 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ *+ x*⁶ *+ x*⁴ *+ x*³ *+ x*² *+ x*¹ *+* 1 and an initial value [0, 1, 0, 0, 0, 0, 0, 0];
a primitive polynomial *x*⁸ + *x*⁷ + *x*⁶ *+ x*⁵ + *x*⁴ + *x*² *+* 1 and an initial value [1, 0, 0, 1, 0, 1, 0, 1];
a primitive polynomial *x*⁸ + *x*⁷ *+ x*⁵ *+ x*³ *+* 1 and an initial value [0, 0, 1, 1, 1, 1, 1, 0];
a primitive polynomial *x*⁸ + *x*⁵ + *x*³ + *x*¹ *+* 1 and an initial value [0, 0, 0, 1, 0, 1, 0, 0];
a primitive polynomial *x*⁸ *+ x*⁶ + *x*⁵ + *x*⁴ + 1 and the initial value [1, 0, 0, 0, 1, 1, 0, 0];
a primitive polynomial *x*⁸ *+ x*⁷ *+ x*² *+ x*¹ *+* 1 and an initial value [0, 1, 1, 1, 0, 0, 0, 0]; and
a primitive polynomial *x*⁸ *+ x*⁷ *+ x*⁶ *+ x*¹ + 1 and an initial value [0, 0, 1, 1, 0, 0, 1, 1].

Based on this possible design, time-frequency two-dimensional correlation detection performance of the preamble sequence is optimized to a maximum extent, uplink synchronization performance is further improved, and uplink data demodulation performance is further improved.

According to a second aspect, an embodiment of this application provides a communication apparatus. The apparatus has a function of implementing the method according to the first aspect. The function may be implemented by hardware, or may be implemented by hardware executing corresponding software. The hardware or the software includes one or more units or modules, for example, a processing unit and a sending unit, corresponding to the function of the method according to the first aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [0, 1, 1];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ + *x*¹ *+ 1* and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [1, 0, 1, 1];
the primitive polynomial *x*⁴ + *x*¹ + 1 and an initial value [0, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [0, 1, 1, 0];
the primitive polynomial *x*⁴ + x*¹* + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0]; and
the primitive polynomial *x*⁴ + *x*¹ + 1 and an initial value [0, 0, 1, 1].

The sequences in the third sequence set include at least one m-sequence obtained by combining the following primitive polynomial and initial value:
a primitive polynomial *x*⁵ + *x*² *+* 1 and an initial value [1, 0, 0, 1, 1];
the primitive polynomial *x*⁵ + *x*² *+* 1 and an initial value [0, 0, 1, 0, 0];
the primitive polynomial *x*⁵ + *x*² *+* 1 and an initial value [1, 0, 1, 0, 0];
the primitive polynomial *x*⁵ + *x*² *+* 1 and an initial value [0, 1, 0, 1, 1];
the primitive polynomial *x*⁵ + *x*² *+ 1* and an initial value [0, 0, 0, 1, 1];
the primitive polynomial *x*⁵ + *x*² *+* 1 and an initial value [0, 0, 1, 1, 0];
the primitive polynomial *x*⁵ + *x*² *+* 1 and an initial value [0, 0, 1, 0, 1];
the primitive polynomial *x*⁵ + *x*² *+* 1 and an initial value [0, 1, 0, 0, 0];
the primitive polynomial *x*⁵ + *x*² *+ 1* and an initial value [0, 1, 1, 1, 0]; and
the primitive polynomial *x*⁵ + *x*² *+* 1 and an initial value [0, 1, 1, 1, 1].

The sequences in the fourth sequence set include at least one m-sequence obtained by combining the following primitive polynomial and initial value:
a primitive polynomial *x*⁶ *+ x*¹ *+* 1 and an initial value [1, 0, 1, 0, 0, 1];
the primitive polynomial *x*⁶ *+ x*¹ *+* 1 and an initial value [0, 1, 0, 0, 1, 0];
the primitive polynomial *x*⁶ *+ x*¹ *+* 1 and an initial value [0, 0, 0, 0, 0, 1];
the primitive polynomial *x*⁶ *+ x*¹ *+ 1* and an initial value [1, 1, 1, 1, 0, 1];
the primitive polynomial *x*⁶ *+ x*¹ *+* 1 and an initial value [1, 1, 1, 1, 1, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 1, 0, 0, 1, 0];
the primitive polynomial *x*⁶ *+ x*¹ *+* 1 and an initial value [0, 1, 1, 1, 0, 1];
the primitive polynomial *x*⁶ *+ x*¹ *+* 1 and an initial value [0, 0, 0, 1, 0, 1]; and
the primitive polynomial *x*⁶ *+ x*¹ *+* 1 and an initial value [0, 1, 1, 1, 1, 1].

The sequences in the fifth sequence set include at least one m-sequence obtained by combining the following primitive polynomial and initial value:
a primitive polynomial *x*⁷ + *x*¹ + 1 and an initial value [0, 0, 1, 0, 1, 1, 0];
the primitive polynomial *x*⁷ + *x*¹ + 1 and an initial value [1, 0, 1, 0, 1, 1, 0];
the primitive polynomial *x*⁷ + *x*¹ + 1 and an initial value [1, 1, 1, 1, 0, 0, 0];
the primitive polynomial *x*⁷ + *x*¹ + 1 and an initial value [0, 1, 0, 1, 1, 1, 1];
the primitive polynomial *x*⁷ + *x*¹ + 1 and an initial value [0, 0, 1, 1, 1, 0, 1];
the primitive polynomial *x*⁷ + *x*¹ + 1 and an initial value [0, 1, 1, 0, 1, 1, 1];
the primitive polynomial *x*⁷ + *x*¹ + 1 and an initial value [0, 1, 0, 1, 1, 0, 0];
the primitive polynomial *x*⁷ + *x*¹ + 1 and an initial value [1, 0, 1, 0, 0, 0, 1];
the primitive polynomial *x*⁷ + *x*¹ + 1 and an initial value [1, 1, 1, 1, 0, 1, 0]; and
the primitive polynomial *x*⁷ + *x*¹ + 1 and an initial value [0, 0, 1, 1, 1, 1, 0].

The sequences in the sixth sequence set include at least one m-sequence obtained by combining the following primitive polynomial and initial value:
a primitive polynomial *x*⁸ + *x*⁴ + *x*³ *+ x*² + 1 and an initial value [0, 1, 0, 1, 1, 0, 0, 1];
the primitive polynomial *x*⁸ + *x*⁴ + *x*³ + *x*² + 1 and an initial value [0, 0, 0, 1, 0, 0, 1, 0];
the primitive polynomial *x*⁸ + *x*⁴ + *x*³ *+ x*² + 1 and an initial value [0, 0, 1, 1, 0, 1, 1, 1];
the primitive polynomial *x*⁸ *+ x*⁴ *+ x*³ *+ x*² + 1 and an initial value [0, 0, 1, 0, 1, 0, 1, 0];
the primitive polynomial *x*⁸ *+ x*⁴ + *x*³ *+ x*² + 1 and an initial value [0, 1, 1, 0, 0, 0, 0, 1];
the primitive polynomial *x*⁸ + *x*⁴ + *x*³ *+ x*² + 1 and an initial value [0, 1, 0, 0, 0, 1, 0, 0];
the primitive polynomial *x*⁸ *+ x*⁴ *+ x*³ *+ x*² + 1 and an initial value [1, 0, 1, 0, 0, 0, 1, 1];
the primitive polynomial *x*⁸ + *x*⁴ + *x*³ + *x*² *+* 1 and an initial value [1, 0, 0, 0, 1, 1, 0, 0];
the primitive polynomial *x*⁸ + *x*⁴ + *x*³ *+ x*² + 1 and an initial value [0, 0, 1, 0, 0, 1, 0, 1]; and
the primitive polynomial *x*⁸ *+ x*⁴ *+ x*³ *+ x*² + 1 and an initial value [1, 1, 0, 1, 0, 0, 1, 0].

In a possible design, the sequences in the first sequence set further include at least one m-sequence obtained by combining the following primitive polynomial and initial value:
a primitive polynomial *x*³ *+ x*² + 1 and the initial value [1, 1, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [0, 0, 1].

In a possible design, the sequences in the second sequence set further include at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1].

In a possible design, the sequences in the third sequence set further include at least one m-sequence obtained by combining the following primitive polynomial and initial value:
a primitive polynomial *x*⁵ + *x*³ + *x*² *+ x*¹ *+* 1 and the initial value [1, 0, 0, 1, 1];
a primitive polynomial *x*⁵ + *x*⁴ + *x*³ *+ x*² + 1 and the initial value [0, 0, 1, 1, 0];
the primitive polynomial *x*⁵ + *x*⁴ + *x*³ *+ x*² + 1 and an initial value [0, 1, 1, 0, 1];
the primitive polynomial *x*⁵ + *x*³ + *x*² *+ x*¹ *+* 1 and an initial value [1, 0, 0, 0, 0];
a primitive polynomial *x*⁵ *+ x*³ + 1 and an initial value [1, 1, 1, 1, 0];
the primitive polynomial *x*⁵ *+ x*³ + 1 and an initial value [1, 0, 1, 1, 0];
the primitive polynomial *x*⁵ *+ x*³ + *x*² *+ x*¹ *+* 1 and an initial value [0, 0, 0, 1, 0]; and
the primitive polynomial *x*⁵ + *x*⁴ + *x*³ *+ x*² + 1 and an initial value [1, 1, 1, 0, 1].

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 0, 1, 1, 1, 0];
a primitive polynomial *x*⁶ + *x*⁵ + *x*³ *+ x*² + 1 and an initial value [0, 0, 0, 0, 1, 1];
a primitive polynomial *x*⁶ + *x*⁴ + *x*³ + *x*¹ *+* 1 and an initial value [1, 0, 0, 1, 0, 0];
a primitive polynomial *x*⁶ + *x*⁵ + *x*² *+ x*¹ + 1 and an initial value [1, 0, 1, 0, 1, 1];
a primitive polynomial *x*⁶ + *x*⁵ + *x*⁴ + *x*¹ + 1 and an initial value [1, 1, 0, 0, 0, 1];
the primitive polynomial *x*⁶ *+ x*⁵ + 1 and an initial value [1, 1, 0, 1, 1, 1]; and
the primitive polynomial *x*⁶ + *x*⁵ + 1 and an initial value [1, 0, 0, 0, 0, 1].

In a possible design, the sequences in the fifth sequence set further include at least one m-sequence obtained by combining the following primitive polynomial and initial value:
a primitive polynomial *x*⁷ + *x*⁶ + 1 and an initial value [1, 0, 1, 1, 1, 0, 1];
a primitive polynomial *x*⁷ *+ x*⁵ *+ x*⁴ *+ x*³ *+ x*² *+ x*¹ *+* 1 and an initial value [1, 1, 0, 0, 0, 1, 1];
a primitive polynomial *x*⁷ *+ x*⁶ *+ x*⁵ *+ x*⁴ *+ x*³ *+ x*² + 1 and an initial value [1, 1, 1, 0, 1, 1, 1];
the primitive polynomial *x*⁷ + *x*⁶ + 1 and an initial value [1, 0, 1, 1, 1, 1, 0];
a primitive polynomial *x*⁷ + *x*³ + *x*² + *x*¹ *+* 1 and an initial value [1, 0, 1, 0, 1, 0, 0];
a primitive polynomial *x*⁷ + *x*⁶ + *x*⁵ *+ x*⁴ + 1 and an initial value [1, 0, 0, 0, 1, 0, 0];
the primitive polynomial *x*⁷ *+ x*³ *+ x*² *+ x*¹ + 1 and an initial value [1, 0, 0, 0, 1, 0, 1]; and
a primitive polynomial *x*⁷ + *x*⁶ + *x*⁵ *+ x*⁴ + 1 and an initial value [0, 1, 1, 1, 1, 0, 1].

In a possible design, the sequences in the sixth sequence set further include at least one m-sequence obtained by combining the following primitive polynomial and initial value:
a primitive polynomial *x*⁸ + *x*⁶ + *x*⁵ *+ x*³ + 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ *+ x*⁶ *+ x*⁴ *+ x*³ *+ x*² *+ x*¹ *+* 1 and an initial value [0, 1, 0, 0, 0, 0, 0, 0];
a primitive polynomial *x*⁸ *+ x*⁷ *+ x*⁶ *+ x*⁵ *+ x*⁴ *+ x*² + 1 and an initial value [1, 0, 0, 1, 0, 1, 0, 1];
a primitive polynomial *x*⁸ *+ x*⁷ *+* ^{*x*5} *+ x*³ + 1 and an initial value [0, 0, 1, 1, 1, 1, 1, 0];
a primitive polynomial *x*⁸ + *x*⁵ + *x*³ + *x*¹ *+* 1 and an initial value [0, 0, 0, 1, 0, 1, 0, 0];
a primitive polynomial *x*⁸ + *x*⁶ + *x*⁵ *+ x*⁴ + 1 and the initial value [1, 0, 0, 0, 1, 1, 0, 0];
a primitive polynomial *x*⁸ *+ x*⁷ *+ x*² *+ x*¹ *+* 1 and an initial value [0, 1, 1, 1, 0, 0, 0, 0]; and
a primitive polynomial *x*⁸ *+ x*⁷ + *x*⁶ + *x*¹ + 1 and an initial value [0, 0, 1, 1, 0, 0, 1, 1].

According to a third aspect, an embodiment of this application further provides a communication apparatus, including a memory and a processor. The processor is configured to execute computer instructions stored in the memory. When the computer instructions are executed, the apparatus is enabled to perform the method according to any one of the first aspect or the possible designs of the first aspect.

According to a fourth aspect, an embodiment of this application further provides a communication apparatus, including a processor and an interface circuit. The processor is configured to: communicate with another apparatus through the interface circuit, and perform the method according to any one of the first aspect or the possible designs of the first aspect.

The communication apparatus according to the second aspect to the fourth aspect may be used in a terminal device.

According to a fifth aspect, an embodiment of this application further provides a computer-readable storage medium. The computer-readable storage medium stores computer instructions. When the computer instructions are run on a terminal device or a chip built in the terminal device, the terminal device is enabled to perform the method according to the first aspect.

According to a sixth aspect, an embodiment of this application further provides a computer program product including instructions. When the computer program product runs on a computer, the computer is enabled to perform the method according to any one of the first aspect or the possible designs of the first aspect.

It may be understood that for beneficial effect that can be achieved in the second aspect to the sixth aspect provided above, refer to beneficial effect in any one of the first aspect and the possible designs of the first aspect. Details are not described herein again.

According to a seventh aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [0, 1, 1];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [1, 0, 1, 1];
the primitive polynomial *x*⁴ + *x*¹ + 1 and an initial value [0, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [0, 1, 1, 0];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0]; and
the primitive polynomial *x*⁴ + *x*¹ + 1 and an initial value [0, 0, 1, 1].

The sequences in the third sequence set include at least one m-sequence obtained by combining the following primitive polynomial and initial value:
a primitive polynomial *x*⁵ + *x*² *+* 1 and an initial value [1, 0, 0, 1, 1];
the primitive polynomial *x*⁵ + *x*² *+* 1 and an initial value [0, 0, 1, 0, 0];
the primitive polynomial *x*⁵ + *x*² *+* 1 and an initial value [1, 0, 1, 0, 0];
the primitive polynomial *x*⁵ + *x*² *+* 1 and an initial value [0, 1, 0, 1, 1];
the primitive polynomial *x*⁵ + *x*² *+* 1 and an initial value [0, 0, 0, 1, 1];
the primitive polynomial *x*⁵ + *x*² *+* 1 and an initial value [0, 0, 1, 1, 0];
the primitive polynomial *x*⁵ *+ x*² *+* 1 and an initial value [0, 0, 1, 0, 1];
the primitive polynomial *x*⁵ + *x*² *+* 1 and an initial value [0, 1, 0, 0, 0];
the primitive polynomial *x*⁵ *+ x*² *+* 1 and an initial value [0, 1, 1, 1, 0]; and
the primitive polynomial *x*⁵ *+ x*² *+* 1 and an initial value [0, 1, 1, 1, 1].

The sequences in the fourth sequence set include at least one m-sequence obtained by combining the following primitive polynomial and initial value:
a primitive polynomial *x*⁶ *+ x*¹ *+* 1 and an initial value [1, 0, 1, 0, 0, 1];
the primitive polynomial *x*⁶ *+ x*¹ *+ 1* and an initial value [0, 1, 0, 0, 1, 0];
the primitive polynomial *x*⁶ *+ x*¹ *+* 1 and an initial value [0, 0, 0, 0, 0, 1];
the primitive polynomial *x*⁶ *+ x*¹ *+ 1* and an initial value [1, 1, 1, 1, 0, 1];
the primitive polynomial *x*⁶ *+ x*¹ *+ 1* and an initial value [1, 1, 1, 1, 1, 0];
the primitive polynomial *x*⁶ *+ x*¹ *+ 1* and an initial value [1, 1, 1, 1, 0, 0];
the primitive polynomial *x*⁶ *+ x*¹ *+ 1* and an initial value [1, 1, 0, 0, 1, 0];
the primitive polynomial *x*⁶ *+ x*¹ *+ 1* and an initial value [0, 1, 1, 1, 0, 1];
the primitive polynomial *x*⁶ *+ x*¹ *+* 1 and an initial value [0, 0, 0, 1, 0, 1]; and
the primitive polynomial *x*⁶ *+ x*¹ *+ 1* and an initial value [0, 1, 1, 1, 1, 1].

The sequences in the fifth sequence set include at least one m-sequence obtained by combining the following primitive polynomial and initial value:
a primitive polynomial *x*⁷ + *x*¹ + 1 and an initial value [0, 0, 1, 0, 1, 1, 0];
the primitive polynomial *x*⁷ + *x*¹ + 1 and an initial value [1, 0, 1, 0, 1, 1, 0];
the primitive polynomial *x*⁷ + *x*¹ + 1 and an initial value [1, 1, 1, 1, 0, 0, 0];
the primitive polynomial *x*⁷ + *x*¹ + 1 and an initial value [0, 1, 0, 1, 1, 1, 1];
the primitive polynomial *x*⁷ + *x*¹ + 1 and an initial value [0, 0, 1, 1, 1, 0, 1];
the primitive polynomial *x*⁷ + *x*¹ + 1 and an initial value [0, 1, 1, 0, 1, 1, 1];
the primitive polynomial *x*⁷ + *x*¹ + 1 and an initial value [0, 1, 0, 1, 1, 0, 0];
the primitive polynomial *x*⁷ + *x*¹ + 1 and an initial value [1, 0, 1, 0, 0, 0, 1];
the primitive polynomial *x*⁷ + *x*¹ + 1 and an initial value [1, 1, 1, 1, 0, 1, 0]; and
the primitive polynomial *x*⁷ + *x*¹ + 1 and an initial value [0, 0, 1, 1, 1, 1, 0].

The sequences in the sixth sequence set include at least one m-sequence obtained by combining the following primitive polynomial and initial value:
a primitive polynomial *x*⁸ + *x*⁴ + *x*³ *+ x*² + 1 and an initial value [0, 1, 0, 1, 1, 0, 0, 1];
the primitive polynomial *x*⁸ + *x*⁴ + *x*³ *+ x*² + 1 and an initial value [0, 0, 0, 1, 0, 0, 1, 0];
the primitive polynomial *x*⁸ *+ x*⁴ *+ x*³ *+ x*² + 1 and an initial value [0, 0, 1, 1, 0, 1, 1, 1];
the primitive polynomial *x*⁸ *+ x*⁴ + *x*³ *+ x*² *+* 1 and an initial value [0, 0, 1, 0, 1, 0, 1, 0];
the primitive polynomial *x*⁸ + *x*⁴ + *x*³ *+ x*² + 1 and an initial value [0, 1, 1, 0, 0, 0, 0, 1];
the primitive polynomial *x*⁸ *+ x*⁴ *+ x*³ *+ x*² + 1 and an initial value [0, 1, 0, 0, 0, 1, 0, 0];
the primitive polynomial *x*⁸ + *x*⁴ + *x*³ *+ x*² + 1 and an initial value [1, 0, 1, 0, 0, 0, 1, 1];
the primitive polynomial *x*⁸ + *x*⁴ + *x*³ *+ x*² + 1 and an initial value [1, 0, 0, 0, 1, 1, 0, 0];
the primitive polynomial *x*⁸ + *x*⁴ + *x*³ *+ x*² + 1 and an initial value [0, 0, 1, 0, 0, 1, 0, 1]; and
the primitive polynomial *x*⁸ + *x*⁴ + *x*³ *+ x*² + 1 and an initial value [1, 1, 0, 1, 0, 0, 1, 0].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, the sequences in the first sequence set further include at least one m-sequence obtained by combining the following primitive polynomial and initial value:
a primitive polynomial *x*³ *+ x*² + 1 and the initial value [1, 1, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [0, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ + *x*³ + *x*² + *x*¹ *+* 1 and the initial value [1, 0, 0, 1, 1];
a primitive polynomial *x*⁵ + *x*⁴ + *x*³ *+ x*² + 1 and the initial value [0, 0, 1, 1, 0];
the primitive polynomial *x*⁵ + *x*⁴ + *x*³ *+ x*² + 1 and an initial value [0, 1, 1, 0, 1];
the primitive polynomial *x*⁵ + *x*³ + *x*² *+ x*¹ *+* 1 and an initial value [1, 0, 0, 0, 0];
a primitive polynomial *x*⁵ *+ x*³ + 1 and an initial value [1, 1, 1, 1, 0];
the primitive polynomial *x*⁵ *+ x*³ + 1 and an initial value [1, 0, 1, 1, 0];
the primitive polynomial *x*⁵ + *x*³ + *x*² *+ x*¹ *+* 1 and an initial value [0, 0, 0, 1, 0]; and
the primitive polynomial *x*⁵ + *x*⁴ + *x*³ *+ x*² + 1 and an initial value [1, 1, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 0, 1, 1, 1, 0];
a primitive polynomial *x*⁶ *+ x*⁵ + *x*³ *+ x*² + 1 and an initial value [0, 0, 0, 0, 1, 1];
a primitive polynomial *x*⁶ *+ x*⁴ *+ x*³ *+ x*¹ *+* 1 and an initial value [1, 0, 0, 1, 0, 0];
a primitive polynomial *x*⁶ *+ x*⁵ *+ x*² *+ x*¹ + 1 and an initial value [1, 0, 1, 0, 1, 1];
a primitive polynomial *x*⁶ + *x*⁵ + *x*⁴ *+ x*¹ + 1 and an initial value [1, 1, 0, 0, 0, 1];
the primitive polynomial *x*⁶ *+ x*⁵ + 1 and an initial value [1, 1, 0, 1, 1, 1]; and
the primitive polynomial *x*⁶ *+ x*⁵ + 1 and an initial value [1, 0, 0, 0, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ + *x*⁶ + 1 and an initial value [1, 0, 1, 1, 1, 0, 1];
a primitive polynomial *x*⁷ *+ x*⁵ *+ x*⁴ *+ x*³ *+ x*² *+ x*¹ *+* 1 and an initial value [1, 1, 0, 0, 0, 1, 1];
a primitive polynomial *x*⁷ + *x*⁶ + *x*⁵ + *x*⁴ + *x*³ + *x*² + 1 and an initial value [1, 1, 1, 0, 1, 1, 1];
a primitive polynomial *x*⁷ + *x*⁶ + 1 and an initial value [1, 0, 1, 1, 1, 1, 0];
a primitive polynomial *x*⁷ + *x*³ + *x*² + *x*¹ *+* 1 and an initial value [1, 0, 1, 0, 1, 0, 0];
a primitive polynomial *x*⁷ *+ x*⁶ *+ x*⁵ *+ x*⁴ + 1 and an initial value [1, 0, 0, 0, 1, 0, 0];
the primitive polynomial *x*⁷ + *x*³ + *x*² + *x*¹ + 1 and an initial value [1, 0, 0, 0, 1, 0, 1]; and
a primitive polynomial *x*⁷ + *x*⁶ + *x*⁵ *+ x*⁴ + 1 and an initial value [0, 1, 1, 1, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ + *x*⁶ + *x*⁵ + *x*³ *+* 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ *+ x*⁶ *+ x*⁴ *+ x*³ *+ x*² *+ x*¹ *+* 1 and an initial value [0, 1, 0, 0, 0, 0, 0, 0];
a primitive polynomial *x*⁸ *+ x*⁷ *+ x*⁶ *+ x*⁵ *+ x*⁴ *+ x*² + 1 and an initial value [1, 0, 0, 1, 0, 1, 0, 1];
a primitive polynomial *x*⁸ *+ x*⁷ *+ x*⁵ *+ x*³ *+* 1 and an initial value [0, 0, 1, 1, 1, 1, 1, 0];
a primitive polynomial *x*⁸ + *x*⁵ + *x*³ + *x*¹ *+* 1 and an initial value [0, 0, 0, 1, 0, 1, 0, 0];
a primitive polynomial *x*⁸ *+ x*⁶ + *x*⁵ + *x*⁴ + 1 and the initial value [1, 0, 0, 0, 1, 1, 0, 0];
a primitive polynomial *x*⁸ *+ x*⁷ *+ x*² *+ x*¹ *+* 1 and an initial value [0, 1, 1, 1, 0, 0, 0, 0]; and
a primitive polynomial *x*⁸ + *x*⁷ + *x*⁶ + *x*¹ + 1 and an initial value [0, 0, 1, 1, 0, 0, 1, 1].

Based on this possible design, time-frequency two-dimensional correlation detection performance of the preamble sequence is optimized to a maximum extent, uplink synchronization performance is further improved, and uplink data demodulation performance is further improved.

According to an eighth aspect, an embodiment of this application provides a communication apparatus. The apparatus has a function of implementing the method according to the seventh aspect. The function may be implemented by hardware, or may be implemented by hardware executing corresponding software. The hardware or the software includes one or more units or modules, for example, a receiving unit and a processing unit, corresponding to the function of the method according to the seventh aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [0, 1, 1];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [1, 0, 1, 1];
the primitive polynomial *x*⁴ + *x*¹ + 1 and an initial value [0, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [0, 1, 1, 0];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0]; and
the primitive polynomial *x*⁴ + *x*¹ + 1 and an initial value [0, 0, 1, 1].

The sequences in the third sequence set include at least one m-sequence obtained by combining the following primitive polynomial and initial value:
a primitive polynomial *x*⁵ *+ x*² *+* 1 and an initial value [1, 0, 0, 1, 1];
the primitive polynomial *x*⁵ *+ x*² *+* 1 and an initial value [0, 0, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 1, 0, 1, 1];
the primitive polynomial *x*⁵ *+ x*² *+ 1* and an initial value [0, 0, 0, 1, 1];
the primitive polynomial *x*⁵ *+ x*² *+* 1 and an initial value [0, 0, 1, 1, 0];
the primitive polynomial *x*⁵ *+ x*² *+* 1 and an initial value [0, 0, 1, 0, 1];
the primitive polynomial *x*⁵ *+ x*² *+* 1 and an initial value [0, 1, 0, 0, 0];
the primitive polynomial *x*⁵ *+ x*² *+ 1* and an initial value [0, 1, 1, 1, 0]; and
the primitive polynomial *x*⁵ *+ x*² *+* 1 and an initial value [0, 1, 1, 1, 1].

The sequences in the fourth sequence set include at least one m-sequence obtained by combining the following primitive polynomial and initial value:
a primitive polynomial *x*⁶ *+ x*¹ *+* 1 and an initial value [1, 0, 1, 0, 0, 1];
the primitive polynomial *x*⁶ *+ x*¹ *+* 1 and an initial value [0, 1, 0, 0, 1, 0];
the primitive polynomial *x*⁶ *+ x*¹ *+* 1 and an initial value [0, 0, 0, 0, 0, 1];
the primitive polynomial *x*⁶ *+ x*¹ *+ 1* and an initial value [1, 1, 1, 1, 0, 1];
the primitive polynomial *x*⁶ *+ x*¹ *+ 1* and an initial value [1, 1, 1, 1, 1, 0];
the primitive polynomial *x*⁶ *+ x*¹ *+ 1* and an initial value [1, 1, 1, 1, 0, 0];
the primitive polynomial *x*⁶ *+ x*¹ *+ 1* and an initial value [1, 1, 0, 0, 1, 0];
the primitive polynomial *x*⁶ *+ x*¹ *+ 1* and an initial value [0, 1, 1, 1, 0, 1];
the primitive polynomial *x*⁶ *+ x*¹ *+* 1 and an initial value [0, 0, 0, 1, 0, 1]; and
the primitive polynomial *x*⁶ *+ x*¹ *+ 1* and an initial value [0, 1, 1, 1, 1, 1].

The sequences in the fifth sequence set include at least one m-sequence obtained by combining the following primitive polynomial and initial value:
a primitive polynomial *x*⁷ + *x*¹ + 1 and an initial value [0, 0, 1, 0, 1, 1, 0];
the primitive polynomial *x*⁷ + *x*¹ + 1 and an initial value [1, 0, 1, 0, 1, 1, 0];
the primitive polynomial *x*⁷ + *x*¹ + 1 and an initial value [1, 1, 1, 1, 0, 0, 0];
the primitive polynomial *x*⁷ + *x*¹ + 1 and an initial value [0, 1, 0, 1, 1, 1, 1];
the primitive polynomial *x*⁷ + *x*¹ + 1 and an initial value [0, 0, 1, 1, 1, 0, 1];
the primitive polynomial *x*⁷ + *x*¹ + 1 and an initial value [0, 1, 1, 0, 1, 1, 1];
the primitive polynomial *x*⁷ + *x*¹ + 1 and an initial value [0, 1, 0, 1, 1, 0, 0];
the primitive polynomial *x*⁷ + *x*¹ + 1 and an initial value [1, 0, 1, 0, 0, 0, 1];
the primitive polynomial *x*⁷ + *x*¹ + 1 and an initial value [1, 1, 1, 1, 0, 1, 0]; and
the primitive polynomial *x*⁷ + *x*¹ + 1 and an initial value [0, 0, 1, 1, 1, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [0, 1, 0, 1, 1, 0, 0, 1];
the primitive polynomial *x*⁸ *+ x*⁴ *+ x*³ *+ x*² + 1 and an initial value [0, 0, 0, 1, 0, 0, 1, 0];
the primitive polynomial *x*⁸ *+ x*⁴ *+ x*³ *+ x*² + 1 and an initial value [0, 0, 1, 1, 0, 1, 1, 1];
the primitive polynomial *x*⁸ *+ x*⁴ *+ x*³ *+ x*² + 1 and an initial value [0, 0, 1, 0, 1, 0, 1, 0];
the primitive polynomial *x*⁸ *+ x*⁴ *+ x*³ *+ x*² + 1 and an initial value [0, 1, 1, 0, 0, 0, 0, 1];
the primitive polynomial *x*⁸ *+ x*⁴ *+ x*³ *+ x*² + 1 and an initial value [0, 1, 0, 0, 0, 1, 0, 0];
the primitive polynomial *x*⁸ *+ x*⁴ *+ x*³ *+ x*² + 1 and an initial value [1, 0, 1, 0, 0, 0, 1, 1];
the primitive polynomial *x*⁸ *+ x*⁴ *+ x*³ *+ x*² + 1 and an initial value [1, 0, 0, 0, 1, 1, 0, 0];
the primitive polynomial *x*⁸ *+ x*⁴ *+ x*³ *+ x*² + 1 and an initial value [0, 0, 1, 0, 0, 1, 0, 1]; and
the primitive polynomial *x*⁸ *+ x*⁴ *+ x*³ *+ x*² + 1 and an initial value [1, 1, 0, 1, 0, 0, 1, 0].

In a possible design, the sequences in the first sequence set further include at least one m-sequence obtained by combining the following primitive polynomial and initial value:
a primitive polynomial *x*³ *+ x*² + 1 and the initial value [1, 1, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [0, 0, 1].

In a possible design, the sequences in the second sequence set further include at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1].

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and the initial value [1, 0, 0, 1, 1];
a primitive polynomial *x*⁵ *+ x*⁴ *+ x*³ *+ x*² + 1 and the initial value [0, 0, 1, 1, 0];
the primitive polynomial *x*⁵ *+ x*⁴ *+ x*³ *+ x*² + 1 and an initial value [0, 1, 1, 0, 1];
the primitive polynomial *x*⁵ *+ x*³ *+ x*² *+ x*¹ *+* 1 and an initial value [1, 0, 0, 0, 0].
a primitive polynomial *x*⁵ *+ x*³ + 1 and an initial value [1, 1, 1, 1, 0];
the primitive polynomial *x*⁵ *+ x*³ + 1 and an initial value [1, 0, 1, 1, 0];
the primitive polynomial *x*⁵ *+ x*³ *+ x*² *+ x*¹ *+* 1 and an initial value [0, 0, 0, 1, 0]; and
the primitive polynomial *x*⁵ *+ x*⁴ *+ x*³ *+ x*² + 1 and an initial value [1, 1, 1, 0, 1].

In a possible design, the sequences in the fourth sequence set further include at least one m-sequence obtained by combining the following primitive polynomial and initial value:
a primitive polynomial *x*⁶ *+ x*⁵ + 1 and an initial value [1, 0, 1, 1, 1, 0];
a primitive polynomial *x*⁶ *+ x*⁵ *+ x*³ *+ x*² + 1 and an initial value [0, 0, 0, 0, 1, 1];
a primitive polynomial *x*⁶ *+ x*⁴ *+ x*³ *+ x*¹ *+* 1 and an initial value [1, 0, 0, 1, 0, 0];
a primitive polynomial *x*⁶ *+ x*⁵ *+ x*² *+ x*¹ + 1 and an initial value [1, 0, 1, 0, 1, 1];
a primitive polynomial *x*⁶ *+ x*⁵ *+ x*⁴ *+ x*¹ + 1 and an initial value [1, 1, 0, 0, 0, 1];
the primitive polynomial *x*⁶ *+ x*⁵ + 1 and an initial value [1, 1, 0, 1, 1, 1]; and
the primitive polynomial *x*⁶ *+ x*⁵ + 1 and an initial value [1, 0, 0, 0, 0, 1].

In a possible design, the sequences in the fifth sequence set further include at least one m-sequence obtained by combining the following primitive polynomial and initial value:
a primitive polynomial *x*⁷ *+ x*⁶ + 1 and an initial value [1, 0, 1, 1, 1, 0, 1];
a primitive polynomial *x*⁷ *+ x*⁵ *+ x*⁴ *+ x*³ *+ x*² *+ x*¹ *+* 1 and an initial value [1, 1, 0, 0, 0, 1, 1];
a primitive polynomial *x*⁷ *+ x*⁶ *+ x*⁵ *+ x*⁴ *+ x*³ *+ x*² + 1 and an initial value [1, 1, 1, 0, 1, 1, 1];
a primitive polynomial *x*⁷ + *x*⁶ + 1 and an initial value [1, 0, 1, 1, 1, 1, 0];
a primitive polynomial *x*⁷ *+ x*³ *+ x*² *+ x*¹ *+* 1 and an initial value [1, 0, 1, 0, 1, 0, 0];
a primitive polynomial *x*⁷ *+ x*⁶ *+ x*⁵ *+ x*⁴ *+* 1 and an initial value [1, 0, 0, 0, 1, 0, 0];
the primitive polynomial *x*⁷ *+ x*³ *+ x*² *+ x*¹ + 1 and an initial value [1, 0, 0, 0, 1, 0, 1]; and
a primitive polynomial *x*⁷ *+ x*⁶ *+ x*⁵ *+ x*⁴ *+* 1 and an initial value [0, 1, 1, 1, 1, 0, 1].

In a possible design, the sequences in the sixth sequence set further include at least one m-sequence obtained by combining the following primitive polynomial and initial value:
a primitive polynomial *x*⁸ *+ x*⁶ *+ x*⁵ *+ x*³ + 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ *+ x*⁶ *+ x*⁴ *+ x*³ *+ x*² *+ x*¹ *+* 1 and an initial value [0, 1, 0, 0, 0, 0, 0, 0];
a primitive polynomial *x*⁸ *+ x*⁷ *+ x*⁶ *+ x*⁵ *+ x*⁴ *+ x*² + 1 and an initial value [1, 0, 0, 1, 0, 1, 0, 1];
a primitive polynomial *x*⁸ *+ x*⁷ *+ x*⁵ *+ x*³ *+* 1 and an initial value [0, 0, 1, 1, 1, 1, 1, 0];
a primitive polynomial *x*⁸ *+ x*⁵ *+ x*³ *+ x*¹ *+* 1 and an initial value [0, 0, 0, 1, 0, 1, 0, 0];
a primitive polynomial *x*⁸ *+ x*⁶ *+ x*⁵ *+ x*⁴ + 1 and the initial value [1, 0, 0, 0, 1, 1, 0, 0];
a primitive polynomial *x*⁸ *+ x*⁷ *+ x*² *+ x*¹ *+* 1 and an initial value [0, 1, 1, 1, 0, 0, 0, 0]; and
a primitive polynomial *x*⁸ *+ x*⁷ *+ x*⁶ *+ x*¹ + 1 and an initial value [0, 0, 1, 1, 0, 0, 1, 1].

According to a ninth aspect, an embodiment of this application further provides a communication apparatus, including a memory and a processor. The processor is configured to execute computer instructions stored in the memory. When the computer instructions are executed, the apparatus is enabled to perform the method according to any one of the seventh aspect or the possible designs of the seventh aspect.

According to a tenth aspect, an embodiment of this application further provides a communication apparatus, including a processor and an interface circuit. The processor is configured to: communicate with another apparatus through the interface circuit, and perform the method according to any one of the seventh aspect or the possible designs of the seventh aspect.

The communication apparatus according to the eighth aspect to the tenth aspect may be used in a network device.

According to an eleventh aspect, an embodiment of this application further provides a computer-readable storage medium. The computer-readable storage medium stores computer instructions. When the computer instructions are run on a network device or a chip built in the network device, the network device is enabled to perform the method according to the seventh aspect.

According to a twelfth aspect, an embodiment of this application further provides a computer program product including instructions. When the computer program product runs on a computer, the computer is enabled to perform the method according to any one of the seventh aspect or the possible designs of the seventh aspect.

It may be understood that for beneficial effect that can be achieved in the eighth aspect to the twelfth aspect provided above, refer to beneficial effect in any one of the seventh aspect and the possible designs of the seventh aspect. Details are not described herein again.

According to a thirteenth aspect, an embodiment of this application further provides a signal processing method, applied to a communication system including a network device and a terminal device. The terminal device performs the method according to any one of the first aspect and the possible designs of the first aspect. The network device performs the method according to any one of the seventh aspect and the possible designs of the seventh aspect.

According to a fourteenth aspect, an embodiment of this application further provides a communication system, including a network device and a terminal device. The terminal device performs the method according to any one of the first aspect and the possible designs of the first aspect. The network device performs the method according to any one of the seventh aspect and the possible designs of the seventh aspect.

It may be understood that for beneficial effect that can be achieved in the thirteenth aspect and the fourteenth aspect, refer to beneficial effect in the first aspect, the seventh aspect, and the like. Details are not described herein again.

According to a fifteenth aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial x³ + x¹ + 1 and an initial value [0, 1, 0];
a primitive polynomial x³ + x² + 1 and an initial value [1, 1, 1];
the primitive polynomial x³ + x¹ + 1 and an initial value [0, 1, 1];
the primitive polynomial x³ + x² + 1 and the initial value [0, 1, 0];
the primitive polynomial x³ + x² + 1 and an initial value [1, 0, 0];
the primitive polynomial x³ + x¹ + 1 and an initial value [1, 1, 0];
the primitive polynomial x³ + x¹ + 1 and an initial value [0, 0, 1];
the primitive polynomial x³ + x¹ + 1 and the initial value [1, 0, 0];
the primitive polynomial x³ + x¹ + 1 and the initial value [1, 1, 1]; and
the primitive polynomial x³ + x² + 1 and the initial value [0, 0, 1].

The sequences in the second sequence set include at least one m-sequence obtained by combining the following primitive polynomial and initial value:
a primitive polynomial x⁴ + x¹ + 1 and an initial value [0, 1, 0, 1];
a primitive polynomial x⁴ + x³ + 1 and an initial value [1, 1, 1, 1];
the primitive polynomial x⁴ + x¹ + 1 and an initial value [1, 0, 1, 1];
the primitive polynomial x⁴ + x³ + 1 and an initial value [0, 1, 1, 1];
the primitive polynomial x⁴ + x¹ + 1 and the initial value [0, 1, 1, 1];
the primitive polynomial x⁴ + x³ + 1 and an initial value [0, 0, 1, 0];
the primitive polynomial x⁴ + x³ + 1 and an initial value [0, 1, 1, 0];
the primitive polynomial x⁴ + x¹ + 1 and an initial value [0, 1, 0, 0];
the primitive polynomial x⁴ + x¹ + 1 and an initial value [1, 0, 0, 0]; and
the primitive polynomial x⁴ + x³ + 1 and an initial value [0, 0, 1, 1].

The sequences in the third sequence set include at least one m-sequence obtained by combining the following primitive polynomial and initial value:
a primitive polynomial x⁵ *+* x³ *+* x² *+* x¹ + 1 and an initial value [1, 0, 0, 1, 1];
a primitive polynomial x⁵ + x⁴ + x³ + x² + 1 and an initial value [0, 0, 1, 1, 0];
the primitive polynomial x⁵ *+* x⁴ *+* x³ *+* x² + 1 and an initial value [0, 1, 1, 0, 1];
the primitive polynomial x⁵ *+* x³ + x² + x¹ + 1 and an initial value [1, 0, 0, 0, 0];
a primitive polynomial x⁵ + x² + 1 and the initial value [1, 0, 0, 1, 1];
a primitive polynomial x⁵ + x³ + 1 and an initial value [1, 1, 1, 1, 0];
the primitive polynomial x⁵ + x³ + 1 and an initial value [1, 0, 1, 1, 0];
the primitive polynomial x⁵ + x² + 1 and an initial value [0, 0, 1, 0, 0];
the primitive polynomial x⁵ *+* x³ + x² *+* x¹ + 1 and an initial value [0, 0, 0, 1, 0]; and
the primitive polynomial x⁵ + x⁴ + x³ + x² + 1 and an initial value [1, 1, 1, 0, 1].

The sequences in the fourth sequence set include at least one m-sequence obtained by combining the following primitive polynomial and initial value:
a primitive polynomial x⁶ + x⁵ + 1 and an initial value [1, 0, 1, 1, 1, 0];
a primitive polynomial x⁶ + x¹ + 1 and an initial value [1, 0, 1, 0, 0, 1];
a primitive polynomial x⁶ *+* x⁵ *+* x³ *+* x² + 1 and an initial value [0, 0, 0, 0, 1, 1];
a primitive polynomial x⁶ + x⁴ + x³ + x¹ + 1 and an initial value [1, 0, 0, 1, 0, 0];
a primitive polynomial x⁶ + x⁵ + x² + x¹ + 1 and an initial value [1, 0, 1, 0, 1, 1];
a primitive polynomial x⁶ *+* x⁵ *+* x⁴ *+* x¹ + 1 and an initial value [1, 1, 0, 0, 0, 1];
the primitive polynomial x⁶ + x¹ + 1 and an initial value [0, 1, 0, 0, 1, 0];
the primitive polynomial x⁶ + x⁵ + 1 and an initial value [1, 1, 0, 1, 1, 1];
the primitive polynomial x⁶ + x¹ + 1 and an initial value [0, 0, 0, 0, 0, 1]; and
the primitive polynomial x⁶ + x⁵ + 1 and an initial value [1, 0, 0, 0, 0, 1].

The sequences in the fifth sequence set include at least one m-sequence obtained by combining the following primitive polynomial and initial value:
a primitive polynomial x⁷ + x¹ + 1 and an initial value [0, 0, 1, 0, 1, 1, 0];
a primitive polynomial x⁷ + x⁶ + 1 and an initial value [1, 0, 1, 1, 1, 0, 1];
a primitive polynomial x⁷ + x⁵ + x⁴ + x³ + x² + x¹ + 1 and an initial value [1, 1, 0, 0, 0, 1, 1];
a primitive polynomial x⁷ + x⁶ + x⁵ + x⁴ + x³ + x² + 1 and an initial value [1, 1, 1, 0, 1, 1, 1];
the primitive polynomial x⁷ + x¹ + 1 and an initial value [1, 0, 1, 0, 1, 1, 0];
the primitive polynomial x⁷ + x⁶ + 1 and an initial value [1, 0, 1, 1, 1, 1, 0];
a primitive polynomial x⁷ + x³ + x² + x¹ + 1 and an initial value [1, 0, 1, 0, 1, 0, 0];
a primitive polynomial x⁷ + x⁶ + x⁵ + x⁴ + 1 and an initial value [1, 0, 0, 0, 1, 0, 0];
the primitive polynomial x⁷ + x³ + x² + x¹ + 1 and an initial value [1, 0, 0, 0, 1, 0, 1]; and
the primitive polynomial x⁷ + x⁶ + x⁵ + x⁴ + 1 and an initial value [0, 1, 1, 1, 1, 0, 1].

The sequences in the sixth sequence set include at least one m-sequence obtained by combining the following primitive polynomial and initial value:
a primitive polynomial x⁸ + x⁶ + x⁵ + x³ + 1 and an initial value [0, 0, 1, 1, 0, 1, 1, 1];
a primitive polynomial x⁸ *+* x⁵ *+* x³ + x² + 1 and an initial value [0, 0, 0, 0, 1, 1, 1, 0];
a primitive polynomial x⁸ + x⁶ + x⁴ + x³ + x² + x¹ + 1 and an initial value [0, 1, 0, 0, 0, 0, 0, 0];
a primitive polynomial x⁸ + x⁷ + x⁶ + x⁵ + x⁴ + x² + 1 and an initial value [1, 0, 0, 1, 0, 1, 0, 1];
a primitive polynomial x⁸ + x⁷ + x⁵ + x³ + 1 and an initial value [0, 0, 1, 1, 1, 1, 1, 0];
a primitive polynomial x⁸ *+* x⁵ *+* x³ + x¹ + 1 and an initial value [0, 0, 0, 1, 0, 1, 0, 0];
a primitive polynomial x⁸ *+* x⁴ *+* x³ + x² + 1 and an initial value [0, 1, 0, 1, 1, 0, 0, 1];
a primitive polynomial x⁸ + x⁶ + x⁵ + x⁴ + 1 and an initial value [1, 0, 0, 0, 1, 1, 0, 0];
a primitive polynomial x⁸ *+* x⁷ *+* x² + x¹ + 1 and an initial value [0, 1, 1, 1, 0, 0, 0, 0]; and
a primitive polynomial x⁸ *+* x⁷ *+* x⁶ + x¹ + 1 and an initial value [0, 0, 1, 1, 0, 0, 1, 1].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, the sequences in the first sequence set further include at least one m-sequence obtained by combining the following primitive polynomial and initial value:
the primitive polynomial x³ + x¹ + 1 and an initial value [1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial x⁴ + x¹ + 1 and the initial value [0, 1, 1, 0];
the primitive polynomial x⁴ + x¹ + 1 and the initial value [1, 1, 1, 1];
the primitive polynomial x⁴ + x¹ + 1 and an initial value [1, 0, 0, 1];
the primitive polynomial x⁴ + x¹ + 1 and the initial value [0, 0, 1, 0]; and
the primitive polynomial x⁴ + x¹ + 1 and the initial value [0, 0, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
the primitive polynomial x⁵ + x² + 1 and an initial value [1, 0, 1, 0, 0];
the primitive polynomial x⁵ + x² + 1 and an initial value [0, 1, 0, 1, 1];
the primitive polynomial x⁵ + x² + 1 and an initial value [0, 0, 0, 1, 1];
the primitive polynomial x⁵ + x² + 1 and the initial value [0, 0, 1, 1, 0];
the primitive polynomial x⁵ + x² + 1 and an initial value [0, 0, 1, 0, 1];
the primitive polynomial x⁵ + x² + 1 and an initial value [0, 1, 0, 0, 0];
the primitive polynomial x⁵ + x² + 1 and an initial value [0, 1, 1, 1, 0]; and
the primitive polynomial x⁵ + x² + 1 and an initial value [0, 1, 1, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial x⁶ + x¹ + 1 and an initial value [1, 1, 1, 1, 0, 1];
the primitive polynomial x⁶ + x¹ + 1 and an initial value [1, 1, 1, 1, 1, 0];
the primitive polynomial x⁶ + x¹ + 1 and an initial value [1, 1, 1, 1, 0, 0];
the primitive polynomial x⁶ + x¹ + 1 and an initial value [1, 1, 0, 0, 1, 0];
the primitive polynomial x⁶ + x¹ + 1 and an initial value [0, 1, 1, 1, 0, 1];
the primitive polynomial x⁶ + x¹ + 1 and an initial value [0, 0, 0, 1, 0, 1]; and
the primitive polynomial x⁶ + x¹ + 1 and an initial value [0, 1, 1, 1, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
the primitive polynomial x⁷ + x¹ + 1 and an initial value [1, 1, 1, 1, 0, 0, 0];
the primitive polynomial x⁷ + x¹ + 1 and an initial value [0, 1, 0, 1, 1, 1, 1];
the primitive polynomial x⁷ + x¹ + 1 and an initial value [0, 0, 1, 1, 1, 0, 1];
the primitive polynomial x⁷ + x¹ + 1 and an initial value [0, 1, 1, 0, 1, 1, 1];
the primitive polynomial x⁷ + x¹ + 1 and an initial value [0, 1, 0, 1, 1, 0, 0];
the primitive polynomial x⁷ + x¹ + 1 and an initial value [1, 0, 1, 0, 0, 0, 1];
the primitive polynomial x⁷ + x¹ + 1 and an initial value [1, 1, 1, 1, 0, 1, 0]; and
the primitive polynomial x⁷ + x¹ + 1 and an initial value [0, 0, 1, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
the primitive polynomial x⁸ *+* x⁴ *+* x³ *+* x² + 1 and an initial value [0, 0, 0, 1, 0, 0, 1, 0];
the primitive polynomial x⁸ *+* x⁴ *+* x³ + x² + 1 and the initial value [0, 0, 1, 1, 0, 1, 1, 1];
the primitive polynomial x⁸ + x⁴ + x³ + x² + 1 and an initial value [0, 0, 1, 0, 1, 0, 1, 0];
the primitive polynomial x⁸ *+* x⁴ *+* x³ + x² + 1 and an initial value [0, 1, 1, 0, 0, 0, 0, 1];
the primitive polynomial x⁸ *+* x⁴ *+* x³ + x² + 1 and an initial value [0, 1, 0, 0, 0, 1, 0, 0];
the primitive polynomial x⁸ + x⁴ + x³ + x² + 1 and an initial value [1, 0, 1, 0, 0, 0, 1, 1];
the primitive polynomial x⁸ *+* x⁴ *+* x³ + x² + 1 and the initial value [1, 0, 0, 0, 1, 1, 0, 0];
the primitive polynomial x⁸ *+* x⁴ *+* x³ + x² + 1 and an initial value [0, 0, 1, 0, 0, 1, 0, 1]; and
the primitive polynomial x⁸ + x⁴ + x³ + x² + 1 and an initial value [1, 1, 0, 1, 0, 0, 1, 0].

Based on this possible design, an m-sequence corresponding to a primitive polynomial having a minimum quantity of taps can be provided, to reduce complexity of generating the m-sequence by a receiver and a transmitter.

According to a sixteenth aspect, an embodiment of this application provides a communication apparatus. The apparatus has a function of implementing the method according to the fifteenth aspect. The function may be implemented by hardware, or may be implemented by hardware executing corresponding software. The hardware or the software includes one or more units or modules, for example, a sending unit and a processing unit, corresponding to the function of the method according to the fifteenth aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial x³ + x¹ + 1 and an initial value [0, 1, 0];
a primitive polynomial x³ + x² + 1 and an initial value [1, 1, 1];
the primitive polynomial x³ + x¹ + 1 and an initial value [0, 1, 1];
the primitive polynomial x³ + x² + 1 and the initial value [0, 1, 0];
the primitive polynomial x³ + x² + 1 and an initial value [1, 0, 0];
the primitive polynomial x³ + x¹ + 1 and an initial value [1, 1, 0];
the primitive polynomial x³ + x¹ + 1 and an initial value [0, 0, 1];
the primitive polynomial x³ + x¹ + 1 and the initial value [1, 0, 0];
the primitive polynomial x³ + x¹ + 1 and the initial value [1, 1, 1]; and
the primitive polynomial x³ + x² + 1 and the initial value [0, 0, 1].

The sequences in the second sequence set include at least one m-sequence obtained by combining the following primitive polynomial and initial value:
a primitive polynomial x⁴ + x¹ + 1 and an initial value [0, 1, 0, 1];
a primitive polynomial x⁴ + x³ + 1 and an initial value [1, 1, 1, 1];
the primitive polynomial x⁴ + x¹ + 1 and an initial value [1, 0, 1, 1];
the primitive polynomial x⁴ + x³ + 1 and an initial value [0, 1, 1, 1];
the primitive polynomial x⁴ + x¹ + 1 and the initial value [0, 1, 1, 1];
the primitive polynomial x⁴ + x³ + 1 and an initial value [0, 0, 1, 0];
the primitive polynomial x⁴ + x³ + 1 and an initial value [0, 1, 1, 0];
the primitive polynomial x⁴ + x¹ + 1 and an initial value [0, 1, 0, 0];
the primitive polynomial x⁴ + x¹ + 1 and an initial value [1, 0, 0, 0]; and
the primitive polynomial x⁴ + x³ + 1 and an initial value [0, 0, 1, 1].

The sequences in the third sequence set include at least one m-sequence obtained by combining the following primitive polynomial and initial value:
a primitive polynomial x⁵ *+* x³ *+* x² *+* x¹ + 1 and an initial value [1, 0, 0, 1, 1];
a primitive polynomial x⁵ *+* x⁴ *+* x³ *+* x² + 1 and an initial value [0, 0, 1, 1, 0];
the primitive polynomial x⁵ + x⁴ + x³ + x² + 1 and an initial value [0, 1, 1, 0, 1];
the primitive polynomial x⁵ *+* x³ + x² + x¹ + 1 and an initial value [1, 0, 0, 0, 0];
a primitive polynomial x⁵ + x² + 1 and the initial value [1, 0, 0, 1, 1];
a primitive polynomial x⁵ + x³ + 1 and an initial value [1, 1, 1, 1, 0];
the primitive polynomial x⁵ + x³ + 1 and an initial value [1, 0, 1, 1, 0];
the primitive polynomial x⁵ + x² + 1 and an initial value [0, 0, 1, 0, 0];
the primitive polynomial x⁵ *+* x³ + x² *+* x¹ + 1 and an initial value [0, 0, 0, 1, 0]; and
the primitive polynomial x⁵ + x⁴ + x³ + x² + 1 and an initial value [1, 1, 1, 0, 1].

The sequences in the fourth sequence set include at least one m-sequence obtained by combining the following primitive polynomial and initial value:
a primitive polynomial x⁶ + x⁵ + 1 and an initial value [1, 0, 1, 1, 1, 0];
a primitive polynomial x⁶ + x¹ + 1 and an initial value [1, 0, 1, 0, 0, 1];
a primitive polynomial x⁶ *+* x⁵ *+* x³ *+* x² + 1 and an initial value [0, 0, 0, 0, 1, 1];
a primitive polynomial x⁶ + x⁴ + x³ + x¹ + 1 and an initial value [1, 0, 0, 1, 0, 0];
a primitive polynomial x⁶ *+* x⁵ *+* x² *+* x¹ + 1 and an initial value [1, 0, 1, 0, 1, 1];
a primitive polynomial x⁶ *+* x⁵ *+* x⁴ *+* x¹ + 1 and an initial value [1, 1, 0, 0, 0, 1];
the primitive polynomial x⁶ + x¹ + 1 and an initial value [0, 1, 0, 0, 1, 0];
the primitive polynomial x⁶ + x⁵ + 1 and an initial value [1, 1, 0, 1, 1, 1];
the primitive polynomial x⁶ + x¹ + 1 and an initial value [0, 0, 0, 0, 0, 1]; and
the primitive polynomial x⁶ + x⁵ + 1 and an initial value [1, 0, 0, 0, 0, 1].

The sequences in the fifth sequence set include at least one m-sequence obtained by combining the following primitive polynomial and initial value:
a primitive polynomial x⁷ + x¹ + 1 and an initial value [0, 0, 1, 0, 1, 1, 0];
a primitive polynomial x⁷ + x⁶ + 1 and an initial value [1, 0, 1, 1, 1, 0, 1];
a primitive polynomial x⁷ + x⁵ + x⁴ + x³ + x² + x¹ + 1 and an initial value [1, 1, 0, 0, 0, 1, 1];
a primitive polynomial x⁷ + x⁶ + x⁵ + x⁴ + x³ + x² + 1 and an initial value [1, 1, 1, 0, 1, 1, 1];
the primitive polynomial x⁷ + x¹ + 1 and an initial value [1, 0, 1, 0, 1, 1, 0];
the primitive polynomial x⁷ + x⁶ + 1 and an initial value [1, 0, 1, 1, 1, 1, 0];
a primitive polynomial x⁷ + x³ + x² + x¹ + 1 and an initial value [1, 0, 1, 0, 1, 0, 0];
a primitive polynomial x⁷ + x⁶ + x⁵ + x⁴ + 1 and an initial value [1, 0, 0, 0, 1, 0, 0];
the primitive polynomial x⁷ + x³ + x² + x¹ + 1 and an initial value [1, 0, 0, 0, 1, 0, 1]; and
the primitive polynomial x⁷ + x⁶ + x⁵ + x⁴ + 1 and an initial value [0, 1, 1, 1, 1, 0, 1].

The sequences in the sixth sequence set include at least one m-sequence obtained by combining the following primitive polynomial and initial value:
a primitive polynomial x⁸ + x⁶ + x⁵ + x³ + 1 and an initial value [0, 0, 1, 1, 0, 1, 1, 1];
a primitive polynomial x⁸ + x⁵ + x³ + x² + 1 and an initial value [0, 0, 0, 0, 1, 1, 1, 0];
a primitive polynomial x⁸ + x⁶ + x⁴ + x³ + x² + x¹ + 1 and an initial value [0, 1, 0, 0, 0, 0, 0, 0];
a primitive polynomial x⁸ + x⁷ + x⁶ + x⁵ + x⁴ + x² + 1 and an initial value [1, 0, 0, 1, 0, 1, 0, 1];
a primitive polynomial x⁸ + x⁷ + x⁵ + x³ + 1 and an initial value [0, 0, 1, 1, 1, 1, 1, 0];
a primitive polynomial x⁸ *+* x⁵ *+* x³ + x¹ + 1 and an initial value [0, 0, 0, 1, 0, 1, 0, 0];
a primitive polynomial x⁸ *+* x⁴ *+* x³ + x² + 1 and an initial value [0, 1, 0, 1, 1, 0, 0, 1];
a primitive polynomial x⁸ *+* x⁶ *+* x⁵ + x⁴ + 1 and an initial value [1, 0, 0, 0, 1, 1, 0, 0];
a primitive polynomial x⁸ + x⁷ + x² + x¹ + 1 and an initial value [0, 1, 1, 1, 0, 0, 0, 0]; and
a primitive polynomial x⁸ *+* x⁷ *+* x⁶ + x¹ + 1 and an initial value [0, 0, 1, 1, 0, 0, 1, 1].

In a possible design, the sequences in the first sequence set further include at least one m-sequence obtained by combining the following primitive polynomial and initial value:
the primitive polynomial x³ + x¹ + 1 and an initial value [1, 0, 1].

In a possible design, the sequences in the second sequence set further include at least one m-sequence obtained by combining the following primitive polynomial and initial value:
the primitive polynomial x⁴ + x¹ + 1 and the initial value [0, 1, 1, 0];
the primitive polynomial x⁴ + x¹ + 1 and the initial value [1, 1, 1, 1];
the primitive polynomial x⁴ + x¹ + 1 and an initial value [1, 0, 0, 1];
the primitive polynomial x⁴ + x¹ + 1 and an initial value [0, 0, 1, 0]; and
the primitive polynomial x⁴ + x¹ + 1 and the initial value [0, 0, 1, 1].

In a possible design, the sequences in the third sequence set further include at least one m-sequence obtained by combining the following primitive polynomial and initial value:
the primitive polynomial x⁵ + x² + 1 and an initial value [1, 0, 1, 0, 0];
the primitive polynomial x⁵ + x² + 1 and an initial value [0, 1, 0, 1, 1];
the primitive polynomial x⁵ + x² + 1 and an initial value [0, 0, 0, 1, 1];
the primitive polynomial x⁵ + x² + 1 and an initial value [0, 0, 1, 1, 0];
the primitive polynomial x⁵ + x² + 1 and an initial value [0, 0, 1, 0, 1];
the primitive polynomial x⁵ + x² + 1 and an initial value [0, 1, 0, 0, 0];
the primitive polynomial x⁵ + x² + 1 and an initial value [0, 1, 1, 1, 0]; and
the primitive polynomial x⁵ + x² + 1 and an initial value [0, 1, 1, 1, 1].

In a possible design, the sequences in the fourth sequence set further include at least one m-sequence obtained by combining the following primitive polynomial and initial value:
the primitive polynomial x⁶ + x¹ + 1 and an initial value [1, 1, 1, 1, 0, 1];
the primitive polynomial x⁶ + x¹ + 1 and an initial value [1, 1, 1, 1, 1, 0];
the primitive polynomial x⁶ + x¹ + 1 and an initial value [1, 1, 1, 1, 0, 0];
the primitive polynomial x⁶ + x¹ + 1 and an initial value [1, 1, 0, 0, 1, 0];
the primitive polynomial x⁶ + x¹ + 1 and an initial value [0, 1, 1, 1, 0, 1];
the primitive polynomial x⁶ + x¹ + 1 and an initial value [0, 0, 0, 1, 0, 1]; and
the primitive polynomial x⁶ + x¹ + 1 and an initial value [0, 1, 1, 1, 1, 1].

In a possible design, the sequences in the fifth sequence set further include at least one m-sequence obtained by combining the following primitive polynomial and initial value:
the primitive polynomial x⁷ + x¹ + 1 and an initial value [1, 1, 1, 1, 0, 0, 0];
the primitive polynomial x⁷ + x¹ + 1 and an initial value [0, 1, 0, 1, 1, 1, 1];
the primitive polynomial x⁷ + x¹ + 1 and an initial value [0, 0, 1, 1, 1, 0, 1];
the primitive polynomial x⁷ + x¹ + 1 and an initial value [0, 1, 1, 0, 1, 1, 1];
the primitive polynomial x⁷ + x¹ + 1 and an initial value [0, 1, 0, 1, 1, 0, 0];
the primitive polynomial x⁷ + x¹ + 1 and an initial value [1, 0, 1, 0, 0, 0, 1];
the primitive polynomial x⁷ + x¹ + 1 and an initial value [1, 1, 1, 1, 0, 1, 0]; and
the primitive polynomial x⁷ + x¹ + 1 and an initial value [0, 0, 1, 1, 1, 1, 0].

In a possible design, the sequences in the sixth sequence set further include at least one m-sequence obtained by combining the following primitive polynomial and initial value:
the primitive polynomial x⁸ *+* x⁴ *+* x³ *+* x² + 1 and an initial value [0, 0, 0, 1, 0, 0, 1, 0];
the primitive polynomial x⁸ + x⁴ + x³ + x² + 1 and the initial value [0, 0, 1, 1, 0, 1, 1, 1];
the primitive polynomial x⁸ *+* x⁴ *+* x³ + x² + 1 and an initial value [0, 0, 1, 0, 1, 0, 1, 0];
the primitive polynomial x⁸ *+* x⁴ *+* x³ + x² + 1 and an initial value [0, 1, 1, 0, 0, 0, 0, 1];
the primitive polynomial x⁸ *+* x⁴ *+* x³ + x² + 1 and an initial value [0, 1, 0, 0, 0, 1, 0, 0];
the primitive polynomial x⁸ *+* x⁴ *+* x³ + x² + 1 and an initial value [1, 0, 1, 0, 0, 0, 1, 1];
the primitive polynomial x⁸ *+* x⁴ *+* x³ + x² + 1 and the initial value [1, 0, 0, 0, 1, 1, 0, 0];
the primitive polynomial x⁸ + x⁴ + x³ + x² + 1 and an initial value [0, 0, 1, 0, 0, 1, 0, 1]; and
the primitive polynomial x⁸ *+* x⁴ *+* x³ + x² + 1 and an initial value [1, 1, 0, 1, 0, 0, 1, 0].

According to a seventeenth aspect, an embodiment of this application further provides a communication apparatus, including a memory and a processor. The processor is configured to execute computer instructions stored in the memory. When the computer instructions are executed, the apparatus is enabled to perform the method according to any one of the fifteenth aspect or the possible designs of the fifteenth aspect.

According to an eighteenth aspect, an embodiment of this application further provides a communication apparatus, including a processor and an interface circuit. The processor is configured to: communicate with another apparatus through the interface circuit, and perform the method according to any one of the fifteenth aspect or the possible designs of the fifteenth aspect.

The communication apparatus according to the sixteenth aspect to the eighteenth aspect may be used in a terminal device.

According to a nineteenth aspect, an embodiment of this application further provides a computer-readable storage medium. The computer-readable storage medium stores computer instructions. When the computer instructions are run on a terminal device or a chip built in the terminal device, the terminal device is enabled to perform the method according to the fifteenth aspect.

According to a twentieth aspect, an embodiment of this application further provides a computer program product including instructions. When the computer program product runs on a computer, the computer is enabled to perform the method according to any one of the fifteenth aspect or the possible designs of the fifteenth aspect.

It may be understood that for beneficial effect that can be achieved in the sixteenth aspect to the twentieth aspect provided above, refer to beneficial effect in any one of the fifteenth aspect and the possible designs of the fifteenth aspect. Details are not described herein again.

According to a twenty-first aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial x³ + x¹ + 1 and an initial value [0, 1, 0];
a primitive polynomial x³ + x² + 1 and an initial value [1, 1, 1];
the primitive polynomial x³ + x¹ + 1 and an initial value [0, 1, 1];
the primitive polynomial x³ + x² + 1 and the initial value [0, 1, 0];
the primitive polynomial x³ + x² + 1 and an initial value [1, 0, 0];
the primitive polynomial x³ + x¹ + 1 and an initial value [1, 1, 0];
the primitive polynomial x³ + x¹ + 1 and an initial value [0, 0, 1];
the primitive polynomial x³ + x¹ + 1 and the initial value [1, 0, 0];
the primitive polynomial x³ + x¹ + 1 and the initial value [1, 1, 1]; and
the primitive polynomial x³ + x² + 1 and the initial value [0, 0, 1].

The sequences in the second sequence set include at least one m-sequence obtained by combining the following primitive polynomial and initial value:
a primitive polynomial x⁴ + x¹ + 1 and an initial value [0, 1, 0, 1];
a primitive polynomial x⁴ + x³ + 1 and an initial value [1, 1, 1, 1];
the primitive polynomial x⁴ + x¹ + 1 and an initial value [1, 0, 1, 1];
the primitive polynomial x⁴ + x³ + 1 and an initial value [0, 1, 1, 1];
the primitive polynomial x⁴ + x¹ + 1 and the initial value [0, 1, 1, 1];
the primitive polynomial x⁴ + x³ + 1 and an initial value [0, 0, 1, 0];
the primitive polynomial x⁴ + x³ + 1 and an initial value [0, 1, 1, 0];
the primitive polynomial x⁴ + x¹ + 1 and an initial value [0, 1, 0, 0];
the primitive polynomial x⁴ + x¹ + 1 and an initial value [1, 0, 0, 0];
the primitive polynomial x⁴ + x³ + 1 and an initial value [0, 0, 1, 1].

The sequences in the third sequence set include at least one m-sequence obtained by combining the following primitive polynomial and initial value:
a primitive polynomial x⁵ *+* x³ *+* x² *+* x¹ + 1 and an initial value [1, 0, 0, 1, 1];
a primitive polynomial x⁵ *+* x⁴ *+* x³ *+* x² + 1 and an initial value [0, 0, 1, 1, 0];
the primitive polynomial x⁵ + x⁴ + x³ + x² + 1 and an initial value [0, 1, 1, 0, 1];
the primitive polynomial x⁵ *+* x³ + x² + x¹ + 1 and an initial value [1, 0, 0, 0, 0];
a primitive polynomial x⁵ + x² + 1 and the initial value [1, 0, 0, 1, 1];
a primitive polynomial x⁵ + x³ + 1 and an initial value [1, 1, 1, 1, 0];
the primitive polynomial x⁵ + x³ + 1 and an initial value [1, 0, 1, 1, 0];
the primitive polynomial x⁵ + x² + 1 and an initial value [0, 0, 1, 0, 0];
the primitive polynomial x⁵ *+* x³ + x² *+* x¹ + 1 and an initial value [0, 0, 0, 1, 0]; and
the primitive polynomial x⁵ *+* x⁴ *+* x³ *+* x² + 1 and an initial value [1, 1, 1, 0, 1].

The sequences in the fourth sequence set include at least one m-sequence obtained by combining the following primitive polynomial and initial value:
a primitive polynomial x⁶ + x⁵ + 1 and an initial value [1, 0, 1, 1, 1, 0];
a primitive polynomial x⁶ + x¹ + 1 and an initial value [1, 0, 1, 0, 0, 1];
a primitive polynomial x⁶ *+* x⁵ *+* x³ *+* x² + 1 and an initial value [0, 0, 0, 0, 1, 1];
a primitive polynomial x⁶ *+* x⁴ *+* x³ + x¹ + 1 and an initial value [1, 0, 0, 1, 0, 0];
a primitive polynomial x⁶ + x⁵ + x² + x¹ + 1 and an initial value [1, 0, 1, 0, 1, 1];
a primitive polynomial x⁶ *+* x⁵ *+* x⁴ *+* x¹ + 1 and an initial value [1, 1, 0, 0, 0, 1];
the primitive polynomial x⁶ + x¹ + 1 and an initial value [0, 1, 0, 0, 1, 0];
the primitive polynomial x⁶ + x⁵ + 1 and an initial value [1, 1, 0, 1, 1, 1];
the primitive polynomial x⁶ + x¹ + 1 and an initial value [0, 0, 0, 0, 0, 1]; and
the primitive polynomial x⁶ + x⁵ + 1 and an initial value [1, 0, 0, 0, 0, 1].

The sequences in the fifth sequence set include at least one m-sequence obtained by combining the following primitive polynomial and initial value:
a primitive polynomial x⁷ + x¹ + 1 and an initial value [0, 0, 1, 0, 1, 1, 0];
a primitive polynomial x⁷ + x⁶ + 1 and an initial value [1, 0, 1, 1, 1, 0, 1];
a primitive polynomial x⁷ + x⁵ + x⁴ + x³ + x² + x¹ + 1 and an initial value [1, 1, 0, 0, 0, 1, 1];
a primitive polynomial x⁷ + x⁶ + x⁵ + x⁴ + x³ + x² + 1 and an initial value [1, 1, 1, 0, 1, 1, 1];
the primitive polynomial x⁷ + x¹ + 1 and an initial value [1, 0, 1, 0, 1, 1, 0];
the primitive polynomial x⁷ + x⁶ + 1 and an initial value [1, 0, 1, 1, 1, 1, 0];
a primitive polynomial x⁷ + x³ + x² + x¹ + 1 and an initial value [1, 0, 1, 0, 1, 0, 0];
a primitive polynomial x⁷ + x⁶ + x⁵ + x⁴ + 1 and an initial value [1, 0, 0, 0, 1, 0, 0];
the primitive polynomial x⁷ + x³ + x² + x¹ + 1 and an initial value [1, 0, 0, 0, 1, 0, 1]; and
the primitive polynomial x⁷ + x⁶ + x⁵ + x⁴ + 1 and an initial value [0, 1, 1, 1, 1, 0, 1].

The sequences in the sixth sequence set include at least one m-sequence obtained by combining the following primitive polynomial and initial value:
a primitive polynomial x⁸ + x⁶ + x⁵ + x³ + 1 and an initial value [0, 0, 1, 1, 0, 1, 1, 1];
a primitive polynomial x⁸ + x⁵ + x³ + x² + 1 and an initial value [0, 0, 0, 0, 1, 1, 1, 0];
a primitive polynomial x⁸ + x⁶ + x⁴ + x³ + x² + x¹ + 1 and an initial value [0, 1, 0, 0, 0, 0, 0, 0];
a primitive polynomial x⁸ + x⁷ + x⁶ + x⁵ + x⁴ + x² + 1 and an initial value [1, 0, 0, 1, 0, 1, 0, 1];
a primitive polynomial x⁸ + x⁷ + x⁵ + x³ + 1 and an initial value [0, 0, 1, 1, 1, 1, 1, 0];
a primitive polynomial x⁸ + x⁵ + x³ + x¹ + 1 and an initial value [0, 0, 0, 1, 0, 1, 0, 0];
a primitive polynomial x⁸ + x⁴ + x³ + x² + 1 and an initial value [0, 1, 0, 1, 1, 0, 0, 1];
a primitive polynomial x⁸ + x⁶ + x⁵ + x⁴ + 1 and an initial value [1, 0, 0, 0, 1, 1, 0, 0];
a primitive polynomial x⁸ + x⁷ + x² + x¹ + 1 and an initial value [0, 1, 1, 1, 0, 0, 0, 0]; and
a primitive polynomial x⁸ + x⁷ + x⁶ + x¹ + 1 and an initial value [0, 0, 1, 1, 0, 0, 1, 1].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, the sequences in the first sequence set further include at least one m-sequence obtained by combining the following primitive polynomial and initial value:
the primitive polynomial x³ + x¹ + 1 and an initial value [1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial x⁴ + x¹ + 1 and the initial value [0, 1, 1, 0];
the primitive polynomial x⁴ + x¹ + 1 and the initial value [1, 1, 1, 1];
the primitive polynomial x⁴ + x¹ + 1 and an initial value [1, 0, 0, 1];
the primitive polynomial x⁴ + x¹ + 1 and the initial value [0, 0, 1, 0]; and
the primitive polynomial x⁴ + x¹ + 1 and the initial value [0, 0, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
the primitive polynomial x⁵ + x² + 1 and an initial value [1, 0, 1, 0, 0];
the primitive polynomial x⁵ + x² + 1 and an initial value [0, 1, 0, 1, 1];
the primitive polynomial x⁵ + x² + 1 and an initial value [0, 0, 0, 1, 1];
the primitive polynomial x⁵ + x² + 1 and the initial value [0, 0, 1, 1, 0];
the primitive polynomial x⁵ + x² + 1 and an initial value [0, 0, 1, 0, 1];
the primitive polynomial x⁵ + x² + 1 and an initial value [0, 1, 0, 0, 0];
the primitive polynomial x⁵ + x² + 1 and an initial value [0, 1, 1, 1, 0]; and
the primitive polynomial x⁵ + x² + 1 and an initial value [0, 1, 1, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial x⁶ + x¹ + 1 and an initial value [1, 1, 1, 1, 0, 1];
the primitive polynomial x⁶ + x¹ + 1 and an initial value [1, 1, 1, 1, 1, 0];
the primitive polynomial x⁶ + x¹ + 1 and an initial value [1, 1, 1, 1, 0, 0];
the primitive polynomial x⁶ + x¹ + 1 and an initial value [1, 1, 0, 0, 1, 0];
the primitive polynomial x⁶ + x¹ + 1 and an initial value [0, 1, 1, 1, 0, 1];
the primitive polynomial x⁶ + x¹ + 1 and an initial value [0, 0, 0, 1, 0, 1]; and
the primitive polynomial x⁶ + x¹ + 1 and an initial value [0, 1, 1, 1, 1, 1].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
the primitive polynomial x⁷ + x¹ + 1 and an initial value [1, 1, 1, 1, 0, 0, 0];
the primitive polynomial x⁷ + x¹ + 1 and an initial value [0, 1, 0, 1, 1, 1, 1];
the primitive polynomial x⁷ + x¹ + 1 and an initial value [0, 0, 1, 1, 1, 0, 1];
the primitive polynomial x⁷ + x¹ + 1 and an initial value [0, 1, 1, 0, 1, 1, 1];
the primitive polynomial x⁷ + x¹ + 1 and an initial value [0, 1, 0, 1, 1, 0, 0];
the primitive polynomial x⁷ + x¹ + 1 and an initial value [1, 0, 1, 0, 0, 0, 1];
the primitive polynomial x⁷ + x¹ + 1 and an initial value [1, 1, 1, 1, 0, 1, 0]; and
the primitive polynomial x⁷ + x¹ + 1 and an initial value [0, 0, 1, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
the primitive polynomial x⁸ + x⁴ + x³ + x² + 1 and an initial value [0, 0, 0, 1, 0, 0, 1, 0];
the primitive polynomial x⁸ + x⁴ + x³ + x² + 1 and the initial value [0, 0, 1, 1, 0, 1, 1, 1];
the primitive polynomial x⁸ + x⁴ + x³ + x² + 1 and an initial value [0, 0, 1, 0, 1, 0, 1, 0];
the primitive polynomial x⁸ + x⁴ + x³ + x² + 1 and an initial value [0, 1, 1, 0, 0, 0, 0, 1];
the primitive polynomial x⁸ + x⁴ + x³ + x² + 1 and an initial value [0, 1, 0, 0, 0, 1, 0, 0];
the primitive polynomial x⁸ + x⁴ + x³ + x² + 1 and an initial value [1, 0, 1, 0, 0, 0, 1, 1];
the primitive polynomial x⁸ + x⁴ + x³ + x² + 1 and the initial value [1, 0, 0, 0, 1, 1, 0, 0];
the primitive polynomial x⁸ + x⁴ + x³ + x² + 1 and an initial value [0, 0, 1, 0, 0, 1, 0, 1]; and
the primitive polynomial x⁸ + x⁴ + x³ + x² + 1 and an initial value [1, 1, 0, 1, 0, 0, 1, 0].

Based on this possible design, an m-sequence corresponding to a primitive polynomial having a minimum quantity of taps can be provided, to reduce complexity of generating the m-sequence by a receiver and a transmitter.

According to a twenty-second aspect, an embodiment of this application provides a communication apparatus. The apparatus has a function of implementing the method according to the twenty-first aspect. The function may be implemented by hardware, or may be implemented by hardware executing corresponding software. The hardware or the software includes one or more units or modules, for example, a receiving unit and a processing unit, corresponding to the function of the method according to the twentieth aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial x³ + x¹ + 1 and an initial value [0, 1, 0];
a primitive polynomial x³ + x² + 1 and an initial value [1, 1, 1];
the primitive polynomial x³ + x¹ + 1 and an initial value [0, 1, 1];
the primitive polynomial x³ + x² + 1 and the initial value [0, 1, 0];
the primitive polynomial x³ + x² + 1 and an initial value [1, 0, 0];
the primitive polynomial x³ + x¹ + 1 and an initial value [1, 1, 0];
the primitive polynomial x³ + x¹ + 1 and an initial value [0, 0, 1];
the primitive polynomial x³ + x¹ + 1 and the initial value [1, 0, 0];
the primitive polynomial x³ + x¹ + 1 and the initial value [1, 1, 1]; and
the primitive polynomial x³ + x² + 1 and the initial value [0, 0, 1].

The sequences in the second sequence set include at least one m-sequence obtained by combining the following primitive polynomial and initial value:
a primitive polynomial x⁴ + x¹ + 1 and an initial value [0, 1, 0, 1];
a primitive polynomial x⁴ + x³ + 1 and an initial value [1, 1, 1, 1];
the primitive polynomial x⁴ + x¹ + 1 and an initial value [1, 0, 1, 1];
the primitive polynomial x⁴ + x³ + 1 and an initial value [0, 1, 1, 1];
the primitive polynomial x⁴ + x¹ + 1 and the initial value [0, 1, 1, 1];
the primitive polynomial x⁴ + x³ + 1 and an initial value [0, 0, 1, 0];
the primitive polynomial x⁴ + x³ + 1 and an initial value [0, 1, 1, 0];
the primitive polynomial x⁴ + x¹ + 1 and an initial value [0, 1, 0, 0];
the primitive polynomial x⁴ + x¹ + 1 and an initial value [1, 0, 0, 0]; and
the primitive polynomial x⁴ + x³ + 1 and an initial value [0, 0, 1, 1].

The sequences in the third sequence set include at least one m-sequence obtained by combining the following primitive polynomial and initial value:
a primitive polynomial x⁵ + x³ + x² + x¹ + 1 and an initial value [1, 0, 0, 1, 1];
a primitive polynomial x⁵ + x⁴ + x³ + x² + 1 and an initial value [0, 0, 1, 1, 0];
the primitive polynomial x⁵ + x⁴ + x³ + x² + 1 and an initial value [0, 1, 1, 0, 1];
the primitive polynomial x⁵ + x³ + x² + x¹ + 1 and an initial value [1, 0, 0, 0, 0];
a primitive polynomial x⁵ + x² + 1 and the initial value [1, 0, 0, 1, 1];
a primitive polynomial x⁵ + x³ + 1 and an initial value [1, 1, 1, 1, 0];
the primitive polynomial x⁵ + x³ + 1 and an initial value [1, 0, 1, 1, 0];
the primitive polynomial x⁵ + x² + 1 and an initial value [0, 0, 1, 0, 0];
the primitive polynomial x⁵ + x³ + x² + x¹ + 1 and an initial value [0, 0, 0, 1, 0]; and
the primitive polynomial x⁵ + x⁴ + x³ + x² + 1 and an initial value [1, 1, 1, 0, 1].

The sequences in the fourth sequence set include at least one m-sequence obtained by combining the following primitive polynomial and initial value:
a primitive polynomial x⁶ + x⁵ + 1 and an initial value [1, 0, 1, 1, 1, 0];
a primitive polynomial x⁶ + x¹ + 1 and an initial value [1, 0, 1, 0, 0, 1];
a primitive polynomial x⁶ + x⁵ + x³ + x² + 1 and an initial value [0, 0, 0, 0, 1, 1];
a primitive polynomial x⁶ + x⁴ + x³ + x¹ + 1 and an initial value [1, 0, 0, 1, 0, 0];
a primitive polynomial x⁶ + x⁵ + x² + x¹ + 1 and an initial value [1, 0, 1, 0, 1, 1];
a primitive polynomial x⁶ + x⁵ + x⁴ + x¹ + 1 and an initial value [1, 1, 0, 0, 0, 1];
the primitive polynomial x⁶ + x¹ + 1 and an initial value [0, 1, 0, 0, 1, 0];
the primitive polynomial x⁶ + x⁵ + 1 and an initial value [1, 1, 0, 1, 1, 1];
the primitive polynomial x⁶ + x¹ + 1 and an initial value [0, 0, 0, 0, 0, 1]; and
the primitive polynomial x⁶ + x⁵ + 1 and an initial value [1, 0, 0, 0, 0, 1].

The sequences in the fifth sequence set include at least one m-sequence obtained by combining the following primitive polynomial and initial value:
a primitive polynomial x⁷ + x¹ + 1 and an initial value [0, 0, 1, 0, 1, 1, 0];
a primitive polynomial x⁷ + x⁶ + 1 and an initial value [1, 0, 1, 1, 1, 0, 1];
a primitive polynomial x⁷ + x⁵ + x⁴ + x³ + x² + x¹ + 1 and an initial value [1, 1, 0, 0, 0, 1, 1];
a primitive polynomial x⁷ + x⁶ + x⁵ + x⁴ + x³ + x² + 1 and an initial value [1, 1, 1, 0, 1, 1, 1];
the primitive polynomial x⁷ + x¹ + 1 and an initial value [1, 0, 1, 0, 1, 1, 0];
the primitive polynomial x⁷ + x⁶ + 1 and an initial value [1, 0, 1, 1, 1, 1, 0];
a primitive polynomial x⁷ + x³ + x² + x¹ + 1 and an initial value [1, 0, 1, 0, 1, 0, 0];
a primitive polynomial x⁷ + x⁶ + x⁵ + x⁴ + 1 and an initial value [1, 0, 0, 0, 1, 0, 0];
the primitive polynomial x⁷ + x³ + x² + x¹ + 1 and an initial value [1, 0, 0, 0, 1, 0, 1]; and
the primitive polynomial x⁷ + x⁶ + x⁵ + x⁴ + 1 and an initial value [0, 1, 1, 1, 1, 0, 1].

The sequences in the sixth sequence set include at least one m-sequence obtained by combining the following primitive polynomial and initial value:
a primitive polynomial x⁸ + x⁶ + x⁵ + x³ + 1 and an initial value [0, 0, 1, 1, 0, 1, 1, 1];
a primitive polynomial x⁸ + x⁵ + x³ + x² + 1 and an initial value [0, 0, 0, 0, 1, 1, 1, 0];
a primitive polynomial x⁸ + x⁶ + x⁴ + x³ + x² + x¹ + 1 and an initial value [0, 1, 0, 0, 0, 0, 0, 0];
a primitive polynomial x⁸ + x⁷ + x⁶ + x⁵ + x⁴ + x² + 1 and an initial value [1, 0, 0, 1, 0, 1, 0, 1];
a primitive polynomial x⁸ + x⁷ + x⁵ + x³ + 1 and an initial value [0, 0, 1, 1, 1, 1, 1, 0];
a primitive polynomial x⁸ + x⁵ + x³ + x¹ + 1 and an initial value [0, 0, 0, 1, 0, 1, 0, 0];
a primitive polynomial x⁸ + x⁴ + x³ + x² + 1 and an initial value [0, 1, 0, 1, 1, 0, 0, 1];
a primitive polynomial x⁸ + x⁶ + x⁵ + x⁴ + 1 and the initial value [1, 0, 0, 0, 1, 1, 0, 0];
a primitive polynomial x⁸ + x⁷ + x² + x¹ + 1 and an initial value [0, 1, 1, 1, 0, 0, 0, 0]; and
a primitive polynomial x⁸ + x⁷ + x⁶ + x¹ + 1 and an initial value [0, 0, 1, 1, 0, 0, 1, 1].

In a possible design, the sequences in the first sequence set further include at least one m-sequence obtained by combining the following primitive polynomial and initial value:
the primitive polynomial x³ + x¹ + 1 and an initial value [1, 0, 1].

In a possible design, the sequences in the second sequence set further include at least one m-sequence obtained by combining the following primitive polynomial and initial value:
the primitive polynomial x⁴ + x¹ + 1 and an initial value [0, 1, 1, 0];
the primitive polynomial x⁴ + x¹ + 1 and the initial value [1, 1, 1, 1];
the primitive polynomial x⁴ + x¹ + 1 and an initial value [1, 0, 0, 1];
the primitive polynomial x⁴ + x¹ + 1 and the initial value [0, 0, 1, 0]; and
the primitive polynomial x⁴ + x¹ + 1 and the initial value [0, 0, 1, 1].

In a possible design, the sequences in the third sequence set further include at least one m-sequence obtained by combining the following primitive polynomial and initial value:
the primitive polynomial x⁵ + x² + 1 and an initial value [1, 0, 1, 0, 0];
the primitive polynomial x⁵ + x² + 1 and an initial value [0, 1, 0, 1, 1];
the primitive polynomial x⁵ + x² + 1 and an initial value [0, 0, 0, 1, 1];
the primitive polynomial x⁵ + x² + 1 and the initial value [0, 0, 1, 1, 0];
the primitive polynomial x⁵ + x² + 1 and an initial value [0, 0, 1, 0, 1];
the primitive polynomial x⁵ + x² + 1 and an initial value [0, 1, 0, 0, 0];
the primitive polynomial x⁵ + x² + 1 and an initial value [0, 1, 1, 1, 0]; and
the primitive polynomial x⁵ + x² + 1 and an initial value [0, 1, 1, 1, 1].

In a possible design, the sequences in the fourth sequence set further include at least one m-sequence obtained by combining the following primitive polynomial and initial value:
the primitive polynomial x⁶ + x¹ + 1 and an initial value [1, 1, 1, 1, 0, 1];
the primitive polynomial x⁶ + x¹ + 1 and an initial value [1, 1, 1, 1, 1, 0];
the primitive polynomial x⁶ + x¹ + 1 and an initial value [1, 1, 1, 1, 0, 0];
the primitive polynomial x⁶ + x¹ + 1 and an initial value [1, 1, 0, 0, 1, 0];
the primitive polynomial x⁶ + x¹ + 1 and an initial value [0, 1, 1, 1, 0, 1];
the primitive polynomial x⁶ + x¹ + 1 and an initial value [0, 0, 0, 1, 0, 1]; and
the primitive polynomial x⁶ + x¹ + 1 and an initial value [0, 1, 1, 1, 1, 1].

In a possible design, the sequences in the fifth sequence set further include at least one m-sequence obtained by combining the following primitive polynomial and initial value:
the primitive polynomial x⁷ + x¹ + 1 and an initial value [1, 1, 1, 1, 0, 0, 0];
the primitive polynomial x⁷ + x¹ + 1 and an initial value [0, 1, 0, 1, 1, 1, 1];
the primitive polynomial x⁷ + x¹ + 1 and an initial value [0, 0, 1, 1, 1, 0, 1];
the primitive polynomial x⁷ + x¹ + 1 and an initial value [0, 1, 1, 0, 1, 1, 1];
the primitive polynomial x⁷ + x¹ + 1 and an initial value [0, 1, 0, 1, 1, 0, 0];
the primitive polynomial x⁷ + x¹ + 1 and an initial value [1, 0, 1, 0, 0, 0, 1];
the primitive polynomial x⁷ + x¹ + 1 and an initial value [1, 1, 1, 1, 0, 1, 0]; and
the primitive polynomial x⁷ + x¹ + 1 and an initial value [0, 0, 1, 1, 1, 1, 0].

In a possible design, the sequences in the sixth sequence set further include at least one m-sequence obtained by combining the following primitive polynomial and initial value:
the primitive polynomial x⁸ + x⁴ + x³ + x² + 1 and an initial value [0, 0, 0, 1, 0, 0, 1, 0];
the primitive polynomial x⁸ + x⁴ + x³ + x² + 1 and the initial value [0, 0, 1, 1, 0, 1, 1, 1];
the primitive polynomial x⁸ + x⁴ + x³ + x² + 1 and an initial value [0, 0, 1, 0, 1, 0, 1, 0];
the primitive polynomial x⁸ + x⁴ + x³ + x² + 1 and an initial value [0, 1, 1, 0, 0, 0, 0, 1];
the primitive polynomial x⁸ + x⁴ + x³ + x² + 1 and an initial value [0, 1, 0, 0, 0, 1, 0, 0];
the primitive polynomial x⁸ + x⁴ + x³ + x² + 1 and an initial value [1, 0, 1, 0, 0, 0, 1, 1];
the primitive polynomial x⁸ + x⁴ + x³ + x² + 1 and the initial value [1, 0, 0, 0, 1, 1, 0, 0];
the primitive polynomial x⁸ + x⁴ + x³ + x² + 1 and an initial value [0, 0, 1, 0, 0, 1, 0, 1]; and
the primitive polynomial x⁸ + x⁴ + x³ + x² + 1 and an initial value [1, 1, 0, 1, 0, 0, 1, 0].

According to a twenty-third aspect, an embodiment of this application further provides a communication apparatus, including a memory and a processor. The processor is configured to execute computer instructions stored in the memory. When the computer instructions are executed, the apparatus is enabled to perform the method according to any one of the twenty-first aspect or the possible designs of the twenty-first aspect.

According to a twenty-fourth aspect, an embodiment of this application further provides a communication apparatus, including a processor and an interface circuit. The processor is configured to: communicate with another apparatus through the interface circuit, and perform the method according to any one of the twenty-first aspect or the possible designs of the twenty-first aspect.

The communication apparatus according to the twenty-second aspect to the twenty-fourth aspect may be used in a network device.

According to a twenty-fifth aspect, an embodiment of this application further provides a computer-readable storage medium. The computer-readable storage medium stores computer instructions. When the computer instructions are run on a network device or a chip built in the network device, the network device is enabled to perform the method according to the twenty-first aspect.

According to a twenty-sixth aspect, an embodiment of this application further provides a computer program product including instructions. When the computer program product runs on a computer, the computer is enabled to perform the method according to any one of the twenty-first aspect or the possible designs of the twenty-first aspect.

It may be understood that for beneficial effect that can be achieved in the twenty-second aspect to the twenty-sixth aspect provided above, refer to beneficial effect in any one of the twenty-first aspect and the possible designs of the twenty-first aspect. Details are not described herein again.

According to a twenty-seventh aspect, an embodiment of this application further provides a signal processing method, applied to a communication system including a network device and a terminal device. The terminal device performs the method according to any one of the fifteenth aspect and the possible designs of the fifteenth aspect. The network device performs the method according to any one of the twenty-first aspect and the possible designs of the twenty-first aspect.

According to a twenty-eighth aspect, an embodiment of this application further provides a communication system, including a network device and a terminal device. The terminal device performs the method according to any one of the fifteenth aspect and the possible designs of the fifteenth aspect. The network device performs the method according to any one of the twenty-first aspect and the possible designs of the twenty-first aspect.

It may be understood that for beneficial effect that can be achieved in the twenty-seventh aspect and the twenty-eighth aspect provided above, refer to beneficial effect in the fifteenth aspect, the twenty-first aspect, and the like. Details are not described herein again.

According to a twenty-ninth aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0].

The sequences in the second sequence set include at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1].
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

The sequences in the third sequence set include at least one m-sequence obtained by combining the following primitive polynomial and initial value:
a primitive polynomial *x*⁵ + *x*² *+* 1 and an initial value [1, 1, 1, 0, 1];
the primitive polynomial *x*⁵ + *x*² *+* 1 and an initial value [1, 0, 1, 0, 0];
the primitive polynomial *x*⁵ + *x*² *+* 1 and an initial value [0, 0, 1, 0, 0];
the primitive polynomial *x*⁵ + *x*² *+* 1 and an initial value [0, 0, 0, 1, 0];
the primitive polynomial *x*⁵ + *x*² *+* 1 and an initial value [1, 0, 0, 0, 0];
the primitive polynomial *x*⁵ + *x*² *+* 1 and an initial value [1, 0, 1, 0, 1];
the primitive polynomial *x*⁵ + *x*² *+* 1 and an initial value [1, 0, 1, 1, 0];
the primitive polynomial *x*⁵ + *x*² *+* 1 and an initial value [0, 1, 0, 0, 0];
the primitive polynomial *x*⁵ + *x*² *+* 1 and an initial value [0, 1, 1, 1, 1]; and
the primitive polynomial *x*⁵ + *x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ + *x*⁴ + *x*³ *+ x*² + 1 and an initial value [1, 1, 0, 1, 0, 1, 0, 1];
the primitive polynomial *x*⁸ + *x*⁴ + *x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ + *x*⁴ + *x*³ *+ x*² + 1 and an initial value [0, 1, 1, 1, 0, 0, 1, 1];
the primitive polynomial *x*⁸ + *x*⁴ + *x*³ *+ x*² + 1 and an initial value [1, 0, 0, 1, 1, 1, 0, 0];
the primitive polynomial *x*⁸ + *x*⁴ + *x*³ *+ x*² + 1 and an initial value [1, 1, 1, 0, 0, 0, 1, 0];
the primitive polynomial *x*⁸ + *x*⁴ + *x*³ *+ x*² + 1 and an initial value [0, 0, 1, 1, 1, 1, 0, 0];
the primitive polynomial *x*⁸ + *x*⁴ + *x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, that the second sequence is determined based on the m-sequence includes: The second sequence is determined by adding 0 to a first location of the m-sequence.

Based on this possible design, 0 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
a primitive polynomial *x*³ *+ x*² *+* 1 and the initial value [1, 0, 1];
the primitive polynomial *x*³ *+ x*² *+* 1 and the initial value [0, 1, 0];
the primitive polynomial *x*³ *+ x*² *+* 1 and the initial value [1, 0, 0]; and
the primitive polynomial *x*³ *+ x*² *+* 1 and the initial value [1, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and an initial value [0, 0, 1, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ *+ x*³ + *x*² *+ x*¹ *+* 1 and an initial value [1, 1, 0, 1, 0];
a primitive polynomial *x*⁵ + *x*⁴ + *x*³ *+ x*² + 1 and the initial value [1, 0, 1, 0, 0];
a primitive polynomial *x*⁵ + *x*⁴ + *x*² *+ x*¹ *+* 1 and the initial value [1, 1, 0, 1, 0];
a primitive polynomial *x*⁵ + *x*⁴ + *x*³ + *x*¹ *+* 1 and an initial value [0, 0, 0, 1, 1];
the primitive polynomial *x*⁵ *+ x*³ + *x*² *+ x*¹ *+* 1 and the initial value [1, 0, 1, 0, 1];
the primitive polynomial *x*⁵ *+ x*⁴ *+ x*³ + *x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ + *x*⁴ + *x*³ *+ x*¹ *+* 1 and an initial value [1, 0, 0, 1, 0];
the primitive polynomial *x*⁵ + *x*⁴ + *x*³ *+ x*² + 1 and an initial value [1, 1, 0, 1, 1]; and
the primitive polynomial *x*⁵ + *x*³ + *x*² + *x*¹ *+* 1 and an initial value [0, 1, 0, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ + *x*⁵ + *x*² + *x*¹ *+* 1 and the initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and the initial value [1, 0, 1, 1, 1, 0];
a primitive polynomial *x*⁶ *+ x*⁴ *+ x*³ + *x*¹ *+* 1 and an initial value [1, 1, 0, 1, 1, 0];
a primitive polynomial *x*⁶ *+ x⁵ + x*³ + *x*² + 1 and an initial value [0, 0, 1, 0, 0, 1]; and
the primitive polynomial *x*⁶ *+ x⁵* + 1 and an initial value [0, 1, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ + *x*⁶ + *x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ + *x*³ + *x*² *+ x*¹ + 1 and an initial value [1, 1, 1, 1, 0, 0, 1];
the primitive polynomial *x*⁷ + *x*⁶ + *x*⁵ *+ x*⁴ + 1 and an initial value [0, 1, 0, 1, 0, 0, 1];
a primitive polynomial *x*⁷ + *x*⁴ + *x*³ *+ x*² *+* 1 and an initial value [0, 0, 1, 1, 0, 1, 1];
a primitive polynomial *x*⁷ + *x*³ + 1 and an initial value [1, 1, 0, 0, 0, 1, 1]; and a primitive polynomial *x*⁷ + *x*⁶ + 1 and an initial value [1, 0, 0, 1, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ + *x*⁷ + *x*⁶ + *x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ + *x*¹ *+* 1 and an initial value [0, 1, 0, 1, 0, 1, 0, 0];
a primitive polynomial *x*⁸ + *x*⁷ + *x*⁵ + *x*³ + 1 and an initial value [1, 1, 0, 0, 0, 0, 1, 1];
the primitive polynomial *x*⁸ *+ x*⁷ *+* x⁶ *+ x*⁵ *+ x*² *+ x*¹ *+* 1 and an initial value [0, 0, 0, 1, 1, 1, 1, 1]; and
a primitive polynomial *x*⁸ + *x*⁶ + *x*⁵ *+ x*⁴ + 1 and an initial value [0, 0, 0, 1, 0, 0, 1, 0].

Based on this possible design, time-frequency two-dimensional correlation detection performance of the preamble sequence is optimized to a maximum extent, uplink synchronization performance is further improved, and uplink data demodulation performance is further improved.

According to a thirtieth aspect, an embodiment of this application provides a communication apparatus. The apparatus has a function of implementing the method according to the twenty-ninth aspect. The function may be implemented by hardware, or may be implemented by hardware executing corresponding software. The hardware or the software includes one or more units or modules, for example, a sending unit and a processing unit, corresponding to the function of the method according to the twenty-ninth aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0].

The sequences in the second sequence set include at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1];
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

The sequences in the third sequence set include at least one m-sequence obtained by combining the following primitive polynomial and initial value:
a primitive polynomial *x*⁵ *+ x*² *+* 1 and an initial value [1, 1, 1, 0, 1];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 0, 0];
the primitive polynomial *x*⁵ *+ x*² + 1 and an initial value [0, 0, 0, 1, 0];
the primitive polynomial *x*⁵ *+ x*² + 1 and an initial value [1, 0, 0, 0, 0];
the primitive polynomial *x*⁵ *+ x*² + 1 and an initial value [1, 0, 1, 0, 1];
the primitive polynomial *x*⁵ *+ x*² + 1 and an initial value [1, 0, 1, 1, 0];
the primitive polynomial *x*⁵ *+ x*² + 1 and an initial value [0, 1, 0, 0, 0];
the primitive polynomial *x*⁵ *+ x*² + 1 and an initial value [0, 1, 1, 1, 1]; and
the primitive polynomial *x*⁵ *+ x*² + 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

In a possible design, that the second sequence is determined based on the m-sequence includes: The second sequence is determined by adding 0 to a first location of the m-sequence.

In a possible design, the sequences in the first sequence set further include at least one m-sequence obtained by combining the following primitive polynomial and initial value:
a primitive polynomial *x*³ *+ x*² + 1 and the initial value [1, 0, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [1, 1, 1].

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and an initial value [0, 0, 1, 0].

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and the initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ *+* 1 and the initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

In a possible design, the sequences in the fourth sequence set further include at least one m-sequence obtained by combining the following primitive polynomial and initial value:
a primitive polynomial *x*⁶ *+ x*⁵ + 1 and an initial value [1, 1, 1, 1, 1, 0];
a primitive polynomial *x*⁶ *+ x*⁵ *+ x*² *+ x*¹ *+* 1 and the initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ + 1 and the initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1]; and
the primitive polynomial *x*⁶ *+ x*⁵ + 1 and an initial value [0, 1, 0, 1, 0, 0].

In a possible design, the sequences in the fifth sequence set further include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x*⁷ *+ x*⁶ *+ x*⁵ *+ x*⁴ + 1 and an initial value [0, 1, 0, 1, 0, 0, 1];
a primitive polynomial *x*⁷ *+ x*⁴ *+ x*³ *+ x*² *+* 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

In a possible design, the sequences in the sixth sequence set further include at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ + 1 and an initial value [0, 0, 0, 1, 0, 0, 1, 0].

According to a thirty-first aspect, an embodiment of this application further provides a communication apparatus, including a memory and a processor. The processor is configured to execute computer instructions stored in the memory. When the computer instructions are executed, the apparatus is enabled to perform the method according to any one of the twenty-ninth aspect or the possible designs of the twenty-ninth aspect.

According to a thirty-second aspect, an embodiment of this application further provides a communication apparatus, including a processor and an interface circuit. The processor is configured to: communicate with another apparatus through the interface circuit, and perform the method according to any one of the twenty-ninth aspect or the possible designs of the twenty-ninth aspect.

The communication apparatus according to the thirtieth aspect to the thirty-second aspect may be used in a terminal device.

According to a thirty-third aspect, an embodiment of this application further provides a computer-readable storage medium. The computer-readable storage medium stores computer instructions. When the computer instructions are run on a terminal device or a chip built in the terminal device, the terminal device is enabled to perform the method according to the twenty-ninth aspect.

According to a thirty-fourth aspect, an embodiment of this application further provides a computer program product including instructions. When the computer program product runs on a computer, the computer is enabled to perform the method according to any one of the twenty-ninth aspect or the possible designs of the twenty-ninth aspect.

It may be understood that for beneficial effect that can be achieved in the thirtieth aspect to the thirty-fourth aspect provided above, refer to beneficial effect in any one of the twenty-ninth aspect and the possible designs of the twenty-ninth aspect. Details are not described herein again.

According to a thirty-fifth aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0].

The sequences in the second sequence set include at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1];
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1].
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

The sequences in the third sequence set include at least one m-sequence obtained by combining the following primitive polynomial and initial value:
a primitive polynomial *x*⁵ *+ x*² *+* 1 and an initial value [1, 1, 1, 0, 1];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 0, 0];
the primitive polynomial *x*⁵ *+ x*² *+* 1 and an initial value [0, 0, 0, 1, 0];
the primitive polynomial *x*⁵ *+ x*² *+* 1 and an initial value [1, 0, 0, 0, 0];
the primitive polynomial *x*⁵ *+ x*² *+* 1 and an initial value [1, 0, 1, 0, 1];
the primitive polynomial *x*⁵ *+ x*² *+* 1 and an initial value [1, 0, 1, 1, 0];
the primitive polynomial *x*⁵ *+ x*² *+* 1 and an initial value [0, 1, 0, 0, 0];
the primitive polynomial *x*⁵ *+ x*² *+* 1 and an initial value [0, 1, 1, 1, 1]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² *+* 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, that the second sequence is determined based on the m-sequence includes: The second sequence is determined by adding 0 to a first location of the m-sequence.

Based on this possible design, 0 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
a primitive polynomial *x*³ *+ x*² + 1 and the initial value [1, 0, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [1, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and an initial value [0, 0, 1, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and the initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ *+* 1 and the initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and the initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and the initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1]; and
the primitive polynomial *x*⁶ *+ x*⁵ + 1 and an initial value [0, 1, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x*⁷ *+ x*⁶ *+ x* ⁵ *+ x*⁴ *+ 1* and an initial value [0, 1, 0, 1, 0, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ *+ x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ *+* 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ + 1 and an initial value [0, 0, 0, 1, 0, 0, 1, 0].

Based on this possible design, time-frequency two-dimensional correlation detection performance of the preamble sequence is optimized to a maximum extent, uplink synchronization performance is further improved, and uplink data demodulation performance is further improved.

According to a thirty-sixth aspect, an embodiment of this application provides a communication apparatus. The apparatus has a function of implementing the method according to the thirty-fifth aspect. The function may be implemented by hardware, or may be implemented by hardware executing corresponding software. The hardware or the software includes one or more units or modules, for example, a receiving unit and a processing unit, corresponding to the function of the method according to the thirty-fifth aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1].
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0].

The sequences in the second sequence set include at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1];
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

The sequences in the third sequence set include at least one m-sequence obtained by combining the following primitive polynomial and initial value:
a primitive polynomial *x*⁵ *+ x*² *+* 1 and an initial value [1, 1, 1, 0, 1];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 0, 0];
the primitive polynomial *x*⁵ *+ x*² *+* 1 and an initial value [0, 0, 0, 1, 0];
the primitive polynomial *x*⁵ *+ x*² *+* 1 and an initial value [1, 0, 0, 0, 0];
the primitive polynomial *x*⁵ *+ x*² *+* 1 and an initial value [1, 0, 1, 0, 1];
the primitive polynomial *x*⁵ *+ x*² *+* 1 and an initial value [1, 0, 1, 1, 0];
the primitive polynomial *x*⁵ *+ x*² *+* 1 and an initial value [0, 1, 0, 0, 0];
the primitive polynomial *x*⁵ *+ x*² *+* 1 and an initial value [0, 1, 1, 1, 1]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

In a possible design, that the second sequence is determined based on the m-sequence includes: The second sequence is determined by adding 0 to a first location of the m-sequence.

In a possible design, the sequences in the first sequence set further include at least one m-sequence obtained by combining the following primitive polynomial and initial value:
a primitive polynomial *x*³ *+ x*² + 1 and the initial value [1, 0, 1];
the primitive polynomial *x*³ *+ x*² + 1 and the initial value [0, 1, 0];
the primitive polynomial *x*³ *+ x*² *+* 1 and the initial value [1, 0, 0]; and
the primitive polynomial *x*³ *+ x*² *+* 1 and the initial value [1, 1, 1].

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and an initial value [0, 0, 1, 0].

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and the initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ *+* 1 and the initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+ 1* and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

In a possible design, the sequences in the fourth sequence set further include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and the initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and the initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1]; and
the primitive polynomial *x*⁶ *+ x*⁵ + 1 and an initial value [0, 1, 0, 1, 0, 0].

In a possible design, the sequences in the fifth sequence set further include at least one m-sequence obtained by combining the following primitive polynomial and initial value:
a primitive polynomial *x⁷ + x*⁶ *+ x*⁵ *+ x*⁴ *+* 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ + 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x⁷ + x*⁶ *+ x*⁵ *+ x*⁴ + 1 and an initial value [0, 1, 0, 1, 0, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

In a possible design, the sequences in the sixth sequence set further include at least one m-sequence obtained by combining the following primitive polynomial and initial value:
a primitive polynomial *x*⁸ *+ x*⁵ *+ x*³ *+ x*¹ + 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ + 1 and an initial value [0, 0, 0, 1, 0, 0, 1, 0].

According to a thirty-seventh aspect, an embodiment of this application further provides a communication apparatus, including a memory and a processor. The processor is configured to execute computer instructions stored in the memory. When the computer instructions are executed, the apparatus is enabled to perform the method according to any one of the thirty-fifth aspect or the possible designs of the thirty-fifth aspect.

According to a thirty-eighth aspect, an embodiment of this application further provides a communication apparatus, including a processor and an interface circuit. The processor is configured to: communicate with another apparatus through the interface circuit, and perform the method according to any one of the thirty-fifth aspect or the possible designs of the thirty-fifth aspect.

The communication apparatus according to the thirty-sixth aspect to the thirty-eighth aspect may be used in a network device.

According to a thirty-ninth aspect, an embodiment of this application further provides a computer-readable storage medium. The computer-readable storage medium stores computer instructions. When the computer instructions are run on a network device or a chip built in the network device, the network device is enabled to perform the method according to the thirty-fifth aspect.

According to a fortieth aspect, an embodiment of this application further provides a computer program product including instructions. When the computer program product runs on a computer, the computer is enabled to perform the method according to any one of the thirty-fifth aspect or the possible designs of the thirty-fifth aspect.

It may be understood that for beneficial effect that can be achieved in the thirty-sixth aspect to the fortieth aspect provided above, refer to beneficial effect in any one of the thirty-fifth aspect and the possible designs of the thirty-fifth aspect. Details are not described herein again.

According to a forty-first aspect, an embodiment of this application further provides a signal processing method, applied to a communication system including a network device and a terminal device. The terminal device performs the method according to any one of the twenty-ninth aspect and the possible designs of the twenty-ninth aspect. The network device performs the method according to any one of the thirty-fifth aspect and the possible designs of the thirty-fifth aspect.

According to a forty-second aspect, an embodiment of this application further provides a communication system, including a network device and a terminal device. The terminal device performs the method according to any one of the twenty-ninth aspect and the possible designs of the twenty-ninth aspect. The network device performs the method according to any one of the thirty-fifth aspect and the possible designs of the thirty-fifth aspect.

It may be understood that for beneficial effect that can be achieved in the forty-first aspect and the forty-second aspect provided above, refer to beneficial effect in the twenty-ninth aspect, the thirty-fifth aspect, and the like. Details are not described herein again.

According to a forty-third aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
a primitive polynomial *x*³ *+ x*² *+* 1 and an initial value [1, 0, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*² *+* 1 and an initial value [0, 1, 0];
the primitive polynomial *x*³ *+ x*² *+* 1 and an initial value [1, 0, 0];
the primitive polynomial *x*³ *+ x*¹ *+* 1 and the initial value [0, 1, 0];
the primitive polynomial *x*³ *+ x*¹ *+* 1 and the initial value [1, 0, 0];
the primitive polynomial *x*³ *+ x*² *+* 1 and the initial value [1, 1, 1]; and
the primitive polynomial *x*³ *+ x*¹ *+* 1 and the initial value [1, 0, 1].

The sequences in the second sequence set include at least one m-sequence obtained by combining the following primitive polynomial and initial value:
a primitive polynomial *x*⁴ + *x*¹ + 1 and an initial value [1, 0, 1, 0];
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*¹ + 1 and an initial value [1, 0, 0, 1];
the primitive polynomial *x*⁴ + *x*³ + 1 and an initial value [0, 0, 0, 1];
the primitive polynomial *x*⁴ + *x*¹ + 1 and an initial value [0, 0, 1, 1];
the primitive polynomial *x*⁴ + *x*³ + 1 and the initial value [1, 0, 0, 1];
the primitive polynomial *x*⁴ + *x*¹ + 1 and an initial value [1, 1, 1, 1];
the primitive polynomial *x*⁴ + *x*³ + 1 and an initial value [0, 0, 1, 0]; and
the primitive polynomial *x*⁴ + *x*¹ + 1 and an initial value [0, 1, 0, 0].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and an initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ + 1 and an initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

The sequences in the fourth sequence set include at least one m-sequence obtained by combining the following primitive polynomial and initial value:
a primitive polynomial *x*⁶ *+ x*⁵ + 1 and an initial value [1, 1, 1, 1, 1, 0];
a primitive polynomial *x*⁶ *+ x*⁵ *+ x*² *+ x*¹ *+* 1 and an initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and an initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1];
a primitive polynomial *x*⁶ *+ x*¹ + 1 and an initial value [0, 1, 1, 0, 0, 0];
the primitive polynomial *x*⁶ *+ x*⁵ + 1 and an initial value [0, 1, 0, 1, 0, 0];
the primitive polynomial *x*⁶ *+ x*¹ + 1 and the initial value [1, 0, 1, 0, 1, 0]; and
the primitive polynomial *x*⁶ *+ x*¹ + 1 and the initial value [1, 0, 1, 1, 1, 0].

The sequences in the fifth sequence set include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ *+* 1 and an initial value [1, 1, 1, 1, 0, 0, 1];
the primitive polynomial *x⁷ + x*⁶ *+ x*⁵ *+* x⁴ *+* 1 and an initial value [0, 1, 0, 1, 0, 0, 1];
a primitive polynomial *x*⁷ + *x*¹ + 1 and an initial value [1, 1, 1, 0, 1, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

The sequences in the sixth sequence set include at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² *+* 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ + 1 and an initial value [0, 0, 0, 1, 0, 0, 1, 0].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, that the second sequence is determined based on the m-sequence includes: The second sequence is determined by adding 0 to a first location of the m-sequence.

Based on this possible design, 0 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
the primitive polynomial *x*³ *+ x*¹ *+* 1 and an initial value [1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and the initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
a primitive polynomial *x*⁵ *+ x² +* 1 and an initial value [1, 1, 1, 0, 1];
the primitive polynomial *x*⁵ *+ x² +* 1 and the initial value [1, 0, 1, 0, 0];
the primitive polynomial *x*⁵ *+ x² +* 1 and an initial value [0, 0, 1, 0, 0];
the primitive polynomial *x*⁵ *+ x² +* 1 and an initial value [0, 0, 0, 1, 0];
the primitive polynomial *x*⁵ *+ x² +* 1 and an initial value [1, 0, 0, 0, 0];
the primitive polynomial *x*⁵ *+ x² +* 1 and the initial value [1, 0, 1, 0, 1];
the primitive polynomial *x*⁵ *+ x² +* 1 and an initial value [1, 0, 1, 1, 0];
the primitive polynomial *x*⁵ *+ x² +* 1 and an initial value [0, 1, 0, 0, 0];
the primitive polynomial *x*⁵ *+ x² +* 1 and an initial value [0, 1, 1, 1, 1]; and
the primitive polynomial *x*⁵ *+ x² +* 1 and an initial value [0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x² +* 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

Based on this possible design, an m-sequence corresponding to a primitive polynomial having a minimum quantity of taps can be provided, to reduce complexity of generating the m-sequence by a receiver and a transmitter.

According to a forty-fourth aspect, an embodiment of this application provides a communication apparatus. The apparatus has a function of implementing the method according to the forty-third aspect. The function may be implemented by hardware, or may be implemented by hardware executing corresponding software. The hardware or the software includes one or more units or modules, for example, a sending unit and a processing unit, corresponding to the function of the method according to the forty-third aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
a primitive polynomial *x*³ *+ x*² *+* 1 and an initial value [1, 0, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*² *+* 1 and an initial value [0, 1, 0];
the primitive polynomial *x*³ *+ x*² *+* 1 and an initial value [1, 0, 0];
the primitive polynomial *x*³ *+ x*¹ *+* 1 and the initial value [0, 1, 0];
the primitive polynomial *x*³ *+ x*¹ *+* 1 and the initial value [1, 0, 0];
the primitive polynomial *x*³ *+ x*² *+* 1 and the initial value [1, 1, 1]; and
the primitive polynomial *x*³ *+ x*¹ *+* 1 and the initial value [1, 0, 1].

The sequences in the second sequence set include at least one m-sequence obtained by combining the following primitive polynomial and initial value:
a primitive polynomial *x*⁴ + *x*¹ + 1 and an initial value [1, 0, 1, 0];
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*¹ + 1 and an initial value [1, 0, 0, 1];
the primitive polynomial *x*⁴ + *x*³ + 1 and an initial value [0, 0, 0, 1];
the primitive polynomial *x*⁴ + *x*¹ + 1 and an initial value [0, 0, 1, 1];
the primitive polynomial *x*⁴ + *x*³ + 1 and the initial value [1, 0, 0, 1];
the primitive polynomial *x*⁴ + *x*¹ + 1 and an initial value [1, 1, 1, 1];
the primitive polynomial *x*⁴ + *x*³ + 1 and an initial value [0, 0, 1, 0]; and
the primitive polynomial *x*⁴ + *x*¹ + 1 and an initial value [0, 1, 0, 0].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and an initial value [1, 0, 1, 0, 0];
the primitive polynomial *x*⁵ *+ x*⁴ *+ x*² *+ x*¹ *+* 1 and the initial value [1, 1, 0, 1, 0];
the primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ *+* 1 and an initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and the initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

The sequences in the fourth sequence set include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and an initial value [1, 0, 1, 0, 1, 0];
a primitive polynomial *x*⁶ *+ x*⁵ *+* x⁴ *+ x*¹ *+* 1 and an initial value [0, 1, 1, 0, 1, 0];
the primitive polynomial *x*⁶ *+ x*⁵ *+* 1 and an initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² *+* 1 and an initial value [0, 0, 1, 0, 0, 1];
a primitive polynomial *x*⁶ *+ x*¹ + 1 and an initial value [0, 1, 1, 0, 0, 0];
the primitive polynomial *x*⁶ *+ x*⁵ + 1 and an initial value [0, 1, 0, 1, 0, 0];
the primitive polynomial *x*⁶ *+ x*¹ + 1 and the initial value [1, 0, 1, 0, 1, 0]; and
the primitive polynomial *x*⁶ *+ x*¹ + 1 and the initial value [1, 0, 1, 1, 1, 0].

The sequences in the fifth sequence set include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x⁷ + x*⁶ *+ x*⁵ *+ x*⁴ + 1 and an initial value [0, 1, 0, 1, 0, 0, 1];
a primitive polynomial *x*⁷ + *x*¹ + 1 and an initial value [1, 1, 1, 0, 1, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

The sequences in the sixth sequence set include at least one m-sequence obtained by combining the following primitive polynomial and initial value:
a primitive polynomial *x*⁸ *+ x*⁵ *+ x*³ *+ x*¹ + 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² *+* 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ *+* 1 and an initial value [0, 0, 0, 1, 0, 0, 1, 0].

In a possible design, that the second sequence is determined based on the m-sequence includes: The second sequence is determined by adding 0 to a first location of the m-sequence.

In a possible design, the sequences in the first sequence set further include at least one m-sequence obtained by combining the following primitive polynomial and initial value:
the primitive polynomial *x*³ *+ x*¹ *+* 1 and an initial value [1, 1, 0].

In a possible design, the sequences in the second sequence set further include at least one m-sequence obtained by combining the following primitive polynomial and initial value:
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and the initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

In a possible design, the sequences in the third sequence set further include at least one m-sequence obtained by combining the following primitive polynomial and initial value:
a primitive polynomial *x*⁵ *+ x*² + 1 and an initial value [1, 1, 1, 0, 1];
the primitive polynomial *x*⁵ *+ x*² + 1 and the initial value [1, 0, 1, 0, 0];
the primitive polynomial *x*⁵ *+ x*² + 1 and an initial value [0, 0, 1, 0, 0];
the primitive polynomial *x*⁵ *+ x*² + 1 and an initial value [0, 0, 0, 1, 0];
the primitive polynomial *x*⁵ *+ x*² + 1 and an initial value [1, 0, 0, 0, 0];
the primitive polynomial *x*⁵ *+ x*² + 1 and the initial value [1, 0, 1, 0, 1];
the primitive polynomial *x*⁵ *+ x*² *+* 1 and an initial value [1, 0, 1, 1, 0];
the primitive polynomial *x*⁵ *+ x*² *+* 1 and an initial value [0, 1, 0, 0, 0];
the primitive polynomial *x*⁵ *+ x*² *+* 1 and an initial value [0, 1, 1, 1, 1]; and
the primitive polynomial *x*⁵ *+ x*² + 1 and an initial value [0, 1, 1, 1, 0].

In a possible design, the sequences in the fourth sequence set further include at least one m-sequence obtained by combining the following primitive polynomial and initial value:
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

In a possible design, the sequences in the fifth sequence set further include at least one m-sequence obtained by combining the following primitive polynomial and initial value:
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

In a possible design, the sequences in the sixth sequence set further include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² *+* 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

According to a forty-fifth aspect, an embodiment of this application further provides a communication apparatus, including a memory and a processor. The processor is configured to execute computer instructions stored in the memory. When the computer instructions are executed, the apparatus is enabled to perform the method according to any one of the forty-third aspect or the possible designs of the forty-third aspect.

According to a forty-sixth aspect, an embodiment of this application further provides a communication apparatus, including a processor and an interface circuit. The processor is configured to: communicate with another apparatus through the interface circuit, and perform the method according to any one of the forty-third aspect or the possible designs of the forty-third aspect.

The communication apparatus according to the forty-fourth aspect to the forty-sixth aspect may be used in a terminal device.

According to a forty-seventh aspect, an embodiment of this application further provides a computer-readable storage medium. The computer-readable storage medium stores computer instructions. When the computer instructions are run on a terminal device or a chip built in the terminal device, the terminal device is enabled to perform the method according to the forty-third aspect.

According to a forty-eighth aspect, an embodiment of this application further provides a computer program product including instructions. When the computer program product runs on a computer, the computer is enabled to perform the method according to any one of the forty-third aspect or the possible designs of the forty-third aspect.

It may be understood that for beneficial effect that can be achieved in the forty-fourth aspect to the forty-eighth aspect provided above, refer to beneficial effect in any one of the forty-third aspect and the possible designs of the forty-third aspect. Details are not described herein again.

According to a forty-ninth aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
a primitive polynomial *x*³ *+ x*² *+* 1 and an initial value [1, 0, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*² *+* 1 and an initial value [0, 1, 0];
the primitive polynomial *x*³ *+ x*² *+* 1 and an initial value [1, 0, 0];
the primitive polynomial *x*³ *+ x*¹ *+* 1 and the initial value [0, 1, 0];
the primitive polynomial *x*³ *+ x*¹ *+* 1 and the initial value [1, 0, 0];
the primitive polynomial *x*³ *+ x*² *+* 1 and the initial value [1, 1, 1]; and
the primitive polynomial *x*³ *+ x*¹ *+* 1 and the initial value [1, 0, 1].

The sequences in the second sequence set include at least one m-sequence obtained by combining the following primitive polynomial and initial value:
a primitive polynomial *x*⁴ + *x*¹ + 1 and an initial value [1, 0, 1, 0];
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*¹ + 1 and an initial value [1, 0, 0, 1];
the primitive polynomial *x*⁴ + *x*³ + 1 and an initial value [0, 0, 0, 1];
the primitive polynomial *x*⁴ + *x*¹ + 1 and an initial value [0, 0, 1, 1];
the primitive polynomial *x*⁴ + *x*³ + 1 and the initial value [1, 0, 0, 1];
the primitive polynomial *x*⁴ + *x*¹ + 1 and an initial value [1, 1, 1, 1];
the primitive polynomial *x*⁴ + *x*³ + 1 and an initial value [0, 0, 1, 0]; and
the primitive polynomial *x*⁴ + *x*¹ + 1 and an initial value [0, 1, 0, 0].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and an initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ + 1 and an initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

The sequences in the fourth sequence set include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and an initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and an initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1];
a primitive polynomial *x*⁶ *+ x*¹ + 1 and an initial value [0, 1, 1, 0, 0, 0];
the primitive polynomial *x*⁶ *+ x*⁵ + 1 and an initial value [0, 1, 0, 1, 0, 0];
the primitive polynomial *x*⁶ *+ x*¹ + 1 and the initial value [1, 0, 1, 0, 1, 0]; and
the primitive polynomial *x*⁶ *+ x*¹ + 1 and the initial value [1, 0, 1, 1, 1, 0].

The sequences in the fifth sequence set include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² *+* 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x*⁷ *+ x*⁶ *+ x*⁵ *+ x*⁴ + 1 and an initial value [0, 1, 0, 1, 0, 0, 1];
a primitive polynomial *x*⁷ + *x*¹ + 1 and an initial value [1, 1, 1, 0, 1, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

The sequences in the sixth sequence set include at least one m-sequence obtained by combining the following primitive polynomial and initial value:
a primitive polynomial *x*⁸ *+ x*⁵ *+ x*³ *+ x*¹ + 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ + 1 and an initial value [0, 0, 0, 1, 0, 0, 1, 0].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, that the second sequence is determined based on the m-sequence includes: The second sequence is determined by adding 0 to a first location of the m-sequence.

Based on this possible design, 0 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
the primitive polynomial *x³ + x¹ +* 1 and an initial value [1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and the initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
a primitive polynomial *x*⁵ *+ x*² *+* 1 and an initial value [1, 1, 1, 0, 1];
the primitive polynomial *x*⁵ *+ x*² *+* 1 and the initial value [1, 0, 1, 0, 0];
the primitive polynomial *x*⁵ *+ x*² *+* 1 and an initial value [0, 0, 1, 0, 0];
the primitive polynomial *x*⁵ *+ x*² *+* 1 and an initial value [0, 0, 0, 1, 0];
the primitive polynomial *x*⁵ *+ x*² *+* 1 and an initial value [1, 0, 0, 0, 0];
the primitive polynomial *x*⁵ *+ x*² *+* 1 and the initial value [1, 0, 1, 0, 1];
the primitive polynomial *x*⁵ *+ x*² *+* 1 and an initial value [1, 0, 1, 1, 0];
the primitive polynomial *x*⁵ *+ x*² *+* 1 and an initial value [0, 1, 0, 0, 0];
the primitive polynomial *x*⁵ *+ x*² *+* 1 and an initial value [0, 1, 1, 1, 1]; and
the primitive polynomial *x*⁵ *+ x*² *+* 1 and an initial value [0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² *+* 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

Based on this possible design, an m-sequence corresponding to a primitive polynomial having a minimum quantity of taps can be provided, to reduce complexity of generating the m-sequence by a receiver and a transmitter.

According to a fiftieth aspect, an embodiment of this application provides a communication apparatus. The apparatus has a function of implementing the method according to the forty-ninth aspect. The function may be implemented by hardware, or may be implemented by hardware executing corresponding software. The hardware or the software includes one or more units or modules, for example, a receiving unit and a processing unit, corresponding to the function of the method according to the forty-ninth aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 1];
a primitive polynomial *x*³ *+ x*² *+* 1 and an initial value [1, 0, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*² *+* 1 and an initial value [0, 1, 0];
the primitive polynomial *x*³ *+ x*² *+* 1 and an initial value [1, 0, 0];
the primitive polynomial *x*³ *+ x*¹ *+* 1 and the initial value [0, 1, 0];
the primitive polynomial *x*³ *+ x*¹ *+* 1 and the initial value [1, 0, 0];
the primitive polynomial *x*³ *+ x*² *+* 1 and the initial value [1, 1, 1]; and
the primitive polynomial *x*³ *+ x*¹ *+* 1 and the initial value [1, 0, 1].

The sequences in the second sequence set include at least one m-sequence obtained by combining the following primitive polynomial and initial value:
a primitive polynomial *x*⁴ + *x*¹ + 1 and an initial value [1, 0, 1, 0];
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*¹ + 1 and an initial value [1, 0, 0, 1];
the primitive polynomial *x*⁴ + *x*³ + 1 and an initial value [0, 0, 0, 1];
the primitive polynomial *x*⁴ + *x*¹ + 1 and an initial value [0, 0, 1, 1];
the primitive polynomial *x*⁴ + *x*³ + 1 and the initial value [1, 0, 0, 1];
the primitive polynomial *x*⁴ + *x*¹ + 1 and an initial value [1, 1, 1, 1];
the primitive polynomial *x*⁴ + *x*³ + 1 and an initial value [0, 0, 1, 0]; and
the primitive polynomial *x*⁴ + *x*¹ + 1 and an initial value [0, 1, 0, 0].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [1, 1, 0, 1, 0];
a primitive polynomial *x*⁵ *+ x*⁴ *+ x*³ *+ x*² + 1 and an initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ *+ x*⁴ *+ x*³ *+ x*¹ *+* 1 and an initial value [0, 0, 0, 1, 1];
the primitive polynomial *x*⁵ *+ x*³ *+ x*² *+ x*¹ + 1 and an initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ *+ x*⁴ *+ x*³ *+ x*¹ *+* 1 and an initial value [1, 0, 0, 1, 0];
the primitive polynomial *x*⁵ *+ x*⁴ *+ x*³ *+ x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

The sequences in the fourth sequence set include at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and an initial value [1, 0, 1, 0, 1, 0];
a primitive polynomial *x*⁶ *+ x*⁵ *+ x*⁴ *+ x*¹ + 1 and an initial value [0, 1, 1, 0, 1, 0];
the primitive polynomial *x*⁶ *+ x*⁵ *+* 1 and an initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1];
a primitive polynomial *x*⁶ *+ x*¹ + 1 and an initial value [0, 1, 1, 0, 0, 0];
the primitive polynomial *x*⁶ *+ x*⁵ + 1 and an initial value [0, 1, 0, 1, 0, 0];
a primitive polynomial *x*⁶ *+ x*¹ + 1 and the initial value [1, 0, 1, 0, 1, 0]; and the primitive polynomial *x*⁶ *+ x*¹ + 1 and the initial value [1, 0, 1, 1, 1, 0].

The sequences in the fifth sequence set include at least one m-sequence obtained by combining the following primitive polynomial and initial value:
a primitive polynomial *x*⁷ *+ x*⁶ *+ x*⁵ *+ x*⁴ + 1 and an initial value [0, 0, 1, 1, 1, 1, 0];
a primitive polynomial *x*⁷ *+ x*⁶ *+ x*⁵ *+ x*³ *+ x*² *+ x*¹ *+* 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ *+ x*³ *+ x*¹ *+* 1 and an initial value [1, 0, 0, 0, 1, 0, 0];
a primitive polynomial *x*⁷ *+ x*³ *+ x*² *+ x*¹ + 1 and an initial value [1, 1, 1, 1, 0, 0, 1];
the primitive polynomial *x*⁷ *+ x*⁶ *+ x*⁵ *+ x*⁴ + 1 and an initial value [0, 1, 0, 1, 0, 0, 1];
a primitive polynomial *x*⁷ + *x*¹ + 1 and an initial value [1, 1, 1, 0, 1, 0, 1];
a primitive polynomial *x*⁷ *+ x*⁴ *+ x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

The sequences in the sixth sequence set include at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ + 1 and an initial value [1, 1, 0, 1, 1, 0, 1, 0];
the primitive polynomial *x*⁸ *+ x*⁵ *+ x*³ *+ x*¹ *+* 1 and an initial value [0, 1, 0, 1, 0, 1, 0, 0];
a primitive polynomial *x*⁸ *+ x*⁷ *+ x*⁵ *+ x*³ + 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ *+ x*⁶ *+ x*⁵ *+ x*⁴ *+* 1 and an initial value [0, 0, 0, 1, 0, 0, 1, 0].

In a possible design, that the second sequence is determined based on the m-sequence includes: The second sequence is determined by adding 0 to a first location of the m-sequence.

In a possible design, the sequences in the first sequence set further include at least one m-sequence obtained by combining the following primitive polynomial and initial value:
the primitive polynomial *x*³ *+ x*¹ *+* 1 and an initial value [1, 1, 0].

In a possible design, the sequences in the second sequence set further include at least one m-sequence obtained by combining the following primitive polynomial and initial value:
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and the initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1].

In a possible design, the sequences in the third sequence set further include at least one m-sequence obtained by combining the following primitive polynomial and initial value:
a primitive polynomial *x*⁵ *+ x*² + 1 and an initial value [1, 1, 1, 0, 1];
the primitive polynomial *x*⁵ *+ x*² *+* 1 and the initial value [1, 0, 1, 0, 0];
the primitive polynomial *x*⁵ *+ x*² *+* 1 and an initial value [0, 0, 1, 0, 0];
the primitive polynomial *x*⁵ *+ x*² *+* 1 and an initial value [0, 0, 0, 1, 0];
the primitive polynomial *x*⁵ *+ x*² + 1 and an initial value [1, 0, 0, 0, 0];
the primitive polynomial *x*⁵ *+ x*² + 1 and the initial value [1, 0, 1, 0, 1];
the primitive polynomial *x*⁵ *+ x*² + 1 and an initial value [1, 0, 1, 1, 0];
the primitive polynomial *x*⁵ *+ x*² + 1 and an initial value [0, 1, 0, 0, 0];
the primitive polynomial *x*⁵ *+ x*² + 1 and an initial value [0, 1, 1, 1, 1]; and
the primitive polynomial *x*⁵ *+ x*² + 1 and an initial value [0, 1, 1, 1, 0].

In a possible design, the sequences in the fourth sequence set further include at least one m-sequence obtained by combining the following primitive polynomial and initial value:
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0].

In a possible design, the sequences in the fifth sequence set further include at least one m-sequence obtained by combining the following primitive polynomial and initial value:
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0].

In a possible design, the sequences in the sixth sequence set further include at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² *+* 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

According to a fifty-first aspect, an embodiment of this application further provides a communication apparatus, including a memory and a processor. The processor is configured to execute computer instructions stored in the memory. When the computer instructions are executed, the apparatus is enabled to perform the method according to any one of the forty-ninth aspect or the possible designs of the forty-ninth aspect.

According to a fifty-second aspect, an embodiment of this application further provides a communication apparatus, including a processor and an interface circuit. The processor is configured to: communicate with another apparatus through the interface circuit, and perform the method according to any one of the forty-ninth aspect or the possible designs of the forty-ninth aspect.

The communication apparatus according to the fiftieth aspect to the fifty-second aspect may be used in a network device.

According to a fifty-third aspect, an embodiment of this application further provides a computer-readable storage medium. The computer-readable storage medium stores computer instructions. When the computer instructions are run on a network device or a chip built in the network device, the network device is enabled to perform the method according to the forty-ninth aspect.

According to a fifty-fourth aspect, an embodiment of this application further provides a computer program product including instructions. When the computer program product runs on a computer, the computer is enabled to perform the method according to any one of the forty-ninth aspect or the possible designs of the forty-ninth aspect.

It may be understood that for beneficial effect that can be achieved in the fiftieth aspect to the fifty-fourth aspect provided above, refer to beneficial effect in any one of the forty-ninth aspect and the possible designs of the forty-ninth aspect. Details are not described herein again.

According to a fifty-fifth aspect, an embodiment of this application further provides a signal processing method, applied to a communication system including a network device and a terminal device. The terminal device performs the method according to any one of the forty-third aspect and the possible designs of the forty-third aspect. The network device performs the method according to any one of the forty-ninth aspect and the possible designs of the forty-ninth aspect.

According to a fifty-sixth aspect, an embodiment of this application further provides a communication system, including a network device and a terminal device. The terminal device performs the method according to any one of the forty-third aspect and the possible designs of the forty-third aspect. The network device performs the method according to any one of the forty-ninth aspect and the possible designs of the forty-ninth aspect.

It may be understood that for beneficial effect that can be achieved by the fifty-fifth aspect and the fifty-sixth aspect provided above, refer to beneficial effect in the forty-third aspect, the forty-ninth aspect, and the like. Details are not described herein again.

According to a fifty-seventh aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ *+ x*¹ + 1 and an initial value [1, 0, 0, 1];
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1].

The sequences in the third sequence set include at least one m-sequence obtained by combining the following primitive polynomial and initial value:
a primitive polynomial *x*⁵ *+ x*² *+* 1 and an initial value [0, 1, 0, 1, 1];
the primitive polynomial *x*⁵ *+ x*² *+* 1 and an initial value [1, 1, 1, 0, 0];
the primitive polynomial *x*⁵ *+ x*² *+* 1 and an initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+ 1* and an initial value [0, 0, 1, 1, 0]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+ 1* and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and the initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [0, 1, 1, 1, 0, 0, 0, 0];
the primitive polynomial *x*⁸ *+ x*⁴ *+ x*³ *+ x*² + 1 and an initial value [0, 0, 1, 1, 1, 0, 0, 1];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [1, 0, 1, 1, 1, 0, 0, 0];
the primitive polynomial *x*⁸ *+ x*⁴ *+ x*³ *+ x*² + 1 and an initial value [1, 0, 1, 0, 1, 1, 1, 0];
the primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 0, 0, 1, 0, 0, 1, 1];
the primitive polynomial *x*⁸ *+ x*⁴ *+ x*³ *+ x*² *+* 1 and an initial value [1, 0, 1, 1, 1, 1, 0, 0];
the primitive polynomial *x*⁸ *+ x*⁴ *+ x*³ *+ x*² + 1 and an initial value [0, 1, 0, 0, 1, 0, 1, 0]; and
the primitive polynomial *x*⁸ *+ x*⁴ *+ x*³ *+ x*² + 1 and an initial value [0, 1, 0, 1, 0, 1, 0, 1].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, that the second sequence is determined based on the m-sequence includes: The second sequence is determined by adding 1 to a first location of the m-sequence.

Based on this possible design, 1 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
a primitive polynomial *x*³ *+ x*² + 1 and the initial value [1, 1, 0];
the primitive polynomial *x*³ *+ x*² + 1 and the initial value [1, 1, 1];
the primitive polynomial *x*³ *+ x*² + 1 and the initial value [0, 0, 1];
the primitive polynomial *x*³ *+ x*² + 1 and the initial value [0, 1, 0];
the primitive polynomial *x*³ *+ x*² + 1 and the initial value [0, 1, 1]; and
the primitive polynomial *x*³ *+ x*² + 1 and the initial value [1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and the initial value [0, 1, 0, 1, 0];
a primitive polynomial *x*⁵ *+ x*³ *+* 1 and an initial value [0, 0, 0, 0, 1];
the primitive polynomial *x*⁵ *+ x*³ *+ x*² *+ x*¹ + 1 and an initial value [1, 0, 0, 0, 1].
a primitive polynomial *x*⁵ *+ x*⁴ *+ x*³ *+ x*² + 1 and an initial value [1, 0, 1, 1, 1];
the primitive polynomial *x*⁵ *+ x*³ *+ x*² *+ x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x*² *+ x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and the initial value [0, 1, 1, 0, 1, 0];
the primitive polynomial *x*⁶ *+ x*⁵ *+* 1 and an initial value [0, 1, 1, 0, 0, 1];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x*² *+ x*¹ + 1 and the initial value [1, 1, 1, 0, 0, 1, 0];
a primitive polynomial *x*⁷ *+ x*⁶ *+ x*⁵ *+ x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ + 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ + 1 and the initial value [0, 1, 0, 1, 0, 1, 1, 1];
a primitive polynomial *x*⁸ *+ x*⁷ *+ x*² *+ x*¹ + 1 and an initial value 1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x*² + 1 and an initial value [1, 1, 0, 0, 0, 0, 0, 1].

Based on this possible design, time-frequency two-dimensional correlation detection performance of the preamble sequence is optimized to a maximum extent, uplink synchronization performance is further improved, and uplink data demodulation performance is further improved.

According to a fifty-eighth aspect, an embodiment of this application provides a communication apparatus. The apparatus has a function of implementing the method according to the fifty-seventh aspect. The function may be implemented by hardware, or may be implemented by hardware executing corresponding software. The hardware or the software includes one or more units or modules, for example, a sending unit and a processing unit, corresponding to the function of the method according to the fifty-seventh aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1].

The sequences in the third sequence set include at least one m-sequence obtained by combining the following primitive polynomial and initial value:
a primitive polynomial *x*⁵ *+ x*² *+* 1 and an initial value [0, 1, 0, 1, 1];
the primitive polynomial *x*⁵ *+ x*² *+* 1 and an initial value [1, 1, 1, 0, 0];
the primitive polynomial *x*⁵ *+ x*² *+* 1 and an initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and an initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x⁷* + *x*¹ + 1 and an initial value [0, 1, 0, 1, 0, 1, 0].

The sequences in the sixth sequence set include at least one m-sequence obtained by combining the following primitive polynomial and initial value:
a primitive polynomial *x*⁸ *+ x*⁴ *+ x*³ *+ x*² + 1 and an initial value [0, 1, 1, 1, 0, 0, 0, 0];
the primitive polynomial *x*⁸ *+ x*⁴ *+ x*³ *+ x*² + 1 and an initial value [0, 0, 1, 1, 1, 0, 0, 1];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [1, 0, 1, 1, 1, 0, 0, 0];
the primitive polynomial *x*⁸ *+ x*⁴ *+ x*³ *+ x*² + 1 and an initial value [1, 0, 1, 0, 1, 1, 1, 0];
the primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 0, 0, 1, 0, 0, 1, 1];
the primitive polynomial *x*⁸ *+ x*⁴ *+ x*³ *+ x*² + 1 and an initial value [1, 0, 1, 1, 1, 1, 0, 0];
the primitive polynomial *x*⁸ *+ x*⁴ *+ x*³ *+ x*² + 1 and an initial value [0, 1, 0, 0, 1, 0, 1, 0]; and
the primitive polynomial *x*⁸ *+ x*⁴ *+ x*³ *+ x*² + 1 and an initial value [0, 1, 0, 1, 0, 1, 0, 1].

In a possible design, that the second sequence is determined based on the m-sequence includes: The second sequence is determined by adding 1 to a first location of the m-sequence.

In a possible design, the sequences in the first sequence set further include at least one m-sequence obtained by combining the following primitive polynomial and initial value:
a primitive polynomial *x*³ *+ x*² + 1 and the initial value [1, 1, 0];
the primitive polynomial *x*³ *+ x*² *+* 1 and the initial value [1, 1, 1];
the primitive polynomial *x*³ *+ x*² *+* 1 and the initial value [0, 0, 1];
the primitive polynomial *x*³ *+ x*² *+* 1 and the initial value [0, 1, 0];
the primitive polynomial *x*³ *+ x*² *+* 1 and the initial value [0, 1, 1]; and
the primitive polynomial *x*³ *+ x*² *+* 1 and the initial value [1, 0, 1].

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0].

In a possible design, the sequences in the third sequence set further include at least one m-sequence obtained by combining the following primitive polynomial and initial value:
a primitive polynomial *x*⁵ *+ x*³ *+ x*² *+ x*¹ *+* 1 and the initial value [0, 1, 0, 1, 0];
a primitive polynomial *x*⁵ *+ x*³ *+* 1 and an initial value [0, 0, 0, 0, 1];
the primitive polynomial *x*⁵ *+ x*³ *+ x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ *+ x*³ *+ x*² *+ x*¹ *+ 1* and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x*² *+ x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1].

In a possible design, the sequences in the fourth sequence set further include at least one m-sequence obtained by combining the following primitive polynomial and initial value:
a primitive polynomial *x*⁶ *+ x*⁵ *+* 1 and the initial value [0, 1, 1, 0, 1, 0];
the primitive polynomial *x*⁶ *+ x*⁵ *+* 1 and an initial value [0, 1, 1, 0, 0, 1];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0].

In a possible design, the sequences in the fifth sequence set further include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x*² *+ x*¹ + 1 and the initial value [1, 1, 1, 0, 0, 1, 0];
a primitive polynomial *x*⁷ *+ x*⁶ *+ x*⁵ *+ x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ *+* 1 and an initial value [1, 1, 0, 0, 1, 0, 0].

In a possible design, the sequences in the sixth sequence set further include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ + 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ + 1 and the initial value [0, 1, 0, 1, 0, 1, 1, 1];
a primitive polynomial *x*⁸ *+ x*⁷ *+ x*² *+ x*¹ + 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x*² + 1 and an initial value [1, 1, 0, 0, 0, 0, 0, 1].

According to a fifty-ninth aspect, an embodiment of this application further provides a communication apparatus, including a memory and a processor. The processor is configured to execute computer instructions stored in the memory. When the computer instructions are executed, the apparatus is enabled to perform the method according to any one of the fifty-seventh aspect or the possible designs of the fifty-seventh aspect.

According to a sixtieth aspect, an embodiment of this application further provides a communication apparatus, including a processor and an interface circuit. The processor is configured to: communicate with another apparatus through the interface circuit, and perform the method according to any one of the fifty-seventh aspect or the possible designs of the fifty-seventh aspect.

The communication apparatus according to the fifty-eighth aspect to the sixtieth aspect may be used in a terminal device.

According to a sixty-first aspect, an embodiment of this application further provides a computer-readable storage medium. The computer-readable storage medium stores computer instructions. When the computer instructions are run on a terminal device or a chip built in the terminal device, the terminal device is enabled to perform the method according to the fifty-seventh aspect.

According to a sixty-second aspect, an embodiment of this application further provides a computer program product including instructions. When the computer program product runs on a computer, the computer is enabled to perform the method according to any one of the fifty-seventh aspect or the possible designs of the fifty-seventh aspect.

It may be understood that for beneficial effect that can be achieved in the fifty-eighth aspect to the sixty-second aspect, refer to beneficial effect in any one of the fifty-seventh aspect and the possible designs of the fifty-seventh aspect. Details are not described herein again.

According to a sixty-third aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1].

The sequences in the third sequence set include at least one m-sequence obtained by combining the following primitive polynomial and initial value:
a primitive polynomial *x*⁵ *+ x*² *+* 1 and an initial value [0, 1, 0, 1, 1];
the primitive polynomial *x*⁵ *+ x*² *+* 1 and an initial value [1, 1, 1, 0, 0];
the primitive polynomial *x*⁵ *+ x*² *+* 1 and an initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and an initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0].

The sequences in the sixth sequence set include at least one m-sequence obtained by combining the following primitive polynomial and initial value:
a primitive polynomial *x*⁸ + *x*⁴ + *x*³ *+ x*² + 1 and an initial value [0, 1, 1, 1, 0, 0, 0, 0];
the primitive polynomial *x*⁸ + *x*⁴ + *x*³ *+ x*² + 1 and an initial value [0, 0, 1, 1, 1, 0, 0, 1];
the primitive polynomial *x*⁸ *+ x*⁴ *+ x*³ *+ x*² + 1 and an initial value [0, 1, 0, 1, 0, 1, 1, 1];
the primitive polynomial *x*⁸ + *x*⁴ + *x*³ *+ x*² *+* 1 and an initial value [1, 0, 1, 1, 1, 0, 0, 0];
the primitive polynomial *x*⁸ + *x*⁴ + *x*³ *+ x*² + 1 and an initial value [1, 0, 1, 0, 1, 1, 1, 0];
the primitive polynomial *x*⁸ *+ x*⁴ *+ x*³ *+ x*² + 1 and an initial value [1, 0, 1, 0, 1, 0, 1, 1];
the primitive polynomial *x*⁸ + *x*⁴ + *x*³ *+ x*² + 1 and an initial value [1, 0, 0, 1, 0, 0, 1, 1];
the primitive polynomial *x*⁸ + *x*⁴ + *x*³ *+ x*² + 1 and an initial value [1, 0, 1, 1, 1, 1, 0, 0];
the primitive polynomial *x*⁸ + *x*⁴ + *x*³ *+ x*² + 1 and an initial value [0, 1, 0, 0, 1, 0, 1, 0]; and
the primitive polynomial *x*⁸ + *x*⁴ + *x*³ *+ x*² + 1 and an initial value [0, 1, 0, 1, 0, 1, 0, 1].

According to the method, when sending the first signal, the terminal can determine the preamble sequence based on the m-sequence. Because the m-sequence is a preset m-sequence corresponding to a primitive polynomial having a minimum quantity of taps, and has good time-frequency two-dimensional correlation detection performance, complexity of generating the m-sequence by a receiver and a transmitter can be reduced, uplink synchronization performance can be improved, and uplink data demodulation performance can be improved.

In a possible design, that the second sequence is determined based on the m-sequence includes: The second sequence is determined by adding 1 to a first location of the m-sequence.

Based on this possible design, 1 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
a primitive polynomial *x*³ *+ x*² + 1 and the initial value [1, 1, 0];
the primitive polynomial *x*³ *+ x*² + 1 and the initial value [1, 1, 1];
the primitive polynomial *x*³ *+ x*² + 1 and an initial value [0, 0, 1];
the primitive polynomial *x*³ *+ x*² + 1 and an initial value [0, 1, 0];
the primitive polynomial *x*³ *+ x*² + 1 and an initial value [0, 1, 1]; and
the primitive polynomial *x*³ *+ x*² + 1 and an initial value [1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the third sequence set further include at least one m-sequence obtained by combining the following primitive polynomial and initial value:
a primitive polynomial *x*⁵ + *x*³ *+ x*² *+ x*¹ *+* 1 and the initial value [0, 1, 0, 1, 0];
a primitive polynomial *x*⁵ *+ x*³ *+* 1 and an initial value [0, 0, 0, 0, 1];
the primitive polynomial *x*⁵ + *x*³ + *x*² *+ x*¹ + 1 and an initial value [1, 0, 0, 0, 1];
a primitive polynomial *x*⁵ + *x*⁴ + *x*³ *+ x*² + 1 and an initial value [1, 0, 1, 1, 1];
the primitive polynomial *x*⁵ + *x*³ + *x*² *+ x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ + *x*³ + *x*² *+ x*¹ *+* 1 and an initial value [1, 1, 0, 0, 0];
the primitive polynomial *x*⁵ + *x*⁴ + *x*³ *+ x*² + 1 and an initial value [0, 1, 1, 1, 1]; and
a primitive polynomial *x*⁵ + *x*⁴ + *x*² *+ x*¹ *+* 1 and an initial value [0, 0, 1, 0, 1].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fourth sequence set further include at least one m-sequence obtained by combining the following primitive polynomial and initial value:
a primitive polynomial *x*⁶ *+ x*⁵ *+* 1 and the initial value [0, 1, 1, 0, 1, 0];
the primitive polynomial *x*⁶ *+ x*⁵ *+* 1 and an initial value [0, 1, 1, 0, 0, 1];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0];
a primitive polynomial *x*⁶ *+ x*⁵ *+ x*² *+ x*¹ *+* 1 and the initial value [0, 1, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the fifth sequence set further include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ + *x*³ + *x*² + *x*¹ + 1 and the initial value [1, 1, 1, 0, 0, 1, 0];
a primitive polynomial *x*⁷ + *x*⁶ *+ x*⁵ + *x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ + *x*⁶ + *x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ + *x*⁶ + *x*⁵ + *x*³ + *x*² + *x*¹ + 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

Based on this possible design, time-frequency two-dimensional correlation detection performance of the preamble sequence is optimized to a maximum extent, uplink synchronization performance is further improved, and uplink data demodulation performance is further improved.

In a possible design, the sequences in the sixth sequence set further include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x⁸ + x*⁶ *+ x*⁵ *+ x*⁴ *+* 1 and the initial value [0, 1, 0, 1, 0, 1, 1, 1];
a primitive polynomial *x*⁸ *+ x*⁷ *+ x*² *+ x*¹ + 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x*² + 1 and an initial value [1, 1, 0, 0, 0, 0, 0, 1].

Based on this possible design, time-frequency two-dimensional correlation detection performance of the preamble sequence is optimized to a maximum extent, uplink synchronization performance is further improved, and uplink data demodulation performance is further improved.

According to a sixty-fourth aspect, an embodiment of this application provides a communication apparatus. The apparatus has a function of implementing the method according to the sixty-third aspect. The function may be implemented by hardware, or may be implemented by hardware executing corresponding software. The hardware or the software includes one or more units or modules, for example, a receiving unit and a processing unit, corresponding to the function of the method according to the sixty-third aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+ 1* and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ + *x*¹ + 1 and an initial value [1, 0, 0, 1].
the primitive polynomial *x*⁴ + *x*¹ + 1 and an initial value [0, 0, 1, 0].
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1].

The sequences in the third sequence set include at least one m-sequence obtained by combining the following primitive polynomial and initial value:
a primitive polynomial *x*⁵ *+ x*² *+* 1 and an initial value [0, 1, 0, 1, 1];
the primitive polynomial *x*⁵ *+ x*² *+* 1 and an initial value [1, 1, 1, 0, 0];
the primitive polynomial *x*⁵ *+ x*² *+* 1 and an initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+ 1* and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+ 1* and an initial value [0, 0, 1, 1, 0]; and
the primitive polynomial *x*⁵ *+ x*² *+* 1 and an initial value [0, 1, 1, 1, 0].

The sequences in the fourth sequence set include at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+ 1* and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

The sequences in the fifth sequence set include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and an initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0].

The sequences in the sixth sequence set include at least one m-sequence obtained by combining the following primitive polynomial and initial value:
a primitive polynomial *x*⁸ + *x*⁴ + *x*³ *+ x*² + 1 and an initial value [0, 1, 1, 1, 0, 0, 0, 0];
the primitive polynomial *x*⁸ + *x*⁴ + *x*³ *+ x*² + 1 and an initial value [0, 0, 1, 1, 1, 0, 0, 1];
the primitive polynomial *x*⁸ + *x*⁴ + *x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [1, 0, 1, 1, 1, 0, 0, 0];
the primitive polynomial *x*⁸ + *x*⁴ + *x*³ *+ x*² + 1 and an initial value [1, 0, 1, 0, 1, 1, 1, 0];
the primitive polynomial *x*⁸ + *x*⁴ + *x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 0, 0, 1, 0, 0, 1, 1];
the primitive polynomial *x*⁸ + *x*⁴ + *x*³ *+ x*² *+* 1 and an initial value [1, 0, 1, 1, 1, 1, 0, 0];
the primitive polynomial *x*⁸ + *x*⁴ + *x*³ *+ x*² + 1 and an initial value [0, 1, 0, 0, 1, 0, 1, 0]; and
the primitive polynomial *x*⁸ *+ x*⁴ *+ x*³ *+ x*² + 1 and an initial value [0, 1, 0, 1, 0, 1, 0, 1].

In a possible design, that the second sequence is determined based on the m-sequence includes: The second sequence is determined by adding 1 to a first location of the m-sequence.

In a possible design, the sequences in the first sequence set further include at least one m-sequence obtained by combining the following primitive polynomial and initial value:
a primitive polynomial *x*³ *+ x*² + 1 and the initial value [1, 1, 0];
the primitive polynomial *x*³ *+ x*² + 1 and the initial value [1, 1, 1].
the primitive polynomial *x*³ *+ x*² + 1 and the initial value [0, 0, 1];
the primitive polynomial *x*³ *+ x*² + 1 and the initial value [0, 1, 0];
the primitive polynomial *x*³ *+ x*² + 1 and the initial value [0, 1, 1]; and
the primitive polynomial *x*³ *+ x*² + 1 and the initial value [1, 0, 1].

In a possible design, the sequences in the second sequence set further include at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0].

In a possible design, the sequences in the third sequence set further include at least one m-sequence obtained by combining the following primitive polynomial and initial value:
a primitive polynomial *x*⁵ + *x*³ + *x*² *+ x*¹ *+* 1 and the initial value [0, 1, 0, 1, 0];
a primitive polynomial *x*⁵ *+ x*³ + 1 and an initial value [0, 0, 0, 0, 1];
the primitive polynomial *x*⁵ + *x*³ + *x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ + *x*³ + *x*² *+ x*¹ *+* 1 and an initial value [1, 1, 1, 1, 0];
the primitive polynomial *x*⁵ + *x*⁴ + *x*³ *+ x*² + 1 and an initial value [0, 0, 1, 0, 0];
the primitive polynomial *x*⁵ *+ x*³ + *x*² *+ x*¹ *+ 1* and an initial value [1, 1, 0, 0, 0];
the primitive polynomial *x*⁵ + *x*⁴ + *x*³ *+ x*² + 1 and an initial value [0, 1, 1, 1, 1]; and
a primitive polynomial *x*⁵ + *x*⁴ + *x*² *+ x*¹ *+* 1 and an initial value [0, 0, 1, 0, 1].

In a possible design, the sequences in the fourth sequence set further include at least one m-sequence obtained by combining the following primitive polynomial and initial value:
a primitive polynomial *x*⁶ *+ x*⁵ *+* 1 and the initial value [0, 1, 1, 0, 1, 0];
the primitive polynomial *x*⁶ *+ x*⁵ *+* 1 and an initial value [0, 1, 1, 0, 0, 1];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ + *x*⁵ + *x*² *+ x*¹ *+* 1 and the initial value [0, 1, 0, 1, 0, 0].

In a possible design, the sequences in the fifth sequence set further include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ + *x*³ + *x*² + *x*¹ + 1 and the initial value [1, 1, 1, 0, 0, 1, 0];
a primitive polynomial *x*⁷ + *x*⁶ *+ x*⁵ *+ x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x*⁷ + *x*⁶ + *x*⁵ + *x*³ + *x*² + *x*¹ + 1 and an initial value [0, 0, 0, 1, 0, 1, 1];
a primitive polynomial *x*⁷ + *x*⁶ + *x*⁵ *+ x*² + 1 and an initial value [0, 0, 1, 0, 0, 1, 1];
a primitive polynomial *x*⁷ + *x*⁵ + *x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ + *x*⁶ + *x*⁵ + *x*³ + *x*² + *x*¹ + 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

In a possible design, the sequences in the sixth sequence set further include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ + *x*⁶ *+ x*⁵ *+ x*⁴ *+* 1 and the initial value [0, 1, 0, 1, 0, 1, 1, 1];
a primitive polynomial *x*⁸ + *x*⁷ + *x*² + *x*¹ + 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ + *x*⁶ + *x*⁵ + *x*² + 1 and an initial value [1, 1, 0, 0, 0, 0, 0, 1].

According to a sixty-fifth aspect, an embodiment of this application further provides a communication apparatus, including a memory and a processor. The processor is configured to execute computer instructions stored in the memory. When the computer instructions are executed, the apparatus is enabled to perform the method according to any one of the sixty-third aspect or the possible designs of the sixty-third aspect.

According to a sixty-sixth aspect, an embodiment of this application further provides a communication apparatus, including a processor and an interface circuit. The processor is configured to: communicate with another apparatus through the interface circuit, and perform the method according to any one of the sixty-third aspect or the possible designs of the sixty-third aspect.

The communication apparatus according to the sixty-fourth aspect to the sixty-sixth aspect may be used in a network device.

According to a sixty-seventh aspect, an embodiment of this application further provides a computer-readable storage medium. The computer-readable storage medium stores computer instructions. When the computer instructions are run on a network device or a chip built in the network device, the network device is enabled to perform the method according to the sixty-third aspect.

According to a sixty-eighth aspect, an embodiment of this application further provides a computer program product including instructions. When the computer program product runs on a computer, the computer is enabled to perform the method according to any one of the sixty-third aspect or the possible designs of the sixty-third aspect.

It may be understood that for beneficial effect that can be achieved in the sixty-fourth aspect to the sixty-eighth aspect provided above, refer to beneficial effect in any one of the sixty-third aspect and the possible designs of the sixty-third aspect. Details are not described herein again.

According to a sixty-ninth aspect, an embodiment of this application further provides a signal processing method, applied to a communication system including a network device and a terminal device. The terminal device performs the method according to any one of the fifty-seventh aspect and the possible designs of the fifty-seventh aspect. The network device performs the method according to any one of the sixty-third aspect and the possible designs of the sixty-third aspect.

According to a seventieth aspect, an embodiment of this application further provides a communication system, including a network device and a terminal device. The terminal device performs the method according to any one of the fifty-seventh aspect and the possible designs of the fifty-seventh aspect. The network device performs the method according to any one of the sixty-third aspect and the possible designs of the sixty-third aspect.

It may be understood that for beneficial effect that can be achieved in the sixty-ninth aspect and the seventieth aspect provided above, refer to beneficial effect in the fifty-seventh aspect, the sixty-third aspect, and the like. Details are not described herein again.

According to a seventy-first aspect, an embodiment of this application provides a signal processing method. The method includes: generating a first sequence, where the first sequence includes a preamble sequence, the preamble sequence is a second sequence or an equivalent sequence of the second sequence, and the equivalent sequence is obtained by performing bitwise negation and/or reversing on the sequence; modulating the first sequence to obtain a first signal; and sending the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
a primitive polynomial *x*³ *+ x*² *+* 1 and an initial value [1, 1, 0];
the primitive polynomial *x*³ *+ x*² *+* 1 and an initial value [1, 1, 1];
the primitive polynomial *x*³ *+ x*¹ *+* 1 and the initial value [1, 1, 0];
the primitive polynomial *x*³ *+ x*² *+* 1 and an initial value [0, 0, 1];
the primitive polynomial *x*³ *+ x*¹ *+* 1 and the initial value [0, 0, 1];
the primitive polynomial *x*³ *+ x*¹ *+* 1 and an initial value [0, 1, 1];
the primitive polynomial *x*³ *+ x*² *+* 1 and the initial value [0, 1, 0];
the primitive polynomial *x*³ *+ x*² *+* 1 and the initial value [0, 1, 1]; and
the primitive polynomial *x*³ *+ x*² *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
a primitive polynomial *x*⁴ + *x*³ + 1 and an initial value [1, 1, 1, 0];
the primitive polynomial *x*⁴ + *x*¹ + 1 and an initial value [0, 1, 0, 0];
the primitive polynomial *x*⁴ + *x*³ + 1 and an initial value [1, 1, 1, 1];
the primitive polynomial *x*⁴ + *x*³ + 1 and an initial value [1, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and the initial value [1, 1, 1, 1];
the primitive polynomial *x*⁴ + *x*³ + 1 and an initial value [0, 1, 1, 0]; and
the primitive polynomial *x*⁴ + *x*¹ + 1 and an initial value [1, 0, 0, 1].

The sequences in the third sequence set include at least one m-sequence obtained by combining the following primitive polynomial and initial value:
a primitive polynomial *x*⁵ + *x*³ *+ x*² + *x*¹ *+* 1 and an initial value [0, 1, 0, 1, 0];
a primitive polynomial *x ^{I} + x*² + 1 and an initial value [0, 1, 0, 1, 1];
a primitive polynomial *x*⁵ *+ x*³ *+* 1 and an initial value [0, 0, 0, 0, 1];
the primitive polynomial *x*⁵ + *x*³ + *x*² *+ x*¹ + 1 and an initial value [1, 0, 0, 0, 1];
a primitive polynomial *x*⁵ + *x*⁴ + *x*³ *+ x*² + 1 and an initial value [1, 0, 1, 1, 1];
the primitive polynomial *x*⁵ + *x*³ + *x*² *+ x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ + *x*³ + *x*² *+ x*¹ *+* 1 and an initial value [1, 1, 0, 0, 0];
the primitive polynomial *x*⁵ + *x*⁴ + *x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1].

The sequences in the fourth sequence set include at least one m-sequence obtained by combining the following primitive polynomial and initial value:
a primitive polynomial *x*⁶ *+ x*⁵ *+* 1 and an initial value [0, 1, 1, 0, 1, 0];
a primitive polynomial *x*⁶ *+ x*¹ *+* 1 and an initial value [1, 1, 0, 1, 1, 0];
the primitive polynomial *x*⁶ *+ x*⁵ *+* 1 and an initial value [0, 1, 1, 0, 0, 1];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
the primitive polynomial *x*⁶ *+ x*⁵ *+ x*² *+ x*¹ *+* 1 and the initial value [0, 1, 0, 1, 0, 0].

The sequences in the fifth sequence set include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ + *x*³ + *x*² + *x*¹ *+* 1 and an initial value [1, 1, 1, 0, 0, 1, 0];
a primitive polynomial *x*⁷ + *x*⁶ + *x*⁵ + *x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ + *x*⁵ + *x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

The sequences in the sixth sequence set include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ *+* 1 and an initial value [0, 1, 0, 1, 0, 1, 1, 1];
a primitive polynomial *x*⁸ + *x*⁴ + *x*³ *+ x*² + 1 and an initial value [0, 1, 1, 1, 0, 0, 0, 0];
a primitive polynomial *x*⁸ *+ x*⁷ *+ x*² *+ x*¹ + 1 and an initial value [1, 0, 1, 0, 0, 1, 1, 0];
a primitive polynomial *x*⁸ + *x*⁷ + *x*⁶ + *x*¹ + 1 and the initial value [1, 0, 1, 0, 0, 1, 1, 0]; and
a primitive polynomial *x*⁸ + *x*⁶ + *x*⁵ + *x*² + 1 and an initial value [1, 1, 0, 0, 0, 0, 0, 1].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, that the second sequence is determined based on the m-sequence includes: The second sequence is determined by adding 1 to a first location of the m-sequence.

Based on this possible design, 1 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
the primitive polynomial *x*³ *+ x*¹ *+* 1 and an initial value [1, 0, 0];
the primitive polynomial *x*³ *+ x*¹ *+* 1 and the initial value [1, 1, 1]; and
the primitive polynomial *x*³ *+ x*¹ *+* 1 and the initial value [1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and the initial value [0, 1, 1, 0]; and
the primitive polynomial *x*⁴ + *x*¹ + 1 and an initial value [1, 1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
the primitive polynomial *x*⁵ *+ x*² *+* 1 and an initial value [1, 1, 1, 0, 0];
the primitive polynomial *x*⁵ *+ x*² *+* 1 and the initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and the initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x⁷* + *x*¹ + 1 and an initial value [0, 1, 0, 1, 0, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
the primitive polynomial *x*⁸ *+ x*⁴ *+ x*³ *+ x² +* 1 and an initial value [0, 0, 1, 1, 1, 0, 0, 1];
the primitive polynomial *x*⁸ *+ x*⁴ *+ x*³ *+ x² +* 1 and the initial value [0, 1, 0, 1, 0, 1, 1, 1];
the primitive polynomial *x*⁸ *+ x*⁴ *+ x*³ *+ x² +* 1 and an initial value [1, 0, 1, 1, 1, 0, 0, 0];
the primitive polynomial *x*⁸ *+ x*⁴ *+ x*³ *+ x² +* 1 and an initial value [1, 0, 1, 0, 1, 1, 1, 0];
the primitive polynomial *x*⁸ *+ x*⁴ *+ x*³ *+ x*² *+* 1 and an initial value [1, 0, 1, 0, 1, 0, 1, 1];
the primitive polynomial *x*⁸ *+ x*⁴ *+ x*³ *+ x² +* 1 and an initial value [1, 0, 0, 1, 0, 0, 1, 1];
the primitive polynomial *x*⁸ *+ x*⁴ *+ x*³ *+ x² +* 1 and an initial value [1, 0, 1, 1, 1, 1, 0, 0];
the primitive polynomial *x*⁸ *+ x*⁴ *+ x*³ *+ x*² *+* 1 and an initial value [0, 1, 0, 0, 1, 0, 1, 0]; and
the primitive polynomial *x*⁸ *+ x*⁴ *+ x*³ *+ x² +* 1 and an initial value [0, 1, 0, 1, 0, 1, 0, 1].

Based on this possible design, an m-sequence corresponding to a primitive polynomial having a minimum quantity of taps can be provided, to reduce complexity of generating the m-sequence by a receiver and a transmitter.

According to a seventy-second aspect, an embodiment of this application provides a communication apparatus. The apparatus has a function of implementing the method according to the seventy-first aspect. The function may be implemented by hardware, or may be implemented by hardware executing corresponding software. The hardware or the software includes one or more units or modules, for example, a sending unit and a processing unit, corresponding to the function of the method according to the seventy-first aspect.

The processing unit is configured to: generate a first sequence, where the first sequence includes a preamble sequence, the preamble sequence is a second sequence or an equivalent sequence of the second sequence, and the equivalent sequence is obtained by performing bitwise negation and/or reversing on the sequence; and modulate the first sequence to obtain a first signal.

The sending unit is configured to send the first signal.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
a primitive polynomial *x*³ *+ x² +* 1 and an initial value [1, 1, 0];
the primitive polynomial *x*³ *+ x² +* 1 and an initial value [1, 1, 1];
the primitive polynomial *x*³ *+ x*¹ *+* 1 and the initial value [1, 1, 0];
the primitive polynomial *x*³ *+ x² +* 1 and an initial value [0, 0, 1];
the primitive polynomial *x*³ *+ x*¹ *+* 1 and the initial value [0, 0, 1];
the primitive polynomial *x*³ *+ x*¹ *+* 1 and an initial value [0, 1, 1];
the primitive polynomial *x*³ *+ x² +* 1 and the initial value [0, 1, 0];
the primitive polynomial *x*³ *+ x² +* 1 and the initial value [0, 1, 1]; and
the primitive polynomial *x*³ *+ x² +* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
a primitive polynomial *x*⁴ + *x*³ + 1 and an initial value [1, 1, 1, 0];
the primitive polynomial *x*⁴ + *x*¹ + 1 and an initial value [0, 1, 0, 0];
the primitive polynomial *x*⁴ + *x*³ + 1 and an initial value [1, 1, 1, 1];
the primitive polynomial *x*⁴ + *x*³ + 1 and an initial value [1, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and the initial value [1, 1, 1, 1];
the primitive polynomial *x*⁴ + *x*³ + 1 and an initial value [0, 1, 1, 0]; and
the primitive polynomial *x*⁴ + *x*¹ + 1 and an initial value [1, 0, 0, 1].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [0, 1, 0, 1, 0];
a primitive polynomial *x*⁵ *+ x²* + 1 and an initial value [0, 1, 0, 1, 1];
a primitive polynomial *x*⁵ *+ x*³ *+* 1 and an initial value [0, 0, 0, 0, 1];
the primitive polynomial *x*⁵ *+ x*³ *+ x² + x*¹ + 1 and an initial value [1, 0, 0, 0, 1];
a primitive polynomial *x*⁵ *+ x*⁴ *+ x*³ *+ x²* + 1 and an initial value [1, 0, 1, 1, 1];
the primitive polynomial *x*⁵ *+ x*³ *+ x*² *+ x*¹ *+ 1* and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x² + x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
the primitive polynomial *x*⁵ *+ x*⁴ *+ x*² *+ x*¹ *+* 1 and an initial value [0, 0, 1, 0, 1].

The sequences in the fourth sequence set include at least one m-sequence obtained by combining the following primitive polynomial and initial value:
a primitive polynomial *x*⁶ *+ x*⁵ *+* 1 and an initial value [0, 1, 1, 0, 1, 0];
a primitive polynomial *x*⁶ *+ x*¹ *+* 1 and an initial value [1, 1, 0, 1, 1, 0];
the primitive polynomial *x*⁶ *+ x*⁵ *+* 1 and an initial value [0, 1, 1, 0, 0, 1];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*⁵ *+* 1 and the initial value [1, 1, 0, 1, 1, 0];
the primitive polynomial *x*⁶ *+ x*⁵ *+ 1* and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0].

The sequences in the fifth sequence set include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x² + x*¹ *+* 1 and an initial value [1, 1, 1, 0, 0, 1, 0];
a primitive polynomial *x*⁷ *+ x*⁶ *+ x*⁵ *+ x*⁴ + 1 and an initial value [0, 0, 1, 0, 1, 0, 0];
a primitive polynomial *x*⁷ *+ x*⁶ *+ x*⁵ *+ x*⁴ *+ x² + x*¹ *+* 1 and an initial value [1, 1, 1, 1, 0, 0, 0];
a primitive polynomial *x⁷ + x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x²* + 1 and an initial value [0, 0, 1, 0, 0, 1, 1];
a primitive polynomial *x*⁷ *+ x*⁵ *+ x² + x*¹ *+* 1 and an initial value [0, 0, 0, 1, 0, 1, 0];
a primitive polynomial *x*⁷ *+ x*⁴ *+* 1 and an initial value [0, 0, 1, 1, 0, 1, 1].
the primitive polynomial *x*⁷ *+ x*⁶ *+ x*⁵ *+ x*³ *+ x² + x*¹ *+* 1 and an initial value [0, 1, 1, 0, 1, 0, 1]; and
the primitive polynomial *x*⁷ *+ x*⁶ *+ x*⁵ *+ x*⁴ *+ x² + x*¹ + 1 and an initial value [1, 1, 0, 0, 1, 0, 0].

The sequences in the sixth sequence set include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x⁷ + x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ + 1 and an initial value [0, 1, 0, 1, 0, 1, 1, 1];
a primitive polynomial *x*⁸ *+ x*⁴ *+ x*³ *+ x²* + 1 and an initial value [0, 1, 1, 1, 0, 0, 0, 0];
a primitive polynomial *x*⁸ *+ x*⁷ *+ x*² *+ x*¹ + 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x*² + 1 and an initial value [1, 1, 0, 0, 0, 0, 0, 1].

In a possible design, that the second sequence is determined based on the m-sequence includes: The second sequence is determined by adding 1 to a first location of the m-sequence.

In a possible design, the sequences in the first sequence set further include at least one m-sequence obtained by combining the following primitive polynomial and initial value:
the primitive polynomial *x*³ *+ x*¹ *+* 1 and an initial value [1, 0, 0];
the primitive polynomial *x*³ *+ x*¹ *+* 1 and the initial value [1, 1, 1]; and
the primitive polynomial *x*³ *+ x*¹ *+* 1 and the initial value [1, 0, 1].

In a possible design, the sequences in the second sequence set further include at least one m-sequence obtained by combining the following primitive polynomial and initial value:
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and the initial value [0, 1, 1, 0]; and
the primitive polynomial *x*⁴ + *x*¹ + 1 and an initial value [1, 1, 0, 1].

In a possible design, the sequences in the third sequence set further include at least one m-sequence obtained by combining the following primitive polynomial and initial value:
the primitive polynomial *x*⁵ *+ x*² *+* 1 and an initial value [1, 1, 1, 0, 0];
the primitive polynomial *x*⁵ *+ x*² *+* 1 and the initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0].

In a possible design, the sequences in the fourth sequence set further include at least one m-sequence obtained by combining the following primitive polynomial and initial value:
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

In a possible design, the sequences in the fifth sequence set further include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x⁷* + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and the initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0].

In a possible design, the sequences in the sixth sequence set further include at least one m-sequence obtained by combining the following primitive polynomial and initial value:
the primitive polynomial *x*⁸ *+ x*⁴ *+ x*³ *+ x² +* 1 and an initial value [0, 0, 1, 1, 1, 0, 0, 1];
the primitive polynomial *x*⁸ *+ x*⁴ *+ x*³ *+ x² +* 1 and the initial value [0, 1, 0, 1, 0, 1, 1, 1];
the primitive polynomial *x*⁸ *+ x*⁴ *+ x*³ *+ x² +* 1 and an initial value [1, 0, 1, 1, 1, 0, 0, 0];
the primitive polynomial *x*⁸ *+ x*⁴ *+ x*³ *+ x*² *+* 1 and an initial value [1, 0, 1, 0, 1, 1, 1, 0];
the primitive polynomial *x*⁸ *+ x*⁴ *+ x*³ *+ x*² *+* 1 and an initial value [1, 0, 1, 0, 1, 0, 1, 1];
the primitive polynomial *x*⁸ *+ x*⁴ *+ x*³ *+ x*² *+* 1 and an initial value [1, 0, 0, 1, 0, 0, 1, 1];
the primitive polynomial *x*⁸ *+ x*⁴ *+ x*³ *+ x*² *+* 1 and an initial value [1, 0, 1, 1, 1, 1, 0, 0];
the primitive polynomial *x*⁸ *+ x*⁴ *+ x*³ *+ x*² *+* 1 and an initial value [0, 1, 0, 0, 1, 0, 1, 0]; and
the primitive polynomial *x*⁸ *+ x*⁴ *+ x*³ *+ x*² *+* 1 and an initial value [0, 1, 0, 1, 0, 1, 0, 1].

According to a seventy-third aspect, an embodiment of this application further provides a communication apparatus, including a memory and a processor. The processor is configured to execute computer instructions stored in the memory. When the computer instructions are executed, the apparatus is enabled to perform the method according to any one of the seventy-first aspect or the possible designs of the seventy-first aspect.

According to a seventy-fourth aspect, an embodiment of this application further provides a communication apparatus, including a processor and an interface circuit. The processor is configured to: communicate with another apparatus through the interface circuit, and perform the method according to any one of the seventy-first aspect or the possible designs of the seventy-first aspect.

The communication apparatus according to the seventy-second aspect to the seventy-fourth aspect may be used in a terminal device.

According to a seventy-fifth aspect, an embodiment of this application further provides a computer-readable storage medium. The computer-readable storage medium stores computer instructions. When the computer instructions are run on a terminal device or a chip built in the terminal device, the terminal device is enabled to perform the method according to the seventy-first aspect.

According to a seventy-sixth aspect, an embodiment of this application further provides a computer program product including instructions. When the computer program product runs on a computer, the computer is enabled to perform the method according to any one of the seventy-first aspect or the possible designs of the seventy-first aspect.

It may be understood that for beneficial effect that can be achieved in the seventy-second aspect to the seventy-sixth aspect provided above, refer to beneficial effect in any one of the seventy-first aspect and the possible designs of the seventy-first aspect. Details are not described herein again.

According to a seventy-seventh aspect, an embodiment of this application provides a signal processing method. The method includes: receiving a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence; determining a location of the preamble sequence in the first signal; and obtaining a data window based on the location of the preamble in the first signal, and demodulating a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
a primitive polynomial *x*³ *+ x² +* 1 and an initial value [1, 1, 0];
the primitive polynomial *x*³ *+ x*² *+* 1 and an initial value [1, 1, 1];
the primitive polynomial *x*³ *+ x*¹ *+* 1 and the initial value [1, 1, 0];
the primitive polynomial *x*³ *+ x*² *+* 1 and an initial value [0, 0, 1];
the primitive polynomial *x*³ *+ x*¹ *+* 1 and the initial value [0, 0, 1];
the primitive polynomial *x*³ *+ x*¹ *+* 1 and an initial value [0, 1, 1];
the primitive polynomial *x*³ *+ x*² *+* 1 and the initial value [0, 1, 0];
the primitive polynomial *x*³ *+ x*² *+* 1 and the initial value [0, 1, 1]; and
the primitive polynomial *x*³ *+ x*² *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
a primitive polynomial *x*⁴ + *x*³ + 1 and an initial value [1, 1, 1, 0];
the primitive polynomial *x*⁴ + *x*¹ + 1 and an initial value [0, 1, 0, 0];
the primitive polynomial *x*⁴ + *x*³ + 1 and an initial value [1, 1, 1, 1];
the primitive polynomial *x*⁴ + *x*³ + 1 and an initial value [1, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and the initial value [1, 1, 1, 1];
the primitive polynomial *x*⁴ + *x*³ + 1 and an initial value [0, 1, 1, 0]; and
the primitive polynomial *x*⁴ + *x*¹ + 1 and an initial value [1, 0, 0, 1].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [0, 1, 0, 1, 0];
a primitive polynomial *x*⁵ *+ x*² + 1 and an initial value [0, 1, 0, 1, 1];
a primitive polynomial *x*⁵ *+ x*³ + 1 and an initial value [0, 0, 0, 0, 1];
the primitive polynomial *x*⁵ *+ x*³ *+ x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ *+ x*³ *+ x² + x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x*² *+ x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1].

The sequences in the fourth sequence set include at least one m-sequence obtained by combining the following primitive polynomial and initial value:
a primitive polynomial *x*⁶ *+ x*⁵ *+* 1 and an initial value [0, 1, 1, 0, 1, 0];
a primitive polynomial *x*⁶ *+ x*¹ *+* 1 and an initial value [1, 1, 0, 1, 1, 0];
the primitive polynomial *x*⁶ *+ x*⁵ *+* 1 and an initial value [0, 1, 1, 0, 0, 1];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0].

The sequences in the fifth sequence set include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x² + x*¹ *+* 1 and an initial value [1, 1, 1, 0, 0, 1, 0];
a primitive polynomial *x*⁷ *+ x*⁶ *+ x*⁵ *+ x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x⁷ + x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x⁷ + x*⁴ + 1 and an initial value [0, 0, 1, 1, 0, 1, 1].
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

The sequences in the sixth sequence set include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x⁷ + x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ *+* 1 and an initial value [0, 1, 0, 1, 0, 1, 1, 1];
a primitive polynomial *x*⁸ *+ x*⁴ *+ x*³ *+ x*² + 1 and an initial value [0, 1, 1, 1, 0, 0, 0, 0];
a primitive polynomial *x*⁸ *+ x*⁷ *+ x*² *+ x*¹ + 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x²* + 1 and an initial value [1, 1, 0, 0, 0, 0, 0, 1].

According to the method, when sending the first signal, the terminal can determine the preamble sequence based on the m-sequence. Because the m-sequence is a preset m-sequence having good time-frequency two-dimensional correlation detection performance, uplink synchronization performance can be improved, and uplink data demodulation performance can further be improved.

In a possible design, that the second sequence is determined based on the m-sequence includes: The second sequence is determined by adding 1 to a first location of the m-sequence.

Based on this possible design, 1 may be added to the first location of the m-sequence, so that the quantity of elements in the finally obtained preamble sequence is the even number, to meet a rate matching requirement for a length of the preamble sequence.

In a possible design, the sequences in the first sequence set further include at least one m-sequence obtained by combining the following primitive polynomial and initial value:
the primitive polynomial *x*³ *+ x*¹ *+* 1 and an initial value [1, 0, 0];
the primitive polynomial *x*³ *+ x*¹ + 1 and the initial value [1, 1, 1]; and
the primitive polynomial *x*³ *+ x*¹ + 1 and the initial value [1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the second sequence set further include at least one m-sequence obtained by combining the following primitive polynomial and initial value:
the primitive polynomial *x*⁴ + *x*¹ + 1 and an initial value [0, 0, 1, 0].
the primitive polynomial *x*⁴ + *x*¹ + 1 and an initial value [1, 0, 1, 1];
the primitive polynomial *x*⁴ + *x*¹ + 1 and the initial value [0, 1, 1, 0]; and
the primitive polynomial *x*⁴ + *x*¹ + 1 and an initial value [1, 1, 0, 1].

Based on this possible design, an m-sequence corresponding to a primitive polynomial having a minimum quantity of taps can be provided, to reduce complexity of generating the m-sequence by a receiver and a transmitter.

In a possible design, the sequences in the third sequence set further include at least one m-sequence obtained by combining the following primitive polynomial and initial value:
the primitive polynomial *x*⁵ *+ x*² *+* 1 and an initial value [1, 1, 1, 0, 0];
the primitive polynomial *x*⁵ *+ x*² *+* 1 and the initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fourth sequence set further include at least one m-sequence obtained by combining the following primitive polynomial and initial value:
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

Based on this possible design, an m-sequence corresponding to a primitive polynomial having a minimum quantity of taps can be provided, to reduce complexity of generating the m-sequence by a receiver and a transmitter.

In a possible design, the sequences in the fifth sequence set further include at least one m-sequence obtained by combining the following primitive polynomial and initial value:
a primitive polynomial x' + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ *+ x*¹ + 1 and an initial value [0, 0, 1, 0, 1, 0, 1];
the primitive polynomial *x*⁷ + *x*¹ + 1 and the initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ *+ x*¹ + 1 and an initial value [1, 0, 0, 1, 0, 1, 0]; and
the primitive polynomial *x⁷* + *x*¹ + 1 and an initial value [0, 1, 0, 1, 0, 1, 0].

Based on this possible design, an m-sequence corresponding to a primitive polynomial having a minimum quantity of taps can be provided, to reduce complexity of generating the m-sequence by a receiver and a transmitter.

In a possible design, the sequences in the sixth sequence set further include at least one m-sequence obtained by combining the following primitive polynomial and initial value:
the primitive polynomial *x*⁸ *+ x*⁴ *+ x*³ *+ x*² *+ 1* and an initial value [0, 0, 1, 1, 1, 0, 0, 1];
the primitive polynomial *x*⁸ *+ x*⁴ *+ x*³ *+ x*² *+* 1 and the initial value [0, 1, 0, 1, 0, 1, 1, 1];
the primitive polynomial *x*⁸ *+ x*⁴ *+ x*³ *+ x*² *+* 1 and an initial value [1, 0, 1, 1, 1, 0, 0, 0];
the primitive polynomial *x*⁸ *+ x*⁴ *+ x*³ *+ x*² *+* 1 and an initial value [1, 0, 1, 0, 1, 1, 1, 0];
the primitive polynomial *x*⁸ *+ x*⁴ *+ x*³ *+ x*² *+* 1 and an initial value [1, 0, 1, 0, 1, 0, 1, 1];
the primitive polynomial *x*⁸ *+ x*⁴ *+ x*³ *+ x*² *+* 1 and an initial value [1, 0, 0, 1, 0, 0, 1, 1];
the primitive polynomial *x*⁸ *+ x*⁴ *+ x*³ *+ x*² *+ 1* and an initial value [1, 0, 1, 1, 1, 1, 0, 0];
the primitive polynomial *x*⁸ *+ x*⁴ *+ x*³ *+ x*² *+* 1 and an initial value [0, 1, 0, 0, 1, 0, 1, 0]; and
the primitive polynomial *x*⁸ *+ x*⁴ *+ x*³ *+ x*² *+* 1 and an initial value [0, 1, 0, 1, 0, 1, 0, 1].

Based on this possible design, an m-sequence corresponding to a primitive polynomial having a minimum quantity of taps can be provided, to reduce complexity of generating the m-sequence by a receiver and a transmitter.

According to a seventy-eighth aspect, an embodiment of this application provides a communication apparatus. The apparatus has a function of implementing the method according to the seventy-seventh aspect. The function may be implemented by hardware, or may be implemented by hardware executing corresponding software. The hardware or the software includes one or more units or modules, for example, a receiving unit and a processing unit, corresponding to the function of the method according to the seventy-seventh aspect.

The receiving unit is configured to receive a first signal, where the first signal is obtained by a terminal device through modulation based on a first sequence, the first sequence includes a preamble sequence, the preamble sequence is a second sequence or an equivalent sequence of the second sequence, and the equivalent sequence is obtained by performing bitwise negation and/or reversing on the sequence.

The processing unit is configured to: determine a location of the preamble sequence in the first signal, obtain a data window based on the location of the preamble in the first signal, and demodulate a data signal in the data window.

The second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set.

The sequences in the first sequence set include at least one m-sequence obtained by combining the following primitive polynomial and initial value:
a primitive polynomial *x*³ *+ x*¹ *+* 1 and an initial value [0, 1, 0];
a primitive polynomial *x*³ *+ x*² *+* 1 and an initial value [1, 1, 0];
the primitive polynomial *x*³ *+ x*² *+* 1 and an initial value [1, 1, 1];
the primitive polynomial *x*³ *+ x*¹ *+* 1 and the initial value [1, 1, 0];
the primitive polynomial *x*³ *+ x*² *+* 1 and an initial value [0, 0, 1];
the primitive polynomial *x*³ *+ x*¹ *+* 1 and the initial value [0, 0, 1];
the primitive polynomial *x*³ *+ x*¹ *+* 1 and an initial value [0, 1, 1];
the primitive polynomial *x*³ *+ x*² *+* 1 and the initial value [0, 1, 0];
the primitive polynomial *x*³ *+ x*² *+* 1 and the initial value [0, 1, 1]; and
the primitive polynomial *x*³ *+ x*² *+* 1 and an initial value [1, 0, 1].

The sequences in the second sequence set include at least one m-sequence obtained by combining the following primitive polynomial and initial value:
a primitive polynomial *x*⁴ + *x*¹ + 1 and an initial value [0, 1, 0, 1];
a primitive polynomial *x*⁴ + *x*³ + 1 and an initial value [1, 1, 1, 0];
the primitive polynomial *x*⁴ + *x*¹ + 1 and an initial value [0, 1, 0, 0];
the primitive polynomial *x*⁴ + *x*³ + 1 and an initial value [1, 1, 1, 1];
the primitive polynomial *x*⁴ + *x*³ + 1 and an initial value [1, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and the initial value [1, 1, 1, 1];
the primitive polynomial *x*⁴ + *x*³ + 1 and an initial value [0, 1, 1, 0]; and
the primitive polynomial *x*⁴ + *x*¹ + 1 and an initial value [1, 0, 0, 1].

The sequences in the third sequence set include at least one m-sequence obtained by combining the following primitive polynomial and initial value:
a primitive polynomial *x*⁵ *+ x*³ *+ x*² *+ x*¹ *+* 1 and an initial value [0, 1, 0, 1, 0];
a primitive polynomial *x*⁵ *+ x*² + 1 and an initial value [0, 1, 0, 1, 1];
a primitive polynomial *x*⁵ *+ x*³ *+* 1 and an initial value [0, 0, 0, 0, 1];
the primitive polynomial *x*⁵ *+ x*³ *+ x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ *+ x*³ *+ x*² *+ x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x*² *+ x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1].

The sequences in the fourth sequence set include at least one m-sequence obtained by combining the following primitive polynomial and initial value:
a primitive polynomial *x*⁶ *+ x*⁵ *+* 1 and an initial value [0, 1, 1, 0, 1, 0];
a primitive polynomial *x*⁶ *+ x*¹ *+* 1 and an initial value [1, 1, 0, 1, 1, 0];
the primitive polynomial *x*⁶ *+ x*⁵ *+* 1 and an initial value [0, 1, 1, 0, 0, 1];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0];
a primitive polynomial *x*⁶ *+ x*⁵ *+ x*² *+ x*¹ *+* 1 and the initial value [0, 1, 0, 1, 0, 0].

The sequences in the fifth sequence set include at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x*² *+ x*¹ *+* 1 and an initial value [1, 1, 1, 0, 0, 1, 0];
a primitive polynomial *x*⁷ *+ x*⁶ *+ x*⁵ *+ x*⁴ *+* 1 and an initial value [0, 0, 1, 0, 1, 0, 0];
a primitive polynomial *x*⁷ *+ x*⁶ *+ x*⁵ *+ x*⁴ *+ x*² *+ x*¹ *+* 1 and an initial value [1, 1, 1, 1, 0, 0, 0];
a primitive polynomial *x⁷ + x*⁶ *+ x*⁵ *+ x*³ *+ x² + x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

The sequences in the sixth sequence set include at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x⁷ + x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ + 1 and the initial value [1, 0, 0, 0, 0, 1, 1, 0];
a primitive polynomial *x*⁸ *+ x*⁶ *+ x*⁵ *+ x*⁴ + 1 and an initial value [0, 1, 0, 1, 0, 1, 1, 1];
a primitive polynomial *x*⁸ *+ x*⁴ *+ x*³ *+ x*² + 1 and an initial value [0, 1, 1, 1, 0, 0, 0, 0];
a primitive polynomial *x*⁸ *+ x*⁷ *+ x*² *+ x*¹ + 1 and an initial value [1, 0, 1, 0, 0, 1, 1, 0];
a primitive polynomial *x*⁸ *+ x*⁷ *+ x*⁶ *+ x*¹ *+* 1 and the initial value [1, 0, 1, 0, 0, 1, 1, 0]; and
a primitive polynomial *x*⁸ *+ x*⁶ *+ x*⁵ *+ x*² *+* 1 and an initial value [1, 1, 0, 0, 0, 0, 0, 1].

In a possible design, that the second sequence is determined based on the m-sequence includes: The second sequence is determined by adding 1 to a first location of the m-sequence.

In a possible design, the sequences in the first sequence set further include at least one m-sequence obtained by combining the following primitive polynomial and initial value:
the primitive polynomial *x*³ *+ x*¹ *+* 1 and an initial value [1, 0, 0];
the primitive polynomial *x*³ *+ x*¹ *+* 1 and the initial value [1, 1, 1]; and
the primitive polynomial *x*³ *+ x*¹ *+* 1 and the initial value [1, 0, 1].

In a possible design, the sequences in the second sequence set further include at least one m-sequence obtained by combining the following primitive polynomial and initial value:
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and the initial value [0, 1, 1, 0]; and
the primitive polynomial *x*⁴ + *x*¹ + 1 and an initial value [1, 1, 0, 1].

In a possible design, the sequences in the third sequence set further include at least one m-sequence obtained by combining the following primitive polynomial and initial value:
the primitive polynomial *x*⁵ *+ x*² + 1 and an initial value [1, 1, 1, 0, 0];
the primitive polynomial *x*⁵ *+ x*² + 1 and the initial value [0, 1, 0, 1, 0];
the primitive polynomial *x*⁵ *+ x*² + 1 and an initial value [1, 0, 1, 1, 0];
the primitive polynomial *x*⁵ *+ x*² + 1 and an initial value [1, 1, 0, 1, 1];
the primitive polynomial *x*⁵ *+ x²* + 1 and an initial value [1, 0, 0, 1, 1];
the primitive polynomial *x*⁵ *+ x*² + 1 and an initial value [0, 1, 1, 0, 0];
the primitive polynomial *x*⁵ *+ x*² + 1 and an initial value [1, 0, 1, 0, 0];
the primitive polynomial *x*⁵ *+ x²* + 1 and an initial value [0, 0, 1, 1, 0]; and
the primitive polynomial *x*⁵ *+ x²* + 1 and an initial value [0, 1, 1, 1, 0].

In a possible design, the sequences in the fourth sequence set further include at least one m-sequence obtained by combining the following primitive polynomial and initial value:
the primitive polynomial *x*⁶ *+ x*¹ + 1 and an initial value [0, 0, 0, 1, 0, 1];
the primitive polynomial *x*⁶ *+ x*¹ + 1 and an initial value [0, 1, 0, 1, 1, 0];
the primitive polynomial *x*⁶ *+ x*¹ + 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0].

In a possible design, the sequences in the fifth sequence set further include at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and the initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x⁷* + *x*¹ + 1 and an initial value [0, 1, 0, 1, 0, 1, 0].

In a possible design, the sequences in the sixth sequence set further include at least one m-sequence obtained by combining the following primitive polynomial and initial value:
the primitive polynomial *x*⁸ + *x*⁴ + *x*³ *+ x*² *+* 1 and an initial value [0, 0, 1, 1, 1, 0, 0, 1];
the primitive polynomial *x*⁸ *+ x*⁴ *+ x*³ *+ x*² *+* 1 and the initial value [0, 1, 0, 1, 0, 1, 1, 1];
the primitive polynomial *x*⁸ + *x*⁴ + *x*³ *+ x*² *+* 1 and an initial value [1, 0, 1, 1, 1, 0, 0, 0];
the primitive polynomial *x*⁸ *+ x*⁴ *+ x*³ *+ x*² *+* 1 and an initial value [1, 0, 1, 0, 1, 1, 1, 0];
the primitive polynomial *x*⁸ + *x*⁴ + *x*³ *+ x*² *+* 1 and an initial value [1, 0, 1, 0, 1, 0, 1, 1];
the primitive polynomial *x*⁸ + *x*⁴ + *x*³ *+ x*² *+* 1 and an initial value [1, 0, 0, 1, 0, 0, 1, 1];
the primitive polynomial *x*⁸ + *x*⁴ + *x*³ *+ x*² *+* 1 and an initial value [1, 0, 1, 1, 1, 1, 0, 0];
the primitive polynomial *x*⁸ + *x*⁴ + *x*³ *+ x*² *+* 1 and an initial value [0, 1, 0, 0, 1, 0, 1, 0]; and
the primitive polynomial *x*⁸ *+ x*⁴ *+ x*³ *+ x*² *+* 1 and an initial value [0, 1, 0, 1, 0, 1, 0, 1].

According to a seventy-ninth aspect, an embodiment of this application further provides a communication apparatus, including a memory and a processor. The processor is configured to execute computer instructions stored in the memory. When the computer instructions are executed, the apparatus is enabled to perform the method according to any one of the seventy-seventh aspect or the possible designs of the seventy-seventh aspect.

According to an eightieth aspect, an embodiment of this application further provides a communication apparatus, including a processor and an interface circuit. The processor is configured to: communicate with another apparatus through the interface circuit, and perform the method according to any one of the seventy-seventh aspect or the possible designs of the seventy-seventh aspect.

The communication apparatus according to the seventy-eighth aspect to the eightieth aspect may be used in a network device.

According to an eighty-first aspect, an embodiment of this application further provides a computer-readable storage medium. The computer-readable storage medium stores computer instructions. When the computer instructions are run on a network device or a chip built in the network device, the network device is enabled to perform the method according to the seventy-seventh aspect.

According to an eighty-second aspect, an embodiment of this application further provides a computer program product including instructions. When the computer program product runs on a computer, the computer is enabled to perform the method according to any one of the seventy-seventh aspect or the possible designs of the seventy-seventh aspect.

It may be understood that for beneficial effect that can be achieved in the seventy-eighth aspect to the eighty-second aspect, refer to beneficial effect in any one of the seventy-seventh aspect and the possible designs of the seventy-seventh aspect. Details are not described herein again.

According to an eighty-third aspect, an embodiment of this application further provides a signal processing method, applied to a communication system including a network device and a terminal device. The terminal device performs the method according to any one of the seventy-first aspect and the possible designs of the seventy-first aspect. The network device performs the method according to any one of the seventy-seventh aspect and the possible designs of the seventy-seventh aspect.

According to an eighty-fourth aspect, an embodiment of this application further provides a communication system, including a network device and a terminal device. The terminal device performs the method according to any one of the seventy-first aspect and the possible designs of the seventy-first aspect. The network device performs the method according to any one of the seventy-seventh aspect and the possible designs of the seventy-seventh aspect.

It may be understood that for beneficial effect that can be achieved in the eighty-third aspect and the eighty-fourth aspect, refer to beneficial effect in the seventy-first aspect, the seventy-seventh aspect, and the like. Details are not described herein again.

### BRIEF DESCRIPTION OF DRAWINGS

FIG. 1A to FIG. 1C show curves of time-domain preamble correlation values under impact of different frequency offsets according to an embodiment of this application;
FIG. 2 shows a curve of time-frequency two-dimensional correlation values of a preamble without a frequency offset according to an embodiment of this application;
FIG. 3 is a diagram of a structure of a feedback shift register according to an embodiment of this application;
FIG. 4 is a diagram of a composition of a communication system according to an embodiment of this application;
FIG. 5 is a diagram of a composition of a communication apparatus according to an embodiment of this application;
FIG. 6 is a schematic flowchart of a signal processing method according to an embodiment of this application;
FIG. 7 is a schematic flowchart of another signal processing method according to an embodiment of this application;
FIG. 8 is a diagram of maximum sidelobe distribution of time-frequency two-dimensional correlation of a preamble sequence according to an embodiment of this application;
FIG. 9 is a schematic flowchart of still another signal processing method according to an embodiment of this application;
FIG. 10 is a diagram of a composition of another communication apparatus according to an embodiment of this application; and
FIG. 11 is a diagram of a composition of another communication apparatus according to an embodiment of this application.

### DESCRIPTION OF EMBODIMENTS

An active or semi-passive internet of things (Internet of Things, IoT) is a low-cost and low-power-consumption IoT solution. Power consumption does not exceed 500 µW. The active or semi-passive IoT can implement wider coverage than a passive IoT. The active IoT supports coherent reception in an uplink. An optional modulation scheme is binary phase shift keying (binary phase shift keying, BPSK). When uplink data is transmitted, a device adds a preamble (preamble) before a data signal for uplink synchronization. A base station performs timing by detecting the preamble, to determine a location of the data. A detection method is as follows: The base station receives a signal in a time window in which the preamble may arrive, and generates a local preamble signal for sliding correlation with the received signal. A location with a largest correlation value is determined as a timing location of the preamble. Because the uplink data is scheduled by the base station side, the base station side has learned of a data length, and a start location and an end location of a data window of the received signal can be obtained based on the timing location of the preamble and the data length.

However, there is usually a specific carrier frequency offset (Carrier frequency offset, CFO) in uplink reception, and the CFO causes a shift of a main peak of a correlation value in two dimensions: time and frequency, when sliding correlation is performed on the local preamble signal and the received signal, affecting uplink synchronization performance, and further affecting data demodulation performance of a PUSCH.

For example, a sent preamble signal includes N elements, s = [s₀, s₁, ... , s_{N-1}], sᵢ ∈ {-1,1}, additive Gaussian noise in a channel is not considered, only impact of the CFO (a caused frequency offset is f_{d}) is considered, and a sampling frequency of the signal is f.

In this case, the received signal $r = \left[{r}_{0},{r}_{1},…,{r}_{N - 1}\right] = \left[{s}_{0}∗{e}^{j 2 {πf}_{d} ∗ \frac{0}{f}},{s}_{1}∗{e}^{j 2 {πf}_{d} ∗ \frac{1}{f}},…,{s}_{N - 1}∗{e}^{j 2 {πf}_{d} ∗ \frac{N - 1}{f}}\right]$ .

Then, during ideal synchronization (it is assumed that a start location of the received signal is known), correlation is performed on the received signal and a local signal, and an obtained correlation value C meets the following formula: $C = abs \left({\sum }_{i = 0}^{N - 1} {e}^{j 2 {πf}_{d} ∗ \frac{i}{f}}\right) = abs \left(\frac{1 - {e}^{j 2 π \frac{N ∗ {f}_{d}}{f}}}{1 - {e}^{j 2 π \frac{{f}_{d}}{f}}}\right) \leq N$

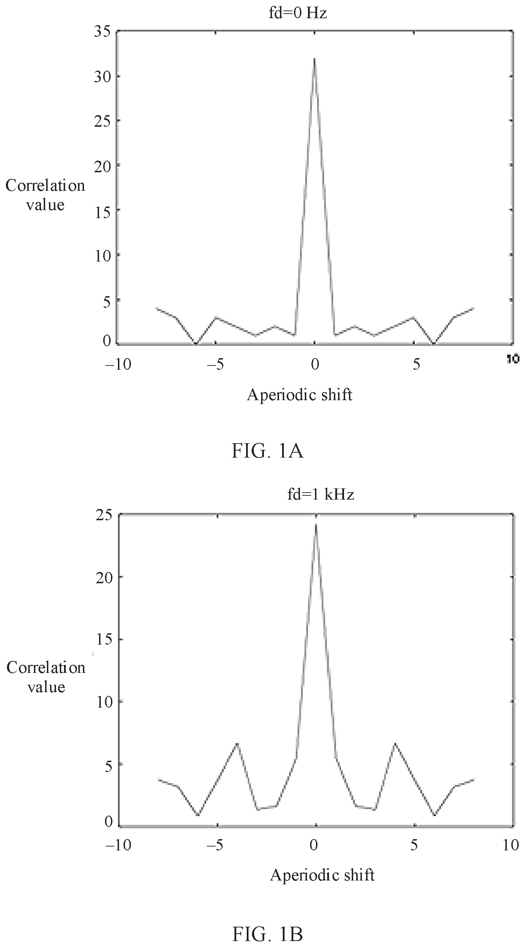

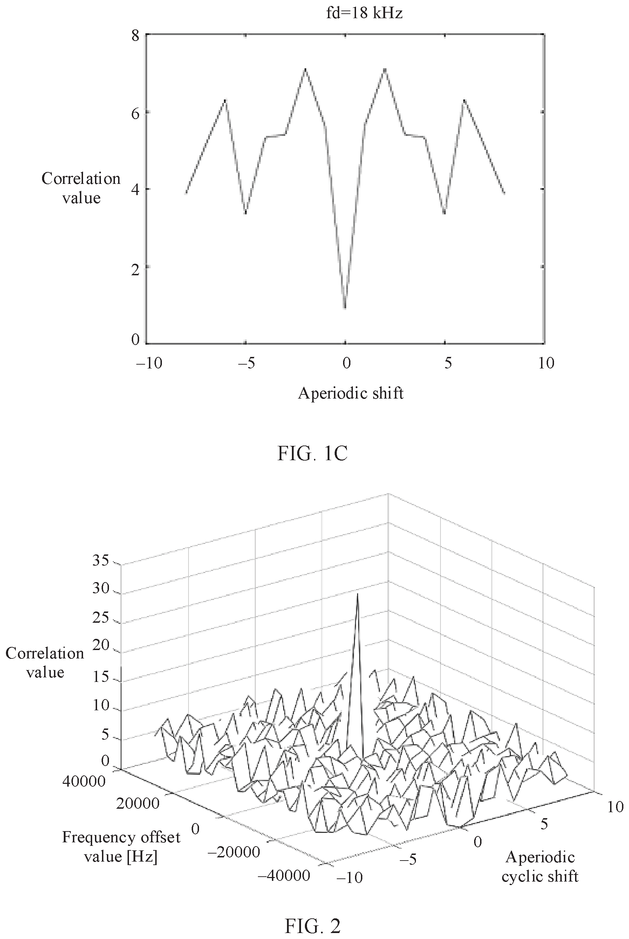

Consequently, when f_{d} is large, an amplitude of a main peak corresponding to an ideal synchronization point is reduced, or a location of a main peak shifts, resulting in a synchronization error. For example, the sampling frequency f is 80 kHz, a length of a preamble sequence is 32 (there is no oversampling, each sequence element corresponds to one level, and a bandwidth corresponding to the level is 80 kHz), and a size of a sliding window in a time dimension is 2×8+1=17. FIG. 1A shows correlation value distribution in different aperiodic shifts at f_{d}=0 Hz. FIG. 1B shows correlation value distribution in different aperiodic shifts at f_{d}=1 kHz. FIG. 1C shows correlation value distribution in different aperiodic shifts at f_{d}=18 kHz. When an aperiodic shift value is 0, it indicates an ideal synchronization point. It can be found that the CFO has large impact on synchronization performance. When f_{d} = 18kHz, the location of the main peak in time domain has shifted.

In this case, to ensure synchronization performance, CFO values need to be traversed, to estimate a shift value in frequency domain caused by the CFO. Specifically, it is assumed that a maximum frequency offset is f_{d,max}, a traversal step is f_{d.,step}, a length of the preamble sequence is N, and the size of the sliding window in the time dimension is T_{window}. In this case, a quantity of related operations that need to be performed during traversal is as follows: $\left⌈\frac{2 ∗ {f}_{d , max}}{{f}_{d . , step}}\right⌉ ∗ {T}_{window}$

In addition, because a value of an element in the local preamble sequence is 1 or -1, complexity of multiplication may be ignored, and N-1 additions need to be performed. Therefore, total calculation complexity of traversing the CFO values is as follows: $\left⌈\frac{2 ∗ {f}_{d , max}}{{f}_{d . , step}}\right⌉ ∗ {T}_{window} ∗ \left(N-1\right)$

It can be learned that the calculation complexity of traversing the CFO values is high. Because phase rotation in time domain corresponds to a cyclic shift in frequency domain, a traversal operation on the CFO may simplify calculation based on fast Fourier transform (Fast Fourier Transform, FFT). Specifically, the sent signal s and the received signal r are still used as an example. FFT is performed on the sent signal s, to obtain: $X \left(k\right) = {\sum }_{n = 0}^{N - 1} s \left(n\right) {e}^{- j 2 π \frac{kn}{N}}$

FFT is performed on the received signal r, to obtain: $X ′ \left(k\right) = {\sum }_{n = 0}^{N - 1} s \left(n\right) {e}^{- j 2 π \frac{n ∗ \left(k-\frac{N ∗ {f}_{d}}{f}\right)}{N}} = X \left(k-\frac{N ∗ {f}_{d}}{f}\right)$

In frequency domain, the impact of the CFO is the shift of the location of the main peak of the correlation value of the preamble. Therefore, the CFO value (that is, f_{d}) may be determined based on a maximum value of X'(k).

For example, the sampling frequency f is 80 kHz, the length of the preamble sequence is 32 (there is no over-sampling, each sequence element corresponds to one level, and the bandwidth corresponding to the level is 80 kHz), the size of the sliding window in the time dimension is 2×8+1=17, and f_{d} is 0 Hz. In this case, the signal is truncated in the sliding window, to obtain the received signal, and FFT is performed on the received signal, to obtain a correlation value matrix whose dimension is T_{window} × N (time-frequency two-dimensional correlation value distribution corresponding to the matrix is shown in FIG. 2).

Therefore, it can be seen that when the CFO exists, the location of the main peak of the correlation value of the preamble shifts. As a result, when a location of the preamble in the received signal is determined based on a peak value of the correlation value to complete synchronization, the determined location of the preamble deviates, and the synchronization performance is affected.

A larger value of a maximum sidelobe of time-frequency two-dimensional correlation indicates a higher probability of a synchronization location error.

In view of this, an embodiment of this application provides a signal processing method. The method may include: A terminal device generates a first sequence including a preamble sequence, then modulates the first sequence to obtain a first signal, and sends the first signal. Then, when receiving the first signal, a network device synchronizes the first signal based on the preamble sequence, to determine a location of the preamble sequence in the first signal, and demodulates the synchronized first signal to obtain the first sequence. The preamble sequence is a second sequence or an equivalent sequence of the second sequence. In addition, the second sequence is determined based on an m-sequence. The second sequence may be an m-sequence, or may be a sequence obtained through adding to an m-sequence, or the like. This is not limited herein. For example, the second sequence may be obtained by adding 0 or 1 to a first location of the m-sequence. The m-sequence for determining the second sequence may be a preset m-sequence with a small maximum sidelobe of a correlation value during sliding correlation.

It should be noted that the equivalent sequence of the second sequence is a sequence obtained by performing bitwise negation on the second sequence, or performing reversing on the second sequence, or performing reversing on the second sequence and then performing bitwise negation, or performing bitwise negation on the second sequence and then performing reversing.

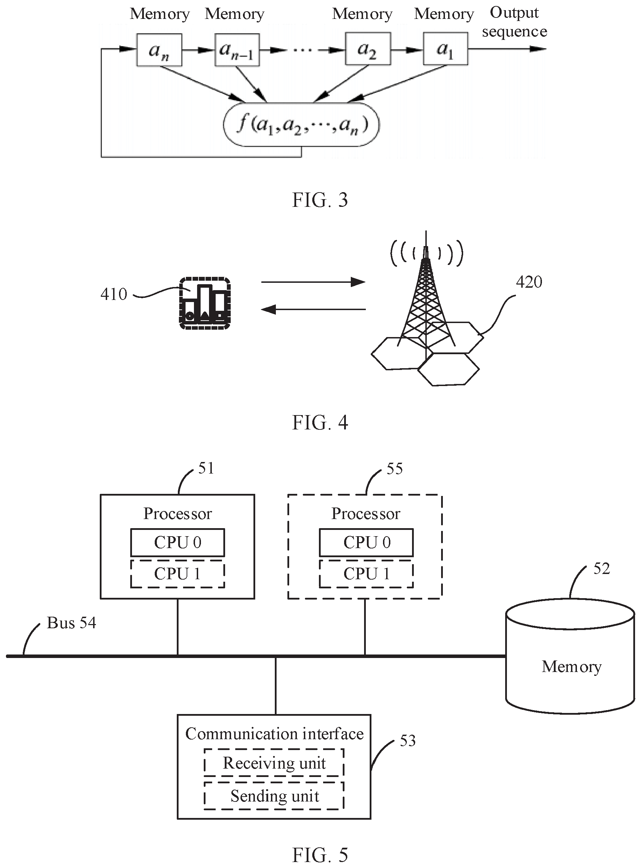

The m-sequence is short for a longest linear feedback shift register sequence, and is a longest-periodicity sequence generated by a linear feedback shift register. Generally, a longest period generated by an n-stage linear feedback shift register is equal to 2ⁿ - 1. FIG. 3 shows a basic structure of a feedback shift register. Data (a₁, a₂, ... , aₙ) for initialization is stored in memories, and a new value is generated based on a feedback function f(a₁, a₂, ... , aₙ), and is supplemented to a leftmost memory. Therefore, a longest sequence (namely, a sequence output in one periodicity) in an obtained output sequence is an m-sequence. Herein, it is assumed that an exclusive OR operation is performed on the data in all the memories based on the feedback function, that is, f(a₁, a₂, ... , aₙ) = a₁⊕a₂ ... ⊕aₙ . In this case, the output sequence is (a₁, a₂, ... , aₙ, a₁⊕a₂ ... ⊕aₙ ...).

Generally, the first sequence may further include a sequence of data that needs to be transmitted, and the preamble sequence may be located before the data sequence. In this way, the network device synchronizes the first signal based on the preamble sequence, determines locations of the preamble sequence and the data sequence, and further demodulates the first signal to obtain the data sequence in the first sequence.

Optionally, m-sequences of different lengths may be separately set in actual application, to obtain second sequences of different lengths, so as to obtain preambles of different lengths. In this way, the terminal device and the network device perform signal synchronization based on preambles of corresponding lengths as required.

According to the method, when sending the first signal, the terminal can determine the preamble sequence based on the m-sequence. However, because the m-sequence is a preset m-sequence with a small maximum sidelobe of a correlation value during sliding correlation, the determined preamble sequence can have a smaller maximum sidelobe during sliding correlation. This reduces a probability that a window location corresponding to the maximum sidelobe is used as the location of the preamble sequence, improves uplink synchronization performance, and improves signal data demodulation performance.

The following describes an example of the signal processing method provided in embodiments of this application with reference to accompanying drawings.

It should be noted that, in the description of this application, words such as "first" and "second" are merely used for distinguishing description, and are not used to specifically limit a feature. In the descriptions of embodiments of this application, the term "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more.

The signal processing method provided in embodiments of this application may be applied to a communication system including a network device and a terminal device. The network device may be a wireless network access device, or may be a reader/writer in an active or semi-passive internet of things. The terminal device may be a device having a communication function, or may be a tag or a device provided with the tag in an active or semi-passive internet of things. For example, the network device is a radio access network device. FIG. 4 is a diagram of a composition of a communication system according to an embodiment of this application. As shown in FIG. 4, the communication system may include at least one terminal device 410 (FIG. 4 shows an example of one terminal device 410) and at least one network device 420 (FIG. 4 shows an example of one network device 420).

The network device 420 may be a radio access network device or a next-generation radio access network device. The terminal device 410 may communicate with the network device 420. The network device 420 may provide function services such as radio resource management, quality of service management, and data encryption and compression, for the terminal device 410. Different network devices 420 may communicate with each other through an Xn interface. Different terminal devices 410 may exchange information and communicate with each other via the network device 420.

The terminal device 410 is located within coverage of one or more cells (carriers) provided by the network device 420, and one or more cells may serve the terminal device 410. When there are a plurality of serving cells of the terminal device 410, the terminal device 410 may operate in a CA, dual connectivity (dual connectivity, DC), or coordinated multipoint transmission manner.

Optionally, the communication system may be a wideband code division multiple access (wideband code division multiple access, WCDMA) system, a long term evolution (long term evolution, LTE) system, an LTE-advanced (LTE advanced, LTE-A) system, an LTE frequency division duplex (frequency division duplex, FDD) system, a universal mobile telecommunications system (universal mobile telecommunications system, UMTS), a 5G NR system, a wireless communication system to which an OFDM technology is applied, or the like. A specific type of the communication system is not limited in this application.

For example, when the communication system is a 5G NR system, the communication system may further include a core network device (not shown in the figure), and the core network device may communicate with the network device 420 through a next generation (next generation, NG) interface.

Optionally, the terminal device 410 in the communication system may also be referred to as user equipment (user equipment, UE), a mobile station (mobile station, MS), a mobile terminal (mobile terminal, MT), or the like. The terminal device 410 may be a device that provides voice and/or data connectivity for a user, for example, may be a mobile phone (a "cellular" phone), a smartphone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld compute device, a satellite wireless device, a wireless modem card, a television set-top box (set top box, STB), a customer premise equipment (customer premise equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), and another device used for communication in a wireless system, for example, another MTC terminal in an IoT. A specific representation form of the terminal device 410 is not limited in this application.

The network device 420 may be an access network device in the communication system, for example, a base station. Optionally, in this embodiment of this application, the network device 420 may include various forms of macro base stations, micro base stations (also referred to as small cells), and the like. For example, the network device 420 may include a base station in WCDMA or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

It may be understood that the communication system shown in FIG. 4 is merely intended to describe technical solutions in embodiments of this application more clearly, and does not constitute a limitation on the technical solutions provided in embodiments of this application. For example, the communication system may further include another device, for example, a network control device. The network control device may be an operation, administration, and maintenance (operation administration and maintenance, OAM) system, which is also referred to as a network management system. The network control device may manage the network device 420.

In addition, a person of ordinary skill in the art may learn that, with evolution of a network architecture and emergence of a new service scenario, the technical solutions provided in embodiments of this application are also applicable to a similar technical problem.

FIG. 5 is a diagram of a composition of a communication apparatus according to an embodiment of this application. The communication apparatus may be the network device 420 in the communication system shown in FIG. 4, or may be the terminal device 410. As shown in FIG. 5, the communication apparatus may include at least one processor 51, a memory 52, a communication interface 53, and a bus 54.

The following specifically describes each part of the communication apparatus with reference to FIG. 5.

The processor 51 is a control center of the communication apparatus, and may be one processor or may be a collective term of a plurality of processing elements. For example, the processor 51 may be a central processing unit (central processing unit, CPU), or may be an application-specific integrated circuit (application specific integrated circuit, ASIC), or may be configured as one or more integrated circuits for implementing embodiments of this application, for example, one or more microprocessors (digital signal processor, DSP) or one or more field programmable gate arrays (field programmable gate array, FPGA), or the like.

The processor 51 may run or execute a software program stored in the memory 52 and invoke data stored in the memory 52, to perform various functions of the communication apparatus, for example, perform steps performed by the communication apparatus in the signal processing method provided in embodiments of this application.

During specific implementation, in an embodiment, the processor 51 may include one or more CPUs, for example, a CPU 0 and a CPU 1 shown in FIG. 5.

During specific implementation, in an embodiment, the communication apparatus may include a plurality of processors, for example, the processor 51 and a processor 55 shown in FIG. 5. Each of these processors may be a single-core processor (single-CPU), or may be a multi-core processor (multi-CPU). The processor herein may be one or more devices, circuits, and/or processing cores configured to process data (for example, computer program instructions).

The memory 52 is configured to store a software program for performing method steps performed by the communication apparatus in the solutions of this application, and the processor 51 controls execution. The memory 52 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or other compact disc storage, optical disc storage (which includes a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited herein.

The memory 52 may exist independently, and is connected to the processor 51 through the bus 54. Alternatively, the memory 52 may be integrated with the processor 51. This is not limited herein.

The communication interface 53 is configured to communicate with another device or a communication network by using any apparatus like a transceiver. The communication interface 53 may be an Ethernet interface, a radio access network (radio access network, RAN) interface, a wireless local area network (wireless local area network, WLAN) interface, or the like. The communication interface 53 may include a receiving unit for implementing a receiving function and a sending unit for implementing a sending function.

The bus 54 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 5, but this does not mean that there is only one bus or only one type of bus.

Although the bus 54 is used in FIG. 5, it may be understood that the bus may also be replaced with a connection relationship in another form, and is not limited to the bus itself.

For example, the following describes in detail the signal processing method by using an example in which the signal processing method provided in this application is applied to a communication system including a terminal device and a network device.

In an implementation of embodiments of this application, in the signal processing method, an m-sequence may be directly used as a second sequence, and then, the second sequence or an equivalent sequence of the second sequence is used as a preamble. That is, the preset m-sequence or the equivalent sequence of the m-sequence is directly used as the preamble.

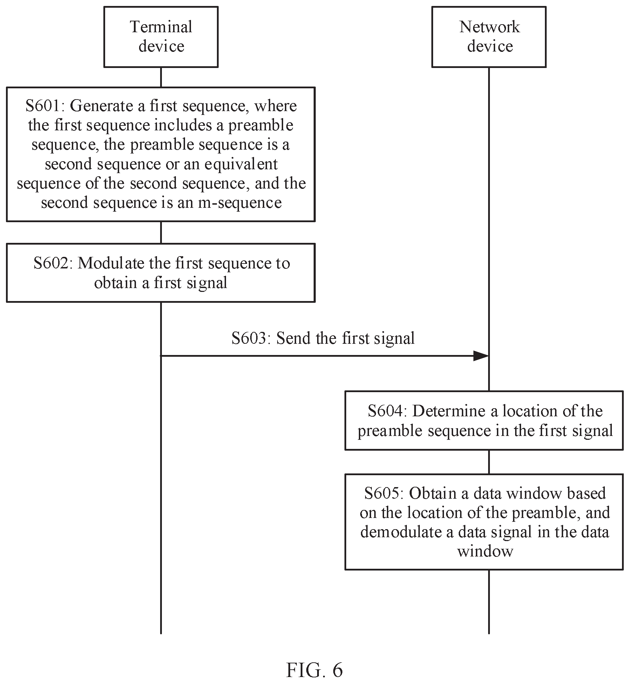

Specifically, as shown in FIG. 6, a signal processing method provided in an embodiment of this application may include S601 to S605 below.

S601: A terminal device generates a first sequence, where the first sequence includes a preamble sequence, the preamble sequence is a second sequence or an equivalent sequence of the second sequence, and the second sequence is an m-sequence.

It should be noted that an equivalent sequence is obtained by performing bitwise negation and/or reversing on a sequence. To be specific, the equivalent sequence of the second sequence may be a sequence obtained by performing bitwise negation on the second sequence, or performing reversing on the second sequence, or performing reversing on the second sequence and then performing bitwise negation, or performing bitwise negation on the second sequence and then performing reversing.

For example, the second sequence [S] = [s₀, s₁,..., s_{N-1}] and sᵢ ∈ {0,1}. In this case, the equivalent sequence of the sequence may be a negated sequence [1 - s₀, 1 - s₁,...,1 - s_{N-1}] obtained by performing negation on the sequence.

For another example, the second sequence [S] = [s₀, s₁, ..., s_{N-1}] and sᵢ ∈ {1,-1}. In this case, the equivalent sequence of the sequence may be a negated sequence [-s₀, -s₁,..., -s_{N-1}] obtained by performing negation on the sequence.

For another example, the second sequence [S] = [s₀, s₁,..., s_{N-1}]. In this case, the equivalent sequence of the sequence may be a reversed sequence [s_{N-1}, s_{N-2},..., s₀] obtained by performing reversing on the sequence.

For another example, the second sequence [S] = [s₀, s₁,..., s_{N-1}] and sᵢ ∈ {0,1}. In this case, the equivalent sequence of the sequence may be a sequence [1 - s_{N-1}, 1 - s_{N-2},...,1 - s₀] obtained by performing reversing and negation on the sequence.

The first sequence may further include a sequence of data that needs to be transmitted, and the data sequence may be located after the preamble sequence. In this way, a network device determines a location of the preamble sequence after performing correlation value comparison based on the preamble sequence, determines a location of the data sequence, and further demodulates a first signal to obtain the data sequence in the first sequence.

In an example, the m-sequence may be one of sequences in a first sequence set, or one of sequences in a second sequence set, or one of sequences in a third sequence set, or one of sequences in a fourth sequence set, or one of sequences in a fifth sequence set, or one of sequences in a sixth sequence set. In addition, each of different sequence sets correspondingly includes a sequence of one length (that is, a quantity of elements included in the sequence). For example, a sequence included in the first sequence set is a sequence with a length of 7, a sequence included in the second sequence set is a sequence with a length of 15, a sequence included in the third sequence set is a sequence with a length of 31, a sequence included in the fourth sequence set is a sequence with a length of 63, a sequence included in the fifth sequence set is a sequence with a length of 127, and a sequence included in the sixth sequence set is a sequence with a length of 255.

Optionally, in actual application, at least two of the first sequence set, the second sequence set, the third sequence set, the fourth sequence set, the fifth sequence set, and the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one of the foregoing sequence sets may alternatively be preconfigured, to determine a preamble of a corresponding length based on only a sequence in the sequence set for generating the first sequence. Correspondingly, the m-sequence is only a sequence in the configured sequence sets.

Certainly, in actual application, at least two of a sequence in the first sequence set, a sequence in the second sequence set, a sequence in the third sequence set, a sequence in the fourth sequence set, a sequence in the fifth sequence set, and a sequence in the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one sequence in the foregoing sequence sets may alternatively be preconfigured, to determine a corresponding preamble based on only the sequence for generating the first sequence.

For example, the sequences in the first sequence set may include at least one m-sequence obtained by combining the following primitive polynomial and initial value in Table 1:

**Table 1**

| Index | Primitive polynomial | Initial value |
|---|---|---|
| 1 | *x*³ + *x*¹ + 1 | [0, 1, 0] |
| 2 | *x*³ *+ x*² *+* 1 | [1, 1, 1] |
| 3 | *x*³ + *x*¹ + 1 | [0, 1, 1] |
| 4 | *x*³ *+ x*² *+* 1 | [0, 1, 0] |
| 5 | *x*³ + x² + 1 | [1, 0, 0] |
| 6 | *x*³ + *x*¹ + 1 | [1, 1, 0] |
| 7 | *x*³ + *x*¹ + 1 | [0, 0, 1] |
| 8 | *x*³ + *x*¹ + 1 | [1, 0, 0] |
| 9 | *x*³ + *x*¹ + 1 | [1, 1, 1] |
| 10 | *x*³ + *x*² + 1 | [0, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ + *x*¹ *+* 1 may further be converted into a binary number 1011, and then may be represented by a decimal number 11. For another example, the primitive polynomial *x*³ *+ x*² *+* 1 may further be converted into a binary number 1101, and then may be represented by a decimal number 13.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 0] are used as an example. In this case, a feedback function f(a₁, a₂, ... , aₙ) = a₁⊕a₃ may be obtained, where ⊕ represents an exclusive OR operation; and then, a corresponding m-sequence [0, 1, 0, 0, 1, 1, 1] may be obtained through recursion based on the initial value and the feedback function.

For another example, the primitive polynomial *x*³ *+ x*² + 1 and the initial value [1, 1, 1] are used as an example. In this case, a feedback function f(a₁, a₂, ... , aₙ) = a₂⊕a₃ may be obtained, and then, a corresponding m-sequence [1, 1, 1, 0, 0, 1, 0] may be obtained through recursion based on the initial value and the feedback function.

Based on the foregoing example, a corresponding m-sequence obtained by combining another primitive polynomial and initial value in Table 1 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 2:

**Table 2**

| Index | Primitive polynomial | Initial value |
|---|---|---|
| 1 | *x*⁴ + *x*¹ + 1 | [0, 1, 0, 1] |
| 2 | *x*⁴ + *x*³ + 1 | [1, 1, 1, 1] |
| 3 | *x*⁴ *+ x*¹ + 1 | [1, 0, 1, 1] |
| 4 | *x*⁴ + *x*³ + 1 | [0, 1, 1, 1] |
| 5 | *x*⁴ + *x*¹ + 1 | [0, 1, 1, 1] |
| 6 | *x*⁴ *+ x*³ + 1 | [0, 0, 1, 0] |
| 7 | *x*⁴ + *x*³ + 1 | [0, 1, 1, 0] |
| 8 | *x*⁴ *+ x*¹ + 1 | [0, 1, 0, 0] |
| 9 | *x*⁴ + *x*¹ + 1 | [1, 0, 0, 0] |
| 10 | *x*⁴ + *x*³ + 1 | [0, 0, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19. For another example, the primitive polynomial *x*⁴ + *x*³ + 1 may further be converted into a binary number 11001, and then may be represented by a decimal number 25.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [0, 1, 0, 1] are used as an example. In this case, a feedback function f(a₁, a₂, ... , aₙ) = a₁⊕a₄ may be obtained, and then, a corresponding m-sequence [0, 1, 1, 1, 1, 0, 0, 0, 1, 1, 0, 1, 1, 1, 0, 1, 0, 1, 0, 1, 0, 1, 1, 0, 0, 1, 0, 0, 0, 1, 1, 1, 1] may be obtained through recursion based on the initial value and the feedback function.

For another example, the primitive polynomial *x*⁴ + *x*³ + 1 and the initial value [1, 1, 1, 1] are used as an example. In this case, a feedback function f(a₁, a₂, ... , aₙ) = a₃⊕a₄ may be obtained, and then, a corresponding m-sequence [1, 1, 1, 1, 0, 0, 0, 1, 0, 0, 1, 1, 0, 1, 0] may be obtained through recursion based on the initial value and the feedback function.

Based on the foregoing example, a corresponding m-sequence obtained by combining another primitive polynomial and initial value in Table 2 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 3:

**Table 3**

| Index | Primitive polynomial | Initial value |
|---|---|---|
| 1 | *x*⁵ + *x*³ + *x*² + *x*¹ + 1 | [1, 0, 0, 1, 1] |
| 2 | *x*⁵ + *x*⁴ + *x*³ + *x*² + 1 | [0, 0, 1, 1, 0] |
| 3 | *x*⁵ + *x*⁴ + *x*³ + *x*² + 1 | [0, 1, 1, 0, 1] |
| 4 | *x*⁵ + *x*³ + *x*² + *x*¹ + 1 | [1, 0, 0, 0, 0] |
| 5 | *x*⁵ + *x*² + 1 | [1, 0, 0, 1, 1] |
| 6 | *x*⁵ + *x*³ + 1 | [1, 1, 1, 1, 0] |
| 7 | *x*⁵ + *x*³ + 1 | [1, 0, 1, 1, 0] |
| 8 | *x*⁵ + *x*² + 1 | [0, 0, 1, 0, 0] |
| 9 | *x*⁵ + *x*³ + *x*² + *x*¹ + 1 | [0, 0, 0, 1, 0] |
| 10 | *x*⁵ + *x*⁴ + *x*³ + *x*² + 1 | [1, 1, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ *+ x*³ *+ x*² *+ x*¹ *+* 1 may further be converted into a binary number 101111, and then may be represented by a decimal number 47. For another example, the primitive polynomial *x*⁵ *+ x*⁴ *+ .x*³ *+ x*² *+* 1 may further be converted into a binary number 111101, and then may be represented by a decimal number 61. For another example, the primitive polynomial *x*⁵ *+ x*² *+* 1 may further be converted into a binary number 100101, and then may be represented by a decimal number 37. For another example, the primitive polynomial *x*⁵ *+ x*³ *+* 1 may further be converted into a binary number 101001, and then may be represented by a decimal number 41.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ + *x*³ + *x*² + *x*¹ *+* 1 and the initial value [1, 0, 0, 1, 1] are used as an example. In this case, a feedback function f(a₁, a₂, ... , aₙ) = a₁⊕a₂⊕a₃⊕a₅ may be obtained, and then, a corresponding m-sequence [1, 0, 0, 1, 1, 1, 1, 1, 0, 1, 1, 1, 0, 0, 0, 1, 0, 1, 0, 1, 1, 0, 1, 0, 0, 0, 0, 1, 1, 0, 0] may be obtained through recursion based on the initial value and the feedback function.

For another example, the primitive polynomial *x*⁵ + *x*⁴ *+ x*³ *+ x*² + 1 and the initial value [0, 0, 1, 1, 0] are used as an example. In this case, a feedback function f(a₁, a₂, ... , aₙ) = a₂⊕a₃⊕a₄⊕a₅ may be obtained, and then, a corresponding m-sequence [0, 0, 1, 1, 0, 0, 0, 0, 1, 0, 1, 1, 0, 1, 0, 1, 0, 0, 0, 1, 1, 1, 0, 1, 1, 1, 1, 1, 0, 0, 1] may be obtained through recursion based on the initial value and the feedback function.

For another example, the primitive polynomial *x*⁵ *+ x*² + 1 and the initial value [1, 0, 0, 1, 1] are used as an example. In this case, a feedback function f(a₁, a₂, ... , aₙ) = a₂⊕a₅ may be obtained, and then, a corresponding m-sequence [1, 0, 0, 1, 1, 0, 1, 0, 0, 1, 0, 0, 0, 0, 1, 0, 1, 0, 1, 1, 1, 0, 1, 1, 0, 0, 0, 1, 1, 1, 1] may be obtained through recursion based on the initial value and the feedback function.

For another example, the primitive polynomial *x*⁵ + *x*³ + 1 and the initial value [1, 1, 1, 1, 0] are used as an example. In this case, a feedback function f(a₁, a₂, ... , aₙ) = a₃⊕a₅ may be obtained, and then, a corresponding m-sequence [1, 1, 1, 1, 0, 0, 0, 1, 1, 0, 1, 1, 1, 0, 1, 0, 1, 0, 0, 0, 0, 1, 0, 0, 1, 0, 1, 1, 0, 0, 1] may be obtained through recursion based on the initial value and the feedback function.

Based on the foregoing example, a corresponding m-sequence obtained by combining another primitive polynomial and initial value in Table 3 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 4:

**Table 4**

| Index | Primitive polynomial | Initial value |
|---|---|---|
| 1 | *x*⁶ *+ x*⁵ + 1 | [1, 0, 1, 1, 1, 0] |
| 2 | *x*⁶ + *x*¹ + 1 | [1, 0, 1, 0, 0, 1] |
| 3 | *x*⁶ + *x*⁵ + *x*³ + *x*² + 1 | [0, 0, 0, 0, 1, 1] |
| 4 | *x*⁶ + *x*⁴ + *x*³ + *x*¹ + 1 | [1, 0, 0, 1, 0, 0] |
| 5 | *x*⁶ + *x*⁵ + *x*² + *x*¹ + 1 | [1, 0, 1, 0, 1, 1] |
| 6 | *x*⁶ + *x*⁵ + *x*⁴ + *x*¹ + 1 | [1, 1, 0, 0, 0, 1] |
| 7 | *x*⁶ + *x*¹ + 1 | [0, 1, 0, 0, 1, 0] |
| 8 | *x*⁶ + *x*⁵ + 1 | [1, 1, 0, 1, 1, 1] |
| 9 | *x*⁶ + *x*¹ + 1 | [0, 0, 0, 0, 0, 1] |
| 10 | *x*⁶ + *x*⁵ + 1 | [1, 0, 0, 0, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ *+ x*⁵ *+* 1 may further be converted into a binary number 1100001, and then may be represented by a decimal number 97. For another example, the primitive polynomial *x*⁶ + *x*¹ *+* 1 may further be converted into a binary number 1000011, and then may be represented by a decimal number 67. For another example, the primitive polynomial *x*⁶ + *x*⁵ + *x*³ + *x*² + 1 may further be converted into a binary number 1101101, and then may be represented by a decimal number 109. For another example, the primitive polynomial *x*⁶ *+ x*⁴ + *x*³ + *x*¹ + 1 may further be converted into a binary number 1011011, and then may be represented by a decimal number 91. For another example, the primitive polynomial *x*⁶ *+ x*⁵ *+ x*² *+ x*¹ *+* 1 may further be converted into a binary number 1100111, and then may be represented by a decimal number 103. For another example, the primitive polynomial *x*⁶ + *x*⁵ + *x*⁴ + *x*¹ + 1 may further be converted into a binary number 1110011, and then may be represented by a decimal number 115.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ + *x*⁵ *+* 1 and the initial value [1, 0, 1, 1, 1, 0] are used as an example. In this case, a feedback function f(a₁, a₂, ... , aₙ) = a₅⊕a₆ may be obtained, and then, a corresponding m-sequence [1, 0, 1, 1, 1, 0, 1, 1, 0, 0, 1, 1, 0, 1, 0, 1, 0, 1, 1, 1, 1, 1, 1, 0, 0, 0, 0, 0, 1, 0, 0, 0, 0, 1, 1, 0, 0, 0, 1, 0, 1, 0, 0, 1, 1, 1, 1, 0, 1, 0, 0, 0, 1, 1, 1, 0, 0, 1, 0, 0, 1, 0, 1] may be obtained through recursion based on the initial value and the feedback function.

For another example, the primitive polynomial *x*⁶ + *x*⁵ + *x*³ + *x*² + 1 and the initial value [0, 0, 0, 0, 1, 1] are used as an example. In this case, a feedback function f(a₁, a₂, ... , aₙ) = a₂⊕a₃⊕a₅⊕a₆ may be obtained, and then, a corresponding m-sequence [0, 0, 0, 0, 1, 1, 1, 0, 0, 0, 0, 0, 1, 0, 1, 1, 1, 1, 1, 1, 0, 0, 1, 0, 1, 0, 1, 0, 0, 0, 1, 1, 0, 0, 1, 1, 1, 1, 0, 1, 1, 1, 0, 1, 0, 1, 1, 0, 1, 0, 0, 1, 1, 0, 1, 1, 0, 0, 0, 1, 0, 0, 1] may be obtained through recursion based on the initial value and the feedback function.

For another example, the primitive polynomial *x*⁶ *+ x*¹ + 1 and the initial value [1, 0, 1, 0, 0, 1] are used as an example. In this case, a feedback function f(a₁, a₂, ... , aₙ) = a₆⊕a₁ may be obtained, and then, a corresponding m-sequence [1, 0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1, 1, 0, 1, 0, 1, 0, 1, 1, 0, 0, 1, 1, 0, 1, 1, 1, 0, 1] may be obtained through recursion based on the initial value and the feedback function.

Based on the foregoing example, a corresponding m-sequence obtained by combining another primitive polynomial and initial value in Table 4 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 5:

**Table 5**

| Index | Primitive polynomial | Initial value |
|---|---|---|
| 1 | *x⁷* + *x*¹ + 1 | [0, 0, 1, 0, 1, 1, 0] |
| 2 | *x*⁷ *+ x*⁶ + 1 | [1, 0, 1, 1, 1, 0, 1] |
| 3 | *x*⁷ + *x*⁵ + *x*⁴ + *x*³ *+ x*² + *x*¹ + 1 | [1, 1, 0, 0, 0, 1, 1] |
| 4 | *x*⁷ + *x*⁶ + *x*⁵ + *x*⁴ *+ x*³ + *x*² + 1 | [1, 1, 1, 0, 1, 1, 1] |
| 5 | *x*⁷ + *x*¹ + 1 | [1, 0, 1, 0, 1, 1, 0] |
| 6 | *x*⁷ + *x*⁶ + 1 | [1, 0, 1, 1, 1, 1, 0] |
| 7 | *x*⁷ + *x*³ + *x*² + *x*¹ + 1 | [1, 0, 1, 0, 1, 0, 0] |
| 8 | *x*⁷ + *x*⁶ + *x*⁵ + *x*⁴ *+* 1 | [1, 0, 0, 0, 1, 0, 0] |
| 9 | *x*⁷ + *x*³ *+ x*² + *x*¹ + 1 | [1, 0, 0, 0, 1, 0, 1] |
| 10 | *x*⁷ + *x*⁶ + *x*⁵ + *x*⁴ + 1 | [0, 1, 1, 1, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*¹ + 1 may further be converted into a binary number 10000011, and then may be represented by a decimal number 131. For another example, the primitive polynomial *x*⁷ + *x*⁶ + 1 may further be converted into a binary number 11000001, and then may be represented by a decimal number 193. For another example, the primitive polynomial *x*⁷ + *x*⁵ + *x*⁴ + *x*³ *+ x*² + *x*¹ + 1 may further be converted into a binary number 10111111, and then may be represented by a decimal number 191. For another example, the primitive polynomial *x*⁷ + *x*⁶ + *x*⁵ + *x*⁴ *+ x*³ + *x*² + 1 may further be converted into a binary number 11111101, and then may be represented by a decimal number 253. For another example, the primitive polynomial *x*⁷ + *x*³ *+ x*² + *x*¹ + 1 may further be converted into a binary number 10001111, and then may be represented by a decimal number 143. For another example, the primitive polynomial *x*⁷ + *x*⁶ + *x*⁵ + *x*⁴ + 1 may further be converted into a binary number 11110001, and then may be represented by a decimal number 241.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*¹ + 1 and the initial value [0, 0, 1, 0, 1, 1, 0] are used as an example. In this case, a feedback function f(a₁, a₂, ... , aₙ) = a₁⊕a₇ may be obtained, and then, a corresponding m-sequence [0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0, 1, 0, 1, 0, 0, 1, 1, 0, 0, 1, 1, 1, 0, 1, 1, 1, 0, 1] may be obtained through recursion based on the initial value and the feedback function.

For another example, the primitive polynomial *x*⁷ + *x*⁶ + *x*⁵ + *x*⁴ + 1 and the initial value [1, 0, 0, 0, 1, 0, 0] are used as an example. In this case, a feedback function f(a₁, a₂, ... , aₙ) = a₄⊕a₅⊕a₆⊕a₇ may be obtained, and then, a corresponding m-sequence [1, 0, 0, 0, 1, 0, 0, 1, 1, 1, 1, 0, 0, 1, 0, 1, 0, 0, 1, 0, 0, 1, 0, 1, 1, 0, 1, 0, 1, 0, 1, 0, 0, 0, 0, 0, 1, 1, 0, 0, 1, 0, 0, 0, 0, 1, 1, 1, 0, 1, 0, 1, 1, 1, 0, 0, 1, 1, 1, 0, 0, 0, 1, 1, 0, 1, 1, 0, 0, 1, 1, 0, 0, 0, 0, 0, 0, 1, 0, 0, 0, 1, 1, 1, 1, 1, 0, 1, 0, 0, 1, 1, 0, 1, 0, 0, 0, 1, 0, 1, 1, 1, 1, 0, 1, 1, 0, 1, 1, 1, 0, 1, 1, 1, 1, 1, 1, 1, 0, 0, 0, 0, 1, 0, 1, 0, 1] may be obtained through recursion based on the initial value and the feedback function.

For another example, the primitive polynomial *x*⁷ + *x*⁶ + 1 and the initial value [1, 0, 1, 1, 1, 0, 1] are used as an example. In this case, a feedback function f(a₁, a₂, ... , aₙ) = a₇⊕a₆ may be obtained, and then, a corresponding m-sequence [1, 0, 1, 1, 1, 0, 1, 1, 1, 0, 0, 1, 1, 0, 0, 1, 0, 1, 0, 1, 0, 1, 1, 1, 1, 1, 1, 1, 0, 0, 0, 0, 0, 0, 1, 0, 0, 0, 0, 0, 1, 1, 0, 0, 0, 0, 1, 0, 1, 0, 0, 0, 1, 1, 1, 1, 0, 0, 1, 0, 0, 0, 1, 0, 1, 1, 0, 0, 1, 1, 1, 0, 1, 0, 1, 0, 0, 1, 1, 1, 1, 1, 0, 1, 0, 0, 0, 0, 1, 1, 1, 0, 0, 0, 1, 0, 0, 1, 0, 0, 1, 1, 0, 1, 1, 0, 1, 0, 1, 1, 0, 1, 1, 1, 1, 0, 1, 1, 0, 0, 0, 1, 1, 0, 1, 0, 0] may be obtained through recursion based on the initial value and the feedback function.

Based on the foregoing example, a corresponding m-sequence obtained by combining another primitive polynomial and initial value in Table 5 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 6:

**Table 6**

| Index | Primitive polynomial | Initial value |
|---|---|---|
| 1 | *x*⁸ + *x*⁶ + *x*⁵ + *x*³ + 1 | [0, 0, 1, 1, 0, 1, 1, 1] |
| 2 | *x*⁸ + *x*⁵ + *x*³ + *x*² + 1 | [0, 0, 0, 0, 1, 1, 1, 0] |
| 3 | *x*⁸ + *x*⁶ + *x*⁴ + *x*³ *+ x*² + *x*¹ + 1 | [0, 1, 0, 0, 0, 0, 0, 0] |
| 4 | *x*⁸ + *x*⁷ + *x*⁶ + *x*⁵ *+ x*⁴ + *x*² + 1 | [1, 0, 0, 1, 0, 1, 0, 1] |
| 5 | *x*⁸ + *x*⁷ + *x*⁵ *+ x*³ + 1 | [0, 0, 1, 1, 1, 1, 1, 0] |
| 6 | *x*⁷ + *x*⁵ + *x*³ *+ x*¹ + 1 | [0, 0, 0, 1, 0, 1, 0, 0] |
| 7 | *x*⁸ + *x*⁴ + *x*³ *+ x*² + 1 | [0, 1, 0, 1, 1, 0, 0, 1] |
| 8 | *x*⁸ + *x*⁶ + *x*⁵ + *x*⁴ *+* 1 | [1, 0, 0, 0, 1, 1, 0, 0] |
| 9 | *x*⁸ + *x*⁷ + *x*² + *x*¹ + 1 | [0, 1, 1, 1, 0, 0, 0, 0] |
| 10 | *x*⁸ + *x*⁷ + *x*⁶ + *x*¹ + 1 | [0, 0, 1, 1, 0, 0, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ + *x*⁶ *+ x*⁵ *+ x*³ *+* 1 may further be converted into a binary number 101101001, and then may be represented by a decimal number 361. For another example, the primitive polynomial *x*⁸ *+ x*⁵ *+ x*³ *+ x*² *+* 1 may further be converted into a binary number 100101101, and then may be represented by a decimal number 301. For another example, the primitive polynomial *x*⁸ *+ x*⁶ + *x*⁴ *+ x*³ + *x*² + *x*¹ *+* 1 may further be converted into a binary number 101011111, and then may be represented by a decimal number 351.

In actual application, the m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸+ *x*⁶ *+ x*⁵ *+ x*³ *+* 1 and the initial value [0, 0, 1, 1, 0, 1, 1, 1] are used as an example. In this case, a feedback function f(a₁, a₂, ... , aₙ) = a₃⊕a₅⊕a₆⊕a₈ may be obtained, and then, a corresponding m-sequence [0, 0, 1, 1, 0, 1, 1, 1, 1, 0, 1, 0, 0, 0, 0, 0, 0, 0, 1, 0, 0, 1, 0, 1, 0, 0, 1, 1, 1, 1, 1, 1, 1, 1, 0, 0, 0, 1, 1, 0, 0, 0, 1, 0, 1, 0, 1, 0, 1, 0, 0, 0, 0, 1, 0, 0, 0, 0, 1, 1, 0, 0, 1, 1, 0, 0, 0, 0, 0, 1, 1, 1, 1, 1, 0, 1, 1, 1, 0, 1, 1, 1, 1, 1, 1, 0, 1, 0, 1, 0, 0, 1, 0, 1, 1, 0, 1, 0, 1, 0, 1, 1, 0, 0, 1, 1, 1, 0, 0, 1, 0, 0, 1, 1, 0, 0, 1, 0, 0, 0, 1, 0, 1, 1, 1, 0, 0, 0, 1, 0, 0, 0, 1, 1, 1, 1, 0, 0, 1, 0, 1, 1, 1, 1, 0, 0, 0, 0, 1, 0, 1, 0, 0, 0, 1, 1, 0, 1, 0, 1, 1, 1, 1, 1, 0, 0, 1, 1, 1, 1, 0, 1, 1, 0, 0, 1, 0, 1, 0, 1, 1, 1, 0, 1, 0, 1, 1, 0, 1, 1, 1, 0, 0, 1, 1, 0, 1, 0, 0, 1, 1, 0, 1, 1, 0, 1, 0, 0, 0, 1, 0, 0, 1, 1, 1, 0, 1, 1, 0, 1, 1, 0, 0, 0, 0, 1, 1, 1, 0, 1, 0, 0, 1, 0, 0, 1, 0, 0, 0, 0, 0, 1, 0, 1, 1, 0, 0, 0, 1, 1, 1, 0, 0, 0, 0] may be obtained through recursion based on the initial value and the feedback function.

For another example, the primitive polynomial *x*⁸ *+ x*⁵ *+ x*³ *+ x*² + 1 and the initial value [0, 0, 0, 0, 1, 1, 1, 0] are used as an example. In this case, a feedback function f(a₁, a₂, ... , aₙ) = a₂⊕a₃⊕aₛ⊕a₈ may be obtained, and then, a corresponding m-sequence [0, 0, 0, 0, 1, 1, 1, 0, 0, 0, 1, 1, 0, 1, 0, 0, 0, 0, 0, 1, 0, 0, 1, 0, 0, 1, 0, 1, 1, 1, 0, 0, 0, 0, 1, 1, 0, 1, 1, 0, 1, 1, 1, 0, 0, 1, 0, 0, 0, 1, 0, 1, 1, 0, 1, 1, 0, 0, 1, 0, 1, 1, 0, 0, 1, 1, 1, 0, 1, 1, 0, 1, 0, 1, 1, 1, 0, 1, 0, 1, 0, 0, 1, 1, 0, 1, 1, 1, 1, 0, 0, 1, 1, 1, 1, 1, 0, 1, 0, 1, 1, 0, 0, 0, 1, 0, 1, 0, 0, 0, 0, 1, 1, 1, 1, 0, 1, 0, 0, 1, 1, 1, 1, 0, 0, 0, 1, 0, 0, 0, 1, 1, 1, 0, 1, 0, 0, 0, 1, 0, 0, 1, 1, 0, 0, 1, 0, 0, 1, 1, 1, 0, 0, 1, 1, 0, 1, 0, 1, 0, 1, 1, 0, 1, 0, 0, 1, 0, 1, 0, 1, 1, 1, 1, 1, 1, 0, 1, 1, 1, 0, 1, 1, 1, 1, 1, 0, 0, 0, 0, 0, 1, 1, 0, 0, 1, 1, 0, 0, 0, 0, 1, 0, 0, 0, 0, 1, 0, 1, 0, 1, 0, 1, 0, 0, 0, 1, 1, 0, 0, 0, 1, 1, 1, 1, 1, 1, 1, 1, 0, 0, 1, 0, 1, 0, 0, 1, 0, 0, 0, 0, 0, 0, 0, 1, 0, 1, 1, 1, 1, 0, 1, 1, 0, 0] may be obtained through recursion based on the initial value and the feedback function.

Based on the foregoing example, a corresponding m-sequence obtained by combining another primitive polynomial and initial value in Table 6 is not described herein again. A corresponding m-sequence may be determined in the foregoing manner based on the primitive polynomial and the corresponding initial value.

Optionally, for each primitive polynomial, there is an m-sequence with a small maximum sidelobe of a correlation value and an m-sequence with a large maximum sidelobe of a correlation value during sliding correlation. Therefore, complexity of generating the m-sequence may be comprehensively considered. In this embodiment of this application, an m-sequence of a corresponding length is generated based on a primitive polynomial with a minimum quantity of taps.

For example, the sequences in the first sequence set may include at least one m-sequence obtained by combining the following primitive polynomial and initial value in Table 7:

**Table 7**

| Index | Primitive polynomial | Initial value |
|---|---|---|
| 1 | *x*³ + *x*¹ + 1 | [0, 1, 0] |
| 2 | *x*³ + *x*¹ + 1 | [0, 1, 1] |
| 3 | *x*³ + *x*¹ + 1 | [1, 1, 0] |
| 4 | *x*³ + *x*¹ + 1 | [0, 0, 1] |
| 5 | *x*³ + *x*¹ + 1 | [1, 0, 0] |
| 6 | *x*³ + *x*¹ + 1 | [1, 1, 1] |
| 7 | *x*³ + *x*¹ + 1 | [1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ *+ x*¹ *+* 1 may further be converted into a binary number 1011, and then may be represented by a decimal number 11.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 0] are used as an example. In this case, a feedback function f(a₁, a₂, ... , aₙ) = a₁⊕a₃ may be obtained, and then, a corresponding m-sequence [0, 1, 0, 0, 1, 1, 1] may be obtained through recursion based on the initial value and the feedback function.

For another example, the primitive polynomial *x*³ *+ x*¹ *+* 1 and the initial value [0, 1, 1] are used as an example. In this case, a feedback function f(a₁, a₂, ... , aₙ) = a₁⊕a₃ may be obtained, and then, a corresponding m-sequence [0, 1, 1, 1, 0, 1, 0] may be obtained through recursion based on the initial value and the feedback function.

Based on the foregoing example, a corresponding m-sequence obtained by combining another primitive polynomial and initial value in Table 7 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 8:

**Table 8**

| Index | Primitive polynomial | Initial value |
|---|---|---|
| 1 | *x*⁴ + *x*¹ + 1 | [0, 1, 0, 1] |
| 2 | *x*⁴ + *x*¹ + 1 | [1, 0, 1, 1] |
| 3 | *x*⁴ + *x*¹ + 1 | [0, 1, 1, 1] |
| 4 | *x*⁴ + *x*¹ + 1 | [0, 1, 0, 0] |
| 5 | *x*⁴ + *x*¹ + 1 | [1, 0, 0, 0] |
| 6 | *x*⁴ + *x*¹ + 1 | [0, 1, 1, 0] |
| 7 | *x*⁴ *+ x*¹ + 1 | [1, 1, 1, 1] |
| 8 | *x*⁴ + *x*¹ + 1 | [1, 0, 0, 1] |
| 9 | *x*⁴ + *x*¹ + 1 | [0, 0, 1, 0] |
| 10 | *x*⁴ + *x*¹ + 1 | [0, 0, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [0, 1, 0, 1] are used as an example. In this case, a feedback function f(a₁, a₂, ..., aₙ) = a₁⊕a₄ may be obtained, and then, a corresponding m-sequence [0, 1, 0, 1, 1, 0, 0, 1, 0, 0, 0, 1, 1, 1, 1] may be obtained through recursion based on the initial value and the feedback function.

For another example, the primitive polynomial *x*⁴ + *x*¹ + 1 and the initial value [1, 0, 1, 1] are used as an example. In this case, a feedback function f(a₁, a₂, ... , aₙ) = a₁⊕a₄ may be obtained, and then, a corresponding m-sequence [1, 0, 1, 1, 0, 0, 1, 0, 0, 0, 1, 1, 1, 1, 0] may be obtained through recursion based on the initial value and the feedback function.

Based on the foregoing example, a corresponding m-sequence obtained by combining another primitive polynomial and initial value in Table 8 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 9:

**Table 9**

| Index | Primitive polynomial | Initial value |
|---|---|---|
| 1 | *x*⁵ *+ x*² + 1 | [1, 0, 0, 1, 1] |
| 2 | *x*⁵ + *x*² + 1 | [0, 0, 1, 0, 0] |
| 3 | *x*⁵ + *x*² + 1 | [1, 0, 1, 0, 0] |
| 4 | *x*⁵ *+ x*² + 1 | [0, 1, 0, 1, 1] |
| 5 | *x*⁵ + *x*² + 1 | [0, 0, 0, 1, 1] |
| 6 | *x*⁵ *+ x*² + 1 | [0, 0, 1, 1, 0] |
| 7 | *x*⁵ + *x*² + 1 | [0, 0, 1, 0, 1] |
| 8 | *x*⁵ + *x*² + 1 | [0, 1, 0, 0, 0] |
| 9 | *x*⁵ *+ x*² + 1 | [0, 1, 1, 1, 0] |
| 10 | *x*⁵ *+ x*² + 1 | [0, 1, 1, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ + *x*² *+* 1 may further be converted into a binary number 100101, and then may be represented by a decimal number 37.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ + *x*² *+* 1 and the initial value [1, 0, 0, 1, 1] are used as an example. In this case, a feedback function f(a₁, a₂, ..., aₙ) = a₂⊕a₅ may be obtained, and then, a corresponding m-sequence [1, 0, 0, 1, 1, 0, 1, 0, 0, 1, 0, 0, 0, 0, 1, 0, 1, 0, 1, 1, 1, 0, 1, 1, 0, 0, 0, 1, 1, 1, 1] may be obtained through recursion based on the initial value and the feedback function.

For another example, the primitive polynomial *x*⁵ + *x*² + 1 and the initial value [0, 0, 1, 0, 0] are used as an example. In this case, a feedback function f(a₁, a₂, ..., aₙ) = a₂⊕a₅ may be obtained, and then, a corresponding m-sequence [0, 0, 1, 0, 0, 0, 0, 1, 0, 1, 0, 1, 1, 1, 0, 1, 1, 0, 0, 0, 1, 1, 1, 1, 1, 0, 0, 1, 1, 0, 1] may be obtained through recursion based on the initial value and the feedback function.

Based on the foregoing example, a corresponding m-sequence obtained by combining another primitive polynomial and initial value in Table 9 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 10:

**Table 10**

| Index | Primitive polynomial | Initial value |
|---|---|---|
| 1 | *x*⁶ + *x*¹ + 1 | [1, 0, 1, 0, 0, 1] |
| 2 | *x*⁶ + *x*¹ + 1 | [0, 1, 0, 0, 1, 0] |
| 3 | *x*⁶ + *x*¹ + 1 | [0, 0, 0, 0, 0, 1] |
| 4 | *x*⁶ + *x*¹ + 1 | [1, 1, 1, 1, 0, 1] |
| 5 | *x*⁶ + *x*¹ + 1 | [1, 1, 1, 1, 1, 0] |
| 6 | *x*⁶ + *x*¹ + 1 | [1, 1, 1, 1, 0, 0] |
| 7 | *x*⁶ + *x*¹ + 1 | [1, 1, 0, 0, 1, 0] |
| 8 | *x*⁶ + *x*¹ + 1 | [0, 1, 1, 1, 0, 1] |
| 9 | *x*⁶ + *x*¹ + 1 | [0, 0, 0, 1, 0, 1] |
| 10 | *x*⁶ + *x*¹ + 1 | [0, 1, 1, 1, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ + *x*¹ *+* 1 may further be converted into a binary number 1000011, and then may be represented by a decimal number 67.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ *+ x¹ +* 1 and the initial value [1, 0, 1, 0, 0, 1] are used as an example. In this case, a feedback function f(a₁, a₂, ..., aₙ) = a₁⊕a, may be obtained, and then, a corresponding m-sequence [1, 0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1, 1, 0, 1, 0, 1, 0, 1, 1, 0, 0, 1, 1, 0, 1, 1, 1, 0, 1] may be obtained through recursion based on the initial value and the feedback function.

For another example, the primitive polynomial *x*⁶ *+ x*¹ + 1 and the initial value [0, 1, 0, 0, 1, 0] are used as an example. In this case, a feedback function f(a₁, a₂, ..., aₙ) = a₁⊕a₆ may be obtained, and then, a corresponding m-sequence [0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1, 1, 0, 1, 0, 1, 0, 1, 1, 0, 0, 1, 1, 0, 1, 1, 1, 0, 1, 1] may be obtained through recursion based on the initial value and the feedback function.

Based on the foregoing example, a corresponding m-sequence obtained by combining another primitive polynomial and initial value in Table 10 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 11:

**Table 11**

| Index | Primitive polynomial | Initial value |
|---|---|---|
| 1 | *x*⁷ + *x*¹ + 1 | [0, 0, 1, 0, 1, 1, 0] |
| 2 | *x*⁷ + *x*¹ + 1 | [1, 0, 1, 0, 1, 1, 0] |
| 3 | *x*⁷ + *x*¹ + 1 | [1, 1, 1, 1, 0, 0, 0] |
| 4 | *x*⁷ + *x*¹ + 1 | [0, 1, 0, 1, 1, 1, 1] |
| 5 | *x*⁷ + *x*¹ + 1 | [0, 0, 1, 1, 1, 0, 1] |
| 6 | *x*⁷ + *x*¹ + 1 | [0, 1, 1, 0, 1, 1, 1] |
| 7 | *x*⁷ + *x*¹ + 1 | [0, 1, 0, 1, 1, 0, 0] |
| 8 | *x*⁷ + *x*¹ + 1 | [1, 0, 1, 0, 0, 0, 1] |
| 9 | *x*⁷ + *x*¹ + 1 | [1, 1, 1, 1, 0, 1, 0] |
| 10 | *x*⁷ + *x*¹ + 1 | [0, 0, 1, 1, 1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*¹ + 1 may further be converted into a binary number 10000011, and then may be represented by a decimal number 131.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*¹ + 1 and the initial value [0, 0, 1, 0, 1, 1, 0] are used as an example. In this case, a feedback function f(a₁, a₂, ..., aₙ) = a₁⊕a₇ may be obtained, and then, a corresponding m-sequence [0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0, 1, 0, 1, 0, 0, 1, 1, 0, 0, 1, 1, 1, 0, 1, 1, 1, 0, 1] may be obtained through recursion based on the initial value and the feedback function.

For another example, the primitive polynomial *x*⁷ + *x*¹ + 1 and the initial value [1, 0, 1, 0, 1, 1, 0] are used as an example. In this case, a feedback function f(a₁, a₂, ... , aₙ) = a₁⊕a₇ may be obtained, and then, a corresponding m-sequence [1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0, 1, 0, 1, 0, 0, 1, 1, 0, 0, 1, 1, 1, 0, 1, 1, 1, 0, 1, 0, 0, 1, 0, 1, 1, 0, 0, 0, 1, 1, 0, 1, 1, 1, 1, 0, 1] may be obtained through recursion based on the initial value and the feedback function.

Based on the foregoing example, a corresponding m-sequence obtained by combining another primitive polynomial and initial value in Table 11 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 12:

**Table 12**

| Index | Primitive polynomial | Initial value |
|---|---|---|
| 1 | *x*⁸ + *x*⁴ + *x*³ + *x*² + 1 | [0, 1, 0, 1, 1, 0, 0, 1] |
| 2 | *x*⁸ + *x*⁴ + *x*³ + *x*² + 1 | [0, 0, 0, 1, 0, 0, 1, 0] |
| 3 | *x*⁸ + *x*⁴ + *x*³ + *x*² + 1 | [0, 0, 1, 1, 0, 1, 1, 1] |
| 4 | *x*⁸ + *x*⁴ + *x*³ + *x*² + 1 | [0, 0, 1, 0, 1, 0, 1, 0] |
| 5 | *x*⁸ + *x*⁴ + *x*³ + *x*² + 1 | [0, 1, 1, 0, 0, 0, 0, 1] |
| 6 | *x*⁸ + *x*⁴ + *x*³ + *x*² + 1 | [0, 1, 0, 0, 0, 1, 0, 0] |
| 7 | *x*⁸ + *x*⁴ + *x*³ + *x*² + 1 | [1, 0, 1, 0, 0, 0, 1, 1] |
| 8 | *x*⁸ + *x*⁴ + *x*³ + *x*² + 1 | [1, 0, 0, 0, 1, 1, 0, 0] |
| 9 | *x*⁸ + *x*⁴ + *x*³ + *x*² + 1 | [0, 0, 1, 0, 0, 1, 0, 1] |
| 10 | *x*⁸ + *x*⁴ + *x*³ + *x*² + 1 | [1, 1, 0, 1, 0, 0, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ + *x*⁴ + *x*³ + *x*² + 1 may further be converted into a binary number 100011101, and then may be represented by a decimal number 285.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸ + *x*⁴ + *x*³ + *x*² + 1 and the initial value [0, 1, 0, 1, 1, 0, 0, 1] are used as an example. In this case, a feedback function f(a₁, a₂, ... , aₙ) = a₂⊕a₃⊕a₄⊕a₈ may be obtained, and then, a corresponding m-sequence [0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1, 0, 0, 0, 1, 0, 0, 1, 0, 1, 1, 0, 1, 0, 0, 0, 1, 1, 0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1, 1, 1, 0, 1, 0, 1, 0, 1, 0, 1, 1, 1, 0, 0, 0, 0, 0, 1, 1, 0, 0, 0, 1] may be obtained through recursion based on the initial value and the feedback function.

For another example, the primitive polynomial *x*⁸ + *x*⁴ + *x*³ + *x*² + 1 and the initial value [0, 0, 0, 1, 0, 0, 1, 0] are used as an example. In this case, a feedback function f(a₁, a₂, ... , aₙ) = a₂⊕a₃⊕a₄⊕a₈ may be obtained, and then, a corresponding m-sequence [0, 0, 0, 1, 0, 0, 1, 0, 1, 1, 0, 1, 0, 0, 0, 1, 1, 0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1, 1, 1, 0, 1, 0, 1, 0, 1, 0, 1, 1, 1, 0, 0, 0, 0, 0, 1, 1, 0, 0, 0, 1, 0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1] may be obtained through recursion based on the initial value and the feedback function.

Based on the foregoing example, a corresponding m-sequence obtained by combining another primitive polynomial and initial value in Table 12 is not described herein again. A corresponding m-sequence may be determined in the foregoing manner based on the primitive polynomial and the corresponding initial value.

Because the m-sequence is generated by using the cyclic shift register, a quantity of additions required for generating each new bit is a quantity of taps minus 1. Therefore, in this embodiment of this application, with reference to the foregoing example, when the m-sequence of the corresponding length is generated based on the primitive polynomial with the minimum quantity of taps, the complexity of generating the m-sequence of the corresponding length can be minimized. For example, an m-sequence with a length of 127 is generated. In this case, a maximum quantity of taps is 7, and a minimum quantity of taps is 3. Therefore, when the m-sequence is generated based on the primitive polynomial with the minimum quantity of taps, calculation complexity can be reduced by 57%.

In this embodiment of this application, the m-sequences shown in Table 1 to Table 12 are directly used as preamble sequences. Because the corresponding m-sequence has good time-frequency two-dimensional correlation detection performance, a maximum sidelobe of time-frequency two-dimensional correlation of the preamble sequence during sliding correlation can be reduced.

S602: The terminal device modulates the first sequence to obtain the first signal.

S603: The terminal device sends the first signal.

S604: The network device determines a location of the preamble sequence in the first signal.

That the network device determines the location of the preamble sequence in the first signal is that a network signal receives the first signal in a time window in which a preamble signal may arrive, and generates a local preamble signal for sliding correlation with the received signal. A location with a largest correlation value is determined as a timing location of the preamble sequence (namely, a start location or end location of the preamble sequence in the first signal).

S605: The network device obtains a data window based on the location of the preamble, and demodulates a data signal in the data window.

Because uplink data is scheduled by the network device side, the network device side has learned of a length of a data sequence, and can obtain a start location and an end location of the data window based on the timing location of the preamble sequence and the length of the data sequence, and then demodulate the data signal in the data window, to obtain data transmitted in the first signal.

According to the method shown in FIG. 6, because the m-sequence having good time-frequency two-dimensional correlation detection performance is used as the preamble, a maximum sidelobe of a correlation value during sliding correlation performed on signals by the network device based on the preamble can be reduced. This improves accuracy of the timing location that is of the preamble and that is determined based on the preamble, and improves signal synchronization performance.

In another implementation of this embodiment of this application, in the signal processing method, a sequence obtained by adding 0 to a first location of the m-sequence may be used as the second sequence, and the second sequence or the equivalent sequence of the second sequence is used as the preamble, to meet a rate matching requirement for a length of the preamble sequence.

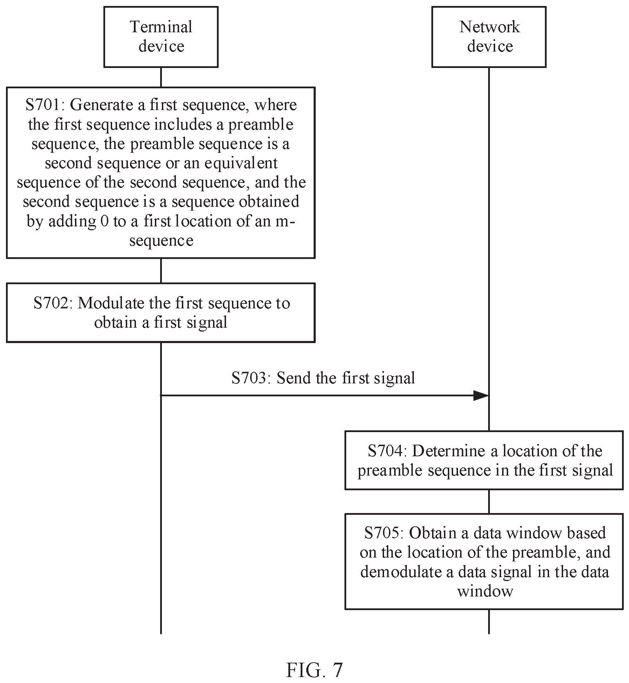

Specifically, as shown in FIG. 7, a signal processing method provided in an embodiment of this application may include S701 to S705 below.

S701: A terminal device generates a first sequence, where the first sequence includes a preamble sequence, the preamble sequence is a second sequence or an equivalent sequence of the second sequence, and the second sequence is a sequence obtained by adding 0 to a first location of an m-sequence.

It should be noted that an equivalent sequence is obtained by performing bitwise negation and/or reversing on a sequence. To be specific, the equivalent sequence of the second sequence may be a sequence obtained by performing bitwise negation on the second sequence, or performing reversing on the second sequence, or performing reversing on the second sequence and then performing bitwise negation, or performing bitwise negation on the second sequence and then performing reversing.

For example, the second sequence [S] = [s₀, s₁, ... , s_{N-1}] and sᵢ ∈ {0,1}. In this case, the equivalent sequence of the sequence may be a negated sequence [1 - s₀, 1 - s₁, ... ,1 - s_{N-1}] obtained by performing negation on the sequence.

For another example, the second sequence [S] = [s₀, s₁, ... , s_{N-1}] and sᵢ ∈ {1, -1}. In this case, the equivalent sequence of the sequence may be a negated sequence [-s₀, -s₁, ... , -s_{N-1}] obtained by performing negation on the sequence.

For another example, the second sequence [S] = [s₀, s₁, ... , s_{N-1}]. In this case, the equivalent sequence of the sequence may be a reversed sequence [s_{N-1}, s_{N-2}, ... , s₀] obtained by performing reversing on the sequence.

For another example, the second sequence [S] = [s₀, s₁, ... , s_{N-1}] and sᵢ ∈ {0,1}. In this case, the equivalent sequence of the sequence may be a sequence [1 - s_{N-1}, 1 - s_{N-2}, ... ,1 - s₀] obtained by performing reversing and negation on the sequence.

The first sequence may further include a sequence of data that needs to be transmitted, and the data sequence may be located after the preamble sequence. In this way, a network device determines a location of the preamble sequence after performing correlation value comparison based on the preamble sequence, determines a location of the data sequence, and further demodulates a first signal to obtain the data sequence in the first sequence.

In an example, the m-sequence may be one of sequences in a first sequence set, or one of sequences in a second sequence set, or one of sequences in a third sequence set, or one of sequences in a fourth sequence set, or one of sequences in a fifth sequence set, or one of sequences in a sixth sequence set. In addition, each of different sequence sets correspondingly includes a sequence of one length (that is, a quantity of elements included in the sequence). For example, a sequence included in the first sequence set is a sequence with a length of 7, a sequence included in the second sequence set is a sequence with a length of 15, a sequence included in the third sequence set is a sequence with a length of 31, a sequence included in the fourth sequence set is a sequence with a length of 63, a sequence included in the fifth sequence set is a sequence with a length of 127, and a sequence included in the sixth sequence set is a sequence with a length of 255.

Optionally, in actual application, at least two of the first sequence set, the second sequence set, the third sequence set, the fourth sequence set, the fifth sequence set, and the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one of the foregoing sequence sets may alternatively be preconfigured, to determine a preamble of a corresponding length based on only a sequence in the sequence set for generating the first sequence. Correspondingly, the m-sequence is only a sequence in the configured sequence sets.

Certainly, in actual application, at least two of a sequence in the first sequence set, a sequence in the second sequence set, a sequence in the third sequence set, a sequence in the fourth sequence set, a sequence in the fifth sequence set, and a sequence in the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one sequence in the foregoing sequence sets may alternatively be preconfigured, to determine a corresponding preamble based on only the sequence for generating the first sequence.

For example, the sequences in the first sequence set may include at least one m-sequence obtained by combining the following primitive polynomial and initial value in Table 13:

**Table 13**

| Index | Primitive polynomial | Initial value |
|---|---|---|
| 1 | *x*³ + *x*¹ + 1 | [0, 1, 1] |
| 2 | *x*³ + *x*² + 1 | [1, 0, 1] |
| 3 | *x*³ + *x*¹ + 1 | [0, 0, 1] |
| 4 | *x*³ + *x*¹ + 1 | [1, 1, 1] |
| 5 | *x*³ + *x*² *+* 1 | [0, 1, 0] |
| 6 | *x*³ + *x*² + 1 | [1, 0, 0] |
| 7 | *x*³ + *x*¹ + 1 | [0, 1, 0] |
| 8 | *x*³ + *x*¹ + 1 | [1, 0, 0] |
| 9 | *x*³ + *x*² + 1 | [1, 1, 1] |
| 10 | *x*³ + *x*¹ + 1 | [1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ *+ x*¹ *+* 1 may further be converted into a binary number 1011, and then may be represented by a decimal number 11. For another example, the primitive polynomial *x*³ *+ x*² *+* 1 may further be converted into a binary number 1101, and then may be represented by a decimal number 13.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 1] are used as an example. In this case, a feedback function f(a₁, a₂, ... , aₙ) = a₁⊕a₃ may be obtained, where ⊕ represents an exclusive OR operation; and then, a corresponding m-sequence [0, 1, 1, 1, 0, 1, 0] may be obtained through recursion based on the initial value and the feedback function.

For another example, the primitive polynomial *x*³ *+ x*² + 1 and the initial value [1, 0, 1] are used as an example. In this case, a feedback function f(a₁, a₂, ... , aₙ) = a₂⊕a₃ may be obtained, and then, a corresponding m-sequence [1, 0, 1, 1, 1, 0, 0] may be obtained through recursion based on the initial value and the feedback function.

Based on the foregoing example, a corresponding m-sequence obtained by combining another primitive polynomial and initial value in Table 13 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 14:

**Table 14**

| Index | Primitive polynomial | Initial value |
|---|---|---|
| 1 | *x*⁴ *+ x*¹ *+* 1 | [1, 0, 1, 0] |
| 2 | *x*⁴ *+ x*³ *+* 1 | [1, 1, 1, 0] |
| 3 | *x*⁴ *+ x*³ *+* 1 | [1, 0, 1, 0] |
| 4 | *x*⁴ *+* x¹ *+* 1 | [1, 0, 0, 1] |
| 5 | *x*⁴ *+ x*³ *+* 1 | [0, 0, 0, 1] |
| 6 | *x*⁴ *+* x¹ *+* 1 | [0, 0, 1, 1] |
| 7 | *x*⁴ *+ x*³ *+* 1 | [1, 0, 0, 1] |
| 8 | *x*⁴ *+ x*¹ *+* 1 | [1, 1, 1, 1] |
| 9 | *x*⁴ *+ x*³ *+* 1 | [0, 0, 1, 0] |
| 10 | *x*⁴ *+ x*¹ *+* 1 | [0, 1, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19. For another example, the primitive polynomial *x*⁴ + *x*³ + 1 may further be converted into a binary number 11001, and then may be represented by a decimal number 25.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [1, 0, 1, 0] are used as an example. In this case, a feedback function f(a₁, a₂, ..., aₙ) = a₁⊕a₄ may be obtained, and then, a corresponding m-sequence [1, 0, 1, 0, 1, 1, 0, 0, 1, 0, 0, 0, 1, 1, 1] may be obtained through recursion based on the initial value and the feedback function.

For another example, the primitive polynomial *x*⁴ + *x*³ + 1 and the initial value [1, 1, 1, 0] are used as an example. In this case, a feedback function f(a₁, a₂, ..., aₙ) = a₃ ⊕a₄ may be obtained, and then, a corresponding m-sequence [1, 1, 1, 0, 0, 0, 1, 0, 0, 1, 1, 0, 1, 0, 1] may be obtained through recursion based on the initial value and the feedback function.

Based on the foregoing example, a corresponding m-sequence obtained by combining another primitive polynomial and initial value in Table 14 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 15:

**Table 15**

| Index | Primitive polynomial | Initial value |
|---|---|---|
| 1 | *x*⁵ *+ x*³ *+ x*² + *x*¹ *+* 1 | [1, 1, 0, 1, 0] |
| 2 | *x*⁵ *+ x*⁴ *+ x*³ *+ x*² *+* 1 | [1, 0, 1, 0, 0] |
| 3 | *x*⁵ *+ x*⁴ *+ x*² + *x*¹ *+* 1 | [1, 1, 0, 1, 0] |
| 4 | *x*⁵ *+ x*⁴ *+ x*³ + *x*¹ *+* 1 | [0, 0, 0, 1, 1] |
| 5 | *x*⁵ *+ x*³ *+ x*² + *x*¹ *+* 1 | [1, 0, 1, 0, 1] |
| 6 | *x*⁵ *+ x*⁴ *+ x*³ *+ x*² *+* 1 | [0, 0, 1, 1, 1] |
| 7 | *x*⁵ *+ x*⁴ *+ x*² + *x*¹ *+* 1 | [0, 0, 1, 0, 1] |
| 8 | *x*⁵ *+ x*⁴ *+ x*³ + *x*¹ *+* 1 | [1, 0, 0, 1, 0] |
| 9 | *x*⁵ *+ x*⁴ *+ x*³ *+ x*² *+* 1 | [1, 1, 0, 1, 1] |
| 10 | *x*⁵ *+ x*³ *+ x*² *+ x*¹ + 1 | [0, 1, 0, 1, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ *+ x*³ *+ x*² + *x*¹ *+ 1* may further be converted into a binary number 101111, and then may be represented by a decimal number 47. For another example, the primitive polynomial *x*⁵ *+ x*⁴ *+ x*³ *+ x*² *+ 1* may further be converted into a binary number 111101, and then may be represented by a decimal number 61. For another example, the primitive polynomial *x*⁵ *+ x*² *+* 1 may further be converted into a binary number 100101, and then may be represented by a decimal number 37. For another example, the primitive polynomial *x*⁵ *+ x*³ *+* 1 may further be converted into a binary number 101001, and then may be represented by a decimal number 41.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ *+ x*³ *+ x*² *+ x*¹ *+* 1 and the initial value [1, 1, 0, 1, 0] are used as an example. In this case, a feedback function f(a₁, a₂, ..., aₙ) = a₁⊕a₂⊕a₃⊕a₅ may be obtained, and then, a corresponding m-sequence [1, 1, 0, 1, 0, 0, 0, 0, 1, 1, 0, 0, 1, 0, 0, 1, 1, 1, 1, 1, 0, 1, 1, 1, 0, 0, 0, 1, 0, 1, 0] may be obtained through recursion based on the initial value and the feedback function.

For another example, the primitive polynomial *x*⁵ *+ x*⁴ *+ x*³ *+ x*² + 1 and the initial value [1, 0, 1, 0, 0] are used as an example. In this case, a feedback function f(a₁, a₂, ..., aₙ) = a₂⊕a₃⊕a₄⊕a₅ may be obtained, and then, a corresponding m-sequence [1, 0, 1, 0, 0, 0, 1, 1, 1, 0, 1, 1, 1, 1, 1, 0, 0, 1, 0, 0, 1, 1, 0, 0, 0, 0, 1, 0, 1, 1, 0] may be obtained through recursion based on the initial value and the feedback function.

Based on the foregoing example, a corresponding m-sequence obtained by combining another primitive polynomial and initial value in Table 15 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 16:

**Table 16**

| Index | Primitive polynomial | Initial value |
|---|---|---|
| 1 | *x*⁶ + *x*⁵ + 1 | [1, 1, 1, 1, 1, 0] |
| 2 | *x*⁶ *+ x*⁵ *+ x*² + *x*¹ *+* 1 | [1, 0, 1, 0, 1, 0] |
| 3 | *x*⁶ *+ x*⁵ *+ x*⁴ + *x*¹ *+* 1 | [0, 1, 1, 0, 1, 0] |
| 4 | *x*⁶ *+ x*⁵ *+* 1 | [1, 0, 1, 1, 1, 0] |
| 5 | *x*⁶ *+ x*⁴ *+ x*³ + *x*¹ *+* 1 | [1, 1, 0, 1, 1, 0] |
| 6 | *x*⁶ *+ x*⁵ *+ x*³ *+ x*² *+* 1 | [0, 0, 1, 0, 0, 1] |
| 7 | *x*⁶ + *x*¹ *+* 1 | [0, 1, 1, 0, 0, 0] |
| 8 | *x*⁶ *+ x*⁵ + 1 | [0, 1, 0, 1, 0, 0] |
| 9 | *x*⁶ + *x*¹ *+* 1 | [1, 0, 1, 0, 1, 0] |
| 10 | *x*⁶ + *x*¹ *+* 1 | [1, 0, 1, 1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ *+ x*⁵ *+* 1 may further be converted into a binary number 1100001, and then may be represented by a decimal number 97. For another example, the primitive polynomial *x*⁶ + *x*¹ *+* 1 may further be converted into a binary number 1000011, and then may be represented by a decimal number 67. For another example, the primitive polynomial *x*⁶ *+ x*⁵ *+ x*³ *+ x*² *+* 1 may further be converted into a binary number 1101101, and then may be represented by a decimal number 109. For another example, the primitive polynomial *x*⁶ *+ x*⁴ *+ x*³ *+ x*¹ *+* 1 may further be converted into a binary number 1011011, and then may be represented by a decimal number 91. For another example, the primitive polynomial *x*⁶ *+ x*⁵ *+ x*² + *x*¹ *+ 1* may further be converted into a binary number 1100111, and then may be represented by a decimal number 103. For another example, the primitive polynomial *x*⁶ *+ x*⁵ *+ x*⁴ + *x*¹ *+* 1 may further be converted into a binary number 1110011, and then may be represented by a decimal number 115.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ *+ x*⁵ *+* 1 and the initial value [1, 1, 1, 1, 1, 0] are used as an example. In this case, a feedback function f(a₁, a₂, ..., aₙ) = a₅⊕a₆ may be obtained, and then, a corresponding m-sequence [1, 1, 1, 1, 1, 0, 0, 0, 0, 0, 1, 0, 0, 0, 0, 1, 1, 0, 0, 0, 1, 0, 1, 0, 0, 1, 1, 1, 1, 0, 1, 0, 0, 0, 1, 1, 1, 0, 0, 1, 0, 0, 1, 0, 1, 1, 0, 1, 1, 1, 0, 1, 1, 0, 0, 1, 1, 0, 1, 0, 1, 0] may be obtained through recursion based on the initial value and the feedback function.

For another example, the primitive polynomial *x*⁶ *+ x*⁵ *+ x*³ *+ x*² *+* 1 and the initial value [0, 0, 1, 0, 0, 1] are used as an example. In this case, a feedback function f(a₁, a₂, ..., aₙ) = a₂⊕a₃⊕a₅⊕a₆ may be obtained, and then, a corresponding m-sequence [0, 0, 1, 0, 0, 1, 0, 0, 0, 0, 1, 1, 1, 0, 0, 0, 0, 0, 1, 0, 1, 1, 1, 1, 1, 1, 0, 0, 1, 0, 1, 0, 1, 0, 0, 0, 1, 1, 0, 0, 1, 1, 1, 1, 0, 1, 1, 1, 0, 1, 0, 1, 1, 0, 1, 0, 0, 1, 1, 0, 1, 1, 0] may be obtained through recursion based on the initial value and the feedback function.

Based on the foregoing example, a corresponding m-sequence obtained by combining another primitive polynomial and initial value in Table 4 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 17:

**Table 17**

| Index | Primitive polynomial | Initial value |
|---|---|---|
| 1 | *x*⁷ *+ x*⁶ *+ x*⁵ *+ x*⁴ *+* 1 | [0, 0, 1, 1, 1, 1, 0] |
| 2 | *x*⁷ *+ x*⁶ *+ x*⁵ *+ x*³ *+ x*² *+ x*¹ *+* 1 | [1, 1, 0, 1, 1, 0, 1] |
| 3 | *x*⁷ *+ x*⁶ *+ x*⁴ *+ x*² *+* 1 | [0, 1, 1, 1, 0, 1, 1] |
| 4 | *x*⁷ *+ x*⁵ *+ x*³ *+ x*¹ *+* 1 | [1, 0, 0, 0, 1, 0, 0] |
| 5 | *x*⁷ *+ x*³ *+ x*² *+ x*¹ *+* 1 | [1, 1, 1, 1, 0, 0, 1] |
| 6 | *x*⁷ *+ x*⁶ *+ x*⁵ *+ x*⁴ *+* 1 | [0, 1, 0, 1, 0, 0, 1] |
| 7 | *x*⁷ *+ x*¹ *+* 1 | [1, 1, 1, 0, 1, 0, 1] |
| 8 | *x*⁷ *+ x*⁴ *+ x*³ *+ x*² *+* 1 | [0, 0, 1, 1, 0, 1, 1] |
| 9 | *x*⁷ *+ x*³ *+* 1 | [1, 1, 0, 0, 0, 1, 1] |
| 10 | *x*⁷ *+ x*⁶ *+* 1 | [1, 0, 0, 1, 1, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*¹ + 1 may further be converted into a binary number 10000011, and then may be represented by a decimal number 131. For another example, the primitive polynomial *x*⁷ + *x*⁶ + 1 may further be converted into a binary number 11000001, and then may be represented by a decimal number 193. For another example, the primitive polynomial *x*⁷ *+ x*³ *+ x*² *+ x*¹ *+* 1 may further be converted into a binary number 10001111, and then may be represented by a decimal number 143. For another example, the primitive polynomial *x*⁷ *+ x*⁶ *+ x*⁵ *+ x*⁴ *+* 1 may further be converted into a binary number 11110001, and then may be represented by a decimal number 241.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*¹ + 1 and the initial value [1, 1, 1, 0, 1, 0, 1] are used as an example. In this case, a feedback function f(a₁, a₂, ..., aₙ) = a₁⊕a₇ may be obtained, and then, a corresponding m-sequence [1, 1, 1, 0, 1, 0, 1, 0, 1, 0, 0, 1, 1, 0, 0, 1, 1, 1, 0, 1, 1, 1, 0, 1, 0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1] may be obtained through recursion based on the initial value and the feedback function.

For another example, the primitive polynomial *x*⁷ *+ x*⁶ *+ x*⁵ *+ x*⁴ *+* 1 and the initial value [0, 0, 1, 1, 1, 1, 0] are used as an example. In this case, a feedback function f(a₁, a₂, ..., aₙ) = a₄⊕a₅⊕a₆⊕a₇ may be obtained, and then, a corresponding m-sequence [0, 0, 1, 1, 1, 1, 0, 0, 1, 0, 1, 0, 0, 1, 0, 0, 1, 0, 1, 1, 0, 1, 0, 1, 0, 1, 0, 0, 0, 0, 0, 1, 1, 0, 0, 1, 0, 0, 0, 0, 1, 1, 1, 0, 1, 0, 1, 1, 1, 0, 0, 1, 1, 1, 0, 0, 0, 1, 1, 0, 1, 1, 0, 0, 1, 1, 0, 0, 0, 0, 0, 0, 1, 0, 0, 0, 1, 1, 1, 1, 1, 0, 1, 0, 0, 1, 1, 0, 1, 0, 0, 0, 1, 0, 1, 1, 1, 1, 0, 1, 1, 0, 1, 1, 1, 0, 1, 1, 1, 1, 1, 1, 1, 0, 0, 0, 0, 1, 0, 1, 0, 1, 1, 0, 0, 0, 1] may be obtained through recursion based on the initial value and the feedback function.

Based on the foregoing example, a corresponding m-sequence obtained by combining another primitive polynomial and initial value in Table 17 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 18:

**Table 18**

| Index | Primitive polynomial | Initial value |
|---|---|---|
| 1 | *x*⁸ *+ x*⁵ *+ x*³ *+ x*¹ *+* 1 | [1, 0, 0, 1, 0, 1, 0, 1] |
| 2 | *x*⁸ *+ x*⁷ *+ x*⁶ *+ x*³ *+ x*² + *x*¹ *+* 1 | [0, 0, 1, 1, 1, 1, 1, 1] |
| 3 | *x*⁸ *+ x*⁷ *+ x*⁶ *+ x*⁵ *+ x*² *+ x*¹ *+* 1 | [0, 0, 1, 1, 1, 0, 1, 0] |
| 4 | *x*⁸ *+ x*⁶ *+ x*³ *+ x*² + 1 | [0, 0, 1, 0, 0, 0, 1, 1] |
| 5 | *x*⁸ *+ x*¹ *+ x*⁶ *+ x*¹ *+* 1 | [0, 0, 0, 0, 0, 0, 1, 1] |
| 6 | *x*⁸ *+ x*⁷ *+ x*² *+ x*¹ *+* 1 | [1, 1, 0, 1, 1, 0, 1, 0] |
| 7 | *x*⁸ *+ x*⁵ *+ x*³ *+ x*¹ *+* 1 | [0, 1, 0, 1, 0, 1, 0, 0] |
| 8 | *x*⁸ *+ x*⁷ *+ x*⁵ *+ x*³ + 1 | [1, 1, 0, 0, 0, 0, 1, 1] |
| 9 | *x*⁸ *+ x*⁷ *+ x*⁶ *+ x*⁵ *+ x*² *+ x*¹ *+* 1 | [0, 0, 0, 1, 1, 1, 1, 1] |
| 10 | *x*⁸ *+ x*⁶ *+ x*⁵ *+ x*⁴ *+* 1 | [0, 0, 0, 1, 0, 0, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ *+ x*⁵ *+ x*³ *+ x*¹ *+* 1 may further be converted into a binary number 100101011, and then may be represented by a decimal number 299. For another example, the primitive polynomial *x*⁸ *+ x*⁷ *+ x*⁶ + *x*¹ *+* 1 may further be converted into a binary number 111000011, and then may be represented by a decimal number 451.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸ *+ x*⁵ *+ x*³ *+ x*¹ *+* 1 and the initial value [1, 0, 0, 1, 0, 1, 0, 1] are used as an example. In this case, a feedback function f(a₁, a₂, ..., aₙ) = a₁⊕a₃⊕a₅⊕a₈ may be obtained, and then, a corresponding m-sequence [1, 0, 0, 1, 0, 1, 0, 1, 0, 0, 0, 1, 0, 1, 0, 1, 1, 1, 1, 1, 1, 0, 0, 1, 1, 1, 1, 1, 0, 0, 0, 0, 0, 1, 0, 1, 0, 0, 0, 0, 1, 0, 0, 0, 0, 1, 1, 1, 1, 0, 0, 0, 1, 1, 0, 0, 0, 1, 0, 0, 0, 1, 0, 0, 1, 0, 1, 0, 0, 1, 1, 0, 0, 1, 1, 0, 1, 1, 1, 1, 0, 1, 0, 1, 0, 1, 0, 1, 1, 0, 0, 0, 1, 1, 1, 1, 1, 1, 1, 1, 0, 1, 0, 0, 1, 0, 0, 0, 0, 0, 0, 0, 1, 1, 1, 0, 1, 1, 0, 0, 0, 0, 0, 0, 1, 0, 0, 1, 1, 0, 1, 0, 0, 0, 0, 0, 1, 1, 0, 1, 0, 1, 1, 1, 0, 0, 0, 0, 1, 0, 1, 1, 1, 1, 0, 0, 1, 0, 0, 0, 1, 1, 1, 0, 0, 0, 1, 0, 1, 1, 0, 0, 1, 0, 0, 1, 0, 0, 1, 1, 1, 0, 1, 0, 1, 1, 0, 1, 1, 0, 1, 0, 0, 1, 1, 1, 1, 0, 1, 1, 0, 1, 1, 1, 0, 1, 0, 0, 0, 1, 1, 0, 1, 1, 0, 0, 1, 1, 1, 0, 0, 1, 0, 1, 1, 0, 1, 0, 1, 0, 0, 1, 0, 1, 1, 1, 0, 1, 1, 1, 1, 1, 0, 1, 1, 1, 0, 0, 1, 1, 0, 0, 0, 0, 1] may be obtained through recursion based on the initial value and the feedback function.

For another example, the primitive polynomial *x*⁸ *+ x*⁷ *+ x⁶ + x*¹ *+* 1 and the initial value [0, 0, 0, 0, 0, 0, 1, 1] are used as an example. In this case, a feedback function f(a₁, a₂, ..., aₙ) = a₁⊕a₆⊕a₇⊕a₈ may be obtained, and then, a corresponding m-sequence [0, 0, 0, 0, 0, 0, 1, 1, 1, 1, 1, 1, 0, 0, 1, 0, 1, 0, 0, 1, 0, 1, 1, 0, 1, 0, 1, 1, 1, 1, 1, 0, 0, 0, 1, 0, 1, 1, 0, 0, 1, 0, 0, 0, 0, 1, 0, 1, 0, 0, 0, 1, 0, 0, 1, 0, 0, 1, 0, 1, 0, 1, 0, 1, 0, 0, 1, 1, 0, 0, 1, 0, 1, 1, 1, 0, 1, 0, 0, 0, 1, 1, 1, 0, 1, 1, 0, 0, 1, 1, 1, 1, 1, 0, 1, 1, 0, 1, 0, 0, 0, 0, 0, 0, 1, 0, 0, 0, 0, 0, 1, 0, 1, 1, 1, 1, 0, 1, 1, 1, 0, 1, 1, 1, 1, 0, 0, 0, 0, 1, 0, 0, 1, 1, 1, 0, 1, 0, 1, 1, 0, 0, 0, 1, 1, 1, 1, 0, 0, 1, 1, 0, 1, 1, 0, 1, 1, 1, 1, 1, 1, 1, 1, 0, 1, 0, 1, 0, 1, 1, 1, 0, 0, 1, 1, 1, 0, 0, 1, 0, 0, 1, 1, 0, 1, 0, 1, 0, 0, 0, 0, 1, 1, 0, 1, 1, 1, 0, 0, 0, 0, 0, 1, 1, 0, 0, 0, 0, 1, 1, 1, 0, 0, 0, 1, 1, 0, 0, 1, 1, 0, 0, 0, 1, 0, 0, 0, 1, 1, 0, 1, 0, 0, 1, 1, 1, 1, 0, 1, 0, 0, 1, 0, 0, 0, 1, 0, 1, 0, 1, 1, 0, 1, 1, 0] may be obtained through recursion based on the initial value and the feedback function.

Based on the foregoing example, a corresponding m-sequence obtained by combining another primitive polynomial and initial value in Table 18 is not described herein again. A corresponding m-sequence may be determined in the foregoing manner based on the primitive polynomial and the corresponding initial value.

Optionally, for each primitive polynomial, there is an m-sequence with a small maximum sidelobe of a correlation value and an m-sequence with a large maximum sidelobe of a correlation value during sliding correlation. Therefore, complexity of generating the m-sequence may be comprehensively considered. In this embodiment of this application, an m-sequence of a corresponding length is generated based on a primitive polynomial with a minimum quantity of taps.

For example, the sequences in the first sequence set may include at least one m-sequence obtained by combining the following primitive polynomial and initial value in Table 19:

**Table 19**

| Index | Primitive polynomial | Initial value |
|---|---|---|
| 1 | *x*³ + *x*¹ *+* 1 | [0, 1, 1] |
| 2 | *x*³ *+ x*¹ *+* 1 | [0, 0, 1] |
| 3 | *x*³ + *x*¹ + 1 | [1, 1, 1] |
| 4 | *x*³ + *x*¹ + 1 | [0, 1, 0] |
| 5 | *x*³ + *x*¹ *+* 1 | [1, 0, 0] |
| 6 | *x*³ + *x*¹ + 1 | [1, 0, 1] |
| 7 | *x*³ *+ x*¹ *+* 1 | [1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ + *x*¹ *+* 1 may further be converted into a binary number 1011, and then may be represented by a decimal number 11.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 1] are used as an example. In this case, a feedback function f(a₁, a₂, ..., aₙ) = a₁⊕a₃ may be obtained, and then, a corresponding m-sequence [0, 1, 1, 1, 0, 1, 0] may be obtained through recursion based on the initial value and the feedback function.

For another example, the primitive polynomial *x*³ *+ x*¹ *+* 1 and the initial value [0, 0, 1] are used as an example. In this case, a feedback function f(a₁, a₂, ..., aₙ) = a₁⊕a₃ may be obtained, and then, a corresponding m-sequence [0, 0, 1, 1, 1, 0, 1] may be obtained through recursion based on the initial value and the feedback function.

Based on the foregoing example, a corresponding m-sequence obtained by combining another primitive polynomial and initial value in Table 19 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 20:

**Table 20**

| Index | Primitive polynomial | Initial value |
|---|---|---|
| 1 | *x*⁴ *+* x¹ *+* 1 | [1, 0, 1, 0] |
| 2 | *x*⁴ *+ x*¹ *+* 1 | [1, 0, 0, 1] |
| 3 | *x*⁴ + *x*¹ *+* 1 | [0, 0, 1, 1] |
| 4 | *x*⁴ *+ x*¹ *+* 1 | [1, 1, 1, 1] |
| 5 | *x*⁴ *+ x*¹ *+* 1 | [0, 1, 0, 0] |
| 6 | *x*⁴ + *x*¹ *+* 1 | [1, 0, 0, 0] |
| 7 | *x*⁴ *+ x*¹ *+* 1 | [1, 1, 0, 1] |
| 8 | *x*⁴ *+ x*¹ *+* 1 | [0, 0, 0, 1] |
| 9 | *x*⁴ *+* x¹ *+* 1 | [0, 1, 1, 1] |
| 10 | *x*⁴ *+ x*¹ *+* 1 | [0, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [1, 0, 1, 0] are used as an example. In this case, a feedback function f(a₁, a₂, ..., aₙ) = a₁⊕a₄ may be obtained, and then, a corresponding m-sequence [1, 0, 1, 0, 1, 1, 0, 0, 1, 0, 0, 0, 1, 1, 1] may be obtained through recursion based on the initial value and the feedback function.

For another example, the primitive polynomial *x*⁴ + *x*¹ + 1 and the initial value [1, 0, 0, 1] are used as an example. In this case, a feedback function f(a₁, a₂, ..., aₙ) = a₁⊕a₄ may be obtained, and then, a corresponding m-sequence [1, 0, 0, 1, 0, 0, 0, 1, 1, 1, 1, 0, 1, 0, 1] may be obtained through recursion based on the initial value and the feedback function.

Based on the foregoing example, a corresponding m-sequence obtained by combining another primitive polynomial and initial value in Table 20 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 21:

**Table 21**

| Index | Primitive polynomial | Initial value |
|---|---|---|
| 1 | *x*⁵ *+ x*² *+* 1 | [1, 1, 1, 0, 1] |
| 2 | *x*⁵ *+ x*² *+* 1 | [1, 0, 1, 0, 0] |
| 3 | *x*⁵ *+ x*² *+* 1 | [0, 0, 1, 0, 0] |
| 4 | *x*⁵ *+ x*² *+* 1 | [0, 0, 0, 1, 0] |
| 5 | *x*⁵ *+ x*² *+* 1 | [1, 0, 0, 0, 0] |
| 6 | *x*⁵ *+ x*² *+* 1 | [1, 0, 1, 0, 1] |
| 7 | *x*⁵ *+ x*² *+* 1 | [1, 0, 1, 1, 0] |
| 8 | *x*⁵ *+ x*² *+* 1 | [0, 1, 0, 0, 0] |
| 9 | *x*⁵ *+ x*² *+* 1 | [0, 1, 1, 1, 1] |
| 10 | *x*⁵ *+ x*² *+* 1 | [0, 1, 1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ *+ x*² *+* 1 may further be converted into a binary number 100101, and then may be represented by a decimal number 37.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ *+ x*² *+* 1 and the initial value [1, 1, 1, 0, 1] are used as an example. In this case, a feedback function f(a₁, a₂, ..., aₙ) = a₂⊕a₅ may be obtained, and then, a corresponding m-sequence [1, 1, 1, 0, 1, 1, 0, 0, 0, 1, 1, 1, 1, 1, 0, 0, 1, 1, 0, 1, 0, 0, 1, 0, 0, 0, 0, 1, 0, 1, 0] may be obtained through recursion based on the initial value and the feedback function.

For another example, the primitive polynomial *x*⁵ *+ x*² + 1 and the initial value [1, 0, 1, 0, 0] are used as an example. In this case, a feedback function f(a₁, a₂, ..., aₙ) = a₂⊕a₅ may be obtained, and then, a corresponding m-sequence [1, 0, 1, 0, 0, 1, 0, 0, 0, 0, 1, 0, 1, 0, 1, 1, 1, 0, 1, 1, 0, 0, 0, 1, 1, 1, 1, 1, 0, 0, 1] may be obtained through recursion based on the initial value and the feedback function.

Based on the foregoing example, a corresponding m-sequence obtained by combining another primitive polynomial and initial value in Table 21 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 22:

**Table 22**

| Index | Primitive polynomial | Initial value |
|---|---|---|
| 1 | *x*⁶ +*x*¹ + 1 | [0, 1, 1, 0, 0, 0] |
| 2 | *x*⁶ + *x*¹ *+* 1 | [1, 0, 1, 0, 1, 0] |
| 3 | *x*⁶ + *x*¹ *+* 1 | [1, 0, 1, 1, 1, 0] |
| 4 | *x*⁶ + *x*¹ + 1 | [1, 1, 0, 1, 0, 1] |
| 5 | *x*⁶ + *x*¹ *+* 1 | [0, 0, 1, 1, 1, 1] |
| 6 | *x*⁶ + *x*¹ + 1 | [0, 0, 1, 1, 0, 0] |
| 7 | *x*⁶ + *x*¹ *+* 1 | [1, 1, 1, 1, 0, 0] |
| 8 | *x*⁶ + *x*¹ + 1 | [1, 0, 1, 0, 0, 0] |
| 9 | *x*⁶ + *x*¹ + 1 | [1, 1, 1, 1, 0, 1] |
| 10 | *x*⁶ + *x*¹ + 1 | [1, 1, 0, 0, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ *+ x*¹ *+* 1 may further be converted into a binary number 1000011, and then may be represented by a decimal number 67.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ *+ x*¹ + 1 and the initial value [0, 1, 1, 0, 0, 0] are used as an example. In this case, a feedback function f(a₁, a₂, ..., aₙ) = a₁⊕a₆ may be obtained, and then, a corresponding m-sequence [0, 1, 1, 0, 0, 0, 0, 1, 0, 0, 0, 0, 0, 1, 1, 1, 1, 1, 1, 0, 1, 0, 1, 0, 1, 1, 0, 0, 1, 1, 0, 1, 1, 1, 0, 1, 1, 0, 1, 0, 0, 1, 0, 0, 1, 1, 1, 0, 0, 0, 1, 0, 1, 1, 1, 1, 0, 0, 1, 0, 1, 0, 0] may be obtained through recursion based on the initial value and the feedback function.

For another example, the primitive polynomial *x*⁶ *+ x*¹ *+* 1 and the initial value [1, 0, 1, 0, 1, 0] are used as an example. In this case, a feedback function f(a₁, a₂, ..., aₙ) = a₁ ⊕a₆ may be obtained, and then, a corresponding m-sequence [1, 0, 1, 0, 1, 0, 1, 1, 0, 0, 1, 1, 0, 1, 1, 1, 0, 1, 1, 0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1] may be obtained through recursion based on the initial value and the feedback function.

Based on the foregoing example, a corresponding m-sequence obtained by combining another primitive polynomial and initial value in Table 22 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 23:

**Table 23**

| Index | Primitive polynomial | Initial value |
|---|---|---|
| 1 | *x*⁷ + *x*¹ *+* 1 | [1, 1, 1, 0, 1, 0, 1] |
| 2 | *x*⁷ *+ x*¹ *+* 1 | [0, 1, 1, 0, 0, 1, 1] |
| 3 | *x*⁷ *+ x*¹ *+* 1 | [0, 0, 1, 1, 0, 0, 1] |
| 4 | *x*⁷ *+ x*¹ *+* 1 | [0, 0, 0, 0, 0, 0, 1] |
| 5 | *x*⁷ *+ x*¹ *+* 1 | [1, 1, 0, 0, 1, 0, 1] |
| 6 | *x*⁷ *+ x*¹ *+* 1 | [0, 1, 1, 1, 0, 1, 0] |
| 7 | *x*⁷ *+ x*¹ *+* 1 | [1, 1, 0, 0, 1, 1, 1] |
| 8 | *x*⁷ *+ x*¹ *+* 1 | 1, 0, 1, 0, 1, 0, 1] |
| 9 | *x*⁷ + *x*¹ + 1 | [0, 1, 0, 0, 0, 1, 1] |
| 10 | *x*⁷ + *x*¹ + 1 | [1, 1, 0, 1, 1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*¹ + 1 may further be converted into a binary number 10000011, and then may be represented by a decimal number 131.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*¹ + 1 and the initial value [1, 1, 1, 0, 1, 0, 0] are used as an example. In this case, a feedback function f(a₁, a₂, ..., aₙ) = a₁⊕a₇ may be obtained, and then, a corresponding m-sequence [1, 1, 1, 0, 1, 0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0, 1, 0, 1, 0, 0, 1, 1, 0, 0, 1, 1, 1, 0] may be obtained through recursion based on the initial value and the feedback function.

For another example, the primitive polynomial *x*⁷ + *x*¹ + 1 and the initial value [0, 1, 1, 0, 0, 1, 1] are used as an example. In this case, a feedback function f(a₁, a₂, ..., aₙ) = a₁ ⊕a₇ may be obtained, and then, a corresponding m-sequence [0, 1, 1, 0, 0, 1, 1, 1, 0, 1, 1, 1, 0, 1, 0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0, 1, 0, 1, 0] may be obtained through recursion based on the initial value and the feedback function.

Based on the foregoing example, a corresponding m-sequence obtained by combining another primitive polynomial and initial value in Table 23 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 24:

**Table 24**

| Index | Primitive polynomial | Initial value |
|---|---|---|
| 1 | *x*⁸ *+ x*⁴ *+ x*³ *+ x*² *+* 1 | [1, 0, 1, 0, 1, 0, 1, 1] |
| 2 | *x*⁸ *+ x*⁴ *+ x*³ *+ x*² *+* 1 | [1, 1, 0, 1, 0, 1, 0, 1] |
| 3 | *x*⁸ *+ x*⁴ *+ x*³ *+ x*² + 1 | [1, 0, 0, 1, 1, 0, 0, 0] |
| 4 | *x*⁸ *+ x*⁴ *+ x*³ *+ x*² + 1 | [0, 1, 0, 1, 0, 1, 1, 1] |
| 5 | *x*⁸ *+ x*⁴ *+ x*³ *+ x*² + 1 | [0, 1, 1, 1, 0, 0, 1, 1] |
| 6 | *x*⁸ + *x*⁴ *+ x*³ *+ x*² + 1 | [1, 0, 0, 1, 1, 1, 0, 0] |
| 7 | *x*⁸ *+ x*⁴ *+ x*³ *+ x*² + 1 | [1, 1, 1, 0, 0, 0, 1, 0] |
| 8 | *x*⁸ + *x*⁴ *+ x*³ *+ x*² + 1 | [0, 0, 1, 1, 1, 1, 0, 0] |
| 9 | *x*⁸ *+ x*⁴ *+ x*³ *+ x*² + 1 | [1, 1, 1, 0, 0, 1, 1, 1] |
| 10 | *x*⁸ *+ x*⁴ *+ x*³ *+ x*² + 1 | [0, 1, 0, 1, 1, 1, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ *+ x*⁴ *+ x*³ *+ x*² *+* 1 may further be converted into a binary number 100011101, and then may be represented by a decimal number 285.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸ *+ x*⁴ *+ x*³ *+ x*² + 1 and the initial value [1, 0, 1, 0, 1, 0, 1, 1] are used as an example. In this case, a feedback function f(a₁, a₂, ..., aₙ) = a₂⊕a₃⊕a₄⊕a₈ may be obtained, and then, a corresponding m-sequence [1, 0, 1, 0, 1, 0, 1, 1, 1, 0, 0, 0, 0, 0, 1, 1, 0, 0, 0, 1, 0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1, 0, 0, 0, 1, 0, 0, 1, 0, 1, 1, 0, 1, 0, 0, 0, 1, 1, 0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1, 1, 1, 0] may be obtained through recursion based on the initial value and the feedback function.

For another example, the primitive polynomial *x*⁸ *+ x*⁴ *+ x*³ *+ x*² + 1 and the initial value [1, 1, 0, 1, 0, 1, 0, 1] are used as an example. In this case, a feedback function f(a₁, a₂, ..., aₙ) = a₂⊕a₃⊕a₄⊕a₈ may be obtained, and then, a corresponding m-sequence [1, 1, 0, 1, 0, 1, 0, 1, 0, 1, 1, 1, 0, 0, 0, 0, 0, 1, 1, 0, 0, 0, 1, 0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1, 0, 0, 0, 1, 0, 0, 1, 0, 1, 1, 0, 1, 0, 0, 0, 1, 1, 0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1] may be obtained through recursion based on the initial value and the feedback function.

Based on the foregoing example, a corresponding m-sequence obtained by combining another primitive polynomial and initial value in Table 24 is not described herein again. A corresponding m-sequence may be determined in the foregoing manner based on the primitive polynomial and the corresponding initial value.

Because the m-sequence is generated by using the cyclic shift register, a quantity of additions required for generating each new bit is a quantity of taps minus 1. Therefore, in this embodiment of this application, with reference to the foregoing example, when the m-sequence of the corresponding length is generated based on the primitive polynomial with the minimum quantity of taps, the complexity of generating the m-sequence of the corresponding length can be minimized. For example, an m-sequence with a length of 127 is generated. In this case, a maximum quantity of taps is 7, and a minimum quantity of taps is 3. Therefore, when the m-sequence is generated based on the primitive polynomial with the minimum quantity of taps, calculation complexity can be reduced by 57%.

In this embodiment of this application, a sequence obtained by adding 0 to a first location of the m-sequence shown in Table 13 to Table 24 is used as a preamble sequence. Because the corresponding m-sequence has good time-frequency two-dimensional correlation detection performance, a maximum sidelobe of time-frequency two-dimensional correlation of the preamble sequence during sliding correlation can be reduced.

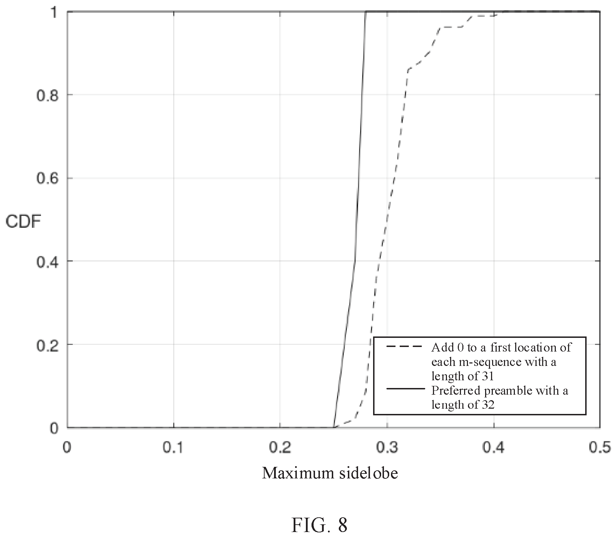

For example, a corresponding preamble sequence with a length of 32 is generated by adding 0 to a first location of each m-sequence with a length of 31 in Table 15 and Table 21. In this case, FIG. 8 shows comparison between a cumulative distribution function (Cumulative Distribution Function, CDF) of maximum sidelobe distribution of time-frequency two-dimensional correlation of a sequence obtained by adding 0 to a first location of each m-sequence with a length of 31 and a cumulative distribution function of maximum sidelobe distribution of time-frequency two-dimensional correlation of the sequence obtained by adding 0 to the first location of each m-sequence with the length of 31 in Table 15 and Table 21 provided in this application. It can be learned from FIG. 8 that a maximum value of a maximum sidelobe of time-frequency two-dimensional correlation of the preamble sequence (namely, a preferred preamble with a length of 32) obtained by adding 0 to the first location of each m-sequence in Table 15 and Table 21 is 0.28 (a value obtained through normalization based on a maximum peak value), and a maximum value of a maximum sidelobe of a time-frequency two-dimensional correlation value of the sequence obtained by adding 0 to the first location of each m-sequence with the length of 31 is 0.4. The value of the maximum sidelobe of the time-frequency two-dimensional correlation value is reduced by 30%.

S702: The terminal device modulates the first sequence to obtain the first signal.

S703: The terminal device sends the first signal.

S704: The network device determines a location of the preamble sequence in the first signal.

That the network device determines the location of the preamble sequence in the first signal is that a network signal receives the first signal in a time window in which a preamble signal may arrive, and generates a local preamble signal for sliding correlation with the received signal. A location with a largest correlation value is determined as a timing location of the preamble sequence (namely, a start location or end location of the preamble sequence in the first signal).

S705: The network device obtains a data window based on the location of the preamble, and demodulates a data signal in the data window.

Because uplink data is scheduled by the network device side, the network device side has learned of a length of a data sequence, and can obtain a start location and an end location of the data window based on the timing location of the preamble sequence and the length of the data sequence, and then demodulate the data signal in the data window, to obtain data transmitted in the first signal.

According to the method shown in FIG. 7, because the corresponding sequence obtained by adding 0 to the first location of the m-sequence having good time-frequency two-dimensional correlation detection performance is used as the preamble, a maximum sidelobe of a correlation value during sliding correlation performed on signals by the network device based on the preamble can be reduced. This improves accuracy of the timing location that is of the preamble and that is determined based on the preamble, and improves signal synchronization performance.

In another implementation of this embodiment of this application, in the signal processing method, a sequence obtained by adding 1 to the first location of the m-sequence may be used as the second sequence, and the second sequence or the equivalent sequence of the second sequence is used as the preamble, to meet a rate matching requirement for a length of the preamble sequence.

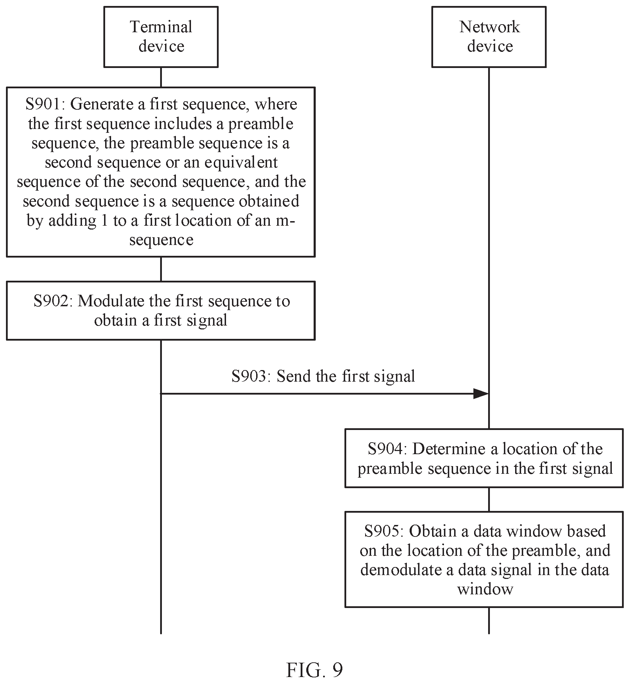

Specifically, as shown in FIG. 9, a signal processing method provided in an embodiment of this application may include S901 to S905 below.

S901: A terminal device generates a first sequence, where the first sequence includes a preamble sequence, the preamble sequence is a second sequence or an equivalent sequence of the second sequence, and the second sequence is a sequence obtained by adding 1 to a first location of an m-sequence.

It should be noted that an equivalent sequence is obtained by performing bitwise negation and/or reversing on a sequence. To be specific, the equivalent sequence of the second sequence may be a sequence obtained by performing bitwise negation on the second sequence, or performing reversing on the second sequence, or performing reversing on the second sequence and then performing bitwise negation, or performing bitwise negation on the second sequence and then performing reversing.

For example, the second sequence [S] = [s₀, s₁,...,s_{N-1}] and sᵢ ∈ {0,1}. In this case, the equivalent sequence of the sequence may be a negated sequence [1 - s₀, 1 - s₁,...,1 - S_{N-1}] obtained by performing negation on the sequence.

For another example, the second sequence [S] = [s₀, s₁,...,s_{N-1}] and sᵢ ∈ {1,-1}. In this case, the equivalent sequence of the sequence may be a negated sequence [-s₀, -s₁,..., -s_{N-1}] obtained by performing negation on the sequence.

For another example, the second sequence [S] = [s₀, s₁,..., S_{N-1}]. In this case, the equivalent sequence of the sequence may be a reversed sequence [s_{N-1}, s_{N-2},...,s₀] obtained by performing reversing on the sequence.

For another example, the second sequence [S] = [s₀, s₁,...,s_{N-1}] and sᵢ ∈ {0,1}. In this case, the equivalent sequence of the sequence may be a sequence [1 - s_{N-1}, 1 - s_{N-2},...,1 - s₀] obtained by performing reversing and negation on the sequence.

The first sequence may further include a sequence of data that needs to be transmitted, and the data sequence may be located after the preamble sequence. In this way, a network device determines a location of the preamble sequence after performing correlation value comparison based on the preamble sequence, determines a location of the data sequence, and further demodulates a first signal to obtain the data sequence in the first sequence.

In an example, the m-sequence may be one of sequences in a first sequence set, or one of sequences in a second sequence set, or one of sequences in a third sequence set, or one of sequences in a fourth sequence set, or one of sequences in a fifth sequence set, or one of sequences in a sixth sequence set. In addition, each of different sequence sets correspondingly includes a sequence of one length (that is, a quantity of elements included in the sequence). For example, a sequence included in the first sequence set is a sequence with a length of 7, a sequence included in the second sequence set is a sequence with a length of 15, a sequence included in the third sequence set is a sequence with a length of 31, a sequence included in the fourth sequence set is a sequence with a length of 63, a sequence included in the fifth sequence set is a sequence with a length of 127, and a sequence included in the sixth sequence set is a sequence with a length of 255.

Optionally, in actual application, at least two of the first sequence set, the second sequence set, the third sequence set, the fourth sequence set, the fifth sequence set, and the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one of the foregoing sequence sets may alternatively be preconfigured, to determine a preamble of a corresponding length based on only a sequence in the sequence set for generating the first sequence. Correspondingly, the m-sequence is only a sequence in the configured sequence sets.

Certainly, in actual application, at least two of a sequence in the first sequence set, a sequence in the second sequence set, a sequence in the third sequence set, a sequence in the fourth sequence set, a sequence in the fifth sequence set, and a sequence in the sixth sequence set may be respectively preconfigured for the terminal device and the network device, so that the network device can schedule the terminal device, to select a sequence of a corresponding length based on a requirement to determine a preamble sequence of a required length for generating the first sequence. Certainly, only one sequence in the foregoing sequence sets may alternatively be preconfigured, to determine a corresponding preamble based on only the sequence for generating the first sequence.

For example, the sequences in the first sequence set may include at least one m-sequence obtained by combining the following primitive polynomial and initial value in Table 25:

**Table 25**

| Index | Primitive polynomial | Initial value |
|---|---|---|
| 1 | *x*³ *+ x*¹ + 1 | [0, 1, 0] |
| 2 | *x*³ *+ x*² *+* 1 | [1, 1, 0] |
| 3 | *x*³ *+ x² +* 1 | [1, 1, 1] |
| 4 | *x*³ *+ x*¹ + 1 | [1, 1, 0] |
| 5 | *x*³ *+ x*² *+* 1 | [0, 0, 1] |
| 6 | *x*³ *+ x*¹ + 1 | [0, 0, 1] |
| 7 | *x*³ *+ x*¹ + 1 | [0, 1, 1] |
| 8 | *x*³ *+ x*² *+* 1 | [0, 1, 0] |
| 9 | *x*³ *+ x*² *+* 1 | [0, 1, 1] |
| 10 | *x*³ *+ x*² *+* 1 | [1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ *+ x*¹ *+* 1 may further be converted into a binary number 1011, and then may be represented by a decimal number 11. For another example, the primitive polynomial *x*³ *+ x*² *+* 1 may further be converted into a binary number 1101, and then may be represented by a decimal number 13.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 0] are used as an example. In this case, a feedback function f(a₁, a₂, ..., aₙ) = a₁⊕a₃ may be obtained, where ⊕ represents an exclusive OR operation; and then, a corresponding m-sequence [0, 1, 0, 0, 1, 1, 1] may be obtained through recursion based on the initial value and the feedback function.

For another example, the primitive polynomial *x*³ *+ x*² + 1 and the initial value [1, 1, 0] are used as an example. In this case, a feedback function f(a₁, a₂, ..., aₙ) = a₂⊕a₃ may be obtained, and then, a corresponding m-sequence [1, 1, 0, 0, 1, 0, 1] may be obtained through recursion based on the initial value and the feedback function.

Based on the foregoing example, a corresponding m-sequence obtained by combining another primitive polynomial and initial value in Table 25 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 26:

**Table 26**

| Index | Primitive polynomial | Initial value |
|---|---|---|
| 1 | *x*⁴ *+* x¹ *+* 1 | [0, 1, 0, 1] |
| 2 | *x*⁴ *+ x*³ *+* 1 | [1, 1, 1, 0] |
| 3 | *x*⁴ + *x*¹ + 1 | [0, 1, 0, 0] |
| 4 | *x*⁴ *+ x*³ *+* 1 | [1, 1, 1, 1] |
| 5 | *x*⁴ *+ x*³ *+* 1 | [1, 1, 0, 0] |
| 6 | *x*⁴ *+* x¹ *+* 1 | [1, 0, 1, 0] |
| 7 | *x*⁴ *+ x*¹ *+* 1 | [0, 1, 1, 1] |
| 8 | *x*⁴ *+ x*¹ + 1 | [1, 1, 1, 1] |
| 9 | *x*⁴ *+ x*³ *+* 1 | [0, 1, 1, 0] |
| 10 | *x*⁴ *+* x¹ *+* 1 | [1, 0, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19. For another example, the primitive polynomial *x*⁴ + *x*³ + 1 may further be converted into a binary number 11001, and then may be represented by a decimal number 25.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [0, 1, 0, 1] are used as an example. In this case, a feedback function f(a₁, a₂, ..., aₙ) = a₁⊕a₄ may be obtained, and then, a corresponding m-sequence [0, 1, 0, 1, 1, 0, 0, 1, 0, 0, 0, 1, 1, 1, 1] may be obtained through recursion based on the initial value and the feedback function.

For another example, the primitive polynomial *x*⁴ + *x*³ + 1 and the initial value [1, 1, 1, 1] are used as an example. In this case, a feedback function f(a₁, a₂, ..., aₙ) = a₃⊕a₄ may be obtained, and then, a corresponding m-sequence [1, 1, 1, 1, 0, 0, 0, 1, 0, 0, 1, 1, 0, 1] may be obtained through recursion based on the initial value and the feedback function.

Based on the foregoing example, a corresponding m-sequence obtained by combining another primitive polynomial and initial value in Table 26 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 27:

**Table 27**

| Index | Primitive polynomial | Initial value |
|---|---|---|
| 1 | *x*⁵ *+ x*³ *+ x*² *+ x*¹ *+* 1 | [0, 1, 0, 1, 0] |
| 2 | *x*⁵ *+ x*² + 1 | [0, 1, 0, 1, 1] |
| 3 | *x*⁵ *+ x*³ *+* 1 | [0, 0, 0, 0, 1] |
| 4 | *x*⁵ *+ x*³ *+ x*² *+ x*¹ *+* 1 | [1, 0, 0, 0, 1] |
| 5 | *x*⁵ *+ x*⁴ *+ x*³ *+ x*² *+* 1 | [1, 0, 1, 1, 1] |
| 6 | *x*⁵ *+ x*³ *+ x*² *+ x*¹ *+* 1 | [1, 1, 1, 1, 0] |
| 7 | *x*⁵ *+ x*⁴ *+ x*³ *+ x*² *+* 1 | [0, 0, 1, 0, 0] |
| 8 | *x*⁵ *+ x*³ *+ x*² *+ x*¹ *+* 1 | [1, 1, 0, 0, 0] |
| 9 | *x*⁵ *+ x*⁴ *+ x*³ *+ x*² *+* 1 | [0, 1, 1, 1, 1] |
| 10 | *x*⁵ *+ x*⁴ *+ x*² *+ x*¹ *+* 1 | [0, 0, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ *+ x*³ *+ x*² + *x*¹ *+* 1 may further be converted into a binary number 101111, and then may be represented by a decimal number 47. For another example, the primitive polynomial *x*⁵ *+ x*⁴ *+ x*³ *+ x*² *+* 1 may further be converted into a binary number 111101, and then may be represented by a decimal number 61. For another example, the primitive polynomial *x*⁵ *+ x*² *+* 1 may further be converted into a binary number 100101, and then may be represented by a decimal number 37. For another example, the primitive polynomial *x*⁵ *+ x*³ *+* 1 may further be converted into a binary number 101001, and then may be represented by a decimal number 41.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ *+ x*³ *+ x*² *+ x*¹ *+* 1 and the initial value [0, 1, 0, 1, 0] are used as an example. In this case, a feedback function f(a₁, a₂, ..., aₙ) = a₁⊕a₂⊕a₃⊕a₅ may be obtained, and then, a corresponding m-sequence [0, 1, 0, 1, 0, 1, 1, 0, 1, 0, 0, 0, 0, 1, 1, 0, 0, 1, 0, 0, 1, 1, 1, 1, 1, 0, 1, 1, 1, 0, 0] may be obtained through recursion based on the initial value and the feedback function.

For another example, the primitive polynomial *x*⁵ *+ x*⁴ *+ x*³ *+ x*² + 1 and the initial value [1, 0, 1, 1, 1] are used as an example. In this case, a feedback function f(a₁, a₂, ..., aₙ) = a₂⊕a₃⊕a₄⊕a₅ may be obtained, and then, a corresponding m-sequence [1, 0, 1, 1, 1, 1, 1, 0, 0, 1, 0, 0, 1, 1, 0, 0, 0, 0, 1, 0, 1, 1, 0, 1, 0, 1, 0, 0, 0, 1, 1] may be obtained through recursion based on the initial value and the feedback function.

Based on the foregoing example, a corresponding m-sequence obtained by combining another primitive polynomial and initial value in Table 27 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 28:

**Table 28**

| Index | Primitive polynomial | Initial value |
|---|---|---|
| 1 | *x*⁶ *+ x*⁵ + 1 | [0, 1, 1, 0, 1, 0] |
| 2 | *x*⁶ + *x*¹ *+* 1 | [1, 1, 0, 1, 1, 0] |
| 3 | *x*⁶ *+ x*⁵ *+* 1 | [0, 1, 1, 0, 0, 1] |
| 4 | *x*⁶ + *x*¹ *+* 1 | [0, 1, 0, 1, 0, 1] |
| 5 | *x*⁶ + *x*¹ *+* 1 | [0, 1, 1, 0, 1, 0] |
| 6 | *x*⁶ *+ x*⁵ *+* 1 | [1, 1, 0, 1, 1, 0] |
| 7 | *x*⁶ *+ x*⁵ + 1 | [1, 1, 1, 1, 1, 0] |
| 8 | *x*⁶ *+ x*⁵ + 1 | [1, 1, 1, 1, 1, 1] |
| 9 | *x*⁶ *+ x*⁵ *+* 1 | [0, 1, 0, 1, 0, 0] |
| 10 | *x*⁶ *+ x*⁵ *+ x*² + *x*¹ *+* 1 | [0, 1, 0, 1, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ *+ x*⁵ *+* 1 may further be converted into a binary number 1100001, and then may be represented by a decimal number 97. For another example, the primitive polynomial *x*⁶ + *x*¹ *+* 1 may further be converted into a binary number 1000011, and then may be represented by a decimal number 67. For another example, the primitive polynomial *x*⁶ *+ x*⁵ *+ x*² + *x*¹ *+* 1 may further be converted into a binary number 1100111, and then may be represented by a decimal number 103.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ *+ x*⁵ *+* 1 and the initial value [0, 1, 1, 0, 1, 0] are used as an example. In this case, a feedback function f(a₁, a₂, ..., aₙ) = a₅⊕a₆ may be obtained, and then, a corresponding m-sequence [0, 1, 1, 0, 1, 0, 1, 0, 1, 1, 1, 1, 1, 1, 0, 0, 0, 0, 0, 1, 0, 0, 0, 0, 1, 1, 0, 0, 0, 1, 0, 1, 0, 0, 1, 1, 1, 1, 0, 1, 0, 0, 0, 1, 1, 1, 0, 0, 1, 0, 0, 1, 0, 1, 1, 0, 1, 1, 1, 0, 1, 1, 0] may be obtained through recursion based on the initial value and the feedback function.

For another example, the primitive polynomial *x*⁶ *+ x*⁵ *+ x*² + 1 and the initial value [0, 1, 0, 1, 0, 0] are used as an example. In this case, a feedback function f(a₁, a₂, ..., aₙ) = a₂⊕a₅⊕a₆ may be obtained, and then, a corresponding m-sequence [0, 1, 0, 1, 0, 0, 1, 1, 0, 0, 0, 1, 0, 0, 0, 0, 1, 1, 1, 1, 1, 0, 1, 0, 1, 0, 0, 1, 1, 0, 0, 0, 1, 0, 0, 0, 0, 1, 1, 1, 1, 1, 0, 1, 0, 1, 0, 0, 1, 1, 0, 0, 0, 1, 0, 0, 0, 0, 1, 1, 1, 1, 1] may be obtained through recursion based on the initial value and the feedback function.

Based on the foregoing example, a corresponding m-sequence obtained by combining another primitive polynomial and initial value in Table 28 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 29:

**Table 29**

| Index | Primitive polynomial | Initial value |
|---|---|---|
| 1 | *x*⁷ *+ x*⁶ *+* 1 | [1, 1, 1, 0, 0, 1, 1] |
| 2 | *x*⁷ *+ x*³ *+ x*² *+ x*¹ + 1 | [1, 1, 1, 0, 0, 1, 0] |
| 3 | *x*⁷ *+ x*⁶ *+ x*⁵ *+ x*⁴ *+* 1 | [0, 0, 1, 0, 1, 0, 0] |
| 4 | *x*⁷ *+ x*⁶ *+ x*⁵ *+ x*⁴ *+ x*² *+ x*¹ *+* 1 | [1, 1, 1, 1, 0, 0, 0] |
| 5 | *x*⁷ *+ x*⁶ *+ x*⁵ *+ x*³ *+ x*² + *x*¹ *+* 1 | [0, 0, 0, 1, 0, 1, 1] |
| 6 | *x*⁷ *+ x*⁶ *+ x*⁵ *+ x*² *+* 1 | [0, 0, 1, 0, 0, 1, 1] |
| 7 | *x*⁷ *+ x*⁵ *+ x*² + *x*¹ *+* 1 | [0, 0, 0, 1, 0, 1, 0] |
| 8 | *x⁷ + x*⁴ *+* 1 | [0, 0, 1, 1, 0, 1, 1] |
| 9 | *x*⁷ *+ x*⁶ *+ x*⁵ *+ x*³ *+ x*² + *x*¹ *+* 1 | [0, 1, 1, 0, 1, 0, 1] |
| 10 | *x*⁷ *+ x*⁶ *+ x*⁵ *+ x*⁴ *+ x*² + *x*¹ *+* 1 | [1, 1, 0, 0, 1, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*⁶ + 1 may further be converted into a binary number 11000001, and then may be represented by a decimal number 193. For another example, the primitive polynomial *x*⁷ *+ x*³ *+ x*² *+ x*¹ *+ 1* may further be converted into a binary number 10001111, and then may be represented by a decimal number 143. For another example, the primitive polynomial *x*⁷ *+ x*⁶ *+ x*⁵ *+ x*⁴ *+* 1 may further be converted into a binary number 11110001, and then may be represented by a decimal number 241.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*⁶ + 1 and the initial value [1, 1, 1, 0, 0, 1, 1] are used as an example. In this case, a feedback function f(a₁, a₂, ... , aₙ) = a₆⊕a₇ may be obtained, and then, a corresponding m-sequence [1, 1, 1, 0, 0, 1, 1, 0, 0, 1, 0, 1, 0, 1, 0, 1, 1, 1, 1, 1, 1, 1, 0, 0, 0, 0, 0, 0, 1, 0, 0, 0, 0, 0, 1, 1, 0, 0, 0, 0, 1, 0, 1, 0, 0, 0, 1, 1, 1, 1, 0, 0, 1, 0, 0, 0, 1, 0, 1, 1, 0, 0, 1, 1, 1, 0, 1, 0, 1, 0, 0, 1, 1, 1, 1, 1, 0, 1, 0, 0, 0, 0, 1, 1, 1, 0, 0, 0, 1, 0, 0, 1, 0, 0, 1, 1, 0, 1, 1, 0, 1, 0, 1, 1, 0, 1, 1, 1, 1, 0, 1, 1, 0, 0, 0, 1, 1, 0, 1, 0, 0, 1, 0, 1, 1, 1, 0] may be obtained through recursion based on the initial value and the feedback function.

For another example, the primitive polynomial *x*⁷ *+ x*⁶ *+ x*⁵ *+ x*⁴ *+* 1 and the initial value [0, 0, 1, 0, 1, 0, 0] are used as an example. In this case, a feedback function f(a₁, a₂, ... , aₙ) = a₄⊕a₅⊕a₆⊕a₇ may be obtained, and then, a corresponding m-sequence [1, 1, 1, 0, 0, 1, 1, 1, 0, 0, 0, 1, 1, 0, 1, 1, 0, 0, 1, 1, 0, 0, 0, 0, 0, 0, 1, 0, 0, 0, 1, 1, 1, 1, 1, 0, 1, 0, 0, 1, 1, 0, 1, 0, 0, 0, 1, 0, 1, 1, 1, 1, 0, 1, 1, 0, 1, 1, 1, 0, 1, 1, 1, 1, 1, 1, 1, 0, 0, 0, 0, 1, 0, 1, 0, 1, 1, 0, 0, 0, 1, 0, 0, 1, 1, 1, 1, 0, 0, 1, 0, 1, 0, 0, 1, 0, 0, 1, 0, 1, 1, 0, 1, 0, 1, 0, 1, 0, 0, 0, 0, 0, 1, 1, 0, 0, 1, 0, 0, 0, 0, 1, 1, 1, 0, 1, 0] may be obtained through recursion based on the initial value and the feedback function.

Based on the foregoing example, a corresponding m-sequence obtained by combining another primitive polynomial and initial value in Table 29 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 30:

**Table 30**

| Index | Primitive polynomial | Initial value |
|---|---|---|
| 1 | *x*⁸ + *x*⁷ + *x*⁶ + *x*³ + *x*² + *x*¹ + 1 | [0, 1, 0, 0, 1, 0, 1, 1] |
| 2 | *x*⁸ + *x*⁵ + *x*³ + *x*¹ + 1 | [0, 0, 1, 0, 1, 0, 1, 0] |
| 3 | *x*⁸ + *x*⁷ *+ x*³ + *x*³ + 1 | [1, 0, 0, 0, 0, 1, 1, 0] |
| 4 | *x⁸* + *x*⁷ + *x*⁶ + *x*³ + *x*² + *x*¹ + 1 | [0, 1, 0, 1, 1, 0, 0, 1] |
| 5 | *x*⁸ + *x*⁷ + *x⁶* + *x*⁵ + *x*² + *x*¹ + 1 | [1, 0, 0, 0, 0, 1, 1, 0] |
| 6 | *x*⁸ *+ x*⁶ *+ x*⁵ + *x*⁴ *+* 1 | [0, 1, 0, 1, 0, 1, 1, 1] |
| 7 | *x*⁸ + *x*⁴ + *x*³ + *x*² + 1 | [0, 1, 1, 1, 0, 0, 0, 0] |
| 8 | *x*⁸ + *x*⁷ + *x*² + *x*¹ + 1 | [1, 0, 1, 0, 0, 1, 1, 0] |
| 9 | *x*⁸ *+ x*⁷ + *x*⁶ + *x*¹ + 1 | [1, 0, 1, 0, 0, 0, 1, 1] |
| 10 | *x*⁸ + *x*⁶ + *x*⁵ + *x*² + 1 | [1, 1, 0, 0, 0, 0, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ *+ x*⁵ *+ x*³ *+ x*¹ *+* 1 may further be converted into a binary number 100101011, and then may be represented by a decimal number 299. For another example, the primitive polynomial *x*⁸ + *x*⁷ + *x*⁶ + *x*¹ *+* 1 may further be converted into a binary number 111000011, and then may be represented by a decimal number 451.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸ *+ x*⁵ *+ x*³ *+ x*¹ *+* 1 and the initial value [0, 0, 1, 0, 1, 0, 1, 0] are used as an example. In this case, a feedback function f(a₁, a₂, ... , aₙ) = a₁⊕a₃⊕a₅⊕a₈ may be obtained, and then, a corresponding m-sequence [0, 0, 1, 0, 1, 0, 1, 0, 0, 0, 1, 0, 1, 0, 1, 1, 1, 1, 1, 1, 0, 0, 1, 1, 1, 1, 1, 0, 0, 0, 0, 0, 1, 0, 1, 0, 0, 0, 0, 1, 0, 0, 0, 0, 1, 1, 1, 1, 0, 0, 0, 1, 1, 0, 0, 0, 1, 0, 0, 0, 1, 0, 0, 1, 0, 1, 0, 0, 1, 1, 0, 0, 1, 1, 0, 1, 1, 1, 1, 0, 1, 0, 1, 0, 1, 0, 1, 1, 0, 0, 0, 1, 1, 1, 1, 1, 1, 1, 1, 0, 1, 0, 0, 1, 0, 0, 0, 0, 0, 0, 0, 1, 1, 1, 0, 1, 1, 0, 0, 0, 0, 0, 0, 1, 0, 0, 1, 1, 0, 1, 0, 0, 0, 0, 0, 1, 1, 0, 1, 0, 1, 1, 1, 0, 0, 0, 0, 1, 0, 1, 1, 1, 1, 0, 0, 1, 0, 0, 0, 1, 1, 1, 0, 0, 0, 1, 0, 1, 1, 0, 0, 1, 0, 0, 1, 0, 0, 1, 1, 1, 0, 1, 0, 1, 1, 0, 1, 1, 0, 1, 0, 0, 1, 1, 1, 1, 0, 1, 1, 0, 1, 1, 1, 0, 1, 0, 0, 0, 1, 1, 0, 1, 1, 0, 0, 1, 1, 1, 0, 0, 1, 0, 1, 1, 0, 1, 0, 1, 0, 0, 1, 0, 1, 1, 1, 0, 1, 1, 1, 1, 1, 0, 1, 1, 1, 0, 0, 1, 1, 0, 0, 0, 0, 1, 1] may be obtained through recursion based on the initial value and the feedback function.

For another example, the primitive polynomial *x*⁸ + *x*⁷ + *x*⁶ *+ x*¹ *+* 1 and the initial value [1, 0, 1, 0, 0, 0, 1, 1] are used as an example. In this case, a feedback function f(a₁, a₂, ... , aₙ) = a₁⊕a₆⊕a₇⊕a₈ may be obtained, and then, a corresponding m-sequence [1, 0, 1, 0, 0, 0, 1, 1, 1, 0, 1, 1, 0, 0, 1, 1, 1, 1, 1, 0, 1, 1, 0, 1, 0, 0, 0, 0, 0, 0, 1, 0, 0, 0, 0, 0, 1, 0, 1, 1, 1, 1, 0, 1, 1, 1, 0, 1, 1, 1, 1, 0, 0, 0, 0, 1, 0, 0, 1, 1, 1, 0, 1, 0, 1, 1, 0, 0, 0, 1, 1, 1, 1, 0, 0, 1, 1, 0, 1, 1, 0, 1, 1, 1, 1, 1, 1, 1, 1, 0, 1, 0, 1, 0, 1, 1, 1, 0, 0, 1, 1, 1, 0, 0, 1, 0, 0, 1, 1, 0, 1, 0, 1, 0, 0, 0, 0, 1, 1, 0, 1, 1, 1, 0, 0, 0, 0, 0, 1, 1, 0, 0, 0, 0, 1, 1, 1, 0, 0, 0, 1, 1, 0, 0, 1, 1, 0, 0, 0, 1, 0, 0, 0, 1, 1, 0, 1, 0, 0, 1, 1, 1, 1, 0, 1, 0, 0, 1, 0, 0, 0, 1, 0, 1, 0, 1, 1, 0, 1, 1, 0, 0, 0, 0, 0, 0, 0, 1, 1, 1, 1, 1, 1, 0, 0, 1, 0, 1, 0, 0, 1, 0, 1, 1, 0, 1, 0, 1, 1, 1, 1, 1, 0, 0, 0, 1, 0, 1, 1, 0, 0, 1, 0, 0, 0, 0, 1, 0, 1, 0, 0, 0, 1, 0, 0, 1, 0, 0, 1, 0, 1, 0, 1, 0, 1, 0, 0, 1, 1, 0, 0, 1, 0, 1, 1] may be obtained through recursion based on the initial value and the feedback function.

Based on the foregoing example, a corresponding m-sequence obtained by combining another primitive polynomial and initial value in Table 30 is not described herein again. A corresponding m-sequence may be determined in the foregoing manner based on the primitive polynomial and the corresponding initial value.

Optionally, for each primitive polynomial, there is an m-sequence with a small maximum sidelobe of a correlation value and an m-sequence with a large maximum sidelobe of a correlation value during sliding correlation. Therefore, complexity of generating the m-sequence may be comprehensively considered. In this embodiment of this application, an m-sequence of a corresponding length is generated based on a primitive polynomial with a minimum quantity of taps.

For example, the sequences in the first sequence set may include at least one m-sequence obtained by combining the following primitive polynomial and initial value in Table 31:

**Table 31**

| Index | Primitive polynomial | Initial value |
|---|---|---|
| 1 | *x*³ + *x*¹ + 1 | [0, 1, 0] |
| 2 | *x*³ + *x*¹ + 1 | [1, 1, 0] |
| 3 | *x*³ + *x*¹ + 1 | [0, 0, 1] |
| 4 | *x*³ + *x*¹ *+* 1 | [0, 1, 1] |
| 5 | *x*³ + *x*¹ + 1 | [1, 0, 0] |
| 6 | *x*³ + *x*¹ + 1 | [1, 1, 1] |
| 7 | *x*³ + *x*¹ + 1 | [1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*³ *+ x*¹ *+* 1 may further be converted into a binary number 1011, and then may be represented by a decimal number 11.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*³ *+ x*¹ *+* 1 and the initial value [0, 1, 0] are used as an example. In this case, a feedback function f(a₁, a₂, ... , aₙ) = a₁⊕a₃ may be obtained, and then, a corresponding m-sequence [0, 1, 0, 0, 1, 1, 1] may be obtained through recursion based on the initial value and the feedback function.

For another example, the primitive polynomial *x*³ *+ x*¹ + 1 and the initial value [1, 1, 0] are used as an example. In this case, a feedback function f(a₁, a₂, ... , aₙ) = a₁⊕a₃ may be obtained, and then, a corresponding m-sequence [1, 1, 0, 1, 0, 0, 1] may be obtained through recursion based on the initial value and the feedback function.

Based on the foregoing example, a corresponding m-sequence obtained by combining another primitive polynomial and initial value in Table 31 is not described herein again. A corresponding m-sequence may be determined in the foregoing manner based on the primitive polynomial and the corresponding initial value.

For example, the sequences in the second sequence set may include at least one m-sequence obtained by combining the following primitive polynomial and initial value in Table 32:

**Table 32**

| Index | Primitive polynomial | Initial value |
|---|---|---|
| 1 | *x*⁴ + *x*¹ + 1 | [0, 1, 0, 1] |
| 2 | *x*⁴ + *x*¹ + 1 | [0, 1, 0, 0] |
| 3 | *x*⁴ + *x*¹ + 1 | [1, 0, 1, 0] |
| 4 | *x*⁴ + *x*¹ *+* 1 | [0, 1, 1, 1] |
| 5 | *x*⁴ + *x*¹ + 1 | [1, 1, 1, 1] |
| 6 | *x*⁴ + *x*¹ + 1 | [1, 0, 0, 1] |
| 7 | *x*⁴ + *x*¹ + 1 | [0, 0, 1, 0] |
| 8 | *x*⁴ + *x*¹ *+* 1 | [1, 0, 1, 1] |
| 9 | *x*⁴ + *x*¹ + 1 | [0, 1, 1, 0] |
| 10 | *x*⁴ + *x*¹ + 1 | [1, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁴ + *x*¹ + 1 may further be converted into a binary number 10011, and then may be represented by a decimal number 19.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁴ + *x*¹ + 1 and the initial value [0, 1, 0, 1] are used as an example. In this case, a feedback function f(a₁, a₂, ... , aₙ) = a₁⊕a₄ may be obtained, and then, a corresponding m-sequence [0, 1, 0, 1, 1, 0, 0, 1, 0, 0, 0, 1, 1, 1, 1] may be obtained through recursion based on the initial value and the feedback function.

For another example, the primitive polynomial *x*⁴ + *x*¹ + 1 and the initial value [0, 1, 0, 0] are used as an example. In this case, a feedback function f(a₁, a₂, ... , aₙ) = a₁⊕a₄ may be obtained, and then, a corresponding m-sequence [0, 1, 0, 0, 0, 1, 1, 1, 1, 0, 1, 0, 1, 1, 0] may be obtained through recursion based on the initial value and the feedback function.

Based on the foregoing example, a corresponding m-sequence obtained by combining another primitive polynomial and initial value in Table 32 is not described herein again. A corresponding m-sequence may be determined in the foregoing manner based on the primitive polynomial and the corresponding initial value.

For example, the sequences in the third sequence set may include at least one m-sequence obtained by combining the following primitive polynomial and initial value in Table 33:

**Table 33**

| Index | Primitive polynomial | Initial value |
|---|---|---|
| 1 | *x*⁵ + *x*² + 1 | [0, 1, 0, 1, 1] |
| 2 | *x*⁵ + *x*² + 1 | [1, 1, 1, 0, 0] |
| 3 | *x*⁵ + *x*² + 1 | [0, 1, 0, 1, 0] |
| 4 | *x*⁵ + *x*² + 1 | [1, 0, 1, 1, 0] |

| Index | Primitive polynomial | Initial value |
|---|---|---|
| 5 | *x*⁵ + *x*² *+* 1 | [1, 1, 0, 1, 1] |
| 6 | *x*⁵ + *x*² + 1 | [1, 0, 0, 1, 1] |
| 7 | *x*⁵ + *x*² + 1 | [0, 1, 1, 0, 0] |
| 8 | *x*⁵ + *x*² *+* 1 | [1, 0, 1, 0, 0] |
| 9 | *x*⁵ + *x*² *+* 1 | [0, 0, 1, 1, 0] |
| 10 | *x*⁵ + *x*² + 1 | [0, 1, 1, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁵ + *x*² *+* 1 may further be converted into a binary number 100101, and then may be represented by a decimal number 37.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁵ + *x*² *+* 1 and the initial value [0, 1, 0, 1, 1] are used as an example. In this case, a feedback function f(a₁, a₂, ... , aₙ) = a₂⊕a₅ may be obtained, and then, a corresponding m-sequence [0, 1, 0, 1, 1, 1, 0, 1, 1, 0, 0, 0, 1, 1, 1, 1, 1, 0, 0, 1, 1, 0, 1, 0, 0, 1, 0, 0, 0, 0, 1] may be obtained through recursion based on the initial value and the feedback function.

For another example, the primitive polynomial *x*⁵ + *x*² + 1 and the initial value [1, 1, 1, 0, 0] are used as an example. In this case, a feedback function f(a₁, a₂, ... , aₙ) = a₂⊕a₅ may be obtained, and then, a corresponding m-sequence [1, 1, 1, 0, 0, 1, 1, 0, 1, 0, 0, 1, 0, 0, 0, 0, 1, 0, 1, 0, 1, 1, 1, 0, 1, 1, 0, 0, 0, 1, 1] may be obtained through recursion based on the initial value and the feedback function.

Based on the foregoing example, a corresponding m-sequence obtained by combining another primitive polynomial and initial value in Table 33 is not described herein again. A corresponding m-sequence may be determined in the foregoing manner based on the primitive polynomial and the corresponding initial value.

For example, the sequences in the fourth sequence set may include at least one m-sequence obtained by combining the following primitive polynomial and initial value in Table 34:

**Table 34**

| Index | Primitive polynomial | Initial value |
|---|---|---|
| 1 | *x*⁶ + *x*¹ + 1 | [1, 1, 0, 1, 1, 0] |
| 2 | *x*⁶ + *x*¹ + 1 | [0, 1, 0, 1, 0, 1] |
| 3 | *x*⁶ + *x*¹ + 1 | [0, 1, 1, 0, 1, 0] |
| 4 | *x*⁶ + *x*¹ + 1 | [0, 0, 0, 1, 0, 1] |
| 5 | *x*⁶ + *x*¹ + 1 | [0, 1, 0, 1, 1, 0] |
| 6 | *x*⁶ + *x*¹ + 1 | [1, 0, 1, 0, 1, 1] |
| 7 | *x*⁶ + *x*¹ + 1 | [0, 0, 1, 1, 0, 0] |
| 8 | *x*⁶ + *x*¹ + 1 | [1, 0, 1, 0, 1, 0] |
| 9 | *x*⁶ + *x*¹ + 1 | [1, 1, 1, 0, 1, 1] |
| 10 | *x*⁶ + *x*¹ + 1 | [1, 0, 0, 0, 0, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁶ + *x*¹ *+* 1 may further be converted into a binary number 1000011, and then may be represented by a decimal number 67.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁶ *+ x*¹ *+* 1 and the initial value [1, 1, 0, 1, 1, 0] are used as an example. In this case, a feedback function f(a₁, a₂, ... , aₙ) = a₁⊕a₆ may be obtained, and then, a corresponding m-sequence [1, 1, 0, 1, 1, 0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1, 1, 0, 1, 0, 1, 0, 1, 1, 0, 0, 1, 1, 0, 1] may be obtained through recursion based on the initial value and the feedback function.

For another example, the primitive polynomial *x*⁶ *+ x*¹ + 1 and the initial value [0, 1, 0, 1, 0, 1] are used as an example. In this case, a feedback function f(a₁, a₂, ..., aₙ) = a₁⊕a₆ may be obtained, and then, a corresponding m-sequence [0, 1, 0, 1, 0, 1, 1, 0, 0, 1, 1, 0, 1, 1, 1, 0, 1, 1, 0, 1, 0, 0, 1, 0, 0, 1, 1, 1, 0, 0, 0, 1, 0, 1, 1, 1, 1, 0, 0, 1, 0, 1, 0, 0, 0, 1, 1, 0, 0, 0, 0, 1, 0, 0, 0, 0, 0, 1, 1, 1, 1, 1, 1] may be obtained through recursion based on the initial value and the feedback function.

Based on the foregoing example, a corresponding m-sequence obtained by combining another primitive polynomial and initial value in Table 34 is not described herein again. A corresponding m-sequence may be determined in the foregoing manner based on the primitive polynomial and the corresponding initial value.

For example, the sequences in the fifth sequence set may include at least one m-sequence obtained by combining the following primitive polynomial and initial value in Table 35:

**Table 35**

| Index | Primitive polynomial | Initial value |
|---|---|---|
| 1 | *x*⁷ + *x*¹ + 1 | [1, 0, 1, 0, 0, 1, 1] |
| 2 | *x*⁷ + *x*¹ + 1 | [1, 1, 0, 1, 0, 1, 0] |
| 3 | *x*⁷ + *x*¹ + 1 | [1, 0, 0, 0, 0, 0, 0] |
| 4 | *x*⁷ + *x*¹ + 1 | [1, 0, 0, 1, 1, 1, 0] |
| 5 | *x*⁷ + *x*¹ + 1 | [1, 1, 1, 1, 0, 0, 1] |
| 6 | *x*⁷ + *x*¹ + 1 | [0, 0, 1, 0, 1, 0, 1] |
| 7 | *x*⁷ + *x*¹ + 1 | [1, 1, 1, 0, 0, 1, 0] |
| 8 | *x*⁷ + *x*¹ + 1 | [1, 1, 1, 1, 1, 0, 0] |
| 9 | *x*⁷ + *x*¹ + 1 | [1, 0, 0, 1, 0, 1, 0] |
| 10 | *x*⁷ + *x*¹ + 1 | [0, 1, 0, 1, 0, 1, 0] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁷ + *x*¹ + 1 may further be converted into a binary number 10000011, and then may be represented by a decimal number 131.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁷ + *x*¹ + 1 and the initial value [1, 0, 1, 0, 0, 1, 1] are used as an example. In this case, a feedback function f(a₁, a₂, ... , aₙ) = a₁⊕a₇ may be obtained, and then, a corresponding m-sequence [1, 0, 1, 0, 0, 1, 1, 0, 0, 1, 1, 1, 0, 1, 1, 1, 0, 1, 0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1, 1, 1, 0, 1, 0] may be obtained through recursion based on the initial value and the feedback function.

For another example, the primitive polynomial *x*⁷ + *x*¹ + 1 and the initial value [1, 1, 0, 1, 0, 1, 0] are used as an example. In this case, a feedback function f(a₁, a₂, ... , aₙ) = a₁⊕a₇ may be obtained, and then, a corresponding m-sequence [1, 1, 0, 1, 0, 1, 0, 1, 0, 0, 1, 1, 0, 0, 1, 1, 1, 0, 1, 1, 1, 0, 1, 0, 0, 1, 0, 1, 1, 0, 0, 0, 1, 1, 0, 1, 1, 1, 1, 0, 1, 1, 0, 1, 0, 1, 1, 0, 1, 1, 0, 0, 1, 0, 0, 1, 0, 0, 0, 1, 1, 1, 0, 0, 0, 0, 1, 0, 1, 1, 1, 1, 1, 0, 0, 1, 0, 1, 0, 1, 1, 1, 0, 0, 1, 1, 0, 1, 0, 0, 0, 1, 0, 0, 1, 1, 1, 1, 0, 0, 0, 1, 0, 1, 0, 0, 0, 0, 1, 1, 0, 0, 0, 0, 0, 1, 0, 0, 0, 0, 0, 0, 1, 1, 1, 1, 1] may be obtained through recursion based on the initial value and the feedback function.

Based on the foregoing example, a corresponding m-sequence obtained by combining another primitive polynomial and initial value in Table 35 is not described herein again. A corresponding m-sequence may be determined in the foregoing manner based on the primitive polynomial and the corresponding initial value.

For example, the sequences in the sixth sequence set may include at least one m-sequence obtained by combining the following primitive polynomial and initial value in Table 36:

**Table 36**

| Index | Primitive polynomial | Initial value |
|---|---|---|
| 1 | *x*⁸ + *x*⁴ + *x*³ + *x*² + 1 | [0, 1, 1, 1, 0, 0, 0, 0] |
| 2 | *x*⁸ + *x*⁴ + *x*³ + *x*² + 1 | [0, 0, 1, 1, 1, 0, 0, 1] |
| 3 | *x*⁸ + *x*⁴ + *x*³ *+ x*² + 1 | [0, 1, 0, 1, 0, 1, 1, 1] |
| 4 | *x*⁸ + *x*⁴ + *x*³ *+ x*² + 1 | [1, 0, 1, 1, 1, 0, 0, 0] |
| 5 | *x*⁸ + *x*⁴ + *x*³ *+ x*² + 1 | [1, 0, 1, 0, 1, 1, 1, 0] |
| 6 | *x*⁸ + *x*⁴ + *x*³ *+ x*² + 1 | [1, 0, 1, 0, 1, 0, 1, 1] |
| 7 | *x*⁸ + *x*⁴ + *x*³ *+ x*² + 1 | 1, 0, 0, 1, 0, 0, 1, 1] |
| 8 | *x*⁸ + *x*⁴ *+ x*³ *+ x*² + 1 | [1, 0, 1, 1, 1, 1, 0, 0] |
| 9 | *x*⁸ + *x*⁴ + *x*³ *+ x*² + 1 | [0, 1, 0, 0, 1, 0, 1, 0] |
| 10 | *x*⁸ + *x*⁴ + *x*³ *+ x*² + 1 | [0, 1, 0, 1, 0, 1, 0, 1] |

The primitive polynomial may further be represented in a decimal manner, in an octal manner, in a binary manner, or in another manner. This is not limited herein.

For example, the primitive polynomial is represented by a decimal number. Therefore, the decimal number may be first converted into a corresponding binary number, and then, the corresponding primitive polynomial is obtained through conversion based on the binary number. For example, the primitive polynomial *x*⁸ + *x*⁴ + *x*³ + *x*² *+* 1 may further be converted into a binary number 100011101, and then may be represented by a decimal number 285.

In actual application, an m-sequence may be configured for the terminal device and the network device based on a primitive polynomial and an initial value, or the corresponding m-sequence may be directly configured.

When a sequence is configured based on a primitive polynomial and an initial value, a corresponding m-sequence may be obtained through calculation based on the primitive polynomial and the initial value. Specifically, the m-sequence may be iteratively calculated by using a linear feedback shift register. A power of x in the primitive polynomial is a location of the register (or referred to as a memory), and a corresponding term indicates that a value in the register at the corresponding location participates in a feedback operation (that is, participates in feedback exclusive OR calculation). Therefore, a corresponding feedback function can be obtained based on the primitive polynomial, and the m-sequence can be obtained through recursion based on the feedback function and the corresponding initial value.

For example, the primitive polynomial *x*⁸ *+ x*⁴ *+ x*³ *+ x² +* 1 and the initial value [0, 1, 1, 1, 0, 0, 0, 0] are used as an example. In this case, a feedback function f(a₁, a₂, ... , aₙ) = a₂⊕a₃⊕a₄⊕a₈ may be obtained, and then, a corresponding m-sequence [0, 1, 1, 1, 0, 0, 0, 0, 0, 1, 1, 0, 0, 0, 1, 0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1, 0, 0, 0, 1, 0, 0, 1, 0, 1, 1, 0, 1, 0, 0, 0, 1, 1, 0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1, 1, 1, 0, 1, 0, 1, 0, 1] may be obtained through recursion based on the initial value and the feedback function.

For another example, the primitive polynomial *x*⁸ *+ x*⁴ *+ x*³ *+ x*² + 1 and the initial value [0, 0, 1, 1, 1, 0, 0, 1] are used as an example. In this case, a feedback function f(a₁, a₂, ... , aₙ) = a₂⊕a₃⊕a₄⊕a₈ may be obtained, and then, a corresponding m-sequence [0, 0, 1, 1, 1, 0, 0, 1, 1, 1, 1, 0, 0, 0, 1, 1, 0, 1, 1, 0, 0, 0, 0, 1, 0, 0, 0, 1, 0, 1, 1, 1, 0, 1, 0, 1, 1, 1, 1, 0, 1, 1, 0, 1, 1, 1, 1, 1, 0, 0, 0, 0, 1, 1, 0, 1, 0, 0, 1, 1, 0, 1, 0, 1, 1, 0, 1, 1, 0, 1, 0, 1, 0, 0, 0, 0, 0, 1, 0, 0, 1, 1, 1, 0, 1, 1, 0, 0, 1, 0, 0, 1, 0, 0, 1, 1, 0, 0, 0, 0, 0, 0, 1, 1, 1, 0, 1, 0, 0, 1, 0, 0, 0, 1, 1, 1, 0, 0, 0, 1, 0, 0, 0, 0, 0, 0, 0, 1, 0, 1, 1, 0, 0, 0, 1, 1, 1, 1, 0, 1, 0, 0, 0, 0, 1, 1, 1, 1, 1, 1, 1, 1, 0, 0, 1, 0, 0, 0, 0, 1, 0, 1, 0, 0, 1, 1, 1, 1, 1, 0, 1, 0, 1, 0, 1, 0, 1, 1, 1, 0, 0, 0, 0, 0, 1, 1, 0, 0, 0, 1, 0, 1, 0, 1, 1, 0, 0, 1, 1, 0, 0, 1, 0, 1, 1, 1, 1, 1, 1, 0, 1, 1, 1, 1, 0, 0, 1, 1, 0, 1, 1, 1, 0, 1, 1, 1, 0, 0, 1, 0, 1, 0, 1, 0, 0, 1, 0, 1, 0, 0, 0, 1, 0, 0, 1, 0, 1, 1, 0, 1, 0, 0, 0, 1, 1] may be obtained through recursion based on the initial value and the feedback function.

Based on the foregoing example, a corresponding m-sequence obtained by combining another primitive polynomial and initial value in Table 36 is not described herein again. A corresponding m-sequence may be determined in the foregoing manner based on the primitive polynomial and the corresponding initial value.

Because the m-sequence is generated by using the cyclic shift register, a quantity of additions required for generating each new bit is a quantity of taps minus 1. Therefore, in this embodiment of this application, with reference to the foregoing example, when the m-sequence of the corresponding length is generated based on the primitive polynomial with the minimum quantity of taps, the complexity of generating the m-sequence of the corresponding length can be minimized. For example, an m-sequence with a length of 127 is generated. In this case, a maximum quantity of taps is 7, and a minimum quantity of taps is 3. Therefore, when the m-sequence is generated based on the primitive polynomial with the minimum quantity of taps, calculation complexity can be reduced by 57%.

In this embodiment of this application, a sequence obtained by adding 1 to a first location of the m-sequence shown in Table 25 to Table 36 is used as a preamble sequence. Because the corresponding m-sequence has good time-frequency two-dimensional correlation detection performance, a maximum sidelobe of time-frequency two-dimensional correlation of the preamble sequence during sliding correlation can be reduced.

S902: The terminal device modulates the first sequence to obtain the first signal.

S903: The terminal device sends the first signal.

S904: The network device determines a location of the preamble sequence in the first signal.

That the network device determines the location of the preamble sequence in the first signal is that a network signal receives the first signal in a time window in which a preamble signal may arrive, and generates a local preamble signal for sliding correlation with the received signal. A location with a largest correlation value is determined as a timing location of the preamble sequence (namely, a start location or end location of the preamble sequence in the first signal).

S905: The network device obtains a data window based on the location of the preamble, and demodulates a data signal in the data window.

Because uplink data is scheduled by the network device side, the network device side has learned of a length of a data sequence, and can obtain a start location and an end location of the data window based on the timing location of the preamble sequence and the length of the data sequence, and then demodulate the data signal in the data window, to obtain data transmitted in the first signal.

According to the method shown in FIG. 8, because the corresponding sequence obtained by adding 0 to the first location of the m-sequence having good time-frequency two-dimensional correlation detection performance is used as the preamble, a maximum sidelobe of a correlation value during sliding correlation performed on signals by the network device based on the preamble can be reduced. This improves accuracy of the timing location that is of the preamble and that is determined based on the preamble, and improves signal synchronization performance.

According to the signal processing method, in this application, when sending the first signal, the terminal can determine the preamble sequence based on the m-sequence. However, because the m-sequence is a preset m-sequence with a small maximum sidelobe of a correlation value during sliding correlation, the determined preamble sequence can have a smaller maximum sidelobe during sliding correlation. This reduces a probability that a window location corresponding to the maximum sidelobe is used as the location of the preamble sequence, improves uplink synchronization performance, and improves signal data demodulation performance.

The foregoing mainly describes the solutions provided in embodiments of this application from a perspective of interaction between network elements. It may be understood that, to implement the foregoing functions, the network elements such as the network device and the terminal device include corresponding hardware structures and/or software modules for performing the functions.

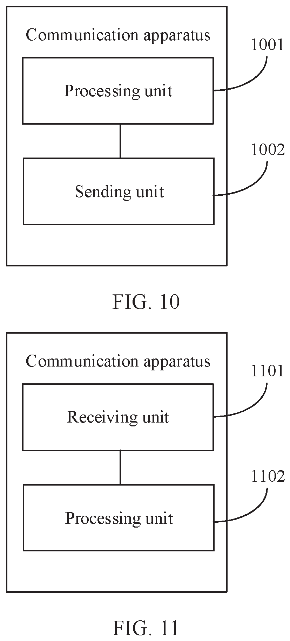

For example, an embodiment of this application may further provide a communication apparatus that may be used in a terminal device. FIG. 10 is a diagram of a structure of a communication apparatus according to an embodiment of this application.

As shown in FIG. 10, the communication apparatus may include a processing unit 1001 and a sending unit 1002. The processing unit 1001 and the sending unit 1002 may collaborate with each other to perform the method performed by the terminal device in the signal processing method provided in FIG. 6, FIG. 7, or FIG. 9 in the foregoing embodiment. For example, the processing unit 1001 may be configured to perform S601 and S602, or S701 and S702, or S901 and S902. The sending unit 1002 may be configured to perform S603, S703, or S903.

For another example, an embodiment of this application may further provide a communication apparatus that may be used in a network device. FIG. 11 is a diagram of a structure of a communication apparatus according to an embodiment of this application.

As shown in FIG. 11, the communication apparatus may include a receiving unit 1101 and a processing unit 1102. The receiving unit 1101 and the processing unit 1102 may collaborate with each other to perform the method performed by the network device in the signal processing method provided in FIG. 6, FIG. 7, or FIG. 9 in the foregoing embodiment. For example, the receiving unit 1101 may be configured to perform S604, S704, or S904. The processing unit 1102 may be configured to perform S605, S705, or S905.

It should be understood that division into units (or modules) in the foregoing apparatus is merely logical function division. During actual implementation, all or some of the units (or modules) may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation, or may be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, the steps in the foregoing methods or the foregoing units may be implemented via a hardware integrated logic circuit in a processor element, or may be implemented in a form of software invoked by the processing element.

In an example, any one of the foregoing units in the apparatus may be one or more integrated circuits configured to implement the foregoing methods, for example, one or more ASICs, one or more DSPs, one or more FPGAs, or a combination of at least two of the integrated circuit forms.

For another example, when a unit in the apparatus may be implemented in a form in which a processing element invokes a program, the processing element may be a general-purpose processor, such as a CPU or another processor that can invoke a program. For still another example, the units may be integrated and implemented in a form of a system-on-a-chip (system-on-a-chip, SOC).

The foregoing receiving unit is an interface circuit or an input circuit of the apparatus, and is configured to receive a signal from another apparatus. For example, when the apparatus is implemented in a form of a chip, the receiving unit is an interface circuit or input circuit that is of the chip and that is configured to receive a signal from another chip or apparatus. When the communication apparatus includes a sending unit, the sending unit is an interface circuit or output circuit of the apparatus, and is configured to send a signal to another apparatus. For example, when the apparatus is implemented in a form of a chip, the sending unit is an interface circuit or output circuit that is of the chip and that is configured to send a signal to another chip or apparatus.

For example, an embodiment of this application may further provide a communication apparatus, which may be used in the foregoing network device or terminal device. The communication apparatus may include a processor and an interface circuit. There may be one or more processors.

When the communication apparatus is used in the network device, the processor is configured to: communicate with another apparatus through the interface circuit, and perform the steps performed by the network device in the foregoing methods.

When the communication apparatus is used in the terminal device, the processor is configured to: communicate with another apparatus through the interface circuit, and perform the steps performed by the terminal device in the foregoing methods.

In an implementation, the units of the network device or the terminal device that respectively implement the corresponding steps in the foregoing method may be implemented by scheduling a program by a processing element. For example, the apparatus used in the network device or the terminal device may include the processing element and a storage element. The processing element invokes a program stored in the storage element, to perform the method performed by the corresponding network device or terminal device in the foregoing method embodiments. The storage element may be a storage element located on a same chip as the processing element, namely, an on-chip storage element.

In another implementation, a program used to perform the method performed by the network device or the terminal device in the foregoing method may be in a storage element located on a chip different from that of the processing element, namely, an off-chip storage element. In this case, the processing element invokes or loads the program from the off-chip storage element to the on-chip storage element, to invoke and perform the method performed by the corresponding network device or terminal device in the foregoing method embodiments.

For example, an embodiment of this application may further provide a communication apparatus. The communication apparatus may include a memory and a processor. The processor is configured to execute computer instructions stored in the memory. When the computer instructions are executed, the apparatus is enabled to perform the method performed by the network device or the terminal device. The memory may be located inside or outside the communication apparatus. There are one or more processors.

In another implementation, units of the network device or the terminal device that implement the steps in the foregoing method may be configured as one or more processing elements. These processing elements may be disposed on a corresponding network device or first terminal device. The processing element herein may be an integrated circuit, for example, one or more ASICs, one or more DSPs, one or more FPGAs, or a combination of these types of integrated circuits. These integrated circuits may be integrated together to form a chip.

The units of the network device or the terminal device that implement the steps in the foregoing method may be integrated together, and implemented in a form of a SOC. The SOC chip is configured to implement the corresponding method. At least one processing element and a storage element may be integrated into the chip, and the processing element invokes a program stored in the storage element to implement a corresponding method. Alternatively, at least one integrated circuit may be integrated into the chip, to implement a corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be applied to the foregoing network device or terminal device. The chip system includes one or more interface circuits and one or more processors. The interface circuit and the processor are interconnected through a line. The processor receives and executes computer instructions from a memory of an electronic device through the interface circuit, to implement the method performed by the corresponding network device or terminal device in the foregoing method embodiments.

The foregoing descriptions about implementations allow a person skilled in the art to understand that, for the purpose of convenient and brief description, division into the foregoing functional modules is used as an example for illustration. In actual application, the foregoing functions may be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiments are merely examples. For example, division into the modules or units is merely logical function division. There may be other division during actual implementation. For example, a plurality of units or components may be combined or integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps in the method in the embodiments of this application. The foregoing storage medium includes any medium that can store program code, for example, a USB flash drive, a removable hard disk, a ROM, a RAM, a magnetic disk, or an optical disc.

For example, an embodiment of this application may further provide a computer-readable storage medium. The computer-readable storage medium stores computer instructions. When the computer instructions are run on a network device or a chip built in the network device, the network device may be enabled to perform the method performed by the network device in the foregoing embodiments.

Alternatively, when the computer instructions are run on a terminal device or a chip built in the terminal device, the terminal device is enabled to perform the method performed by the terminal device in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A signal processing method, comprising:
generating a first sequence, wherein the first sequence comprises a preamble sequence, the preamble sequence is a second sequence or an equivalent sequence of the second sequence, and the equivalent sequence is obtained by performing bitwise negation and/or reversing on the sequence;
modulating the first sequence to obtain a first signal; and
sending the first signal, wherein
the second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [0, 1, 1];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1];
the sequences in the second sequence set comprise at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [1, 0, 1, 1];
the primitive polynomial *x*⁴ + *x*¹ + 1 and an initial value [0, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [0, 1, 1, 0];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0]; and
the primitive polynomial *x*⁴ + *x*¹ + 1 and an initial value [0, 0, 1, 1];
the sequences in the third sequence set comprise at least one m-sequence obtained by combining the following primitive polynomial and initial value:
a primitive polynomial *x*⁵ + *x*² *+* 1 and an initial value [1, 0, 0, 1, 1];
the primitive polynomial *x*⁵ + *x*² *+* 1 and an initial value [0, 0, 1, 0, 0];
the primitive polynomial *x*⁵ + *x*² *+* 1 and an initial value [1, 0, 1, 0, 0];
the primitive polynomial *x*⁵ + *x*² *+* 1 and an initial value [0, 1, 0, 1, 1];
the primitive polynomial *x*⁵ + *x*² *+* 1 and an initial value [0, 0, 0, 1, 1];
the primitive polynomial *x*⁵ + *x*² *+* 1 and an initial value [0, 0, 1, 1, 0];
the primitive polynomial *x*⁵ + *x*² *+* 1 and an initial value [0, 0, 1, 0, 1];
the primitive polynomial *x*⁵ + *x*² *+* 1 and an initial value [0, 1, 0, 0, 0];
the primitive polynomial *x*⁵ + *x*² *+* 1 and an initial value [0, 1, 1, 1, 0]; and
the primitive polynomial *x*⁵ + *x*² *+* 1 and an initial value [0, 1, 1, 1, 1];
the sequences in the fourth sequence set comprise at least one m-sequence obtained by combining the following primitive polynomial and initial value:
a primitive polynomial *x*⁶ *+ x*¹ *+* 1 and an initial value [1, 0, 1, 0, 0, 1];
the primitive polynomial *x*⁶ *+ x*¹ *+* 1 and an initial value [0, 1, 0, 0, 1, 0];
the primitive polynomial *x*⁶ *+ x*¹ *+* 1 and an initial value [0, 0, 0, 0, 0, 1];
the primitive polynomial *x*⁶ *+ x*¹ *+* 1 and an initial value [1, 1, 1, 1, 0, 1];
the primitive polynomial *x*⁶ *+ x*¹ *+* 1 and an initial value [1, 1, 1, 1, 1, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 1, 0, 0, 1, 0];
the primitive polynomial *x*⁶ *+ x*¹ *+* 1 and an initial value [0, 1, 1, 1, 0, 1];
the primitive polynomial *x*⁶ *+ x*¹ *+* 1 and an initial value [0, 0, 0, 1, 0, 1]; and
the primitive polynomial *x*⁶ *+ x*¹ *+* 1 and an initial value [0, 1, 1, 1, 1, 1];
the sequences in the fifth sequence set comprise at least one m-sequence obtained by combining the following primitive polynomial and initial value:
a primitive polynomial *x*⁷ + *x*¹ + 1 and an initial value [0, 0, 1, 0, 1, 1, 0];
the primitive polynomial *x*⁷ + *x*¹ + 1 and an initial value [1, 0, 1, 0, 1, 1, 0];
the primitive polynomial *x*⁷ + *x*¹ + 1 and an initial value [1, 1, 1, 1, 0, 0, 0];
the primitive polynomial *x*⁷ + *x*¹ + 1 and an initial value [0, 1, 0, 1, 1, 1, 1];
the primitive polynomial *x*⁷ + *x*¹ + 1 and an initial value [0, 0, 1, 1, 1, 0, 1];
the primitive polynomial *x*⁷ + *x*¹ + 1 and an initial value [0, 1, 1, 0, 1, 1, 1];
the primitive polynomial *x*⁷ + *x*¹ + 1 and an initial value [0, 1, 0, 1, 1, 0, 0];
the primitive polynomial *x*⁷ + *x*¹ + 1 and an initial value [1, 0, 1, 0, 0, 0, 1];
the primitive polynomial *x*⁷ + *x*¹ + 1 and an initial value [1, 1, 1, 1, 0, 1, 0]; and
the primitive polynomial *x*⁷ + *x*¹ + 1 and an initial value [0, 0, 1, 1, 1, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [0, 1, 0, 1, 1, 0, 0, 1];
the primitive polynomial *x*⁸ *+ x*⁴ *+ x*³ *+ x*² + 1 and an initial value [0, 0, 0, 1, 0, 0, 1, 0];
the primitive polynomial *x*⁸ *+ x*⁴ *+ x*³ *+ x*² + 1 and an initial value [0, 0, 1, 1, 0, 1, 1, 1];
the primitive polynomial *x*⁸ *+ x*⁴ *+ x*³ *+ x*² + 1 and an initial value [0, 0, 1, 0, 1, 0, 1, 0];
the primitive polynomial *x*⁸ *+ x*⁴ *+ x*³ *+ x*² + 1 and an initial value [0, 1, 1, 0, 0, 0, 0, 1];
the primitive polynomial *x*⁸ *+ x*⁴ *+ x*³ *+ x*² + 1 and an initial value [0, 1, 0, 0, 0, 1, 0, 0];
the primitive polynomial *x*⁸ *+ x*⁴ *+ x*³ *+ x*² + 1 and an initial value [1, 0, 1, 0, 0, 0, 1, 1];
the primitive polynomial *x*⁸ *+ x*⁴ *+ x*³ *+ x*² + 1 and an initial value [1, 0, 0, 0, 1, 1, 0, 0];
the primitive polynomial *x*⁸ *+ x*⁴ *+ x*³ *+ x*² + 1 and an initial value [0, 0, 1, 0, 0, 1, 0, 1]; and
the primitive polynomial *x*⁸ *+ x*⁴ *+ x*³ *+ x*² + 1 and an initial value [1, 1, 0, 1, 0, 0, 1, 0].

2. The method according to claim 1, wherein the sequences in the first sequence set further comprise at least one m-sequence obtained by combining the following primitive polynomial and initial value:
a primitive polynomial *x*³ *+ x*² + 1 and the initial value [1, 1, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [0, 0, 1].

3. The method according to claim 1 or 2, wherein the sequences in the second sequence set further comprise at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1].

4. The method according to any one of claims 1 to 3, wherein the sequences in the third sequence set further comprise at least one m-sequence obtained by combining the following primitive polynomial and initial value:
a primitive polynomial *x*⁵ *+ x*³ *+ x*² *+ x*¹ *+* 1 and the initial value [1, 0, 0, 1, 1];
a primitive polynomial *x*⁵ *+ x*⁴ *+ x*³ *+ x*² + 1 and the initial value [0, 0, 1, 1, 0];
the primitive polynomial *x*⁵ + *x*⁴ + *x*³ + *x*² + 1 and an initial value [0, 1, 1, 0, 1];
the primitive polynomial *x*⁵ + *x*³ + *x*² + *x*¹ *+* 1 and an initial value [1, 0, 0, 0, 0];
a primitive polynomial *x*⁵ *+ x*³ *+* 1 and an initial value [1, 1, 1, 1, 0];
the primitive polynomial *x*⁵ *+ x*³ *+* 1 and an initial value [1, 0, 1, 1, 0];
the primitive polynomial *x*⁵ + *x*³ + *x*² + *x*¹ *+* 1 and an initial value [0, 0, 0, 1, 0]; and
the primitive polynomial *x*⁵ + *x*⁴ + *x*³ + *x*² + 1 and an initial value [1, 1, 1, 0, 1].

5. The method according to any one of claims 1 to 4, wherein the sequences in the fourth sequence set further comprise at least one m-sequence obtained by combining the following primitive polynomial and initial value:
a primitive polynomial *x*⁶ *+ x*⁵ *+* 1 and an initial value [1, 0, 1, 1, 1, 0];
a primitive polynomial *x*⁶ + *x*⁵ + *x*³ + *x*² + 1 and an initial value [0, 0, 0, 0, 1, 1];
a primitive polynomial *x*⁶ *+ x*⁴ + *x*³ *+ x*¹ *+* 1 and an initial value [1, 0, 0, 1, 0, 0];
a primitive polynomial *x*⁶ + *x*⁵ + *x*² + *x*¹ + 1 and an initial value [1, 0, 1, 0, 1, 1];
a primitive polynomial *x*⁶ + *x*⁵ + *x*⁴ + *x*¹ *+* 1 and an initial value [1, 1, 0, 0, 0, 1];
the primitive polynomial *x*⁶ + *x*⁵ + 1 and an initial value [1, 1, 0, 1, 1, 1]; and
the primitive polynomial *x*⁶ + *x*⁵ + 1 and an initial value [1, 0, 0, 0, 0, 1].

6. The method according to any one of claims 1 to 5, wherein the sequences in the fifth sequence set further comprise at least one m-sequence obtained by combining the following primitive polynomial and initial value:
a primitive polynomial *x*⁷ + *x*⁶ + 1 and an initial value [1, 0, 1, 1, 1, 0, 1];
a primitive polynomial *x*⁷ *+ x*⁵ + *x*⁴ + *x*³ + *x*² + *x*¹ + 1 and an initial value [1, 1, 0, 0, 0, 1, 1];
a primitive polynomial *x*⁷ *+ x*⁶ *+ x*⁵ *+ x*⁴ *+ x*³ *+ x*² + 1 and an initial value [1, 1, 1, 0, 1, 1, 1];
the primitive polynomial *x*⁷ + *x*⁶ + 1 and an initial value [1, 0, 1, 1, 1, 1, 0];
a primitive polynomial *x*⁷ + *x*³ + *x*² + *x*¹ *+* 1 and an initial value [1, 0, 1, 0, 1, 0, 0];
a primitive polynomial *x*⁷ + *x*⁶ + *x*⁵ *+ x*⁴ + 1 and an initial value [1, 0, 0, 0, 1, 0, 0];
the primitive polynomial *x*⁷ *+ x*³ *+ x*² *+ x*¹ + 1 and an initial value [1, 0, 0, 0, 1, 0, 1]; and
the primitive polynomial *x*⁷ *+ x*⁶ *+ x*⁵ *+ x*⁴ + 1 and an initial value [0, 1, 1, 1, 1, 0, 1].

7. The method according to any one of claims 1 to 6, wherein the sequences in the sixth sequence set further comprise at least one m-sequence obtained by combining the following primitive polynomial and initial value:
a primitive polynomial *x*⁸ *+ x*⁶ *+ x*⁵ *+ x*³ + 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ + *x*⁶ + *x*⁴ + *x*³ + *x*² + *x*¹ + 1 and an initial value [0, 1, 0, 0, 0, 0, 0, 0];
a primitive polynomial *x*⁸ *+ x*⁷ *+ x*⁶ *+ x*⁵ *+ x*⁴ *+ x*² + 1 and an initial value [1, 0, 0, 1, 0, 1, 0, 1];
a primitive polynomial *x*⁸ + *x*⁷ + *x*⁵ + *x*³ *+* 1 and an initial value [0, 0, 1, 1, 1, 1, 1, 0];
a primitive polynomial *x*⁸ + *x*⁵ + *x*³ + *x*¹ *+* 1 and an initial value [0, 0, 0, 1, 0, 1, 0, 0];
a primitive polynomial *x*⁸ *+ x*⁶ *+ x*⁵ *+ x*⁴ + 1 and the initial value [1, 0, 0, 0, 1, 1, 0, 0];
a primitive polynomial *x*⁸ + *x*⁷ + *x*² *+ x*¹ *+* 1 and an initial value [0, 1, 1, 1, 0, 0, 0, 0]; and
a primitive polynomial *x*⁸ *+ x*⁷ *+ x*⁶ *+ x*¹ + 1 and an initial value [0, 0, 1, 1, 0, 0, 1, 1].

8. A signal processing method, comprising:
generating a first sequence, wherein the first sequence comprises a preamble sequence, the preamble sequence is a second sequence or an equivalent sequence of the second sequence, and the equivalent sequence is obtained by performing bitwise negation and/or reversing on the sequence;
modulating the first sequence to obtain a first signal; and
sending the first signal, wherein
the second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0];
the sequences in the second sequence set comprise at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1];
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1];
the sequences in the third sequence set comprise at least one m-sequence obtained by combining the following primitive polynomial and initial value:
a primitive polynomial *x*⁵ + *x*² *+* 1 and an initial value [1, 1, 1, 0, 1];
the primitive polynomial *x*⁵ + *x*² *+* 1 and an initial value [1, 0, 1, 0, 0];
the primitive polynomial *x*⁵ + *x*² *+* 1 and an initial value [0, 0, 1, 0, 0];
the primitive polynomial *x*⁵ + *x*² *+* 1 and an initial value [0, 0, 0, 1, 0];
the primitive polynomial *x*⁵ + *x*² *+* 1 and an initial value [1, 0, 0, 0, 0];
the primitive polynomial *x*⁵ + *x*² *+* 1 and an initial value [1, 0, 1, 0, 1];
the primitive polynomial *x*⁵ + *x*² *+* 1 and an initial value [1, 0, 1, 1, 0];
the primitive polynomial *x*⁵ + *x*² *+* 1 and an initial value [0, 1, 0, 0, 0];
the primitive polynomial *x*⁵ + *x*² *+* 1 and an initial value [0, 1, 1, 1, 1]; and
the primitive polynomial *x*⁵ + *x*² *+* 1 and an initial value [0, 1, 1, 1, 0];
the sequences in the fourth sequence set comprise at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0];
the sequences in the fifth sequence set comprise at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1]; and
the primitive polynomial *x*⁸ *+ x*⁴ *+ x*³ *+ x*² + 1 and an initial value [0, 1, 0, 1, 1, 1, 0, 0].

9. The method according to claim 8, wherein that the second sequence is determined based on the m-sequence comprises: the second sequence is determined by adding 0 to a first location of the m-sequence.

10. The method according to claim 8 or 9, wherein the sequences in the first sequence set further comprise at least one m-sequence obtained by combining the following primitive polynomial and initial value:
a primitive polynomial *x*³ *+ x*² + 1 and the initial value [1, 0, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [1, 1, 1].

11. The method according to any one of claims 8 to 10, wherein the sequences in the second sequence set further comprise at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and an initial value [0, 0, 1, 0].

12. The method according to any one of claims 8 to 11, wherein the sequences in the third sequence set further comprise at least one m-sequence obtained by combining the following primitive polynomial and initial value:
a primitive polynomial *x*⁵ + *x*³ + *x*² *+ x*¹ *+* 1 and an initial value [1, 1, 0, 1, 0];
a primitive polynomial *x*⁵ + *x*⁴ + *x*³ *+ x*² + 1 and the initial value [1, 0, 1, 0, 0];
a primitive polynomial *x*⁵ *+ x*⁴ *+ x*² *+ x*¹ *+* 1 and the initial value [1, 1, 0, 1, 0];
a primitive polynomial *x*⁵ + *x*⁴ + *x*³ + *x*¹ *+* 1 and an initial value [0, 0, 0, 1, 1];
the primitive polynomial *x*⁵ + *x*³ + *x*² *+ x*¹ *+* 1 and the initial value [1, 0, 1, 0, 1];
the primitive polynomial *x*⁵ + *x*⁴ + *x*³ *+ x*² + 1 and an initial value [0, 0, 1, 1, 1];
the primitive polynomial *x*⁵ *+ x*⁴ *+ x*² *+ x*¹ *+* 1 and an initial value [0, 0, 1, 0, 1];
the primitive polynomial *x*⁵ + *x*⁴ + *x*³ *+ x*¹ *+* 1 and an initial value [1, 0, 0, 1, 0];
the primitive polynomial *x*⁵ + *x*⁴ + *x*³ + *x*² + 1 and an initial value [1, 1, 0, 1, 1]; and
the primitive polynomial *x*⁵ *+ x*³ *+ x*² *+ x*¹ *+* 1 and an initial value [0, 1, 0, 1, 1].

13. The method according to any one of claims 8 to 12, wherein the sequences in the fourth sequence set further comprise at least one m-sequence obtained by combining the following primitive polynomial and initial value:
a primitive polynomial *x*⁶ *+ x*⁵ *+* 1 and an initial value [1, 1, 1, 1, 1, 0];
a primitive polynomial *x*⁶ *+ x*⁵ *+ x*² *+ x*¹ *+* 1 and the initial value [1, 0, 1, 0, 1, 0];
a primitive polynomial *x*⁶ + *x*⁵ + *x*⁴ *+ x*¹ + 1 and an initial value [0, 1, 1, 0, 1, 0];
the primitive polynomial *x*⁶ *+ x*⁵ *+* 1 and the initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1]; and
the primitive polynomial *x*⁶ *+ x*⁵ + 1 and an initial value [0, 1, 0, 1, 0, 0].

14. The method according to any one of claims 8 to 13, wherein the sequences in the fifth sequence set further comprise at least one m-sequence obtained by combining the following primitive polynomial and initial value:
a primitive polynomial *x*⁷ + *x*⁶ + *x*⁵ *+ x*⁴ + 1 and an initial value [0, 0, 1, 1, 1, 1, 0];
a primitive polynomial *x*⁷ + *x*⁶ + *x*⁵ + *x*³ + *x*² + *x*¹ + 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ + *x*⁵ + *x*³ *+ x*¹ *+* 1 and an initial value [1, 0, 0, 0, 1, 0, 0];
a primitive polynomial *x*⁷ + *x*³ + *x*² *+ x*¹ + 1 and an initial value [1, 1, 1, 1, 0, 0, 1];
the primitive polynomial *x*⁷ *+ x*⁶ *+ x*⁵ *+ x*⁴ + 1 and an initial value [0, 1, 0, 1, 0, 0, 1];
a primitive polynomial *x*⁷ + *x*⁴ + *x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0].

15. The method according to any one of claims 8 to 14, wherein the sequences in the sixth sequence set further comprise at least one m-sequence obtained by combining the primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ *+ x*⁷ *+ x*² *+ x*¹ *+* 1 and an initial value [1, 1, 0, 1, 1, 0, 1, 0];
the primitive polynomial *x*⁸ + *x*⁵ + *x*³ + *x*¹ *+* 1 and an initial value [0, 1, 0, 1, 0, 1, 0, 0];
a primitive polynomial *x*⁸ + *x*⁷ *+ x*⁵ *+ x*³ *+* 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+* 1 and an initial value [0, 0, 0, 1, 1, 1, 1, 1]; and
a primitive polynomial *x*⁸ + *x*⁶ + *x*⁵ + *x*⁴ + 1 and an initial value [0, 0, 0, 1, 0, 0, 1, 0].

16. A signal processing method, comprising:
generating a first sequence, wherein the first sequence comprises a preamble sequence, the preamble sequence is a second sequence or an equivalent sequence of the second sequence, and the equivalent sequence is obtained by performing bitwise negation and/or reversing on the sequence;
modulating the first sequence to obtain a first signal; and
sending the first signal, wherein
the second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1];
the sequences in the second sequence set comprise at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1];
the sequences in the third sequence set comprise at least one m-sequence obtained by combining the following primitive polynomial and initial value:
a primitive polynomial *x*⁵ *+ x*² *+* 1 and an initial value [0, 1, 0, 1, 1];
the primitive polynomial *x*⁵ + *x*² *+* 1 and an initial value [1, 1, 1, 0, 0];
the primitive polynomial *x*⁵ + *x*² *+* 1 and an initial value [0, 1, 0, 1, 0];
the primitive polynomial *x*⁵ + *x*² *+* 1 and an initial value [1, 0, 1, 1, 0];
the primitive polynomial *x*⁵ + *x*² *+* 1 and an initial value [1, 1, 0, 1, 1];
the primitive polynomial *x*⁵ + *x*² *+* 1 and an initial value [1, 0, 0, 1, 1];
the primitive polynomial *x*⁵ + *x*² *+* 1 and an initial value [0, 1, 1, 0, 0];
the primitive polynomial *x*⁵ + *x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0];
the sequences in the fourth sequence set comprise at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+ 1* and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0];
the sequences in the fifth sequence set comprise at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and an initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [0, 1, 1, 1, 0, 0, 0, 0];
the primitive polynomial *x*⁸ + *x*⁴ + *x*³ + *x*² + 1 and an initial value [0, 0, 1, 1, 1, 0, 0, 1];
the primitive polynomial *x*⁸ + *x*⁴ + *x*³ + *x*² + 1 and an initial value [0, 1, 0, 1, 0, 1, 1, 1];
the primitive polynomial *x*⁸ *+ x*⁴ *+ x*³ + *x*² + 1 and an initial value [1, 0, 1, 1, 1, 0, 0, 0];
the primitive polynomial *x*⁸ + *x*⁴ *+ x*³ + *x*² + 1 and an initial value [1, 0, 1, 0, 1, 1, 1, 0];
the primitive polynomial *x*⁸ *+ x*⁴ *+ x*³ + *x*² + 1 and an initial value [1, 0, 1, 0, 1, 0, 1, 1];
the primitive polynomial *x*⁸ + *x*⁴ *+ x*³ *+ x*² + 1 and an initial value [1, 0, 0, 1, 0, 0, 1, 1];
the primitive polynomial *x*⁸ + *x*⁴ *+ x*³ *+ x*² + 1 and an initial value [1, 0, 1, 1, 1, 1, 0, 0];
the primitive polynomial *x*⁸ *+ x*⁴ *+ x*³ *+ x*² + 1 and an initial value [0, 1, 0, 0, 1, 0, 1, 0]; and
the primitive polynomial *x*⁸ *+ x*⁴ *+ x*³ *+ x*² + 1 and an initial value [0, 1, 0, 1, 0, 1, 0, 1].

17. The method according to claim 16, wherein that the second sequence is determined based on the m-sequence comprises: the second sequence is determined by adding 1 to a first location of the m-sequence.

18. The method according to claim 16 or 17, wherein the sequences in the first sequence set further comprise at least one m-sequence obtained by combining the following primitive polynomial and initial value:
a primitive polynomial *x*³ *+ x*² + 1 and the initial value [1, 1, 0];
the primitive polynomial *x*³ *+ x*² + 1 and the initial value [1, 1, 1];
the primitive polynomial *x*³ *+ x*² + 1 and the initial value [0, 0, 1];
the primitive polynomial *x*³ *+ x*² + 1 and the initial value [0, 1, 0];
the primitive polynomial *x*³ *+ x*² + 1 and the initial value [0, 1, 1]; and
the primitive polynomial *x*³ *+ x*² + 1 and the initial value [1, 0, 1].

19. The method according to any one of claims 16 to 18, wherein the sequences in the second sequence set further comprise at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0].

20. The method according to any one of claims 16 to 19, wherein the sequences in the third sequence set further comprise at least one m-sequence obtained by combining the following primitive polynomial and initial value:
a primitive polynomial *x*⁵ + *x*³ + *x*² *+ x*¹ *+* 1 and the initial value [0, 1, 0, 1, 0];
a primitive polynomial *x*⁵ *+ x*³ *+* 1 and an initial value [0, 0, 0, 0, 1];
the primitive polynomial *x*⁵ + *x*³ + *x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ + *x*³ + *x*² *+ x*¹ *+* 1 and an initial value [1, 1, 1, 1, 0];
the primitive polynomial *x*⁵ + *x*⁴ + *x*³ *+ x*² + 1 and an initial value [0, 0, 1, 0, 0];
the primitive polynomial *x*⁵ + *x*³ + *x*² *+ x*¹ *+* 1 and an initial value [1, 1, 0, 0, 0];
the primitive polynomial *x*⁵ + *x*⁴ + *x*³ + *x*² + 1 and an initial value [0, 1, 1, 1, 1]; and
a primitive polynomial *x*⁵ + *x*⁴ + *x*² *+ x*¹ *+* 1 and an initial value [0, 0, 1, 0, 1].

21. The method according to any one of claims 16 to 20, wherein the sequences in the fourth sequence set further comprise at least one m-sequence obtained by combining the following primitive polynomial and initial value:
a primitive polynomial *x*⁶ *+ x*⁵ + 1 and the initial value [0, 1, 1, 0, 1, 0];
the primitive polynomial *x*⁶ *+ x*⁵ + 1 and an initial value [0, 1, 1, 0, 0, 1];
the primitive polynomial *x*⁶ *+ x*⁵ + 1 and the initial value [1, 1, 0, 1, 1, 0];
the primitive polynomial *x*⁶ *+ x*⁵ + 1 and an initial value [1, 1, 1, 1, 1, 0];
the primitive polynomial *x*⁶ *+ x*⁵ + 1 and an initial value [1, 1, 1, 1, 1, 1];
the primitive polynomial *x*⁶ *+ x*⁵ + 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0].

22. The method according to any one of claims 16 to 21, wherein the sequences in the fifth sequence set further comprise at least one m-sequence obtained by combining the following primitive polynomial and initial value:
a primitive polynomial *x*⁷ *+ x*⁶ + 1 and an initial value [1, 1, 1, 0, 0, 1, 1];
a primitive polynomial *x*⁷ + *x*³ + *x*² *+ x*¹ *+* 1 and the initial value [1, 1, 1, 0, 0, 1, 0];
a primitive polynomial *x*⁷ *+ x*⁶ *+ x*⁵ + *x*⁴ + 1 and an initial value [0, 0, 1, 0, 1, 0, 0];
a primitive polynomial *x*⁷ *+ x*⁶ *+ x*⁵ *+ x*⁴ *+ x*² *+ x*¹ + 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ + *x*⁵ + *x*² + *x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ + *x*⁶ + *x*⁵ + *x*³ + *x*² + *x*¹ + 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0].

23. The method according to any one of claims 16 to 22, wherein the sequences in the sixth sequence set further comprise at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x⁸ + x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ *+* 1 and an initial value [1, 0, 0, 0, 0, 1, 1, 0];
the primitive polynomial *x*⁸ *+ x*⁷ *+ x*⁶ + *x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ *+* 1 and the initial value [1, 0, 0, 0, 0, 1, 1, 0];
a primitive polynomial *x*⁸ *+ x*⁶ *+ x*⁵ *+ x*⁴ *+* 1 and the initial value [0, 1, 0, 1, 0, 1, 1, 1];
a primitive polynomial *x*⁸ + *x*⁷ + *x*² *+ x*¹ *+* 1 and an initial value [1, 0, 1, 0, 0, 1, 1, 0];
a primitive polynomial *x*⁸ *+ x*⁷ *+ x*⁶ *+ x*¹ + 1 and an initial value [1, 0, 1, 0, 0, 1, 1, 0]; and
a primitive polynomial *x*⁸ + *x*⁶ + *x*⁵ + *x*² + 1 and an initial value [1, 1, 0, 0, 0, 0, 0, 1].

24. A signal processing method, comprising:
receiving a first signal, wherein the first signal is obtained by a terminal device through modulation based on a first sequence, the first sequence comprises a preamble sequence, the preamble sequence is a second sequence or an equivalent sequence of the second sequence, and the equivalent sequence is obtained by performing bitwise negation and/or reversing on the sequence;
determining a location of the preamble sequence in the first signal; and
obtaining a data window based on the location of the preamble sequence in the first signal, and demodulating a data signal in the data window, wherein
the second sequence is an m-sequence, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [0, 1, 1];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1];
the sequences in the second sequence set comprise at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [1, 0, 1, 1];
the primitive polynomial *x*⁴ + *x*¹ + 1 and an initial value [0, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [0, 1, 1, 0];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0]; and
the primitive polynomial *x*⁴ + *x*¹ + 1 and an initial value [0, 0, 1, 1];
the sequences in the third sequence set comprise at least one m-sequence obtained by combining the following primitive polynomial and initial value:
a primitive polynomial *x*⁵ + *x*² *+* 1 and an initial value [1, 0, 0, 1, 1];
the primitive polynomial *x*⁵ + *x*² *+* 1 and an initial value [0, 0, 1, 0, 0];
the primitive polynomial *x*⁵ + *x*² *+* 1 and an initial value [1, 0, 1, 0, 0];
the primitive polynomial *x*⁵ + *x*² *+* 1 and an initial value [0, 1, 0, 1, 1];
the primitive polynomial *x*⁵ + *x*² *+* 1 and an initial value [0, 0, 0, 1, 1];
the primitive polynomial *x*⁵ + *x*² *+* 1 and an initial value [0, 0, 1, 1, 0];
the primitive polynomial *x*⁵ + *x*² *+* 1 and an initial value [0, 0, 1, 0, 1];
the primitive polynomial *x*⁵ + *x*² *+* 1 and an initial value [0, 1, 0, 0, 0];
the primitive polynomial *x*⁵ + *x*² *+* 1 and an initial value [0, 1, 1, 1, 0]; and
the primitive polynomial *x*⁵ + *x*² *+* 1 and an initial value [0, 1, 1, 1, 1];
the sequences in the fourth sequence set comprise at least one m-sequence obtained by combining the following primitive polynomial and initial value:
a primitive polynomial *x*⁶ *+ x*¹ *+* 1 and an initial value [1, 0, 1, 0, 0, 1];
the primitive polynomial *x*⁶ *+ x*¹ *+* 1 and an initial value [0, 1, 0, 0, 1, 0];
the primitive polynomial *x*⁶ *+ x*¹ *+* 1 and an initial value [0, 0, 0, 0, 0, 1];
the primitive polynomial *x*⁶ *+ x*¹ *+* 1 and an initial value [1, 1, 1, 1, 0, 1];
the primitive polynomial *x*⁶ *+ x*¹ *+* 1 and an initial value [1, 1, 1, 1, 1, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 1, 0, 0, 1, 0];
the primitive polynomial *x*⁶ *+ x*¹ *+* 1 and an initial value [0, 1, 1, 1, 0, 1];
the primitive polynomial *x*⁶ *+ x*¹ *+* 1 and an initial value [0, 0, 0, 1, 0, 1]; and
the primitive polynomial *x*⁶ *+ x*¹ *+* 1 and an initial value [0, 1, 1, 1, 1, 1];
the sequences in the fifth sequence set comprise at least one m-sequence obtained by combining the following primitive polynomial and initial value:
a primitive polynomial *x*⁷ + *x*¹ + 1 and an initial value [0, 0, 1, 0, 1, 1, 0];
the primitive polynomial *x*⁷ + *x*¹ + 1 and an initial value [1, 0, 1, 0, 1, 1, 0];
the primitive polynomial *x*⁷ + *x*¹ + 1 and an initial value [1, 1, 1, 1, 0, 0, 0];
the primitive polynomial *x*⁷ + *x*¹ + 1 and an initial value [0, 1, 0, 1, 1, 1, 1];
the primitive polynomial *x*⁷ + *x*¹ + 1 and an initial value [0, 0, 1, 1, 1, 0, 1];
the primitive polynomial *x*⁷ + *x*¹ + 1 and an initial value [0, 1, 1, 0, 1, 1, 1];
the primitive polynomial *x*⁷ + *x*¹ + 1 and an initial value [0, 1, 0, 1, 1, 0, 0];
the primitive polynomial *x*⁷ + *x*¹ + 1 and an initial value [1, 0, 1, 0, 0, 0, 1];
the primitive polynomial *x*⁷ + *x*¹ + 1 and an initial value [1, 1, 1, 1, 0, 1, 0]; and
the primitive polynomial *x*⁷ + *x*¹ + 1 and an initial value [0, 0, 1, 1, 1, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [0, 1, 0, 1, 1, 0, 0, 1];
the primitive polynomial *x*⁸ *+ x*⁴ *+ x*³ *+ x*² + 1 and an initial value [0, 0, 0, 1, 0, 0, 1, 0];
the primitive polynomial *x*⁸ *+ x*⁴ *+ x*³ *+ x*² + 1 and an initial value [0, 0, 1, 1, 0, 1, 1, 1];
the primitive polynomial *x*⁸ *+ x*⁴ *+ x*³ *+ x*² + 1 and an initial value [0, 0, 1, 0, 1, 0, 1, 0];
the primitive polynomial *x*⁸ *+ x*⁴ *+ x*³ *+ x*² + 1 and an initial value [0, 1, 1, 0, 0, 0, 0, 1];
the primitive polynomial *x*⁸ *+ x*⁴ *+ x*³ *+ x*² + 1 and an initial value [0, 1, 0, 0, 0, 1, 0, 0];
the primitive polynomial *x*⁸ *+ x*⁴ *+ x*³ *+ x*² + 1 and an initial value [1, 0, 1, 0, 0, 0, 1, 1];
the primitive polynomial *x*⁸ *+ x*⁴ *+ x*³ *+ x*² + 1 and an initial value [1, 0, 0, 0, 1, 1, 0, 0];
the primitive polynomial *x*⁸ *+ x*⁴ *+ x*³ *+ x*² + 1 and an initial value [0, 0, 1, 0, 0, 1, 0, 1]; and
the primitive polynomial *x*⁸ *+ x*⁴ *+ x*³ *+ x*² + 1 and an initial value [1, 1, 0, 1, 0, 0, 1, 0].

25. The method according to claim 24, wherein
the sequences in the first sequence set further comprise at least one m-sequence obtained by combining the following primitive polynomial and initial value:
a primitive polynomial *x*³ *+ x*² + 1 and the initial value [1, 1, 1];
the primitive polynomial *x*³ *+ x*² + 1 and the initial value [0, 1, 0];
the primitive polynomial *x*³ *+ x*² + 1 and the initial value [1, 0, 0]; and
the primitive polynomial *x*³ *+ x*² + 1 and the initial value [0, 0, 1];
the sequences in the second sequence set further comprise at least one m-sequence obtained by combining the following primitive polynomial and initial value:
a primitive polynomial *x*⁴ + *x*³ + 1 and the initial value [1, 1, 1, 1];
the primitive polynomial *x*⁴ + *x*³ + 1 and the initial value [0, 1, 1, 1];
the primitive polynomial *x*⁴ + *x*³ + 1 and the initial value [0, 0, 1, 0];
the primitive polynomial *x*⁴ + *x*³ + 1 and the initial value [0, 1, 1, 0]; and
the primitive polynomial *x*⁴ + *x*³ + 1 and the initial value [0, 0, 1, 1];
the sequences in the third sequence set further comprise at least one m-sequence obtained by combining the following primitive polynomial and initial value:
a primitive polynomial *x*⁵ + *x*³ + *x*² + *x*¹ *+* 1 and the initial value [1, 0, 0, 1, 1];
a primitive polynomial *x*⁵ + *x*⁴ + *x*³ *+ x*² + 1 and the initial value [0, 0, 1, 1, 0];
the primitive polynomial *x*⁵ + *x*⁴ + *x*³ *+ x*² + 1 and an initial value [0, 1, 1, 0, 1];
the primitive polynomial *x*⁵ + *x*³ + *x*² *+ x*¹ *+* 1 and an initial value [1, 0, 0, 0, 0];
a primitive polynomial *x*⁵ *+ x*³ + 1 and an initial value [1, 1, 1, 1, 0];
the primitive polynomial *x*⁵ *+ x*³ + 1 and an initial value [1, 0, 1, 1, 0];
the primitive polynomial *x*⁵ *+ x*³ *+ x*² *+ x*¹ *+* 1 and an initial value [0, 0, 0, 1, 0]; and
the primitive polynomial *x*⁵ + *x*⁴ + *x*³ *+ x*² + 1 and an initial value [1, 1, 1, 0, 1];
the sequences in the fourth sequence set further comprise at least one m-sequence obtained by combining the following primitive polynomial and initial value:
a primitive polynomial *x*⁶ *+ x*⁵ *+* 1 and an initial value [1, 0, 1, 1, 1, 0];
a primitive polynomial *x*⁶ + *x*⁵ + *x*³ *+ x*² + 1 and an initial value [0, 0, 0, 0, 1, 1];
a primitive polynomial *x*⁶ + *x*⁴ + *x*³ *+ x*¹ *+* 1 and an initial value [1, 0, 0, 1, 0, 0];
a primitive polynomial *x*⁶ + *x*⁵ + *x*² + *x*¹ + 1 and an initial value [1, 0, 1, 0, 1, 1];
a primitive polynomial *x*⁶ + *x*⁵ + *x*⁴ *+ x*¹ + 1 and an initial value [1, 1, 0, 0, 0, 1]; the primitive polynomial *x*⁶ *+ x*⁵ + 1 and an initial value [1, 1, 0, 1, 1, 1]; and
the primitive polynomial *x*⁶ *+ x*⁵ + 1 and an initial value [1, 0, 0, 0, 0, 1];
the sequences in the fifth sequence set further comprise at least one m-sequence obtained by combining the following primitive polynomial and initial value:
a primitive polynomial *x*⁷ *+ x*⁶ + 1 and an initial value [1, 0, 1, 1, 1, 0, 1];
a primitive polynomial *x*⁷ *+ x*⁵ *+ x*⁴ *+ x*³ *+ x*² *+ x*¹ + 1 and an initial value [1, 1, 0, 0, 0, 1, 1];
a primitive polynomial *x*⁷ *+ x*⁶ *+ x*⁵ *+ x*⁴ *+ x*³ *+ x*² + 1 and an initial value [1, 1, 1, 0, 1, 1, 1];
a primitive polynomial *x*⁷ + *x*⁶ + 1 and an initial value [1, 0, 1, 1, 1, 1, 0];
a primitive polynomial *x*⁷ *+ x*³ *+ x*² *+ x*¹ *+* 1 and an initial value [1, 0, 1, 0, 1, 0, 0];
a primitive polynomial *x*⁷ + *x*⁶ + *x*⁵ *+ x*⁴ + 1 and an initial value [1, 0, 0, 0, 1, 0, 0];
the primitive polynomial *x*⁷ + *x*³ + *x*² + *x*¹ *+* 1 and an initial value [1, 0, 0, 0, 1, 0, 1]; and
a primitive polynomial *x*⁷ *+ x*⁶ *+ x*⁵ *+ x*⁴ *+* 1 and an initial value [0, 1, 1, 1, 1, 0, 1]; and
the sequences in the sixth sequence set further comprise at least one m-sequence obtained by combining the following primitive polynomial and initial value:
a primitive polynomial *x*⁸ *+ x*⁶ + *x*⁵ + *x*³ *+* 1 and the initial value [0, 0, 1, 1, 0, 1, 1, 1];
a primitive polynomial *x*⁸ *+ x*⁵ *+ x*³ *+ x*² + 1 and an initial value [0, 0, 0, 0, 1, 1, 1, 0];
a primitive polynomial *x*⁸ *+ x*⁶ *+ x*⁴ *+ x*³ *+ x*² *+ x*¹ *+* 1 and an initial value [0, 1, 0, 0, 0, 0, 0, 0];
a primitive polynomial *x*⁸ *+ x*⁷ *+ x*⁶ *+ x*⁵ *+ x*⁴ *+ x*² + 1 and an initial value [1, 0, 0, 1, 0, 1, 0, 1];
a primitive polynomial *x*⁸ *+ x*⁷ *+ x*⁵ *+ x*³ *+ 1* and an initial value [0, 0, 1, 1, 1, 1, 1, 0];
a primitive polynomial *x*⁸ + ⁵ + *x*³ + *x*¹ *+* 1 and an initial value [0, 0, 0, 1, 0, 1, 0, 0];
a primitive polynomial *x*⁸ + *x*⁶ + *x*⁵ *+ x*⁴ + 1 and the initial value [1, 0, 0, 0, 1, 1, 0, 0];
a primitive polynomial *x*⁸ *+ x*⁷ *+ x*² *+ x*¹ *+* 1 and an initial value [0, 1, 1, 1, 0, 0, 0, 0]; and
a primitive polynomial *x*⁸ *+ x*⁷ *+ x*⁶ *+ x*¹ + 1 and an initial value [0, 0, 1, 1, 0, 0, 1, 1].

26. A signal processing method, comprising:
receiving a first signal, wherein the first signal is obtained by a terminal device through modulation based on a first sequence, the first sequence comprises a preamble sequence, the preamble sequence is a second sequence or an equivalent sequence of the second sequence, and the equivalent sequence is obtained by performing bitwise negation and/or reversing on the sequence;
determining a location of the preamble sequence in the first signal; and
obtaining a data window based on the location of the preamble sequence in the first signal, and demodulating a data signal in the data window, wherein
the second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 1];
the primitive polynomial *x*³ *+ x*¹ *+* 1 and an initial value [0, 0, 1];
the primitive polynomial *x*³ *+ x*¹ *+* 1 and an initial value [1, 1, 1];
the primitive polynomial *x*³ *+ x*¹ *+* 1 and an initial value [0, 1, 0];
the primitive polynomial *x*³ *+ x*¹ *+* 1 and an initial value [1, 0, 0];
the primitive polynomial *x*³ *+ x*¹ *+* 1 and an initial value [1, 0, 1]; and
the primitive polynomial *x*³ *+ x*¹ *+* 1 and an initial value [1, 1, 0];
the sequences in the second sequence set comprise at least one m-sequence obtained by combining the following primitive polynomial and initial value:
a primitive polynomial *x*⁴ + *x*¹ + 1 and an initial value [1, 0, 1, 0];
the primitive polynomial *x*⁴ + *x*¹ + 1 and an initial value [1, 0, 0, 1];
the primitive polynomial *x*⁴ + *x*¹ + 1 and an initial value [0, 0, 1, 1];
the primitive polynomial *x*⁴ + *x*¹ + 1 and an initial value [1, 1, 1, 1];
the primitive polynomial *x*⁴ + *x*¹ + 1 and an initial value [0, 1, 0, 0];
the primitive polynomial *x*⁴ + *x*¹ + 1 and an initial value [1, 0, 0, 0];
the primitive polynomial *x*⁴ + *x*¹ + 1 and an initial value [1, 1, 0, 1];
the primitive polynomial *x*⁴ + *x*¹ + 1 and an initial value [0, 0, 0, 1];
the primitive polynomial *x*⁴ + *x*¹ + 1 and an initial value [0, 1, 1, 1]; and
the primitive polynomial *x*⁴ + *x*¹ + 1 and an initial value [0, 1, 0, 1];
the sequences in the third sequence set comprise at least one m-sequence obtained by combining the following primitive polynomial and initial value:
a primitive polynomial *x*⁵ + *x*² *+* 1 and an initial value [1, 1, 1, 0, 1];
the primitive polynomial *x*⁵ + *x*² *+* 1 and an initial value [1, 0, 1, 0, 0];
the primitive polynomial *x*⁵ + *x*² *+* 1 and an initial value [0, 0, 1, 0, 0];
the primitive polynomial *x*⁵ + *x*² *+* 1 and an initial value [0, 0, 0, 1, 0];
the primitive polynomial *x*⁵ + *x*² *+* 1 and an initial value [1, 0, 0, 0, 0];
the primitive polynomial *x*⁵ + *x*² *+* 1 and an initial value [1, 0, 1, 0, 1];
the primitive polynomial *x*⁵ + *x*² *+* 1 and an initial value [1, 0, 1, 1, 0];
the primitive polynomial *x*⁵ + *x*² *+* 1 and an initial value [0, 1, 0, 0, 0];
the primitive polynomial *x*⁵ + *x*² *+* 1 and an initial value [0, 1, 1, 1, 1]; and
the primitive polynomial *x*⁵ + *x*² *+* 1 and an initial value [0, 1, 1, 1, 0];
the sequences in the fourth sequence set comprise at least one m-sequence obtained by combining the following primitive polynomial and initial value:
a primitive polynomial *x*⁶ *+ x*¹ *+* 1 and an initial value [0, 1, 1, 0, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 0, 1, 1, 1, 0];
the primitive polynomial *x*⁶ *+ x*¹ *+* 1 and an initial value [1, 1, 0, 1, 0, 1];
the primitive polynomial *x*⁶ *+ x*¹ *+* 1 and an initial value [0, 0, 1, 1, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 1, 1, 1, 0, 0];
the primitive polynomial *x*⁶ *+ x*¹ *+* 1 and an initial value [1, 0, 1, 0, 0, 0];
the primitive polynomial *x*⁶ *+ x*¹ *+* 1 and an initial value [1, 1, 1, 1, 0, 1]; and
the primitive polynomial *x*⁶ *+ x*¹ *+* 1 and an initial value [1, 1, 0, 0, 0, 0];
the sequences in the fifth sequence set comprise at least one m-sequence obtained by combining the following primitive polynomial and initial value:
a primitive polynomial *x*⁷ + *x*¹ + 1 and an initial value [1, 1, 1, 0, 1, 0, 1];
the primitive polynomial *x*⁷ + *x*¹ + 1 and an initial value [0, 1, 1, 0, 0, 1, 1];
the primitive polynomial *x*⁷ + *x*¹ + 1 and an initial value [0, 0, 1, 1, 0, 0, 1];
the primitive polynomial *x*⁷ + *x*¹ + 1 and an initial value [0, 0, 0, 0, 0, 0, 1];
the primitive polynomial *x*⁷ + *x*¹ + 1 and an initial value [1, 1, 0, 0, 1, 0, 1];
the primitive polynomial *x*⁷ + *x*¹ + 1 and an initial value [0, 1, 1, 1, 0, 1, 0];
the primitive polynomial *x*⁷ + *x*¹ + 1 and an initial value [1, 1, 0, 0, 1, 1, 1];
the primitive polynomial *x*⁷ + *x*¹ + 1 and an initial value [1, 0, 1, 0, 1, 0, 1];
the primitive polynomial *x*⁷ + *x*¹ + 1 and an initial value [0, 1, 0, 0, 0, 1, 1]; and
the primitive polynomial *x*⁷ + *x*¹ + 1 and an initial value [1, 1, 0, 1, 1, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 1, 0, 1, 0, 1, 0, 1];
the primitive polynomial *x*⁸ *+ x*⁴ *+ x*³ *+ x*² + 1 and an initial value [1, 0, 0, 1, 1, 0, 0, 0];
the primitive polynomial *x*⁸ *+ x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [0, 1, 1, 1, 0, 0, 1, 1];
the primitive polynomial *x*⁸ *+ x*⁴ *+ x*³ *+ x*² + 1 and an initial value [1, 0, 0, 1, 1, 1, 0, 0];
the primitive polynomial *x*⁸ *+ x*⁴ *+ x*³ *+ x*² + 1 and an initial value [1, 1, 1, 0, 0, 0, 1, 0];
the primitive polynomial *x*⁸ *+ x*⁴ *+ x*³ *+ x*² + 1 and an initial value [0, 0, 1, 1, 1, 1, 0, 0];
the primitive polynomial *x*⁸ *+ x*⁴ *+ x*³ *+ x*² + 1 and an initial value [1, 1, 1, 0, 0, 1, 1, 1];
and
the primitive polynomial *x*⁸ *+ x*⁴ *+ x*³ *+ x*² + 1 and an initial value [0, 1, 0, 1, 1, 1, 0, 0].

27. The method according to claim 26, wherein that the second sequence is determined based on the m-sequence comprises: the second sequence is determined by adding 0 to a first location of the m-sequence.

28. The method according to claim 26 or 27, wherein
the sequences in the first sequence set further comprise at least one m-sequence obtained by combining the following primitive polynomial and initial value:
a primitive polynomial *x*³ *+ x*² *+* 1 and an initial value [1, 0, 1];
the primitive polynomial *x*³ *+ x*² *+* 1 and the initial value [0, 1, 0];
the primitive polynomial *x*³ *+ x*² *+* 1 and the initial value [1, 0, 0]; and
the primitive polynomial *x*³ *+ x*² *+* 1 and the initial value [1, 1, 1];
the sequences in the second sequence set further comprise at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 0, 1, 0];
the primitive polynomial *x*⁴ + *x*³ + 1 and the initial value [0, 0, 0, 1];
the primitive polynomial *x*⁴ + *x*³ + 1 and the initial value [1, 0, 0, 1]; and
the primitive polynomial *x*⁴ + *x*³ + 1 and the initial value [0, 0, 1, 0];
the sequences in the third sequence set further comprise at least one m-sequence obtained by combining the following primitive polynomial and initial value:
a primitive polynomial *x*⁵ + *x*³ + *x*² *+ x*¹ *+* 1 and an initial value [1, 1, 0, 1, 0];
a primitive polynomial *x*⁵ *+ x*⁴ *+ x*³ *+ x*² + 1 and the initial value [1, 0, 1, 0, 0];
a primitive polynomial *x*⁵ + *x*⁴ + *x*² *+ x*¹ *+* 1 and the initial value [1, 1, 0, 1, 0];
a primitive polynomial *x*⁵ + *x*⁴ + *x*³ + *x*¹ *+* 1 and an initial value [0, 0, 0, 1, 1];
the primitive polynomial *x*⁵ + *x*³ + *x*² *+ x*¹ *+* 1 and the initial value [1, 0, 1, 0, 1];
the primitive polynomial *x*⁵ *+ x*⁴ *+ x*³ *+ x*² + 1 and an initial value [0, 0, 1, 1, 1];
the primitive polynomial *x*⁵ + *x*⁴ + *x*² *+ x*¹ *+* 1 and the initial value [0, 0, 1, 0, 1];
the primitive polynomial *x*⁵ + *x*⁴ + *x*³ + *x*¹ *+* 1 and the initial value [1, 0, 0, 1, 0];
the primitive polynomial *x*⁵ *+ x*⁴ *+ x*³ *+ x*² + 1 and the initial value [1, 1, 0, 1, 1]; and
the primitive polynomial *x*⁵ *+ x*³ *+ x*² *+ x*¹ *+* 1 and the initial value [0, 1, 0, 1, 1];
the sequences in the fourth sequence set further comprise at least one m-sequence obtained by combining the following primitive polynomial and initial value:
a primitive polynomial *x*⁶ *+ x*⁵ + 1 and an initial value [1, 1, 1, 1, 1, 0];
a primitive polynomial *x*⁶ *+ x*⁵ *+ x*² *+ x*¹ *+* 1 and the initial value [1, 0, 1, 0, 1, 0];
a primitive polynomial *x*⁶ + *x*⁵ + *x*⁴ *+ x*¹ + 1 and an initial value [0, 1, 1, 0, 1, 0];
the primitive polynomial *x*⁶ *+ x*⁵ + 1 and the initial value [1, 0, 1, 1, 1, 0];
a primitive polynomial *x*⁶ *+ x*⁴ *+ x*³ *+ x*¹ *+* 1 and an initial value [1, 1, 0, 1, 1, 0];
a primitive polynomial *x*⁶ *+ x*⁵ *+ x*³ *+ x*² + 1 and an initial value [0, 0, 1, 0, 0, 1]; and
the primitive polynomial *x*⁶ *+ x*⁵ *+* 1 and an initial value [0, 1, 0, 1, 0, 0];
the sequences in the fifth sequence set further comprise at least one m-sequence obtained by combining the following primitive polynomial and initial value:
a primitive polynomial *x*⁷ *+ x*⁶ *+ x*⁵ *+ x*⁴ *+ 1* and an initial value [0, 0, 1, 1, 1, 1, 0];
a primitive polynomial *x*⁷ *+ x*⁶ + *x*⁵ + *x*³ + *x*² + *x*¹ + 1 and an initial value [1, 1, 0, 1, 1, 0, 1];
a primitive polynomial *x*⁷ *+ x*⁶ *+ x*⁴ *+ x*² + 1 and an initial value [0, 1, 1, 1, 0, 1, 1];
a primitive polynomial *x*⁷ *+ x*⁵ + *x*³ *+ x*¹ *+* 1 and an initial value [1, 0, 0, 0, 1, 0, 0];
a primitive polynomial *x*⁷ + *x*³ + *x*² *+ x*¹ + 1 and an initial value [1, 1, 1, 1, 0, 0, 1];
the primitive polynomial *x*⁷ *+ x*⁶ *+ x*⁵ *+ x*⁴ + 1 and an initial value [0, 1, 0, 1, 0, 0, 1];
a primitive polynomial *x*⁷ + *x*⁴ + *x*³ *+ x*² + 1 and an initial value [0, 0, 1, 1, 0, 1, 1];
a primitive polynomial *x*⁷ + *x*³ + 1 and an initial value [1, 1, 0, 0, 0, 1, 1]; and
a primitive polynomial *x*⁷ + *x*⁶ + 1 and an initial value [1, 0, 0, 1, 1, 0, 0]; and
the sequences in the sixth sequence set further comprise at least one m-sequence obtained by combining the following primitive polynomial and initial value:
a primitive polynomial *x*⁸ *+ x*⁵ *+ x*³ *+ x*¹ *+* 1 and an initial value [1, 0, 0, 1, 0, 1, 0, 1];
a primitive polynomial *x*⁸ *+ x*⁷ *+ x*⁶ *+ x*³ *+ x*² *+ x*¹ *+* 1 and an initial value [0, 0, 1, 1, 1, 1, 1, 1];
a primitive polynomial *x*⁸ *+ x*⁷ *+ x*⁶ *+ x*⁵ *+ x*² *+ x*¹ *+* 1 and an initial value [0, 0, 1, 1, 1, 0, 1, 0];
a primitive polynomial *x*⁸ *+ x*⁶ *+ x*³ *+ x*² + 1 and an initial value [0, 0, 1, 0, 0, 0, 1, 1];
a primitive polynomial *x*⁸ *+ x*⁷ *+ x*⁶ *+ x*¹ + 1 and an initial value [0, 0, 0, 0, 0, 0, 1, 1];
a primitive polynomial *x*⁸ + *x*⁷ + *x*² *+ x*¹ *+* 1 and an initial value [1, 1, 0, 1, 1, 0, 1, 0];
the primitive polynomial *x*⁸ + *x*⁵ + *x*³ + *x*¹ *+* 1 and an initial value [0, 1, 0, 1, 0, 1, 0, 0];
a primitive polynomial *x*⁸ *+ x*⁷ *+ x*⁵ *+ x*³ *+* 1 and an initial value [1, 1, 0, 0, 0, 0, 1, 1];
the primitive polynomial *x*⁸ *+ x*⁷ *+ x*⁶ *+ x*⁵ *+ x*² *+ x*¹ *+ 1* and an initial value [0, 0, 0, 1, 1, 1, 1, 1]; and
a primitive polynomial *x*⁸ + *x*⁶ + *x*⁵ + *x*⁴ + 1 and an initial value [0, 0, 0, 1, 0, 0, 1, 0].

29. A signal processing method, comprising:
receiving a first signal, wherein the first signal is obtained by a terminal device through modulation based on a first sequence, the first sequence comprises a preamble sequence, the preamble sequence is a second sequence or an equivalent sequence of the second sequence, and the equivalent sequence is obtained by performing bitwise negation and/or reversing on the sequence;
determining a location of the preamble sequence in the first signal; and
obtaining a data window based on the location of the preamble sequence in the first signal, and demodulating a data signal in the data window, wherein
the second sequence is determined based on an m-sequence, a quantity of elements in the second sequence is an even number, and the m-sequence is one of sequences in a first sequence set, or one of sequences in a second sequence set, or one of sequences in a third sequence set, or one of sequences in a fourth sequence set, or one of sequences in a fifth sequence set, or one of sequences in a sixth sequence set;
the sequences in the first sequence set comprise at least one m-sequence obtained by combining the following primitive polynomial and initial value:
a primitive polynomial *x*³ *+ x*¹ *+* 1 and an initial value [0, 1, 0];
the primitive polynomial *x*³ *+ x*¹ *+* 1 and an initial value [1, 1, 0];
the primitive polynomial *x*³ *+ x*¹ *+* 1 and an initial value [0, 0, 1];
the primitive polynomial *x*³ *+ x*¹ *+* 1 and an initial value [0, 1, 1];
the primitive polynomial *x*³ *+ x*¹ *+* 1 and an initial value [1, 0, 0];
the primitive polynomial *x*³ *+ x*¹ *+* 1 and an initial value [1, 1, 1]; and
the primitive polynomial *x*³ *+ x*¹ *+* 1 and an initial value [1, 0, 1];
the sequences in the second sequence set comprise at least one m-sequence obtained by combining the following primitive polynomial and initial value:
a primitive polynomial *x*⁴ + *x*¹ + 1 and an initial value [0, 1, 0, 1];
the primitive polynomial *x*⁴ + *x*¹ + 1 and an initial value [0, 1, 0, 0];
the primitive polynomial *x*⁴ + *x*¹ + 1 and an initial value [1, 0, 1, 0];
the primitive polynomial *x*⁴ + *x*¹ + 1 and an initial value [0, 1, 1, 1];
the primitive polynomial *x*⁴ + *x*¹ + 1 and an initial value [1, 1, 1, 1];
the primitive polynomial *x*⁴ + *x*¹ + 1 and an initial value [1, 0, 0, 1];
the primitive polynomial *x*⁴ + *x*¹ + 1 and an initial value [0, 0, 1, 0];
the primitive polynomial *x*⁴ + *x*¹ + 1 and an initial value [1, 0, 1, 1];
the primitive polynomial *x*⁴ + *x*¹ + 1 and an initial value [0, 1, 1, 0]; and
the primitive polynomial *x*⁴ + *x*¹ + 1 and an initial value [1, 1, 0, 1];
the sequences in the third sequence set comprise at least one m-sequence obtained by combining the following primitive polynomial and initial value:
a primitive polynomial *x*⁵ + *x*² *+* 1 and an initial value [0, 1, 0, 1, 1];
the primitive polynomial *x*⁵ + *x*² *+* 1 and an initial value [1, 1, 1, 0, 0];
the primitive polynomial *x*⁵ + *x*² *+* 1 and an initial value [0, 1, 0, 1, 0];
the primitive polynomial *x*⁵ *+ x*² *+* 1 and an initial value [1, 0, 1, 1, 0];
the primitive polynomial *x*⁵ *+ x*² *+* 1 and an initial value [1, 1, 0, 1, 1];
the primitive polynomial *x*⁵ *+ x*² *+* 1 and an initial value [1, 0, 0, 1, 1];
the primitive polynomial *x*⁵ *+ x*² *+* 1 and an initial value [0, 1, 1, 0, 0];
the primitive polynomial *x*⁵ *+ x*² *+* 1 and an initial value [1, 0, 1, 0, 0];
the primitive polynomial *x*⁵ *+ x*² *+* 1 and an initial value [0, 0, 1, 1, 0]; and
the primitive polynomial *x*⁵ *+ x*² *+* 1 and an initial value [0, 1, 1, 1, 0];
the sequences in the fourth sequence set comprise at least one m-sequence obtained by combining the following primitive polynomial and initial value:
a primitive polynomial *x*⁶ *+ x*¹ *+* 1 and an initial value [1, 1, 0, 1, 1, 0];
the primitive polynomial *x*⁶ *+ x*¹ *+* 1 and an initial value [0, 1, 0, 1, 0, 1];
the primitive polynomial *x*⁶ *+ x*¹ *+* 1 and an initial value [0, 1, 1, 0, 1, 0];
the primitive polynomial *x*⁶ *+ x*¹ *+* 1 and an initial value [0, 0, 0, 1, 0, 1];
the primitive polynomial *x*⁶ *+ x*¹ *+* 1 and an initial value [0, 1, 0, 1, 1, 0];
the primitive polynomial *x*⁶ *+ x*¹ *+* 1 and an initial value [1, 0, 1, 0, 1, 1];
the primitive polynomial *x*⁶ *+ x*¹ *+* 1 and an initial value [0, 0, 1, 1, 0, 0];
the primitive polynomial *x*⁶ *+ x*¹ *+* 1 and an initial value [1, 0, 1, 0, 1, 0];
the primitive polynomial *x*⁶ *+ x*¹ *+* 1 and an initial value [1, 1, 1, 0, 1, 1]; and
the primitive polynomial *x*⁶ *+ x*¹ *+* 1 and an initial value [1, 0, 0, 0, 0, 0];
the sequences in the fifth sequence set comprise at least one m-sequence obtained by combining the following primitive polynomial and initial value:
a primitive polynomial *x*⁷ + *x*¹ + 1 and an initial value [1, 0, 1, 0, 0, 1, 1];
the primitive polynomial *x*⁷ + *x*¹ + 1 and an initial value [1, 1, 0, 1, 0, 1, 0];
the primitive polynomial *x*⁷ + *x*¹ + 1 and an initial value [1, 0, 0, 0, 0, 0, 0];
the primitive polynomial *x*⁷ + *x*¹ + 1 and an initial value [1, 0, 0, 1, 1, 1, 0];
the primitive polynomial *x*⁷ + *x*¹ + 1 and an initial value [1, 1, 1, 1, 0, 0, 1];
the primitive polynomial *x*⁷ + *x*¹ + 1 and an initial value [0, 0, 1, 0, 1, 0, 1];
the primitive polynomial *x*⁷ + *x*¹ + 1 and an initial value [1, 1, 1, 0, 0, 1, 0];
the primitive polynomial *x*⁷ + *x*¹ + 1 and an initial value [1, 1, 1, 1, 1, 0, 0];
the primitive polynomial *x*⁷ + *x*¹ + 1 and an initial value [1, 0, 0, 1, 0, 1, 0]; and
the primitive polynomial *x*⁷ + *x*¹ + 1 and an initial value [0, 1, 0, 1, 0, 1, 0]; and
the sequences in the sixth sequence set comprise at least one m-sequence obtained by combining the following primitive polynomial and initial value:
a primitive polynomial *x*⁸ *+ x*⁴ *+ x*³ *+ x*² + 1 and an initial value [0, 1, 1, 1, 0, 0, 0, 0];
the primitive polynomial *x*⁸ + *x*⁴ *+ x*³ *+ x*² + 1 and an initial value [0, 0, 1, 1, 1, 0, 0, 1];
the primitive polynomial *x*⁸ + *x*⁴ *+ x*³ *+ x*² + 1 and an initial value [0, 1, 0, 1, 0, 1, 1, 1];
the primitive polynomial *x*⁸ *+ x*⁴ *+ x*³ *+ x*² + 1 and an initial value [1, 0, 1, 1, 1, 0, 0, 0];
the primitive polynomial *x*⁸ *+ x*⁴ *+ x*³ *+ x*² + 1 and an initial value [1, 0, 1, 0, 1, 1, 1, 0];
the primitive polynomial *x*⁸ *+ x*⁴ *+ x*³ *+ x*² + 1 and an initial value [1, 0, 1, 0, 1, 0, 1, 1];
the primitive polynomial *x*⁸ *+ x*⁴ *+ x*³ *+ x*² + 1 and an initial value [1, 0, 0, 1, 0, 0, 1, 1];
the primitive polynomial *x*⁸ *+ x*⁴ *+ x*³ *+ x*² + 1 and an initial value [1, 0, 1, 1, 1, 1, 0, 0];
the primitive polynomial *x*⁸ *+ x*⁴ *+ x*³ *+ x*² + 1 and an initial value [0, 1, 0, 0, 1, 0, 1, 0]; and
the primitive polynomial *x*⁸ *+ x*⁴ *+ x*³ *+ x*² + 1 and an initial value [0, 1, 0, 1, 0, 1, 0, 1].

30. The method according to claim 29, wherein that the second sequence is determined based on the m-sequence comprises: the second sequence is determined by adding 1 to a first location of the m-sequence.

31. The method according to claim 29 or 30, wherein
the sequences in the first sequence set further comprise at least one m-sequence obtained by combining the following primitive polynomial and initial value:
a primitive polynomial *x*³ *+ x*² + 1 and the initial value [1, 1, 0];
the primitive polynomial *x*³ *+ x*² + 1 and the initial value [1, 1, 1];
the primitive polynomial *x*³ *+ x*² + 1 and the initial value [0, 0, 1];
the primitive polynomial *x*³ *+ x*² + 1 and the initial value [0, 1, 0];
the primitive polynomial *x*³ *+ x*² + 1 and the initial value [0, 1, 1]; and
the primitive polynomial *x*³ *+ x*² + 1 and the initial value [1, 0, 1];
the sequences in the second sequence set further comprise at least one m-sequence obtained by combining the following primitive polynomial and initial value:
a primitive polynomial *x*⁴ + *x*³ + 1 and an initial value [1, 1, 1, 0];
the primitive polynomial *x*⁴ + *x*³ + 1 and the initial value [1, 1, 1, 1];
the primitive polynomial *x*⁴ + *x*³ + 1 and an initial value [1, 1, 0, 0]; and
the primitive polynomial *x*⁴ + *x*³ + 1 and the initial value [0, 1, 1, 0];
the sequences in the third sequence set further comprise at least one m-sequence obtained by combining the following primitive polynomial and initial value:
a primitive polynomial *x*⁵ *+ x*³ *+ x*² *+ x*¹ *+* 1 and the initial value [0, 1, 0, 1, 0];
a primitive polynomial *x*⁵ *+ x*³ *+* 1 and an initial value [0, 0, 0, 0, 1];
the primitive polynomial *x*⁵ *+ x*³ *+ x*² *+ x*¹ + 1 and an initial value [1, 0, 0, 0, 1];
a primitive polynomial *x*⁵ *+ x*⁴ *+ x*³ *+ x*² + 1 and an initial value [1, 0, 1, 1, 1];
the primitive polynomial *x*⁵ *+ x*³ *+ x*² *+ x*¹ *+* 1 and an initial value [1, 1, 1, 1, 0];
the primitive polynomial *x*⁵ *+ x*⁴ *+ x*³ *+ x*² + 1 and an initial value [0, 0, 1, 0, 0];
the primitive polynomial *x*⁵ *+ x*³ *+ x*² *+ x*¹ *+* 1 and an initial value [1, 1, 0, 0, 0];
the primitive polynomial *x*⁵ *+ x*⁴ *+ x*³ *+ x*² + 1 and an initial value [0, 1, 1, 1, 1]; and
a primitive polynomial *x*⁵ *+ x*⁴ *+ x*² *+ x*¹ *+* 1 and an initial value [0, 0, 1, 0, 1];
the sequences in the fourth sequence set further comprise at least one m-sequence obtained by combining the following primitive polynomial and initial value:
a primitive polynomial *x*⁶ *+ x*⁵ *+* 1 and the initial value [0, 1, 1, 0, 1, 0];
the primitive polynomial *x*⁶ *+ x*⁵ *+* 1 and an initial value [0, 1, 1, 0, 0, 1];
the primitive polynomial *x*⁶ *+ x*⁵ *+* 1 and the initial value [1, 1, 0, 1, 1, 0];
the primitive polynomial *x*⁶ *+ x*⁵ *+* 1 and an initial value [1, 1, 1, 1, 1, 0];
the primitive polynomial *x*⁶ *+ x*⁵ *+* 1 and an initial value [1, 1, 1, 1, 1, 1];
the primitive polynomial *x*⁶ *+ x*⁵ *+* 1 and an initial value [0, 1, 0, 1, 0, 0]; and
a primitive polynomial *x*⁶ *+ x*⁵ *+ x*² *+ x*¹ *+* 1 and the initial value [0, 1, 0, 1, 0, 0];
the sequences in the fifth sequence set further comprise at least one m-sequence obtained by combining the following primitive polynomial and initial value:
a primitive polynomial *x*⁷ + *x*⁶ + 1 and an initial value [1, 1, 1, 0, 0, 1, 1];
a primitive polynomial *x*⁷ *+ x*³ *+ x*² *+ x*¹ *+* 1 and the initial value [1, 1, 1, 0, 0, 1, 0];
a primitive polynomial *x*⁷ *+ x*⁶ *+ x*⁵ *+ x*⁴ + 1 and an initial value [0, 0, 1, 0, 1, 0, 0];
a primitive polynomial *x*⁷ *+ x*⁶ *+ x*⁵ *+ x*⁴ *+ x*² *+ x*¹ + 1 and an initial value [1, 1, 1, 1, 0, 0, 0];
a primitive polynomial *x*⁷ *+ x*⁶ *+ x*⁵ *+ x*³ *+ x*² *+ x*¹ *+* 1 and an initial value [0, 0, 0, 1, 0, 1, 1];
a primitive polynomial *x*⁷ *+ x*⁶ *+ x*⁵ *+ x*² + 1 and an initial value [0, 0, 1, 0, 0, 1, 1];
a primitive polynomial *x*⁷ *+ x*⁵ *+ x*² *+ x*¹ *+* 1 and an initial value [0, 0, 0, 1, 0, 1, 0];
a primitive polynomial *x*⁷ *+ x*⁴ + 1 and an initial value [0, 0, 1, 1, 0, 1, 1];
the primitive polynomial *x*⁷ *+ x*⁶ *+ x*⁵ *+ x*³ *+ x*² *+ x*¹ *+* 1 and an initial value [0, 1, 1, 0, 1, 0, 1]; and
the primitive polynomial *x*⁷ *+ x*⁶ *+ x*⁵ *+ x*⁴ *+ x*² *+ x*¹ + 1 and an initial value [1, 1, 0, 0, 1, 0, 0]; and
the sequences in the sixth sequence set further comprise at least one m-sequence obtained by combining the following primitive polynomial and initial value:
a primitive polynomial *x*⁸ *+ x*⁷ *+ x*⁶ *+ x*³ *+ x*² *+ x*¹ *+* 1 and an initial value [0, 1, 0, 0, 1, 0, 1, 1];
a primitive polynomial *x*⁸ *+ x*⁵ *+ x*³ *+ x*¹ *+* 1 and an initial value [0, 0, 1, 0, 1, 0, 1, 0];
a primitive polynomial *x*⁸ *+ x*⁷ *+ x*⁵ *+ x*³ *+* 1 and an initial value [1, 0, 0, 0, 0, 1, 1, 0];
the primitive polynomial *x*⁸ *+ x*⁷ *+ x*⁶ *+ x*³ *+ x*² *+ x*¹ *+* 1 and an initial value [0, 1, 0, 1, 1, 0, 0, 1];
a primitive polynomial *x*⁸ *+ x*⁷ *+ x*⁶ *+ x*⁵ *+ x*² *+ x*¹ *+* 1 and the initial value [1, 0, 0, 0, 0, 1, 1, 0];
a primitive polynomial *x*⁸ *+ x*⁶ *+ x*⁵ *+ x*⁴ *+* 1 and the initial value [0, 1, 0, 1, 0, 1, 1, 1];
a primitive polynomial *x*⁸ *+ x*⁷ *+ x*² *+ x*¹ *+* 1 and an initial value [1, 0, 1, 0, 0, 1, 1, 0];
a primitive polynomial *x*⁸ *+ x*⁷ *+ x*⁶ *+ x*¹ + 1 and the initial value [1, 0, 1, 0, 0, 1, 1, 0]; and
a primitive polynomial *x*⁸ *+ x*⁶ *+ x*⁵ *+ x*² + 1 and an initial value [1, 1, 0, 0, 0, 0, 0, 1].

32. A signal processing method, applied to a communication system comprising a terminal device and a network device, wherein the terminal device performs the method according to any one of claims 1 to 7, and the network device performs the method according to claim 24 or 25; or the terminal device performs the method according to any one of claims 8 to 15, and the network device performs the method according to any one of claims 26 to 28; or the terminal device performs the method according to any one of claims 16 to 23, and the network device performs the method according to any one of claims 29 to 31.

33. A communication apparatus, comprising a memory and a processor, wherein the processor is configured to execute computer instructions stored in the memory, and when the computer instructions are executed, the apparatus is enabled to perform the method according to any one of claims 1 to 7, or the method according to any one of claims 8 to 15, or the method according to any one of claims 16 to 23, or the method according to claim 24 or 25, or the method according to any one of claims 26 to 28, or the method according to any one of claims 29 to 31.

34. A communication apparatus, comprising a processor and an interface circuit, wherein the processor is configured to: communicate with another apparatus through the interface circuit, and perform the method according to any one of claims 1 to 7, or the method according to any one of claims 8 to 15, or the method according to any one of claims 16 to 23, or the method according to claim 24 or 25, or the method according to any one of claims 26 to 28, or the method according to any one of claims 29 to 31.

35. A communication system, comprising a terminal device and a network device, wherein the terminal device is configured to perform the method according to any one of claims 1 to 7, and the network device is configured to perform the method according to claim 24 or 25; or the terminal device is configured to perform the method according to any one of claims 8 to 15, and the network device is configured to perform the method according to any one of claims 26 to 28; or the terminal device is configured to perform the method according to any one of claims 16 to 23, and the network device is configured to perform the method according to any one of claims 29 to 31.

36. A computer-readable storage medium, wherein the computer-readable storage medium stores computer instructions; and when the computer instructions are run on a terminal device or a chip built in the terminal device, the terminal device is enabled to perform the method according to any one of claims 1 to 7, or the method according to any one of claims 8 to 15, or the method according to any one of claims 16 to 23; or when the computer instructions are run on a network device or a chip built in the network device, the network device is enabled to perform the method according to claim 24 or 25, or the method according to any one of claims 26 to 28, or the method according to any one of claims 29 to 31.

37. A computer program product comprising instructions, wherein when the computer program product runs on a computer, the computer is enabled to perform the method according to any one of claims 1 to 7, or the method according to any one of claims 8 to 15, or the method according to any one of claims 16 to 23, or the method according to claim 24 or 25, or the method according to any one of claims 26 to 28, or the method according to any one of claims 29 to 31.
